# EUROPEAN PATENT APPLICATION

(11) **EP 2 955 815 A1**
(43) Date of publication of application: **16.12.2015**
(21) Application number: 14748963.7
(22) Date of filing: 06.01.2014
(51) Int. Cl.: H02J 13/00, G06F 13/00, G06F 21/31, H02H 5/00, H02J 3/00, H04Q 9/00

(54) **HOME-USE POWER COMMAND DEVICE AND HOME-USE POWER CONTROL SYSTEM**

(30) Priority: 05.02.2013 JP 2013020274
(71) Applicant: Mitsubishi Electric Corporation, Tokyo 100-8310 (JP); Mitsubishi Electric Home Appliance Co., Ltd., Fukaya-shi, Saitama 369-1295 (JP)
(72) Inventor: ITO, Masanobu, Fukaya-shi Saitama 369-1295 (JP); KINOSHITA, Hirokazu, Fukaya-shi Saitama 369-1295 (JP); YAMAMOTO, Susumu, Fukaya-shi Saitama 369-1295 (JP); OGURA, Yosuke, Fukaya-shi Saitama 369-1295 (JP); KAWATA, Yukio, Fukaya-shi Saitama 369-1295 (JP)
(74) Representative: Pfenning, Meinig & Partner GbR
(86) International application number: PCT/JP2014/050011
(87) International publication number: WO 2014/122943

(57) **Abstract**

A household power instruction apparatus includes a presence detection device that detects presence of an occupant, an exclusive user information storage unit containing information of a specific home electric appliance for exclusive use by the occupant in the plurality of home electric appliances and information of the occupant in association with each other, and a control unit that permits or restricts operation of the home electric appliances. The control unit decides, upon receipt of a signal requesting permission of use from the exclusive electric appliance, whether the exclusive user and the occupant at home are the same, on a basis of the exclusive user information in the exclusive user information storage unit and the occupant information detected by the presence detection device, and outputs a signal permitting the exclusive electric appliance to start operation, in the case where the exclusive user and the occupant at home are the same.

## Description

### Technical Field

The present invention relates to a power instruction apparatus that controls power of electric appliances in a household, and a power control system for the power instruction apparatus.

### Background Art

In a common household, power is supplied to a plurality of kitchen electric appliances (e.g., an induction heating cooker, also called "IH cooking heater") through a single circuit breaker. In many cases, the maximum power usage of the induction heating cooker is as high as 4800 W (or 5800 W), which occupies a major part of the power usage of the household. Accordingly, various proposals have thus far been made to prevent the circuit breaker from tripping (disconnecting the circuit) when another electric appliance, for example an air-conditioning apparatus, is used at the same time as the induction heating cooker. For example, a power control apparatus has been proposed that controls power supply to a plurality of electric appliances connected to the power control apparatus, by wired or wireless transmission to the electric appliances. The power control apparatus includes an information collecting device that collects information about power usage of the electric appliance, a decision device that decides whether power may be supplied to the electric appliance within a predetermined allowable power on the basis of the power usage information collected by the information collecting device, and a permission device that permits power to be supplied to the electric appliance with respect to which the decision device has decided that power may be supplied (see, for example, Patent Literature 1).

In addition, a portable terminal device has been proposed that estimates the time that an occupant arrives at a destination from an outside location, and performs a remote operation of one or a plurality of electric appliances in the household from outside, in accordance with the estimated time of arrival (see, for example, Patent Literature 2).

Further, a controller has been proposed for more efficient control of power consumption of home electric appliances. The controller includes a communication interface for making communication with a plurality of home electric appliances, a memory for storing an upper limit of power consumption with respect to each of a plurality of users, and a processor that acquires working information from a plurality of home electric appliances through the communication interface to thereby calculate total power consumption of each of the plurality of users, and controls the plurality of home electric appliances through the communication interface so as to prevent the total power consumption of each of the plurality of users from exceeding the upper limit of the power consumption of each of the plurality of users (see, for example, Patent Literature 3)

Further, an information processing device has been proposed that includes an acquisition unit that acquires personal identification information for identifying an individual person, for calculating an environmental load with respect to each occupant, in other words each individual, a control unit that associates the personal identification information acquired by the acquisition unit with the environmental load representing the load that the individual has imposed on the environment, to thereby generate association information, and a storage unit that stores the association information generated by the control unit. It has also been proposed that the control unit associates the environmental load, for example an amount of power consumed by an information processing device such as a home electric appliance, with the personal identification information, the acquisition unit further acquires history information representing the behavior of the individual, and the control unit associates the environmental load acquired through analysis of the history information and the personal identification information (see, for example, Patent Literature 4).

### Citation List

### Patent Literature

Patent Literature 1: Japanese Unexamined Patent Application Publication No. 10-94199 (page 1, Fig. 1)
Patent Literature 2: Japanese Unexamined Patent Application Publication No.2004-228668 (page 1, Fig. 2)
Patent Literature 3: Japanese Unexamined Patent Application Publication No.2012-226420 (page 4, Fig. 2)
Patent Literature 4: Japanese Unexamined Patent Application Publication No.2012-212344 (page 1, Fig. 1 and Fig. 2)

### Summary of Invention

### Technical Problem

As stated above, the existing power control apparatuses and the systems therefor can only suppress the total power consumption when the induction heating cooker is used or when the induction heating cooker and another electric appliance are used at the same time. However, although general consumers have recently become more conscious of peak-shift or power saving so as to prevent unexpected power failure due to tight electricity supply, in particular to avoid power concentration in the day time of summer season, and an increasing number of households are introducing apparatuses for the power control system, actually a wide variety of electric appliances utilized in various locations in the household and in various occasions are not effectively linked with each other, and therefore useful information and functions of those appliances are not effectively and properly utilized by the users.

In addition, a system that allows the power consumption of each person to be recognized and the result thereof to be confirmed may be useful for making all the family members more energy-saving conscious, however such a system has not yet reached a practically usable level. In the case that, for example, the family consists of several members, each of the family members is not always familiar with the use of all the electric appliances available in the household, and therefore, for example, a heating cooker may be erroneously operated when only a member unfamiliar with the cooker, such as a senior person or a small kid, is at home. To cope with such a situation, however, there have only been such proposals as providing a safety device such as a child lock mechanism to each single electric appliance, and practical proposals that enable the power control apparatus itself to be effectively utilized have not been found.

Accordingly, the present invention provides a household power control apparatus that identifies one or more occupants present in a living space in a household, recognizes use of an electric appliance by each of the occupants, and limits the user with respect to a specific electric appliance designated in advance by the occupant, and a power control system for the power control apparatus, to improve the safety level and user-friendliness.

### Solution to Problem

In a first aspect, the present invention provides a household power instruction apparatus that controls total electric power in a household by individually controlling a plurality of home electric appliances.

The apparatus includes a presence detection device that detects presence of one or more occupants, an exclusive user information storage unit containing exclusive user information in which a specific home electric appliance for exclusive use by one of the occupants (exclusive electric appliance) in the plurality of home electric appliances and information for identifying the occupant are associated with each other, and a control unit that permits or restricts operation of the home electric appliances.

The control unit decides, upon receipt of a signal requesting permission of use from the exclusive electric appliance, whether the exclusive user and the occupant at home are the same, on a basis of the exclusive user information in the exclusive user information storage unit and the occupant information detected by the presence detection device, and outputs a signal permitting the exclusive electric appliance to start operation, in the case where the exclusive user and the occupant at home are the same.

In the apparatus according to the first aspect, the information of the exclusive user is registered with respect to the specific home electric appliance. Therefore, when another occupant comes home and attempts to use the exclusive electric appliance while the exclusive user is not at home, the use of the exclusive electric appliance is automatically restricted at this point.

In a second aspect, the present invention provides a household power instruction apparatus that controls total electric power in a household by individually controlling a plurality of home electric appliances, the apparatus including:
a presence detection device that detects presence of one or more occupants,
an exclusive user information storage unit containing exclusive user information in which a specific home electric appliance for exclusive use by one of the occupants (exclusive electric appliance) in the plurality of home electric appliances and information for identifying the occupant are associated with each other,
a control unit that permits or restricts operation of the home electric appliances,
an environment detection unit that receives environment information from an environment sensor that measures physical environment of one or more living spaces in which the plurality of home electric appliances are installed, and
a human body detection unit that detects presence of a person on a basis of detection information from a human body sensor indicating presence of a person in the living space.
At least one of the home electric appliances is an environment improvement apparatus that improves at least one of temperature, humidity, and quality of air in the living space.
The control unit decides, upon receipt of a signal requesting permission of use from the exclusive electric appliance, whether the exclusive user and the occupant at home are the same, on a basis of the exclusive user information in the exclusive user information storage unit and the occupant information detected by the presence detection device, and outputs, in the case where the exclusive user and the occupant at home are the same, a signal permitting the exclusive electric appliance to start operation.
The control unit also forcibly controls operation of the environment improvement apparatus, upon deciding, on a basis of the environment information from the environment detection unit, that a predetermined environmental condition is not satisfied in a specific living space in which the environment improvement apparatus is installed, when presence of a person in the specific living space is detected by the human body detection unit.

The configuration according to the second aspect enables, in addition to the advantage provided by the first aspect, management of the electric energy and maintenance and improvement of the environmental conditions such as temperature and humidity in the living space where the occupant is present, with a single power control apparatus.

In a third aspect, the present invention provides a household power instruction apparatus that controls total electric power in a household by individually controlling a plurality of home electric appliances, the apparatus including:
a presence detection device that detects presence of one or more occupants,
an exclusive user information storage unit containing exclusive user information in which a specific home electric appliance for exclusive use by one of the occupants (exclusive electric appliance) in the plurality of home electric appliances and information for identifying the occupant are associated with each other, and
a control unit that permits or restricts operation of the home electric appliances.

The control unit decides, upon receipt of a signal requesting permission of use from the exclusive electric appliance, whether the exclusive user and the occupant at home are the same, on a basis of the exclusive user information in the exclusive user information storage unit and the occupant information detected by the presence detection device, and outputs a signal permitting the exclusive electric appliance to start operation, in the case where the exclusive user and the occupant at home are the same.

The control unit also outputs, from the exclusive electric appliance, information indicating that operation of the exclusive electric appliance is not permitted, when the control unit decides that the exclusive user and the occupant at home are not the same through comparison between the exclusive user information of the exclusive electric appliance from which the signal requesting permission of use has been received and the occupant identification information detected by the presence detection device.

In the apparatus according to the third aspect, the information indicating that the use of the exclusive electric appliance is not permitted is outputted through the own notification device of the exclusive electric appliance. Therefore, the occupant can be prevented from misunderstanding that, for example, the exclusive electric appliance has failed, in addition to the advantage provided by the first aspect.

In a fourth aspect, the present invention provides a household power control system including:
a circuit breaker that cuts off an electric circuit when a predetermined capacity limit is exceeded,
a first home electric appliance and a second home electric appliance each receiving power through the circuit breaker, and
a power instruction apparatus that controls total power usage of the first home electric appliance and the second home electric appliance.

The power instruction apparatus includes an environment detection unit that receives environment information from an environment sensor that measures physical environment of a living space in which the first and second home electric appliances are installed, a display device that displays information of power and the environment information, a presence detection device that detects presence of one or more occupants, an exclusive user information storage unit containing exclusive user information in which a specific home electric appliance for exclusive use by one of the occupants (exclusive electric appliance) in the plurality of home electric appliances and information for identifying the occupant are associated with each other, and a control unit that sets an upper limit of power usage in the home electric appliances and permits or restricts operation of the home electric appliances.

The control unit decides, upon receipt of a signal requesting permission of use from the exclusive electric appliance, whether the exclusive user and the occupant at home are the same, by making access to the exclusive user information storage unit and comparing between the exclusive user information in the exclusive user information storage unit and the occupant information detected by the presence detection device, and outputs, in the case where the exclusive user and the occupant at home are the same, a signal permitting the exclusive electric appliance to start operation.

The system according to the fourth aspect allows not only the power information but also the environment-related information such as the room temperature to be displayed, thereby motivating the occupants to become more conscious of energy-saving and environmental issues. In addition, environment data such as indoor temperature, humidity, and degree of dust scattering is also displayed for review, and therefore the environmental condition of the living space can be confirmed on a real-time basis, which contributes to making the life space healthier. Further, in the system according to the fourth aspect, the information of the exclusive user is registered with respect to the specific home electric appliance, and therefore when another occupant comes home and attempts to use the exclusive electric appliance while the exclusive user is not at home, the use of the exclusive electric appliance is automatically restricted at this point. Such a configuration prevents occurrence of an unexpected trouble due to, for example, erroneous operation of the electric appliance by an occupant unfamiliar with the use of the electric appliance.

In a fifth aspect, the present invention provides a household power control system including:
a circuit breaker that cuts off an electric circuit when a first capacity limit is exceeded,
a first home electric appliance and a second home electric appliance each receiving power through the circuit breaker, and
a power instruction apparatus that controls total power usage of the first home electric appliance and the second home electric appliance.

The power instruction apparatus includes a display device that displays information of power, a presence detection device that detects presence of one or more occupants, an exclusive user information storage unit containing exclusive user information in which a specific home electric appliance for exclusive use by one of the occupants (exclusive electric appliance) in the plurality of home electric appliances and information for identifying the occupant are associated with each other, and a control unit that sets an upper limit of power usage in each of the first and second home electric appliances and permits or restricts operation of the first and second home electric appliances, a transmission unit that transmits, through a communication line, information for confirming whether the exclusive user information in the exclusive user information storage device may be updated to the occupant located outside the living space, and a reception unit that receives a response from the occupant.

The control unit (i) decides, upon receipt of a signal requesting permission of use from the exclusive electric appliance, whether the exclusive user and the occupant at home are the same, by making access to the exclusive user information storage unit and comparing between the exclusive user information in the exclusive user information storage unit and the occupant information detected by the presence detection device, and outputs, in the case where the exclusive user and the occupant at home are the same, a signal permitting the exclusive electric appliance to start operation, and (ii) transmits, in the case where the exclusive user and the occupant at home are not the same, an inquiry asking whether the use of home electric appliance may be permitted, to the exclusive user in the exclusive user information storage device from the transmission unit, and outputs the signal permitting the exclusive electric appliance to start operation, in the case where the information permitting the use of the exclusive electric appliance is received after the transmission.

In the system according to the fifth aspect, once one of the occupants is registered as exclusive user with respect to the specific home electric appliance, when another occupant comes home and attempts to use the exclusive electric appliance while the exclusive user is not at home, the use of the exclusive electric appliance is automatically restricted at this point. Such a configuration prevents occurrence of an unexpected trouble due to, for example, erroneous operation of the electric appliance by an occupant unfamiliar with the use of the electric appliance. Further, when an occupant at home wishes to use the electric appliance registered as exclusive electric appliance by the exclusive user currently away from home, the occupant at home can ask the exclusive user away from home whether the exclusive electric appliance may be used, and if the exclusive user permits the occupant at home can start using the exclusive electric appliance. Such an arrangement further improves the user-friendliness of the system.

In a sixth aspect, the present invention provides a household power instruction apparatus that controls total electric power in a household by individually controlling a plurality of home electric appliances, the apparatus including:
a presence detection device that detects presence of one or more occupants,
an exclusive user information storage unit containing exclusive user information in which a specific home electric appliance for exclusive use by one of the occupants (exclusive electric appliance) in the plurality of home electric appliances and information for identifying the occupant are associated with each other,
a control unit that permits or restricts operation of the home electric appliances, and
a personal information storage unit for storing useful information for each of the occupants.

The control unit decides, upon receipt of a signal requesting permission of use from the exclusive electric appliance, whether the exclusive user and the occupant at home are the same, on a basis of the exclusive user information in the exclusive user information storage unit and the occupant information detected by the presence detection device, and outputs a signal permitting the exclusive electric appliance to start operation, in the case where the exclusive user and the occupant at home are the same.

At least one of the home electric appliances is a TV receiver with a display screen.

The control unit outputs, when the presence detection device detects that the occupant who is the exclusive user of the TV receiver has come home and when the TV receiver is turned on, an instruction to cause the TV receiver to display or notify the useful information for the exclusive user out of the information accumulated in the personal information unit.

The configuration according to the sixth aspect allows, in addition to the advantage provided by the first aspect, the useful information for the specific person registered as exclusive user of the TV receiver (e.g., a message left by a family member while the specific person is away from home, or an important regular job to be done after coming home) to be displayed on the display screen of the TV receiver when the specific person comes home and turns on the TV receiver, thus allowing the useful information to be delivered to the target occupant.

In a seventh aspect, the present invention provides a household power control system including:
a household power instruction apparatus including a control unit that controls total electric power in a household by individually controlling a plurality of home electric appliances,
a presence detection device that detects presence of one or more occupants,
an exclusive user information storage unit containing exclusive user information in which a specific home electric appliance for exclusive use by one of the occupants (exclusive electric appliance) in the plurality of home electric appliances and information for identifying the occupant are associated with each other, and
an external information storage unit for storing useful data including a cooking recipe transmitted from outside through a communication line.

The control unit of the power instruction apparatus decides, upon receipt of a signal requesting permission of use from the exclusive electric appliance, whether the exclusive user and the occupant at home are the same, on a basis of the exclusive user information in the exclusive user information storage unit and the occupant information detected by the presence detection device, and outputs a signal permitting the exclusive electric appliance to start operation, in the case where the exclusive user and the occupant at home are the same.

At least one of the home electric appliances is a TV receiver with a display screen.

The control unit of the power instruction apparatus outputs, when the presence detection device detects that the occupant who transmitted the useful data has come home and when the useful data for the occupant has been received or is stored in the external storage medium, an instruction to cause the TV receiver to display or notify the receipt of the useful data, when the occupant turns on the TV receiver after coming home.

The configuration according to the seventh aspect allows, in addition to the advantage provided by the first aspect, the useful data such as the cooking recipe transmitted from outside to be temporarily stored, and causes the TV receiver to notify through the display screen that the useful data such as the cooking recipe has been received, when the occupant who transmitted the useful data comes home and turns on the TV receiver. Therefore, the occupant can receive and utilize the useful data without fail, after coming home.

In an eighth aspect, the present invention provides a household power instruction apparatus including:
a control unit that controls total electric power in a household by individually controlling a plurality of home electric appliances,
a presence detection device that detects presence of one or more occupants,
an exclusive user information storage unit containing exclusive user information in which a specific home electric appliance for exclusive use by one of the occupants (exclusive electric appliance) in the plurality of home electric appliances and information for identifying the occupant are associated with each other, and
an absence input device for inputting a state that the occupant is not in the living space to the control unit.

The control unit of the power instruction apparatus decides, upon receipt of a signal requesting permission of use from the exclusive electric appliance, whether the exclusive user and the occupant at home are the same, on a basis of the exclusive user information in the exclusive user information storage unit and the occupant information detected by the presence detection device, and outputs a signal permitting the exclusive electric appliance to start operation, in the case where the exclusive user and the occupant at home are the same.

The control unit enters an absence mode in which power supply to one or more predetermined home electric appliances is limited so as to reduce the total electric power in the household, when absence of all the occupants is inputted through the absence input device, and cancels the absence mode when the presence detection device detects that one or more occupants have come home.

The apparatus according to the eighth aspect limits the power supply to the predetermined home electric appliance thereby reducing the total electric power in the household upon switching to the absence mode with respect to all of the occupants, without causing the occupant to take the trouble of manipulating a button of the circuit breaker thereby disconnecting the power of the main circuit, in addition to the advantage provided by the first aspect. To be more detailed, while the occupants are absent a forcible stand-by state (absence mode) is maintained, in which the power supply to the predetermined home electric appliances (there may be an exception) is kept disconnected, or an input for starting the operation is not accepted although a minimum necessary power is supplied. In addition, when the presence detection device detects that at least one of the occupant has come home, the absence mode is automatically cancelled. Therefore, the occupant who has come home can immediately use a desired home electric appliance (except the home electric appliance for exclusive use of another occupant).

### Advantageous Effects of Invention

With the household power instruction apparatus according to the present invention automatically controls the power usage of each of the home electric appliances so as to limit the total electric power of the home electric appliances in the household, and prevents the home electric appliance registered as exclusive appliance of a specific occupant from being used by another occupant while the specific occupant is absent (away from home), thereby preventing occurrence of an accident due to erroneous operation.

In addition, the household power control system according to the present invention automatically controls the power usage of each of the home electric appliances so as to limit the total electric power of the home electric appliances in the household, and prevents the home electric appliance registered as exclusive appliance of a specific occupant from being used by another occupant while the specific occupant is absent (away from home), thereby preventing occurrence of an accident due to erroneous operation.

### Brief Description of Drawings

[Fig. 1] Fig. 1 is a schematic drawing showing an outline of a household in which a power control system according to Embodiment 1 of the present invention is provided.
[Fig. 2] Fig. 2 is a schematic drawing showing a configuration of an external communication circuit to which the power control system according to Embodiment 1 of the present invention is connected.
[Fig. 3] Fig. 3 is a schematic drawing showing a power instruction apparatus and home electric appliances included in the power control system according to Embodiment 1 of the present invention.
[Fig. 4] Fig. 4 is a first block diagram showing a configuration of the power instruction apparatus and a TV receiver in the power control system according to Embodiment 1 of the present invention.
[Fig. 5] Fig. 5 is a second block diagram showing a configuration of the power instruction apparatus and the TV receiver in the power control system according to Embodiment 1 of the present invention.
[Fig. 6] Fig. 6 is a block diagram showing a configuration of the power control system according to Embodiment 1 of the present invention.
[Fig. 7] Fig. 7 is a partially cross-sectional block diagram showing a configuration of the power instruction apparatus of the power control system according to Embodiment 1 of the present invention.
[Fig. 8] Fig. 8 is a block diagram showing a configuration of a healthcare processing unit and healthcare instruments in the power instruction apparatus according to Embodiment 1 of the present invention.
[Fig. 9] Fig. 9 is a block diagram showing a configuration of the healthcare processing unit of the power instruction apparatus and indoor exercise equipments, a vacuum cleaner, and a mobile phone according to Embodiment 1 of the present invention.
[Fig. 10] Fig. 10 is a block diagram showing an internal configuration of one of the healthcare instruments used in the power control apparatus according to Embodiment 1 of the present invention.
[Fig. 11] Fig. 11 is a first schematic drawing showing an example of the TV receiver screen and a remote controller in the power control system according to Embodiment 1 of the present invention.
[Fig. 12] Fig. 12 is a first schematic drawing showing an example of the TV receiver screen in the power control system according to Embodiment 1 of the present invention.
[Fig. 13] Fig. 13 is a table for explaining blood pressure data and incidental data acquired by the healthcare instrument used in the power control system according to Embodiment 1 of the present invention.
[Fig. 14] Fig. 14 is a second schematic drawing showing an example of the TV receiver screen in the power control system according to Embodiment 1 of the present invention.
[Fig. 15] Fig. 15 is a third schematic drawing showing an example of the TV receiver screen in the power control system according to Embodiment 1 of the present invention.
[Fig. 16] Fig. 16 is a fourth schematic drawing showing an example of the TV receiver screen in the power control system according to Embodiment 1 of the present invention.
[Fig. 17] Fig. 17 is a first schematic drawing showing an example of the TV receiver screen for explaining the operation thereof in the power control system according to Embodiment 1 of the present invention.
[Fig. 18] Fig. 18 is a schematic drawing showing an example of a display screen of a use limit setting device for explaining the operation thereof in the power control system according to Embodiment 1 of the present invention.
[Fig. 19] Fig. 19 is a first front view showing the display screen of the use limit setting device of the power instruction apparatus constituting the essential part of the power control system shown in Fig. 1 to Fig. 18.
[Fig. 20] Fig. 20 is a table for explaining appliances that are objects of power reduction by the power instruction apparatus and appliances that are objects of power cut-off upon receipt of an Earthquake Early Warning, in the power control system shown in Fig. 1 to Fig. 18.
[Fig. 21] Fig. 21 is a side view of a vacuum cleaner the power supply to which is controlled by the power control system according to Embodiment 1 of the present invention.
[Fig. 22] Fig. 22 is a block diagram showing a general configuration of the power control system according to Embodiment 1 of the present invention, except for the healthcare instrument.
[Fig. 23] Fig. 23 is a perspective view showing an appearance of a kitchen electric appliance used in the power control system according to Embodiment 1 of the present invention.
[Fig. 24] Fig. 24 is a perspective view showing an appearance of an induction heating cooker used in the power control system according to Embodiment 1 of the present invention.
[Fig. 25] Fig. 25 is a plan view of the induction heating cooker shown in Fig. 24.
[Fig. 26] Fig. 26 is a block diagram showing a configuration of a control circuit of the induction heating cooker shown in Fig. 24.
[Fig. 27] Fig. 27 is a block diagram showing a configuration of a driver circuit of the display device of the induction heating cooker shown in Fig. 24.
[Fig. 28] Fig. 28 is a flowchart for explaining basic control steps of the induction heating cooker shown in Fig. 24.
[Fig. 29] Fig. 29 is a first flowchart for explaining a cooking menu selection process of the induction heating cooker shown in Fig. 24.
[Fig. 30] Fig. 30 is a second flowchart for explaining the cooking menu selection process of the induction heating cooker shown in Fig. 24.
[Fig. 31] Fig. 31 is a first plan view showing the display device of the induction heating cooker shown in Fig. 24.
[Fig. 32] Fig. 32 is a second plan view showing the display device of the induction heating cooker shown in Fig. 24.
[Fig. 33] Fig. 33 is a third plan view showing the display device of the induction heating cooker shown in Fig. 24.
[Fig. 34] Fig. 34 is a fourth plan view showing the display device of the induction heating cooker shown in Fig. 24.
[Fig. 35] Fig. 35 is a fifth plan view showing the display device of the induction heating cooker shown in Fig. 24.
[Fig. 36] Fig. 36 is a sixth plan view showing the display device of the induction heating cooker shown in Fig. 24.
[Fig. 37] Fig. 37 is a seventh plan view showing the display device of the induction heating cooker shown in Fig. 24.
[Fig. 38] Fig. 38 is an eighth plan view showing the display device of the induction heating cooker shown in Fig. 24.
[Fig. 39] Fig. 39 is a perspective view showing a rice cooker according to Embodiment 1 of the present invention, with its lid opened.
[Fig. 40] Fig. 40 is a plan view of the lid of the rice cooker according to Embodiment 1 of the present invention.
[Fig. 41] Fig. 41 is a first enlarged plan view of the lid of the rice cooker according to Embodiment 1 of the present invention.
[Fig. 42] Fig. 42 is a second enlarged plan view of the lid of the rice cooker according to Embodiment 1 of the present invention.
[Fig. 43] Fig. 43 is a block diagram showing a configuration of the control circuit of the rice cooker used in the power control system according to Embodiment 1 of the present invention.
[Fig. 44] Fig. 44 is a vertical cross-sectional view taken along a central portion of a dish washer-dryer used in the power control system according to Embodiment 1 of the present invention, for showing a basic configuration thereof.
[Fig. 45] Fig. 45 is a perspective view showing a basic configuration of a self-running vacuum cleaner used in the power control system according to Embodiment 1 of the present invention.
[Fig. 46] Fig. 46 is a block diagram showing a basic configuration of an air-conditioning apparatus used in the power control system according to Embodiment 1 of the present invention.
[Fig. 47] Fig. 47 is a second front view showing the display screen of the use limit setting device of the power instruction apparatus in the power control system according to Embodiment 1 of the present invention.
[Fig. 48] Fig. 48 is a third front view showing the display screen of the use limit setting device shown in Fig. 47.
[Fig. 49] Fig. 49 is a fourth front view showing the display screen of the use limit setting device shown in Fig. 47.
[Fig. 50] Fig. 50 is a graphic representation for explaining a basic frying process performed by the induction heating cooker according to Embodiment 1 of the present invention.
[Fig. 51] Fig. 51 is a graphic representation for explaining a rice cooking operation performed by the rice cooker according to Embodiment 1 of the present invention.
[Fig. 52] Fig. 52 is a first timechart for explaining a power controlling operation performed by the power instruction apparatus according to Embodiment 1 of the present invention.
[Fig. 53] Fig. 53 is a second timechart for explaining a power controlling operation performed by the power instruction apparatus according to Embodiment 1 of the present invention.
[Fig. 54] Fig. 54 is a first timechart for explaining a relationship between operation information from the induction heating cooker and the heating process, according to Embodiment 1 of the present invention.
[Fig. 55] Fig. 55 is a second timechart for explaining the relationship between the operation information from the induction heating cooker and the heating process.
[Fig. 56] Fig. 56 is a third timechart for explaining the relationship between the operation information from the induction heating cooker and the heating process.
[Fig. 57] Fig. 57 is a fourth timechart for explaining the relationship between the operation information from the induction heating cooker and the heating process.
[Fig. 58] Fig. 58 is a first flowchart showing a changing process of a reservation time of a home electric appliance.
[Fig. 59] Fig. 59 is a second flowchart showing the changing process of the reservation time of the home electric appliance.
[Fig. 60] Fig. 60 is a table showing relationships between reservation status of home electric appliances and permission criteria specified by an environment detection unit.
[Fig. 61] Fig. 61 is a first timechart for explaining a controlling operation performed by the power instruction apparatus according to Embodiment 1 of the present invention, triggered by coming home of an occupant.
[Fig. 62] Fig. 62 is a second timechart for explaining the controlling operation performed by the power instruction apparatus according to Embodiment 1 of the present invention, triggered by coming home of the occupant.
[Fig. 63] Fig. 63 is a third timechart for explaining the controlling operation performed by the power instruction apparatus according to Embodiment 1 of the present invention, triggered by coming home of the occupant.
[Fig. 64] Fig. 64 is a fourth timechart for explaining the controlling operation performed by the power instruction apparatus according to Embodiment 1 of the present invention, triggered by coming home of the occupant.
[Fig. 65] Fig. 65 is a front view showing a presence management menu displayed on the display screen of the use limit setting device of the power instruction apparatus according to the present invention.
[Fig. 66] Fig. 66 is a schematic diagram for explaining a communication channel between a household and a mobile phone terminal, according to Embodiment 2 of the present invention.
[Fig. 67] Fig. 67 is a first explanatory timechart showing relationship between an operation of an arrival time estimation/prediction system used in the power control system according to Embodiment 2, and the power instruction apparatus and the home electric appliance.
[Fig. 68] Fig. 68 is a second explanatory timechart showing the same relationship.
[Fig. 69] Fig. 69 is a first front view showing the presence management menu displayed on the display screen of the use limit setting device of the power instruction apparatus according to Embodiment 2.
[Fig. 70] Fig. 70 is a second front view showing the presence management menu displayed on the display screen of the use limit setting device of the power instruction apparatus according to Embodiment 2.
[Fig. 71] Fig. 71 is a third front view showing the presence management menu displayed on the display screen of the use limit setting device of the power instruction apparatus according to Embodiment 2.
[Fig. 72] Fig. 72 is a first plan view showing a part of the display device and the operation unit of the induction heating cooker, the power supply to which is controlled by the power control system according to Embodiment 2.
[Fig. 73] Fig. 73 is a second plan view showing a part of the display device and the operation unit of the induction heating cooker shown in Fig. 72.
[Fig. 74] Fig. 74 is a third plan view showing a part of the display device and the operation unit of the induction heating cooker shown in Fig. 72.
[Fig. 75] Fig. 75 is a fourth plan view showing a part of the display device and the operation unit of the induction heating cooker shown in Fig. 72.
[Fig. 76] Fig. 76 is a front view showing the display panel of the power instruction apparatus according to Embodiment 2.
[Fig. 77] Fig. 77 is a schematic drawing for explaining the relationship between the operation information and the heating process of the induction heating cooker shown in Fig. 72.
[Fig. 78] Fig. 78 is a timechart for explaining the relationship between the operation information from the induction heating cooker shown in Fig. 72 and the heating process.
[Fig. 79] Fig. 79 is a flowchart showing an operation program performed by a control unit of the power instruction apparatus according to Embodiment 2, to control the TV receiver.
[Fig. 80] Fig. 80 is a schematic drawing showing a general configuration of a power control system according to Embodiment 3 of the present invention.
[Fig. 81] Fig. 81 is a partially cross-sectional block diagram showing a configuration of an essential part of the power control apparatus shown in Fig. 80.
[Fig. 82] Fig. 82 is a timechart for explaining signal transmission between the respective essential parts of the power control system shown in Fig. 80 and the health management system.
[Fig. 83] Fig. 83 is a front view showing an appearance of a display screen and a remote controller of a TV receiver used in the power instruction apparatus according to Embodiment 4 of the present invention.
[Fig. 84] Fig. 84 is a front view showing the appearance of the display screen and the remote controller of the TV receiver shown in Fig. 83, displaying a list of cooking recipes.
[Fig. 85] Fig. 85 is a front view showing an appearance of the display screen and the remote controller of the TV receiver shown in Fig. 83, displaying a search result of the cooking recipe.
[Fig. 86] Fig. 86 is a flowchart showing an operation of the TV receiver shown in Fig. 83, after the display screen is turned on.
[Fig. 87] Fig. 87 is a flowchart showing an operation of the TV receiver shown in Fig. 83, for finding the cooking recipe.
[Fig. 88] Fig. 88 is a flowchart showing an operation of the TV receiver, performed when the power instruction apparatus receives a cooking recipe from outside of the house.
[Fig. 89] Fig. 89 is a schematic drawing showing a general configuration of a household in which a power control system and a power instruction apparatus according to Embodiment 5 of the present invention are provided.
[Fig. 90] Fig. 90 is a first front view showing an essential part of a display panel of the power instruction apparatus in the power control system shown in Fig. 89.
[Fig. 91] Fig. 91 is a second front view showing an essential part of a display panel of the power instruction apparatus in the power control system shown in Fig. 89.
[Fig. 92] Fig. 92 is a third front view showing an essential part of a display panel of the power instruction apparatus in the power control system shown in Fig. 89.
[Fig. 93] Fig. 93 is a flowchart showing an operation performed by the control unit when an absence setting key is pressed in the power instruction apparatus shown in Fig. 89.
[Fig. 94] Fig. 94 is a flowchart showing an operation performed by the control unit of the power instruction apparatus shown in Fig. 89, when the occupant comes home.
[Fig. 95] Fig. 95 is a second flowchart showing an operation performed by the control unit of the power instruction apparatus shown in Fig. 89, to monitor environmental changes in the household.
[Fig. 96] Fig. 96 is a second flowchart showing the operation performed by the control unit of the power instruction apparatus shown in Fig. 89, to monitor environmental changes in the household.

### Description of Embodiments

### Embodiment 1

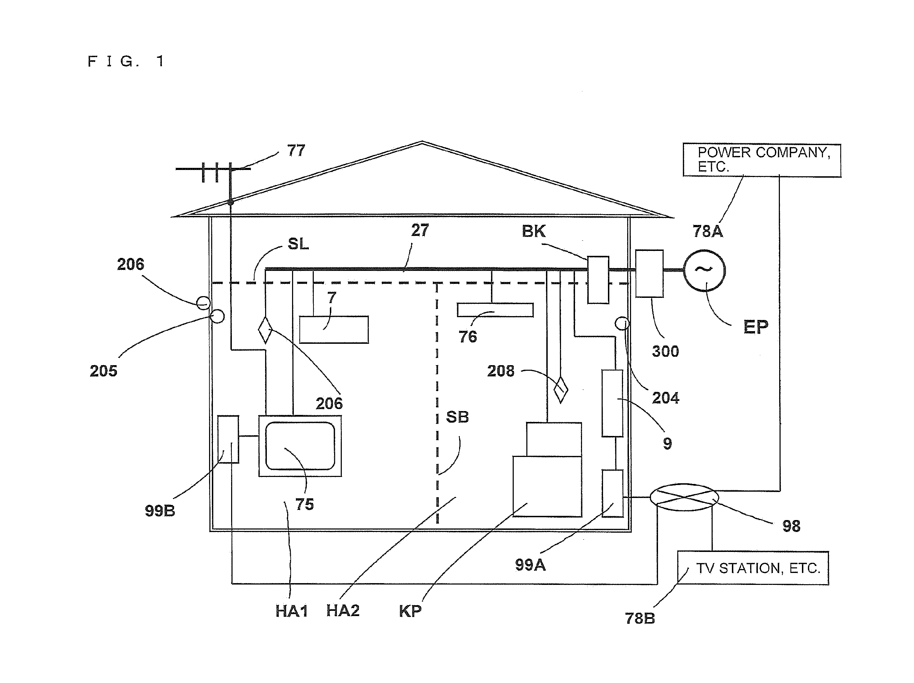

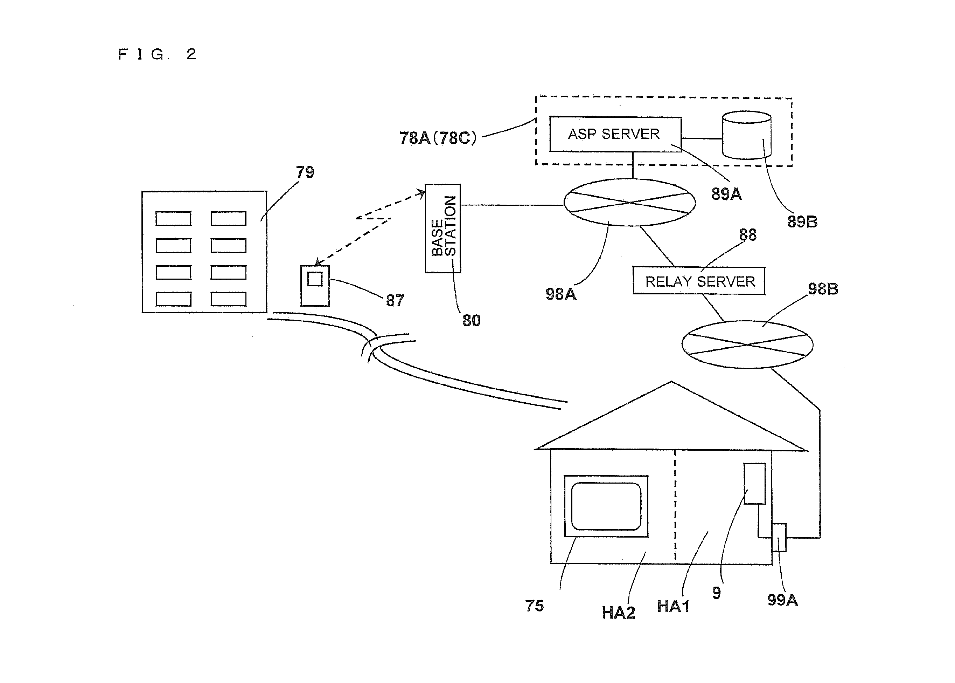

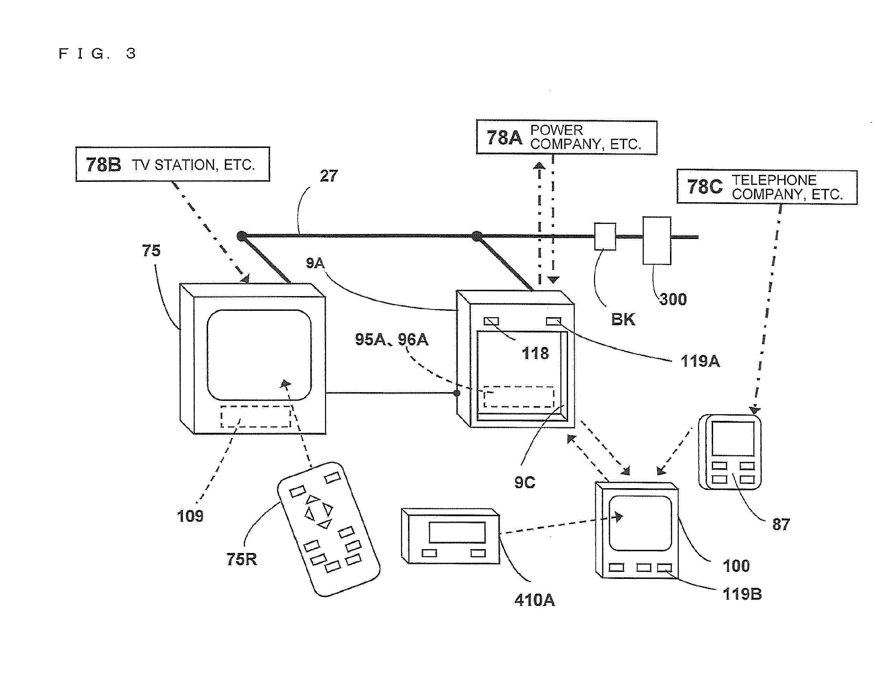

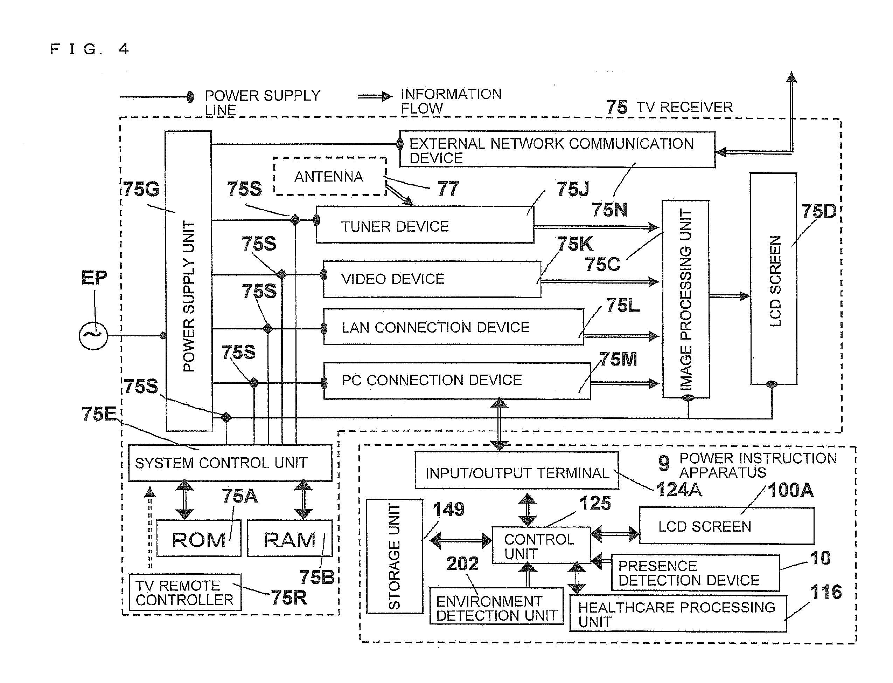

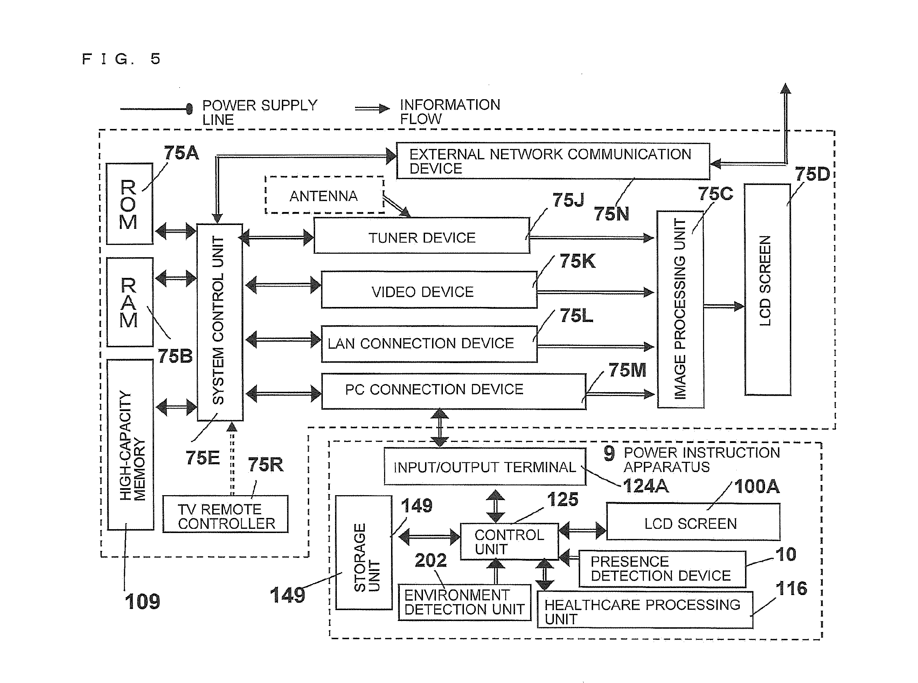

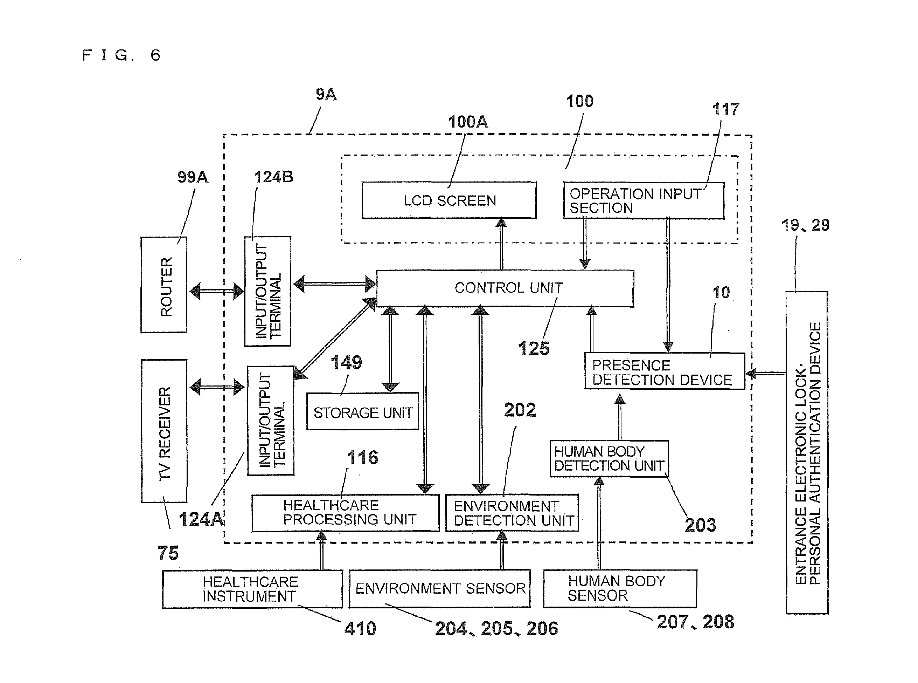

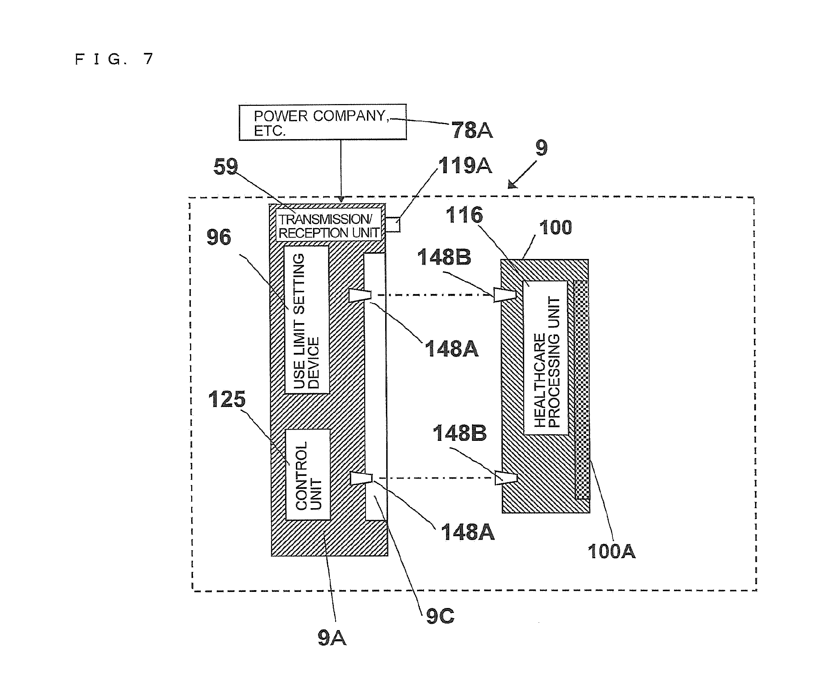

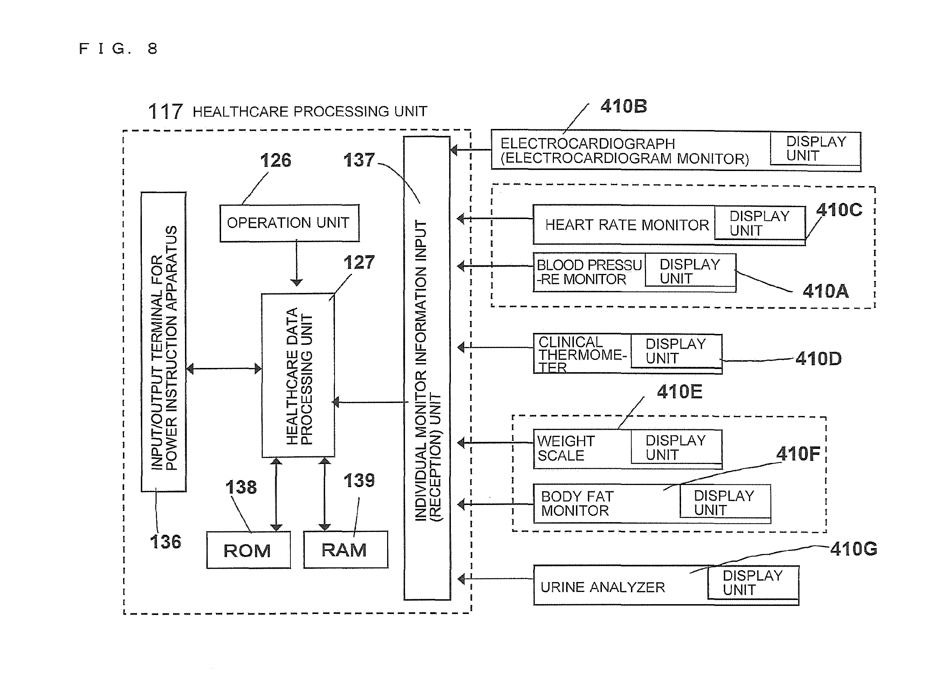

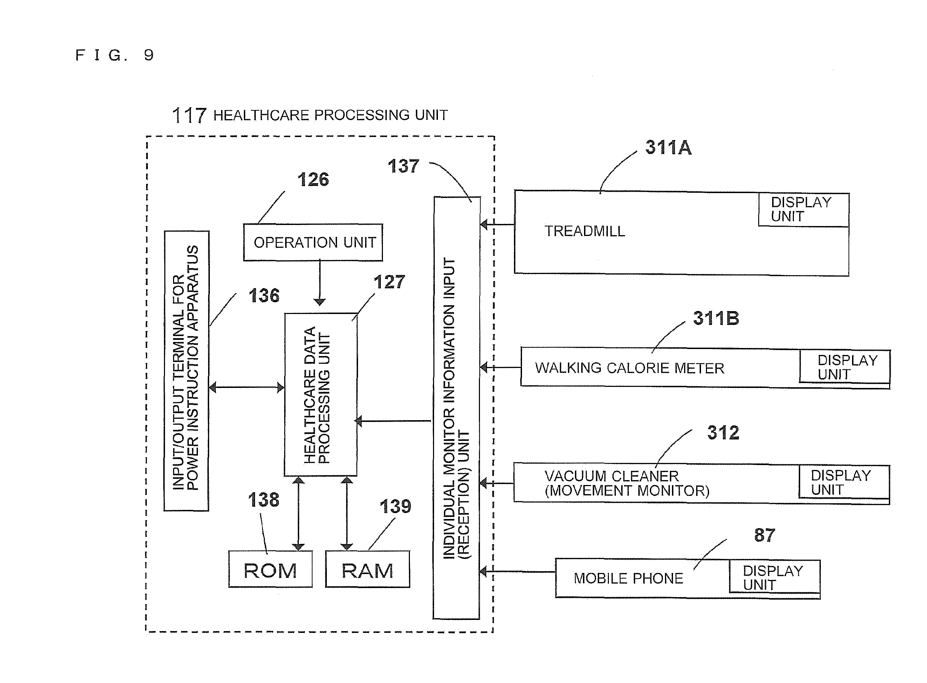

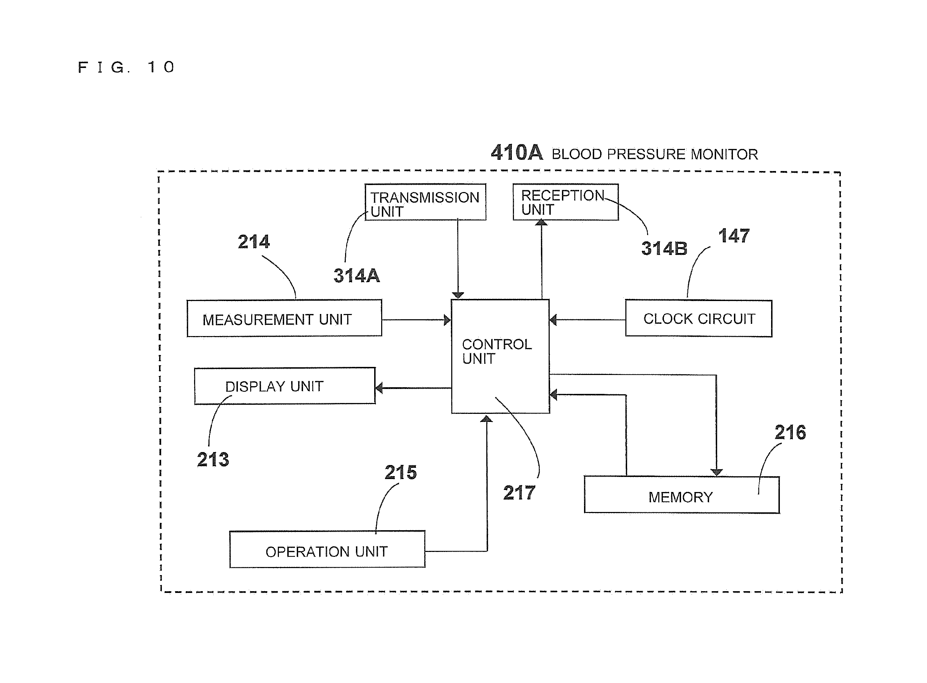

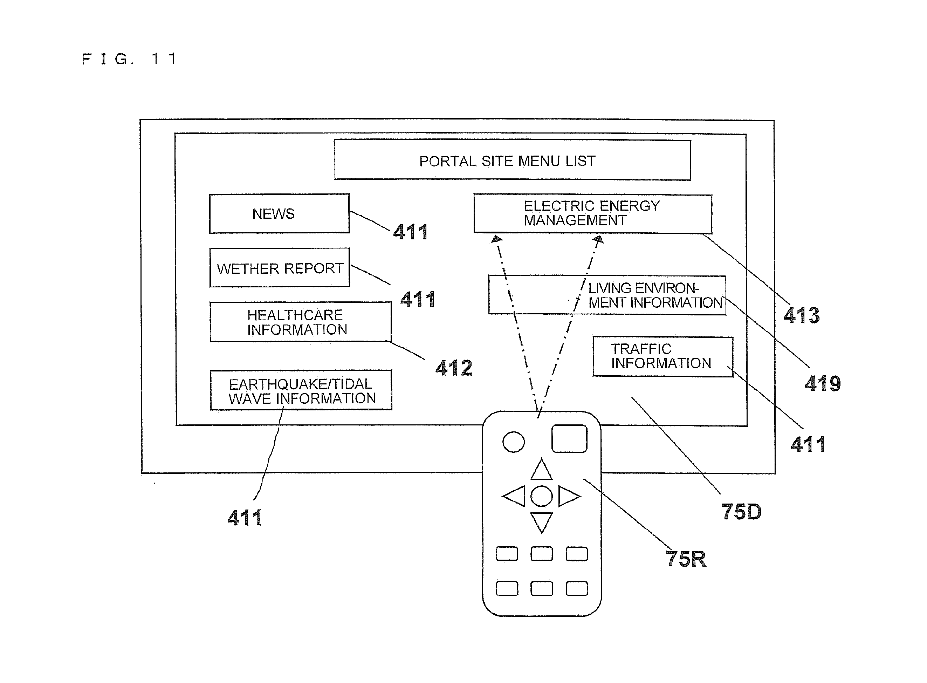

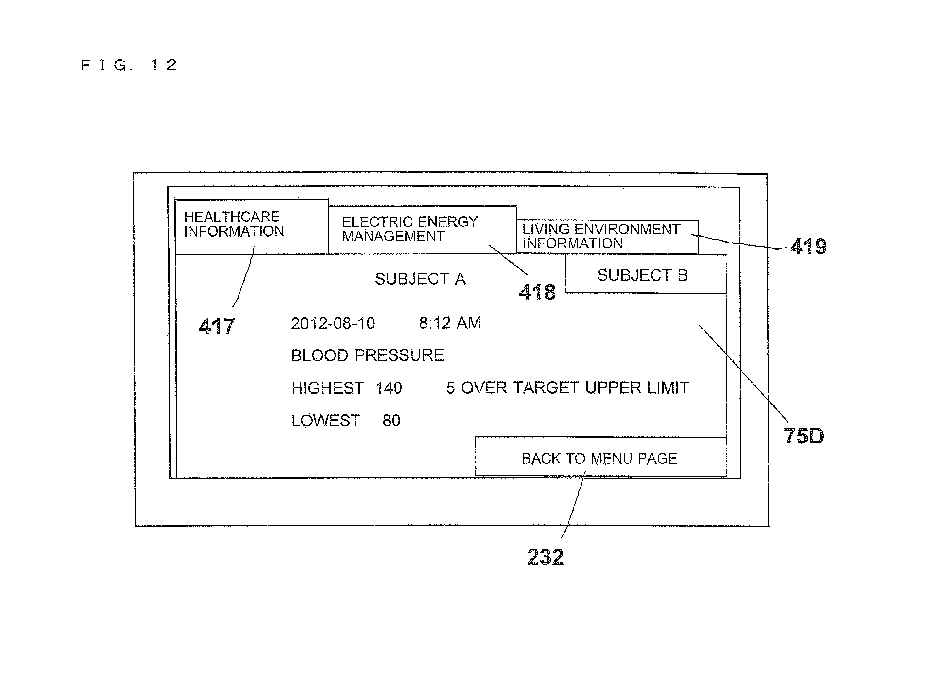

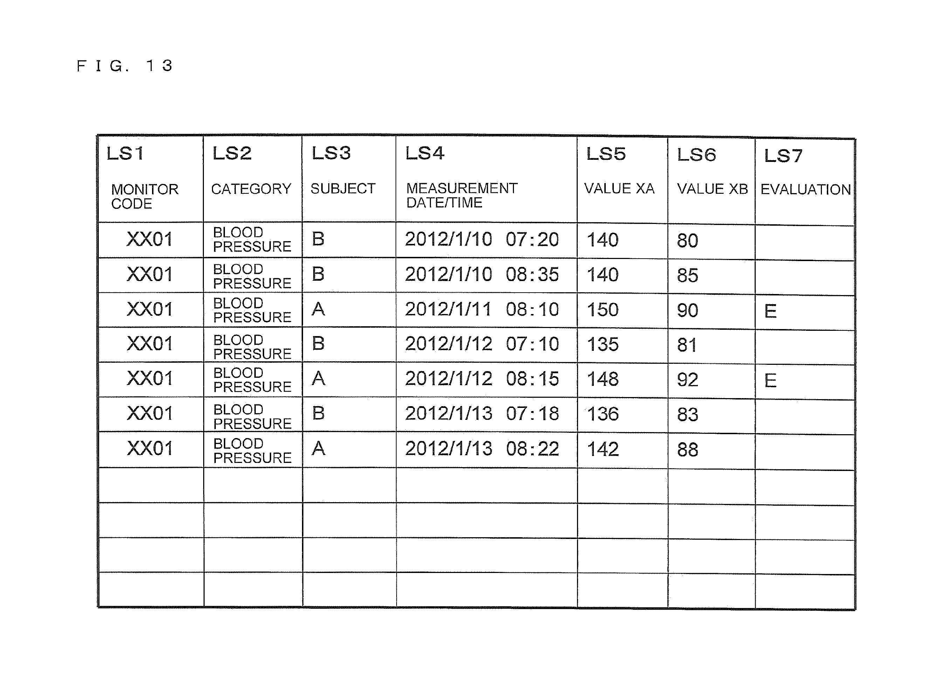

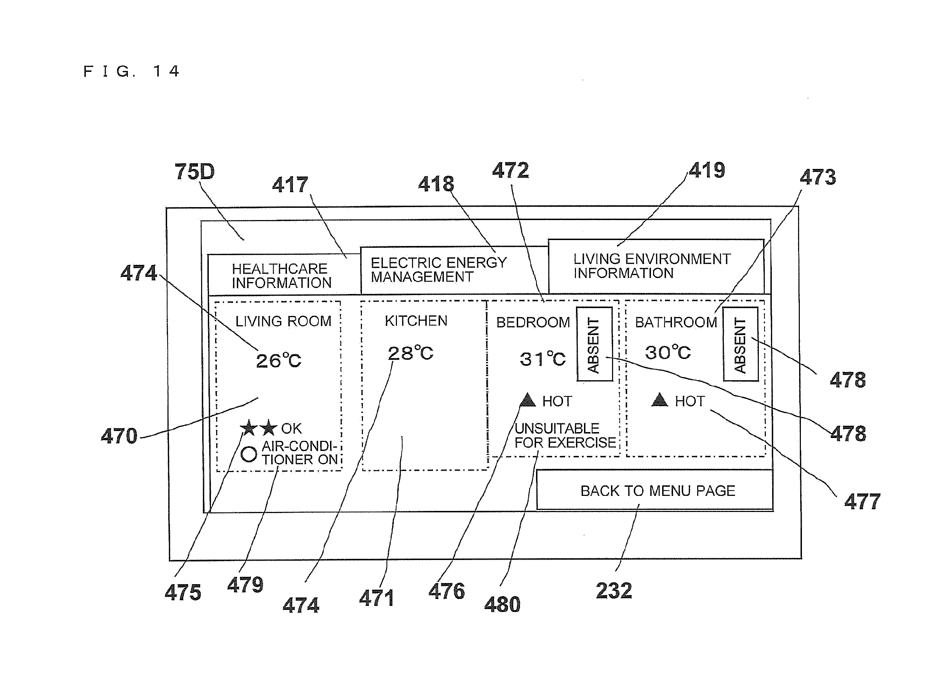

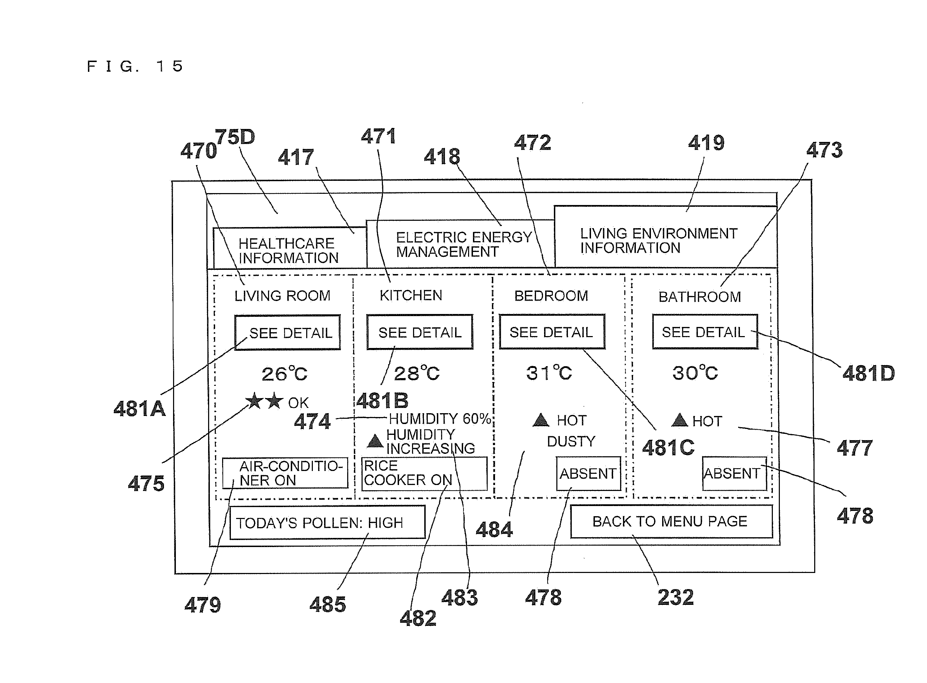

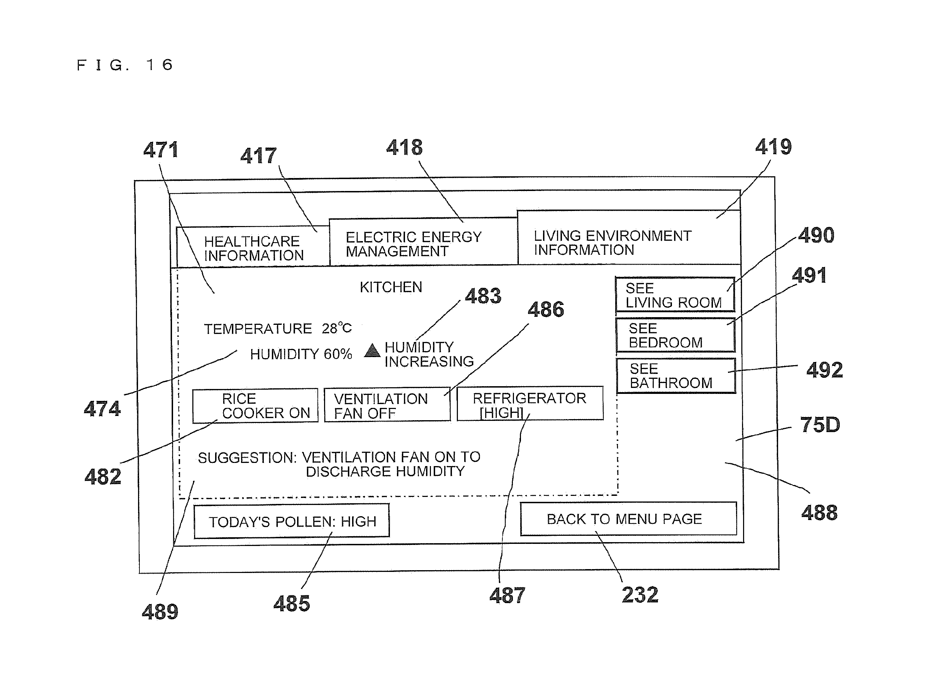

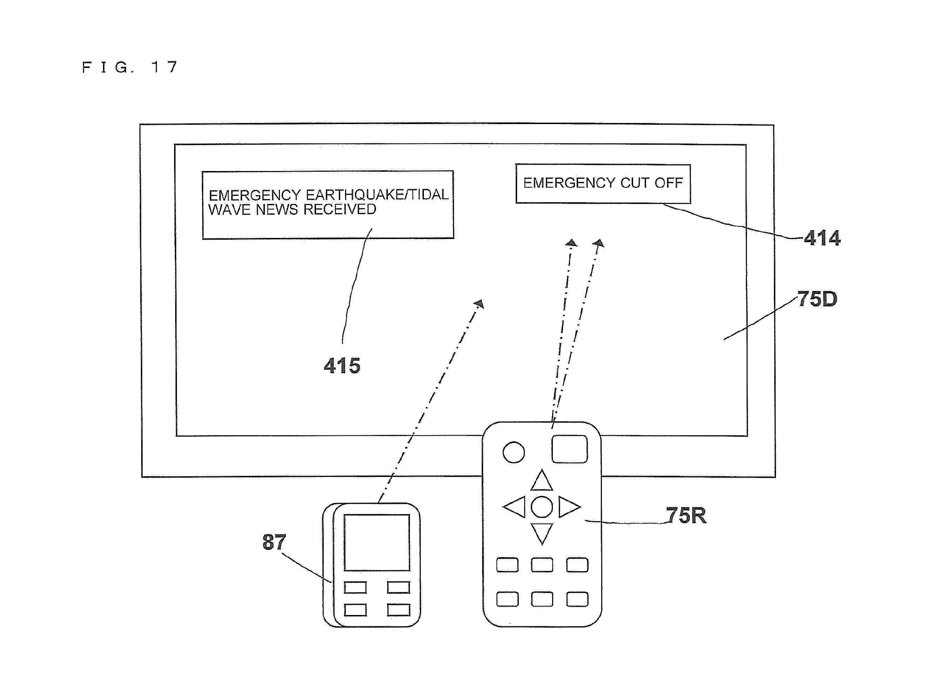

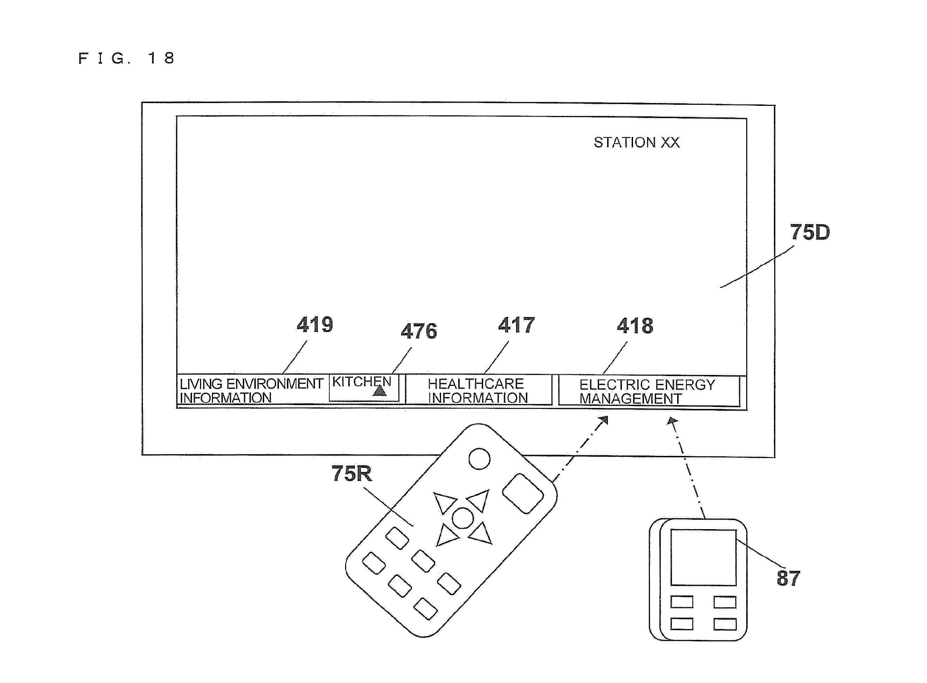

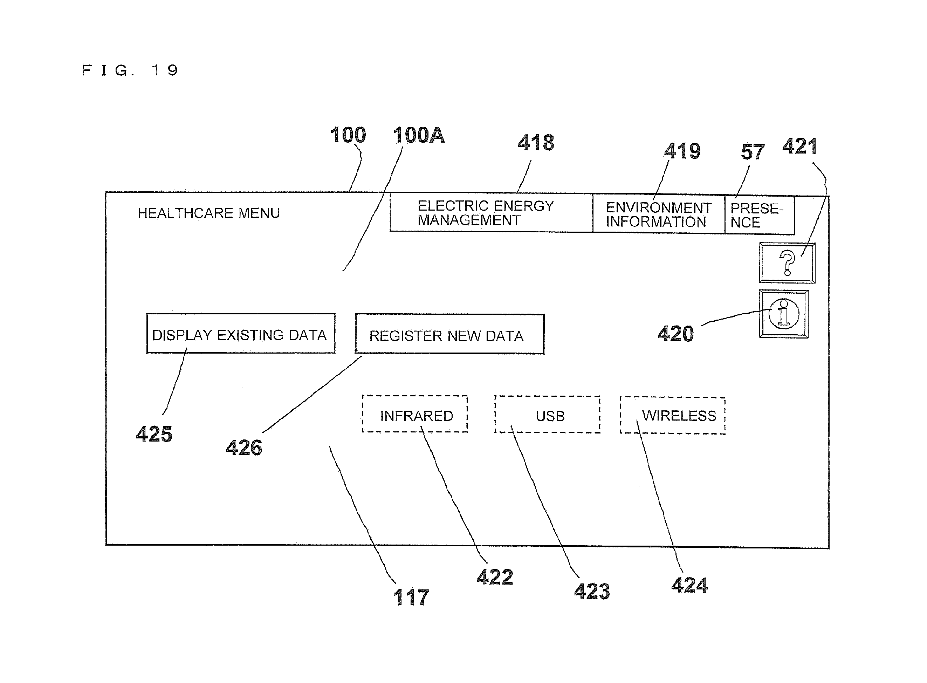

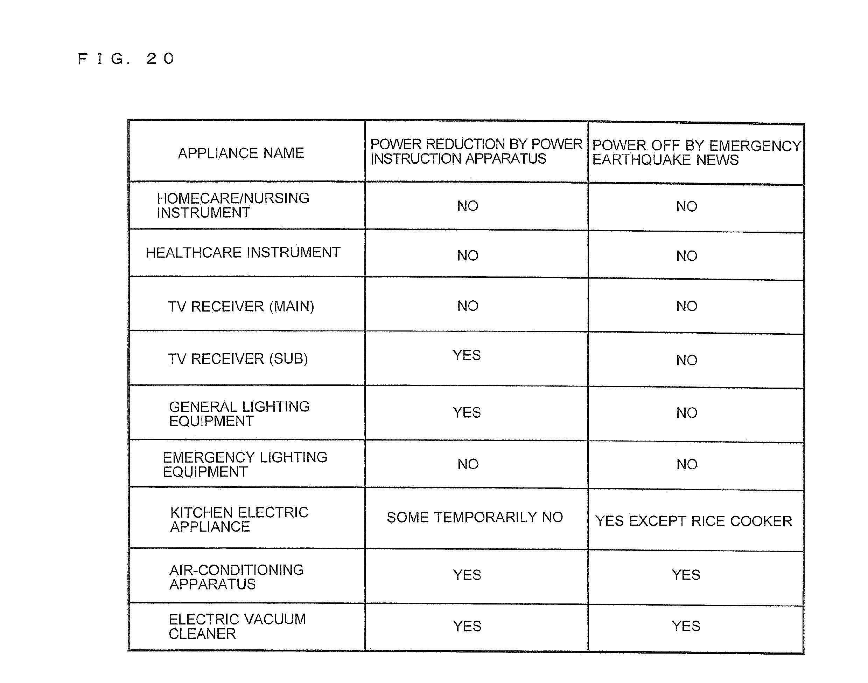

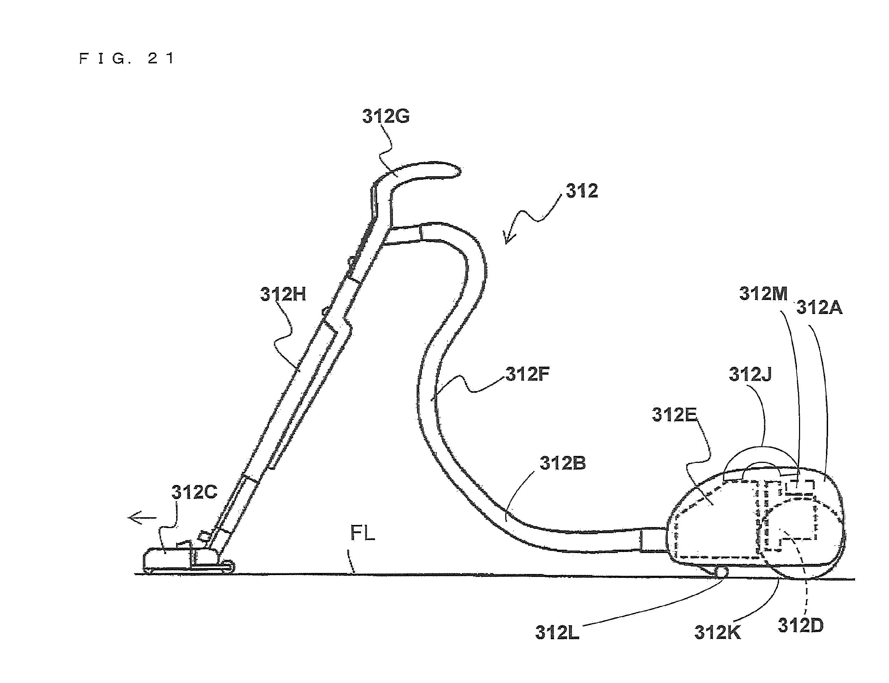

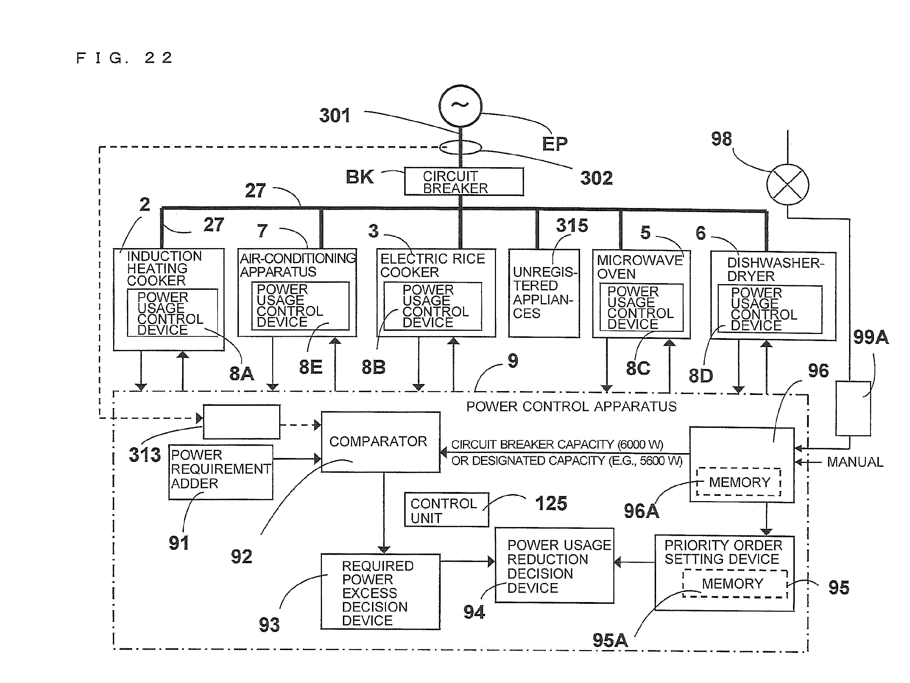

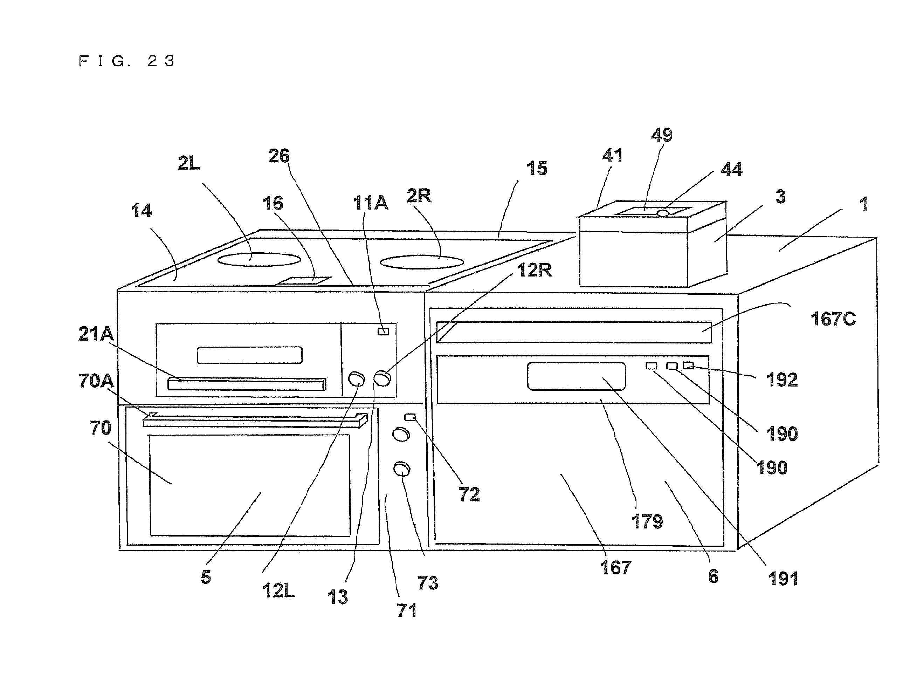

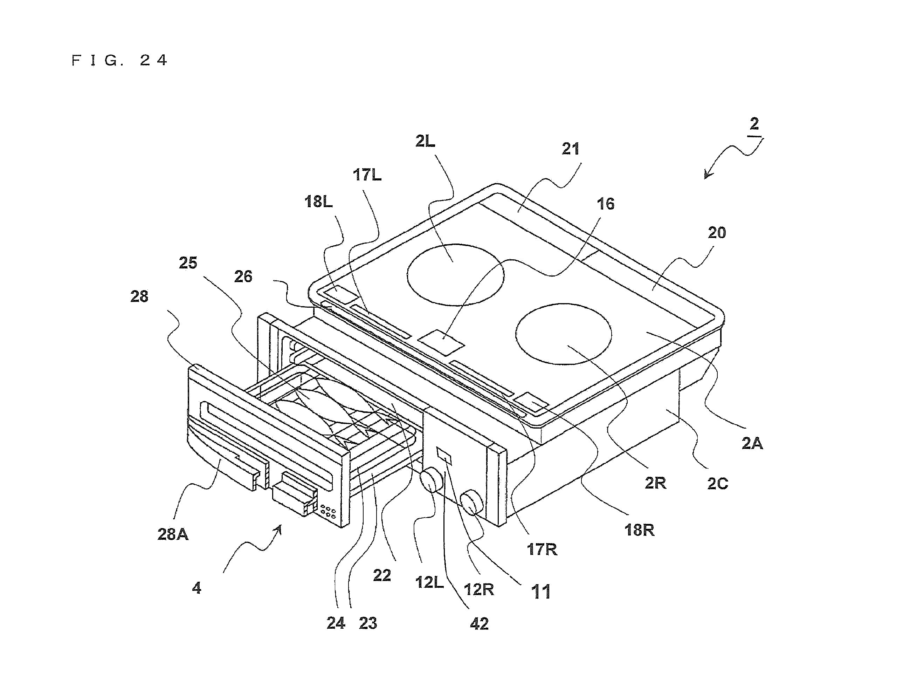

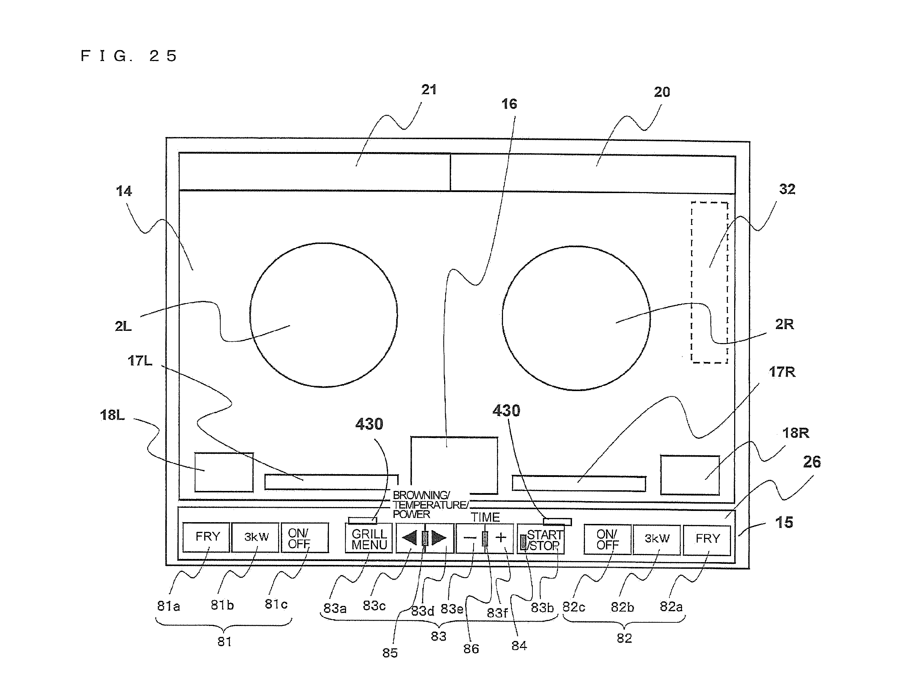

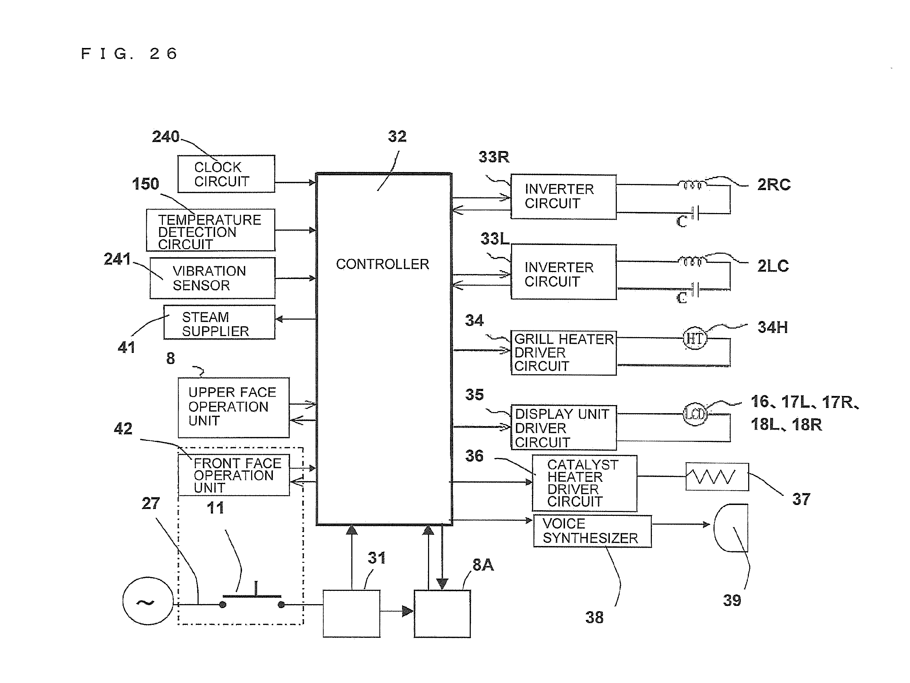

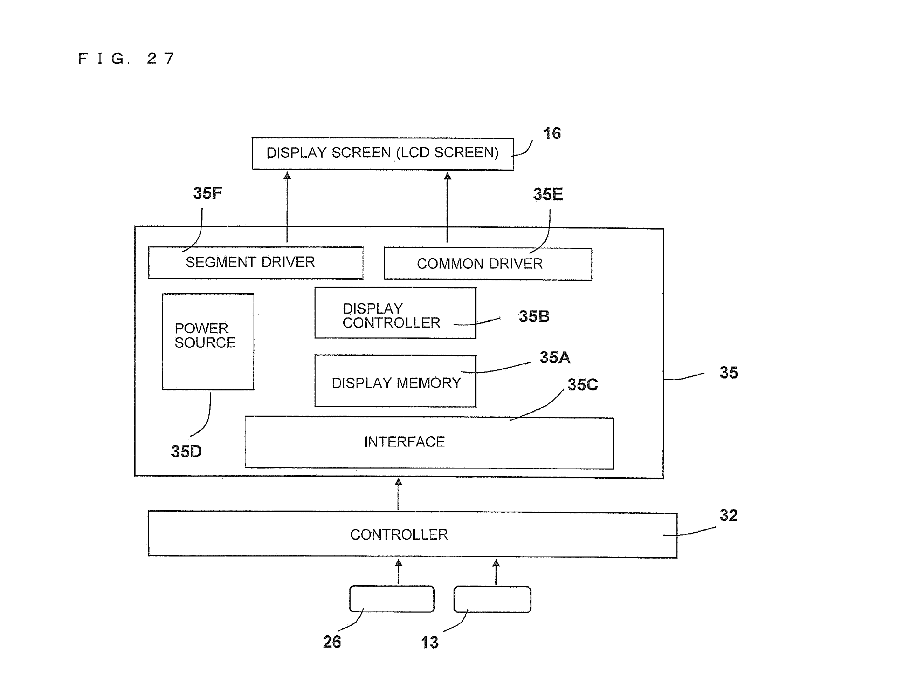

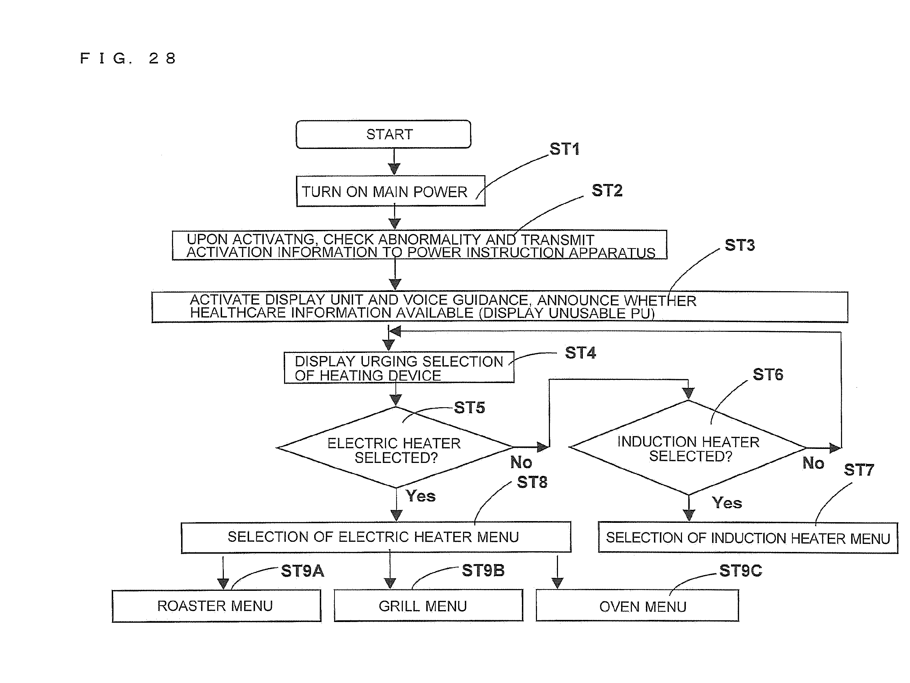

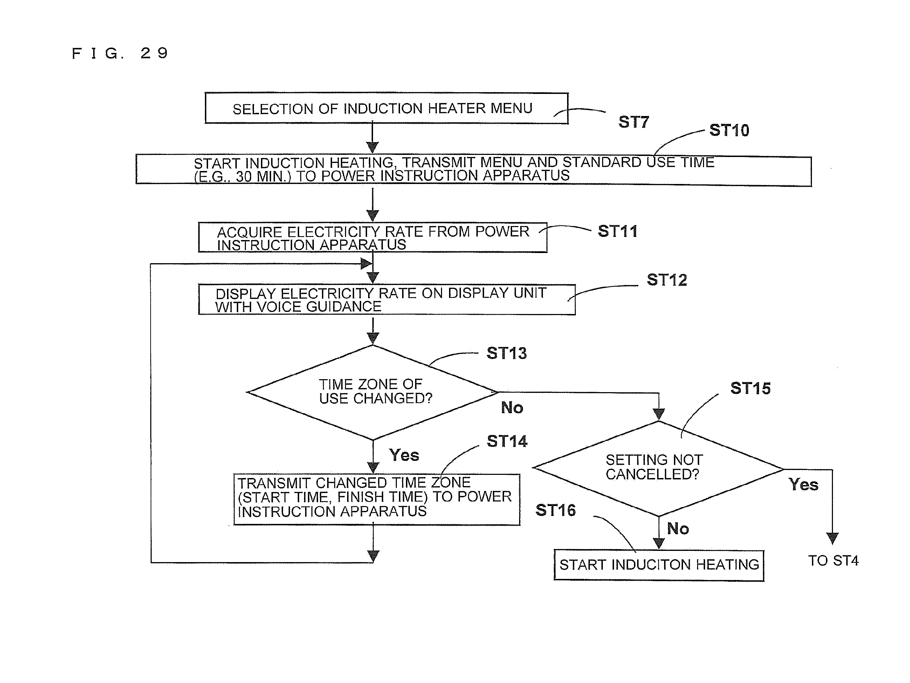

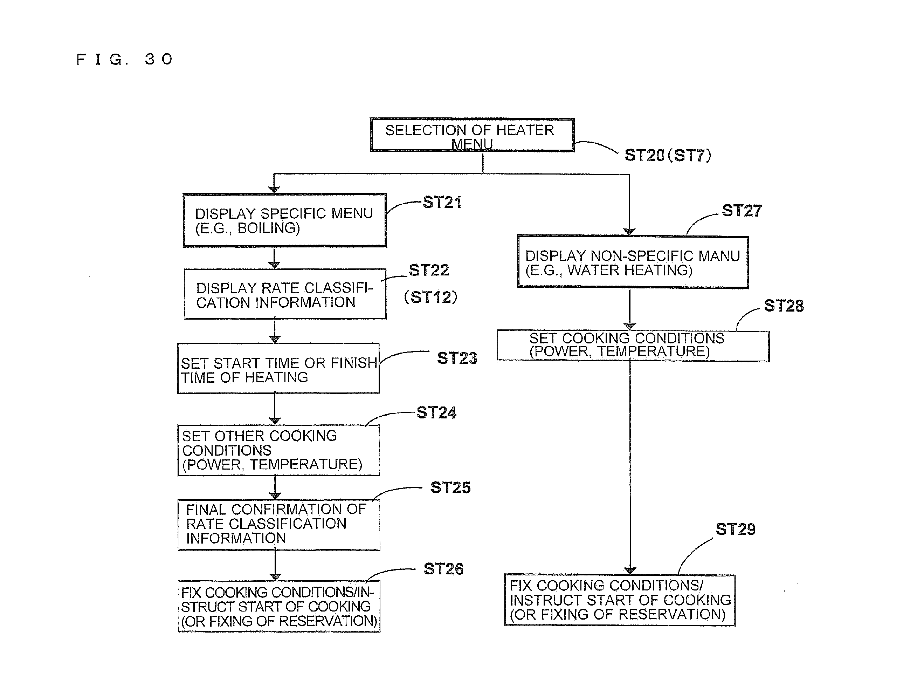

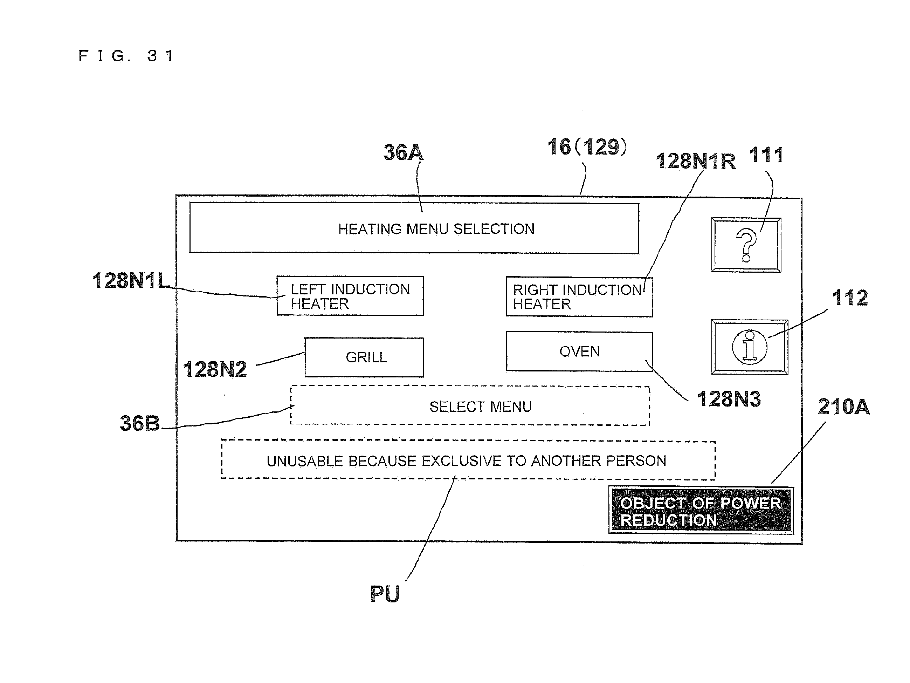

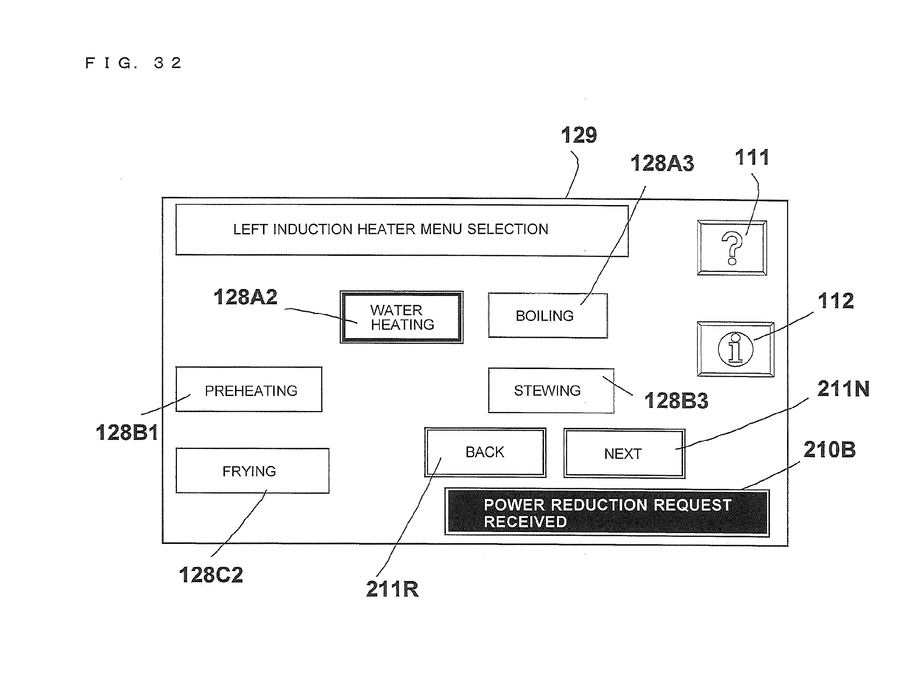

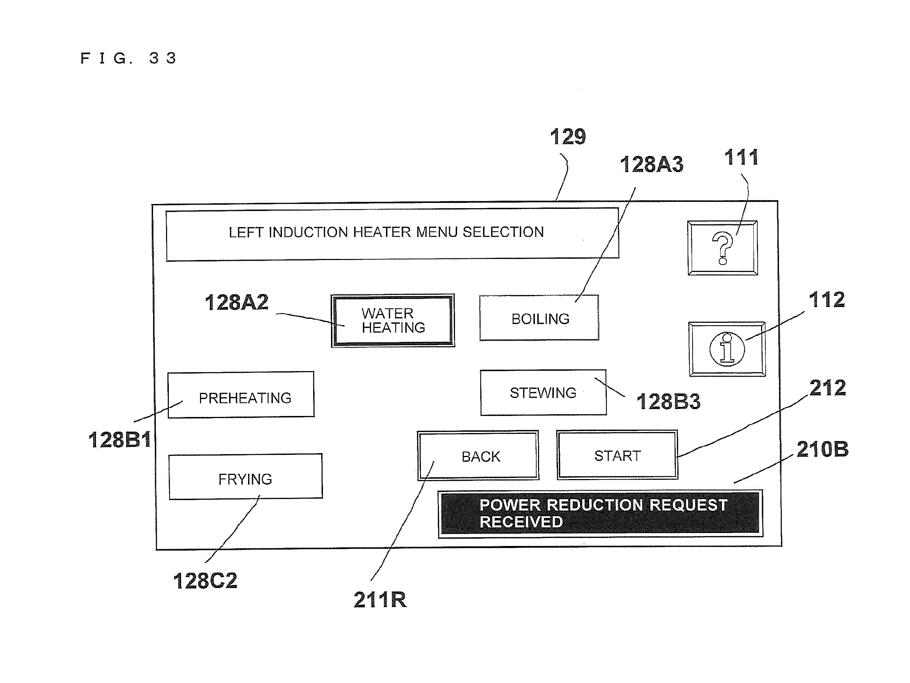

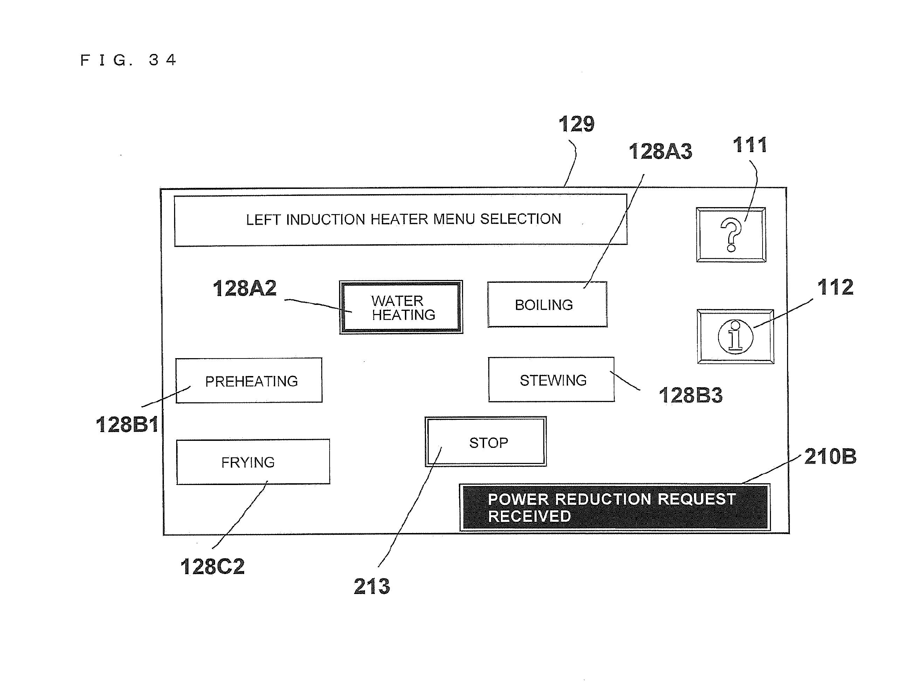

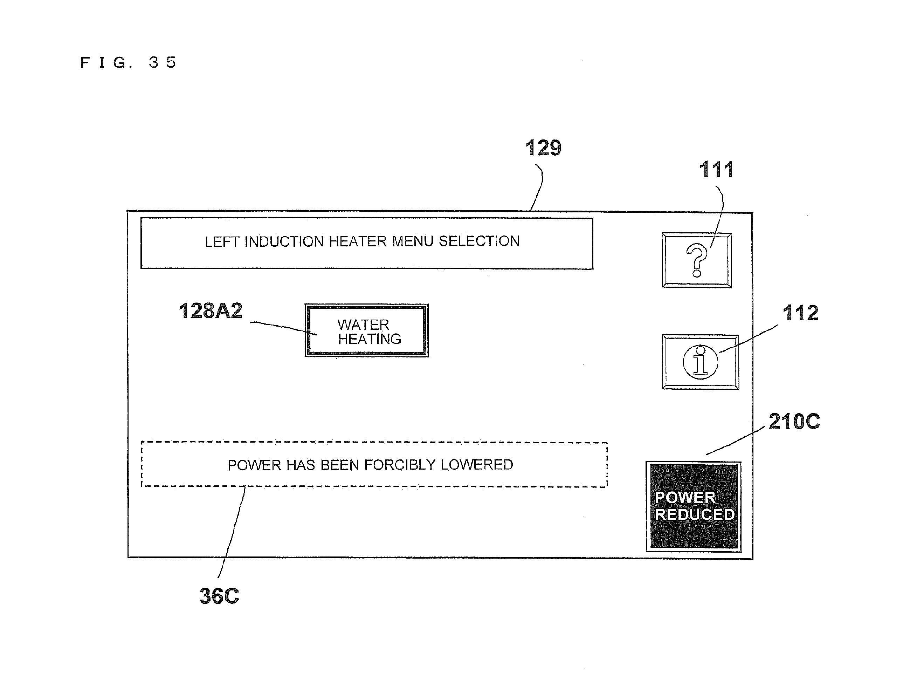

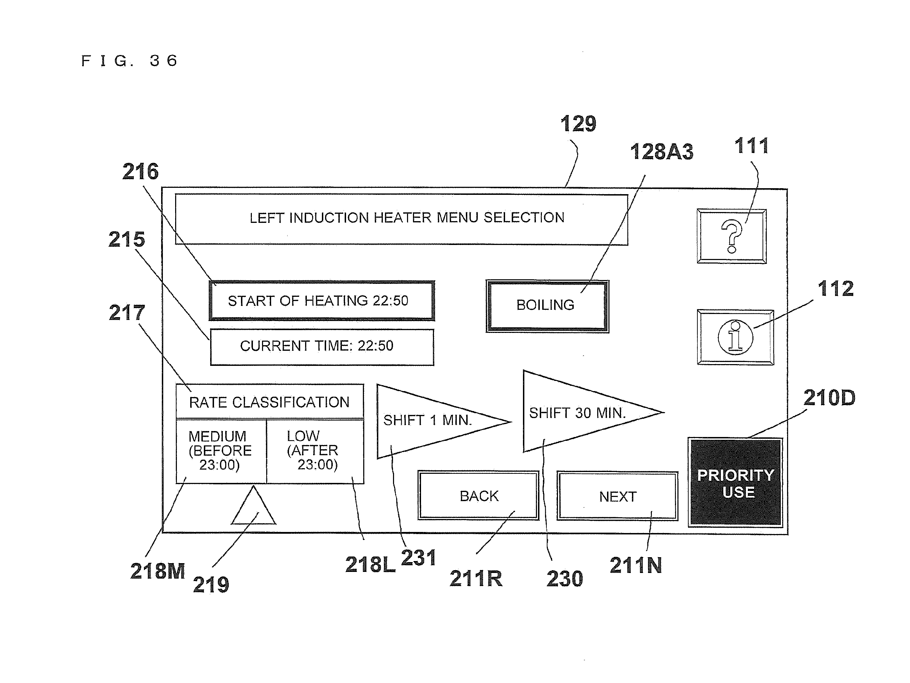

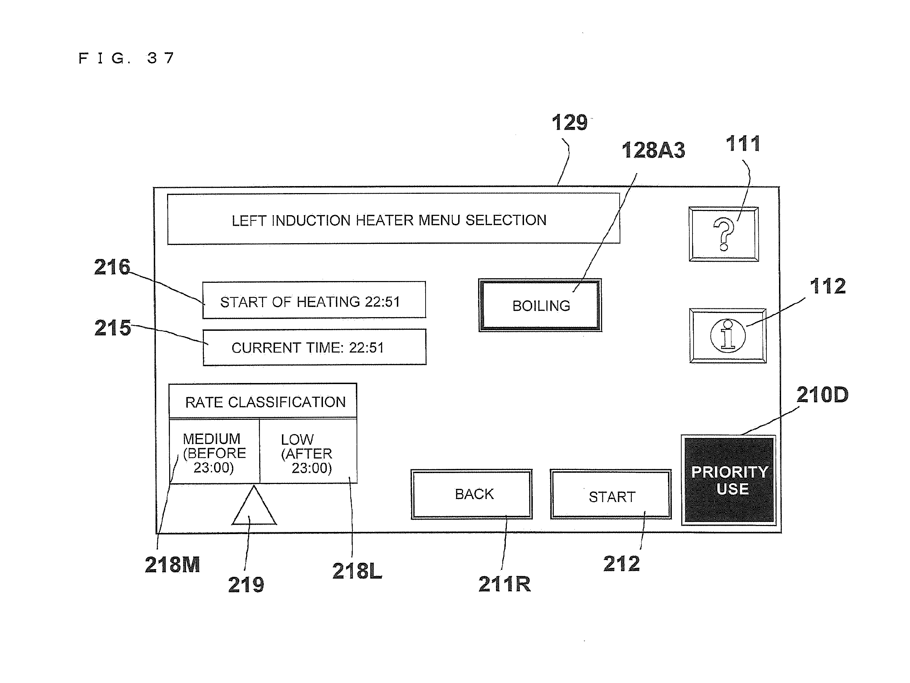

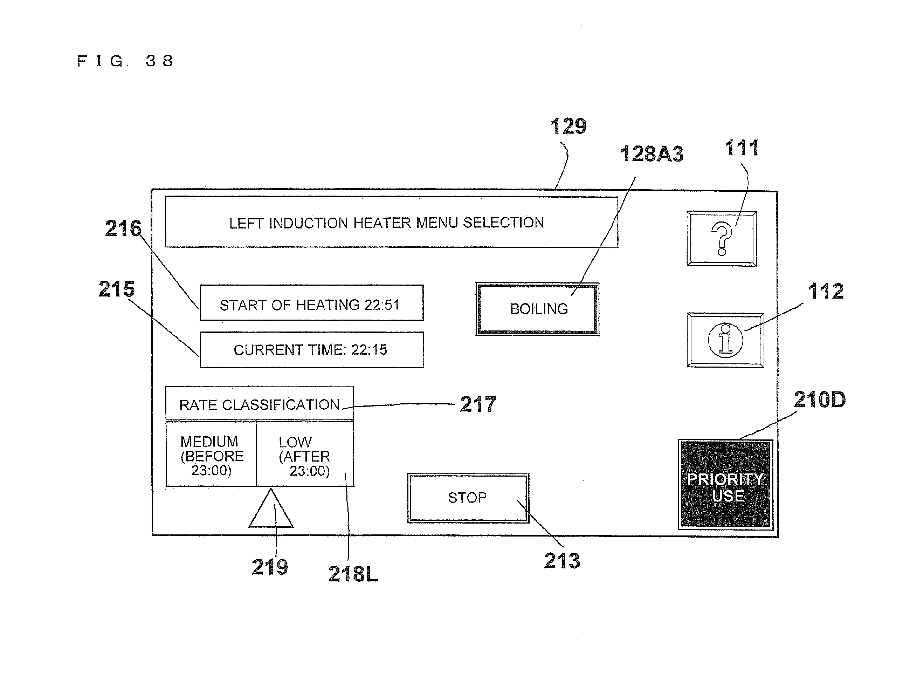

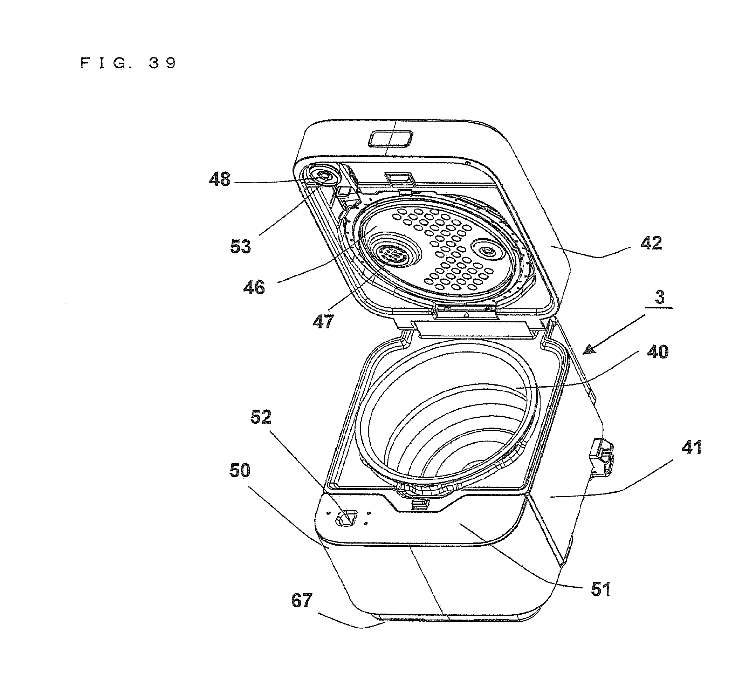

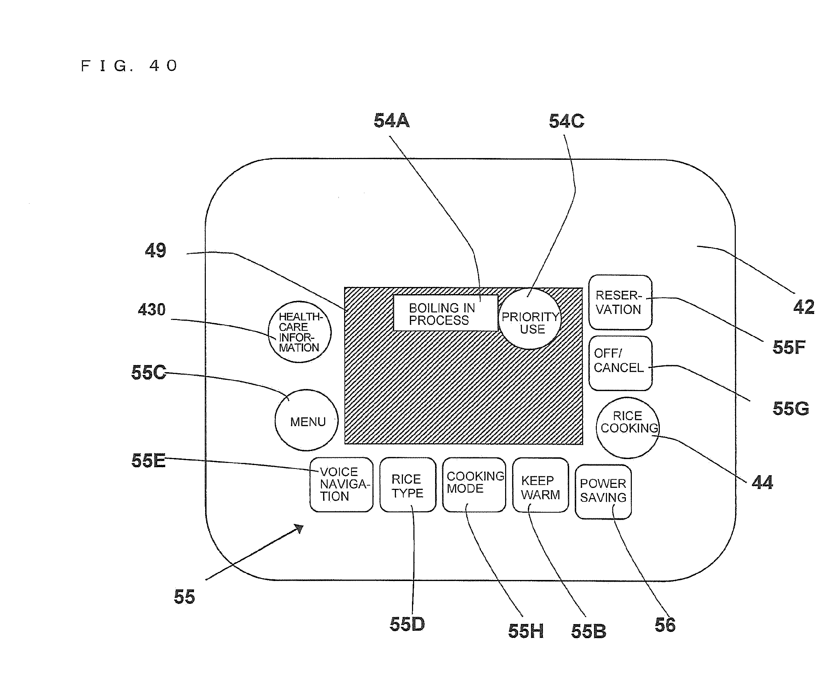

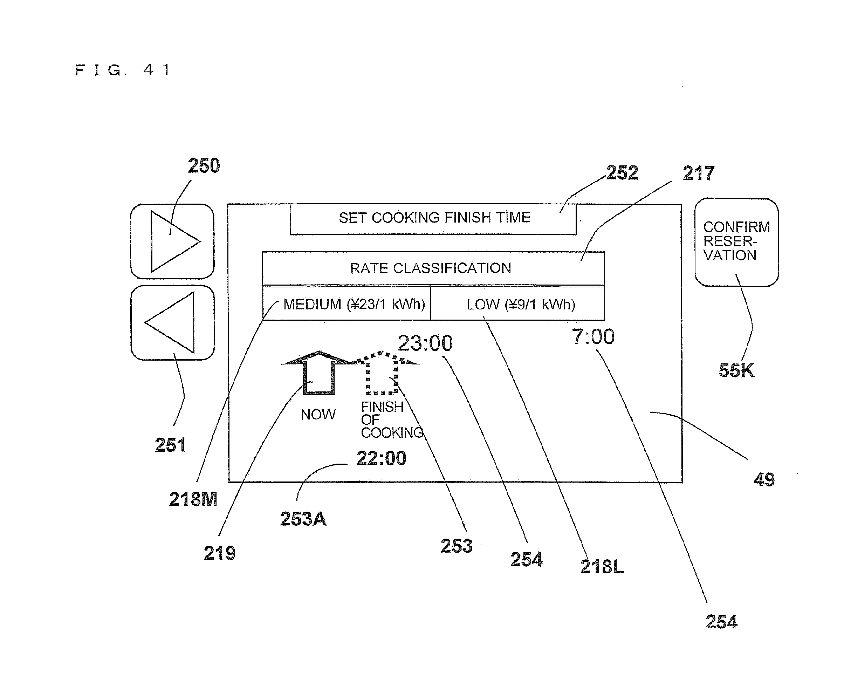

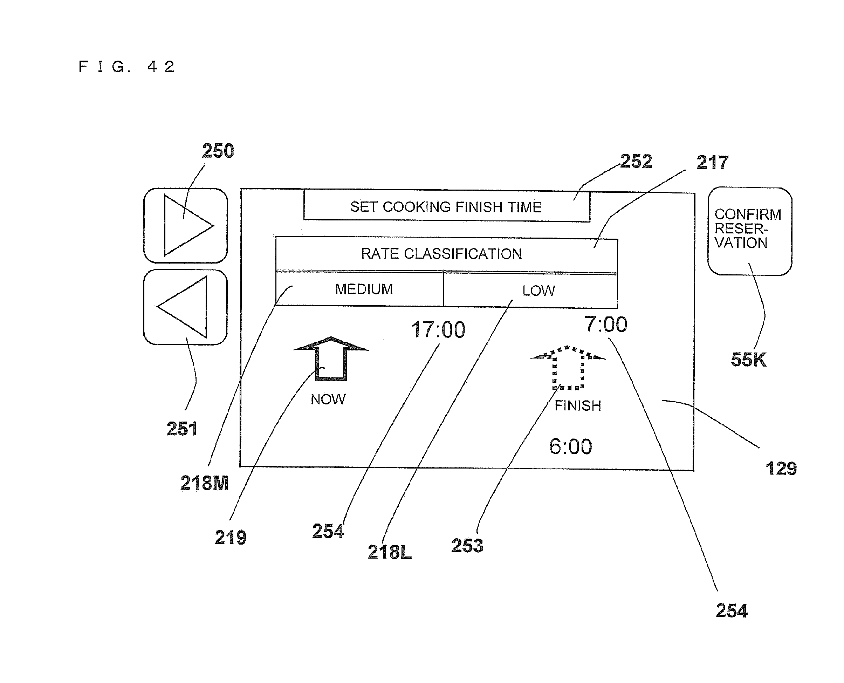

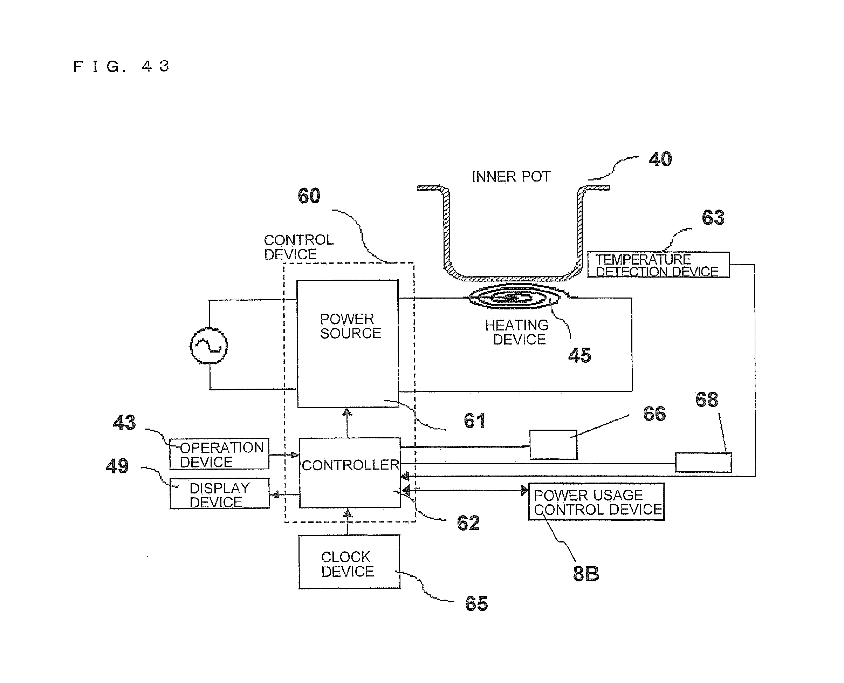

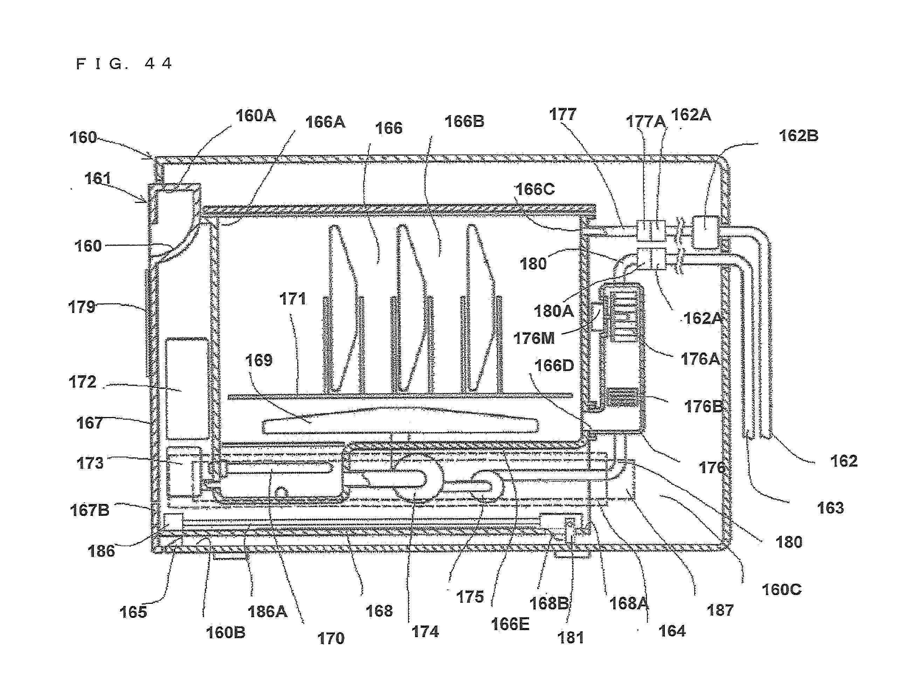

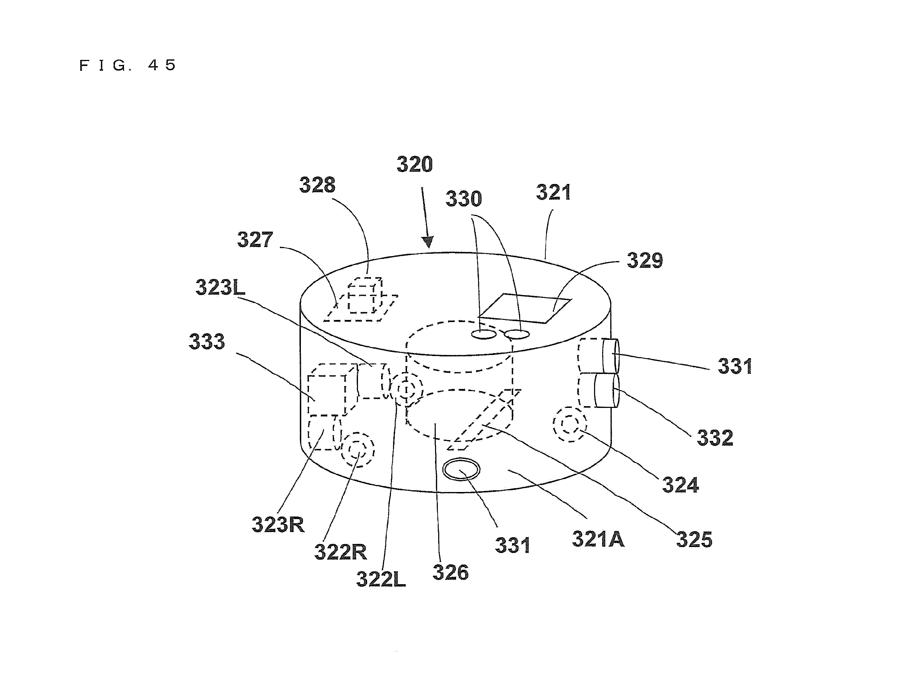

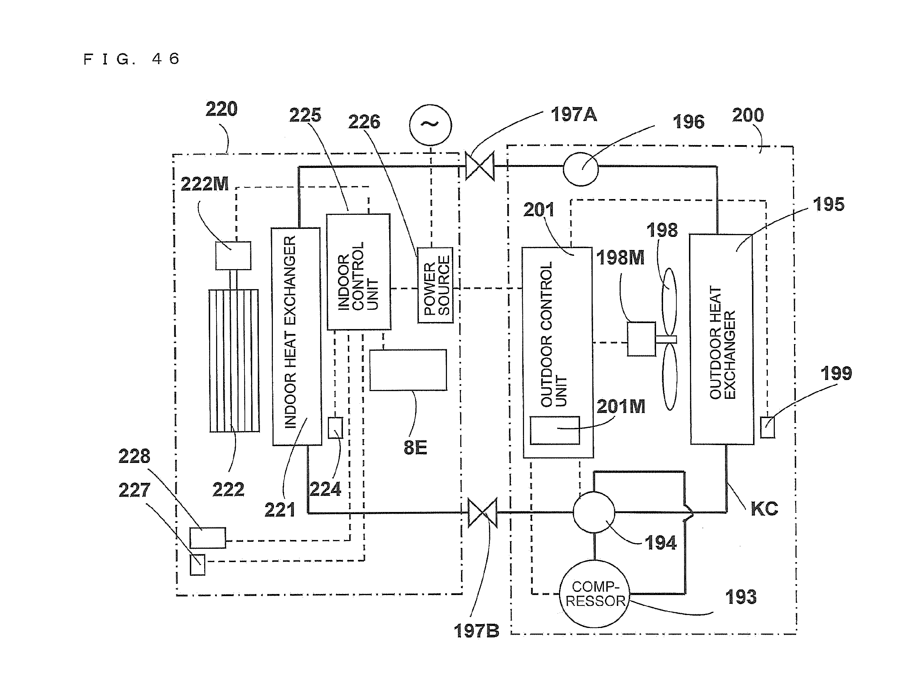

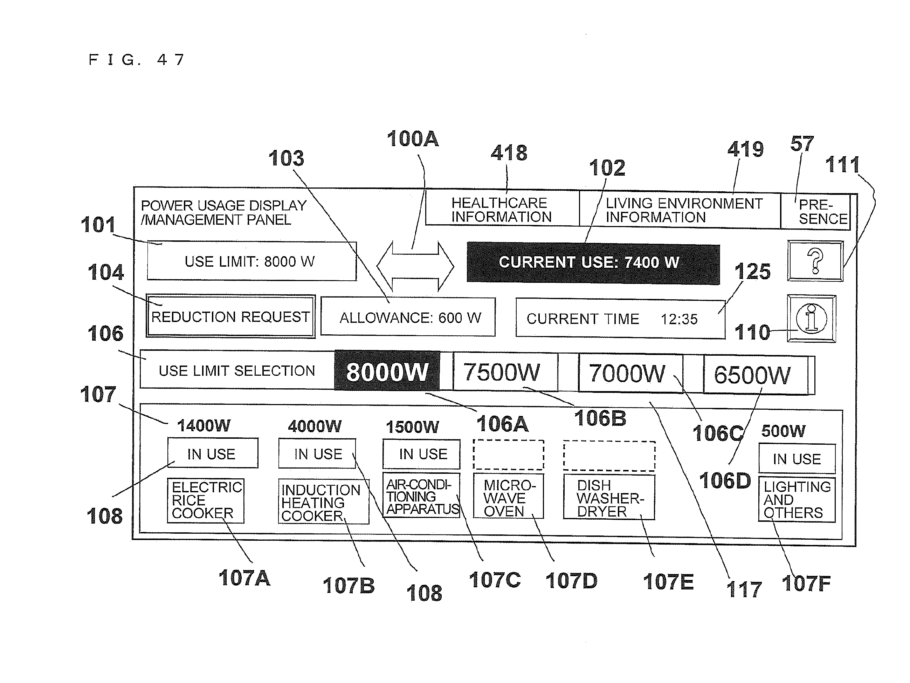

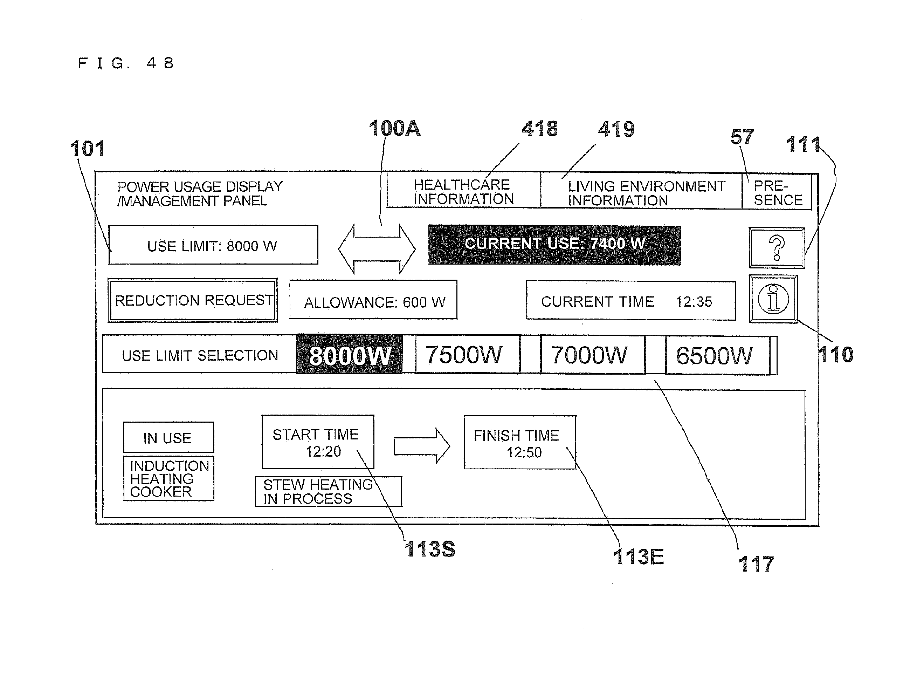

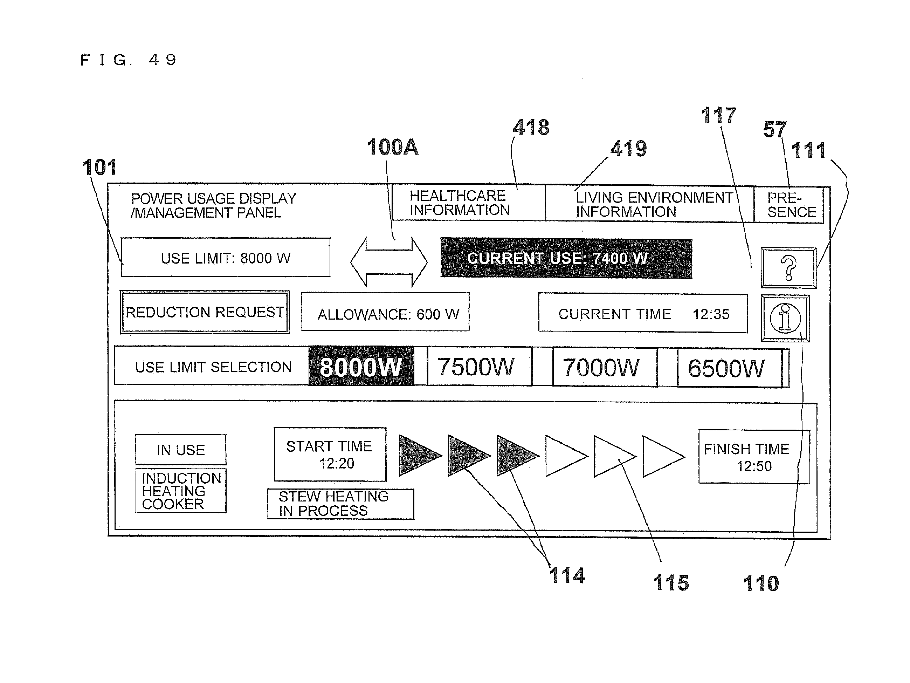

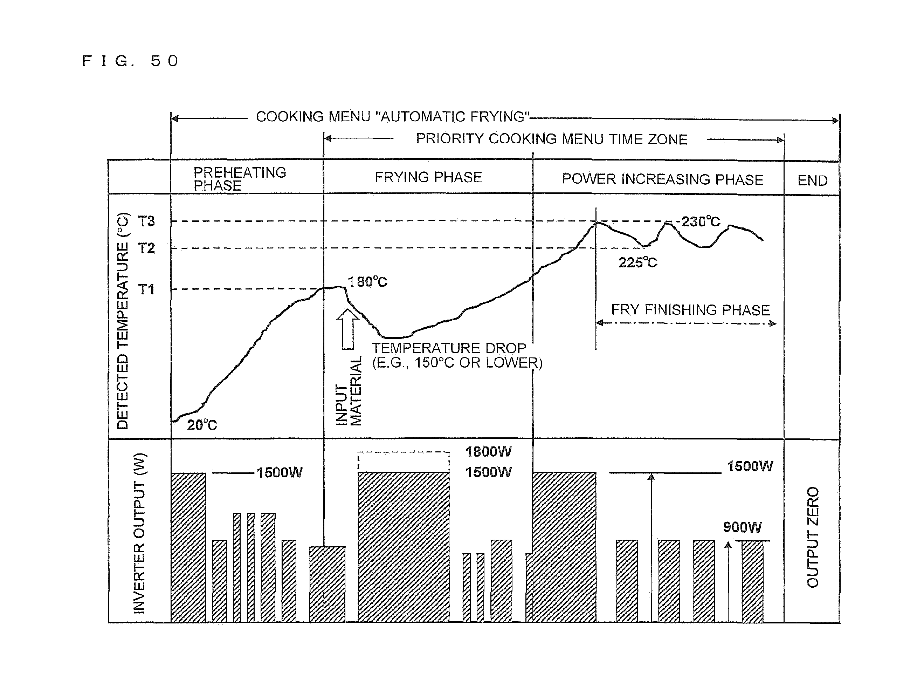

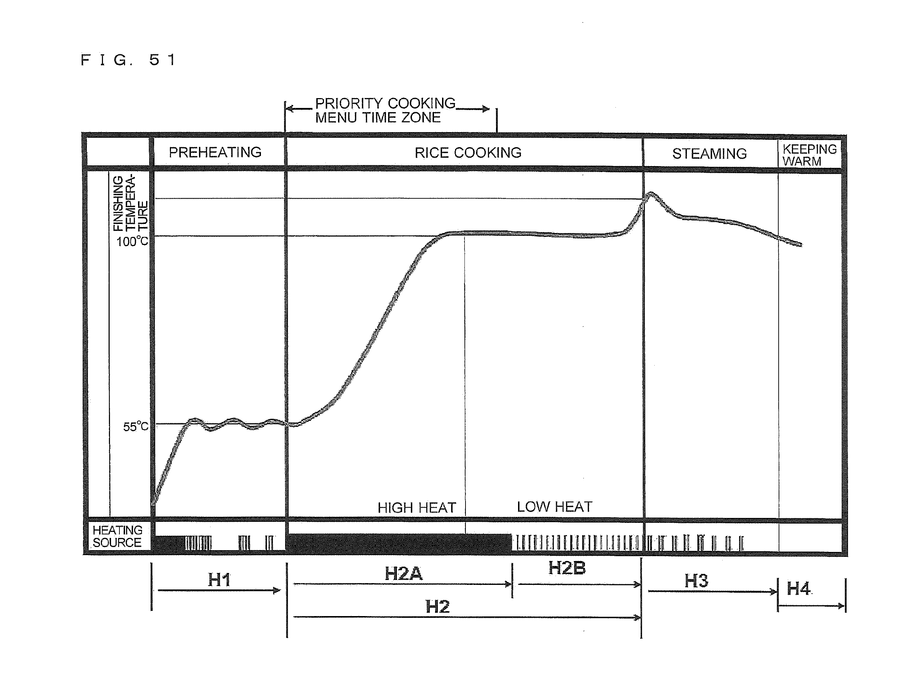

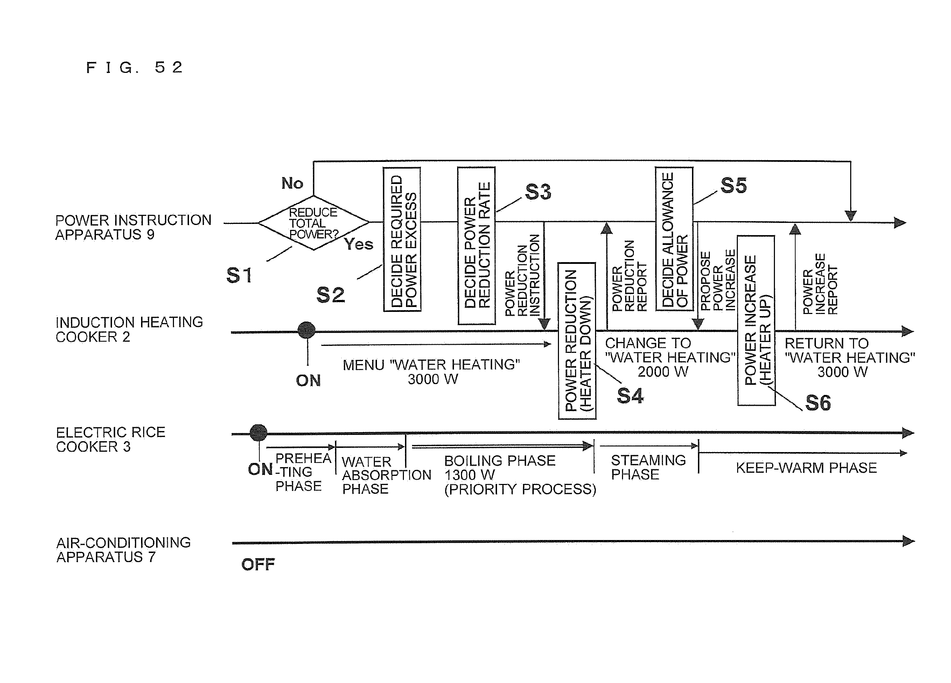

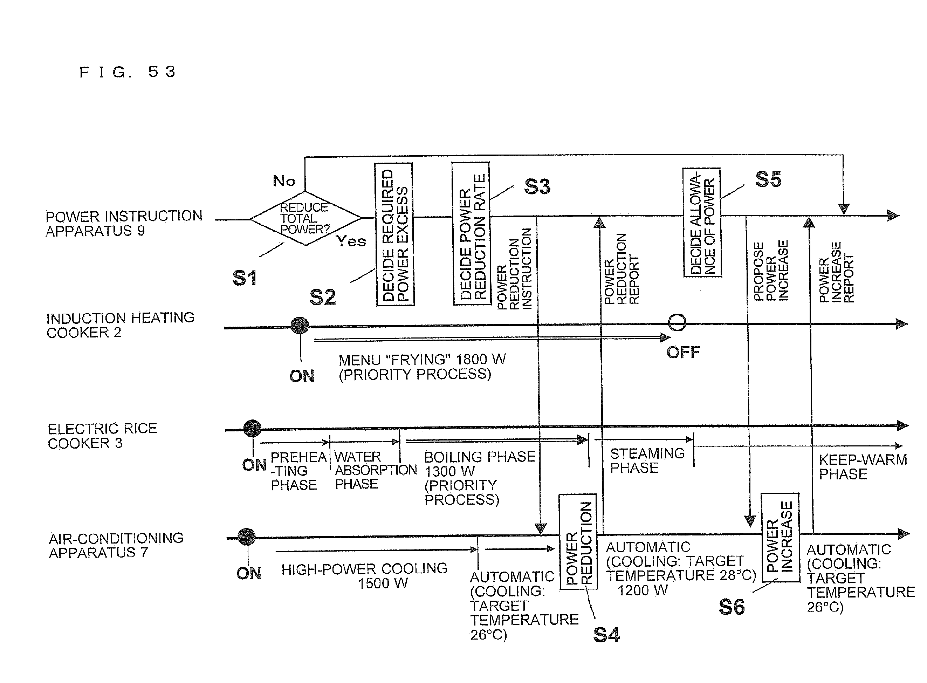

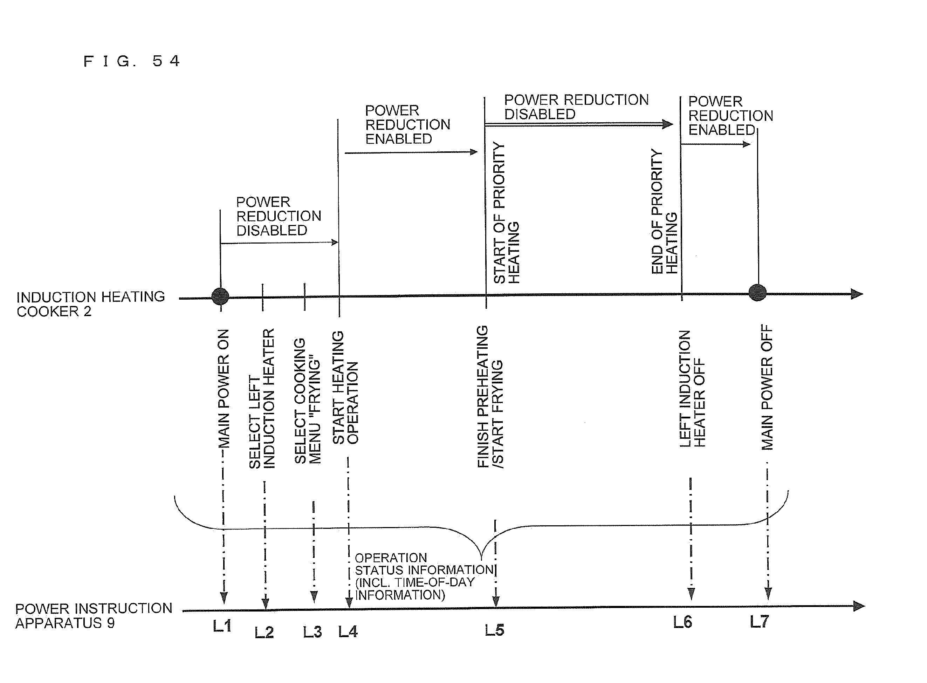

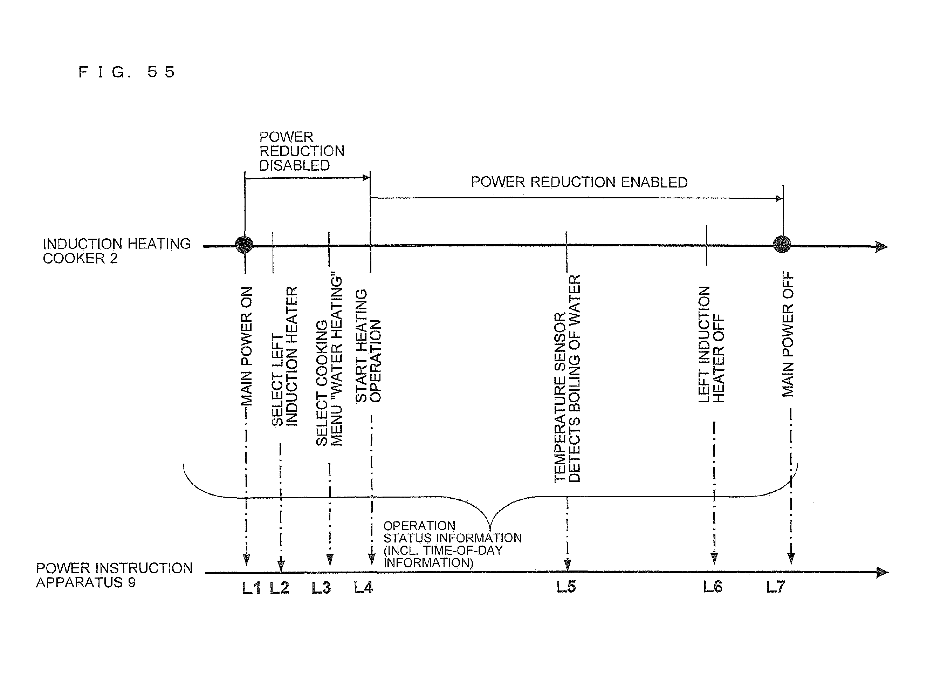

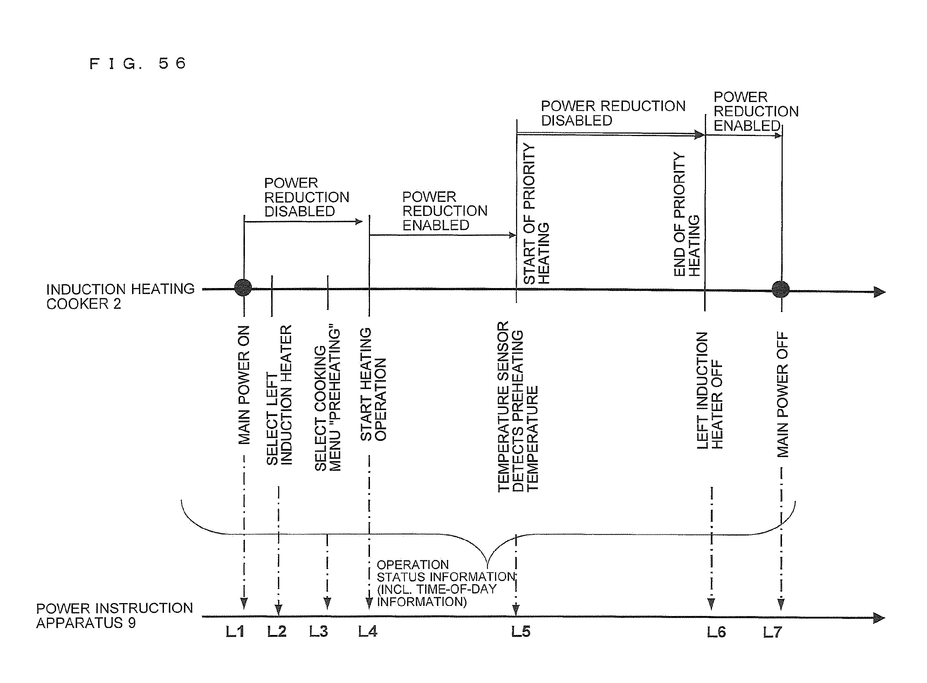

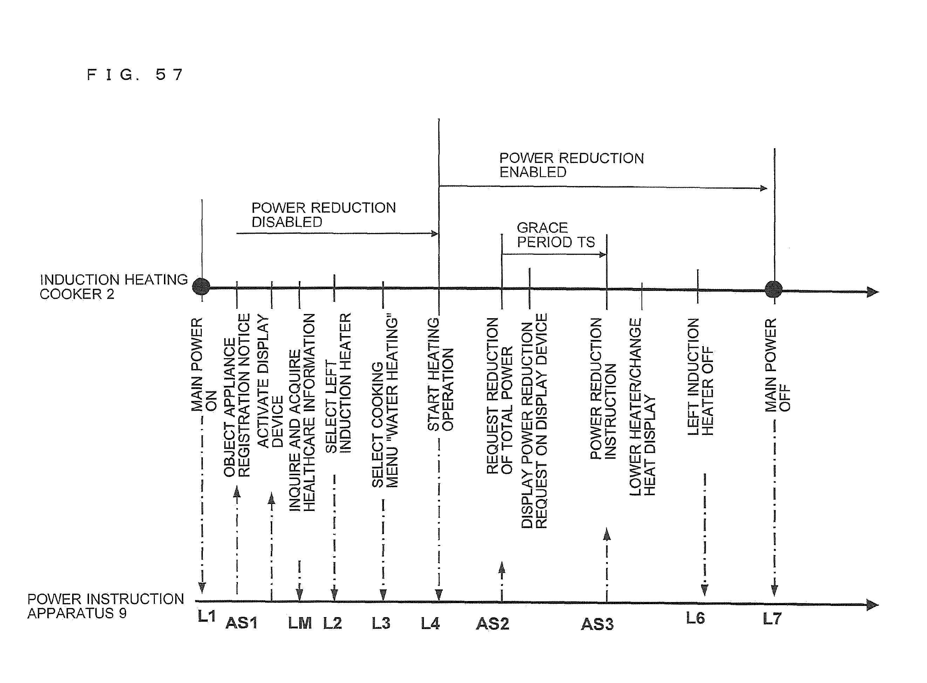

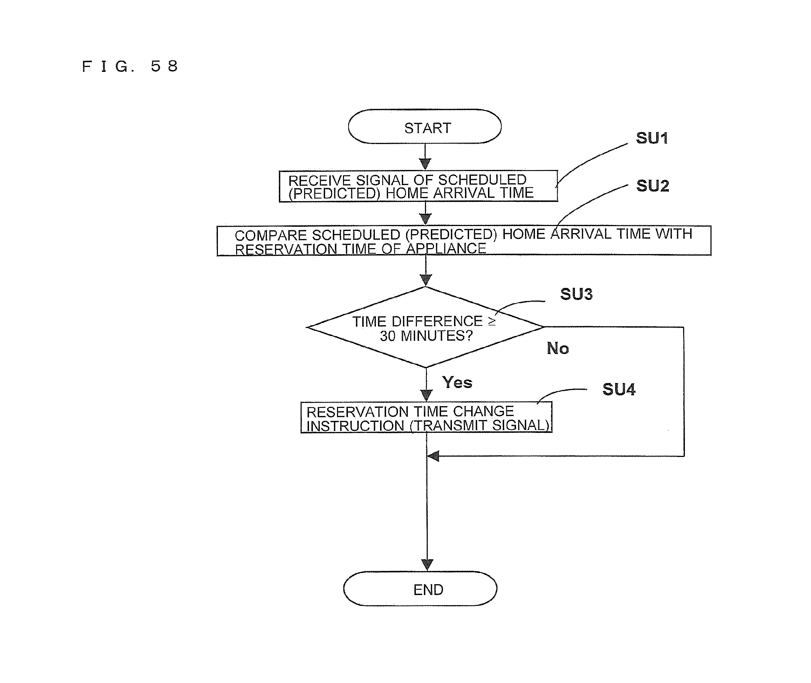

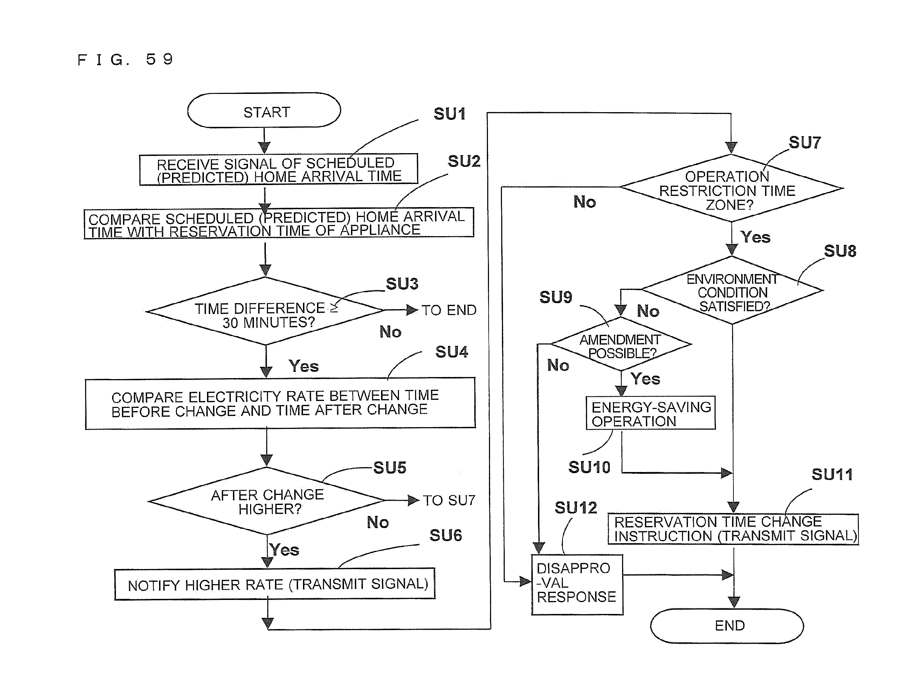

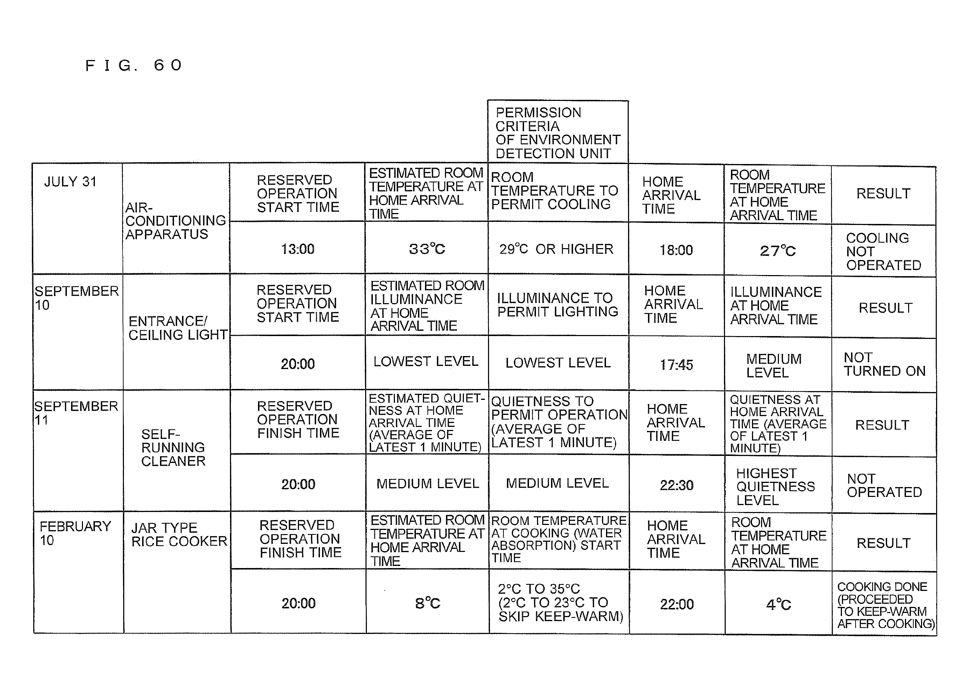

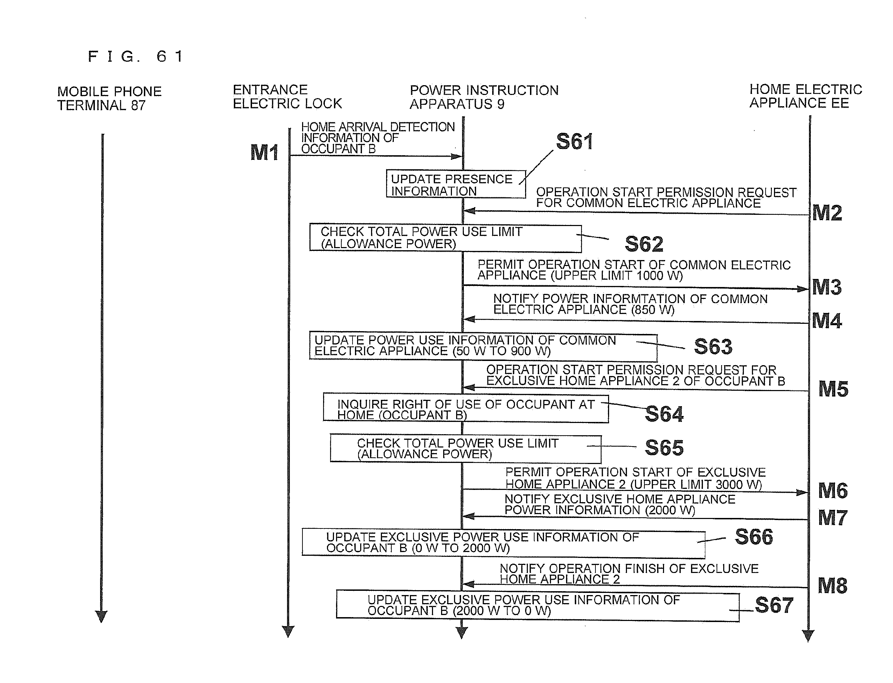

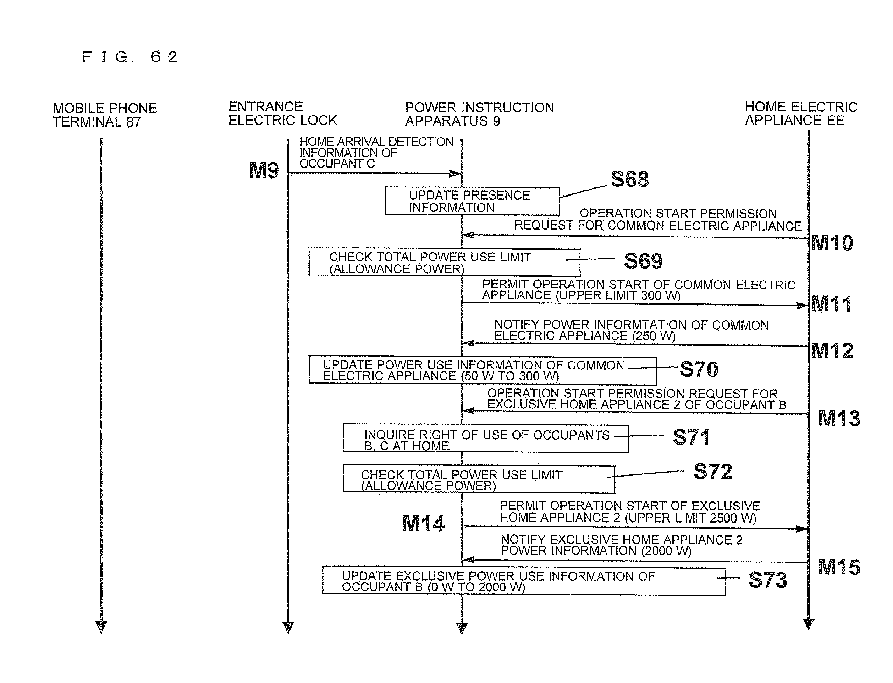

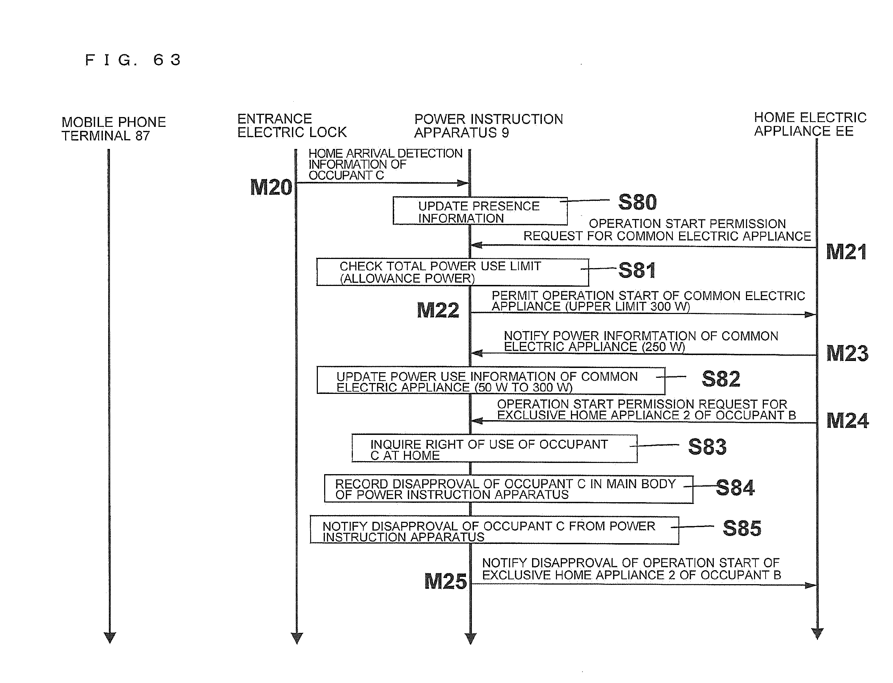

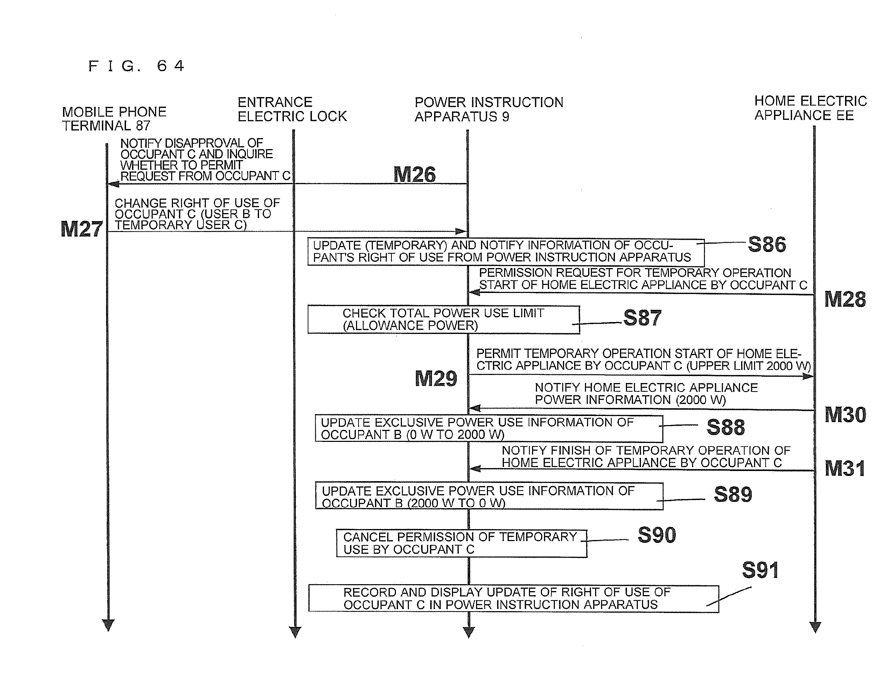

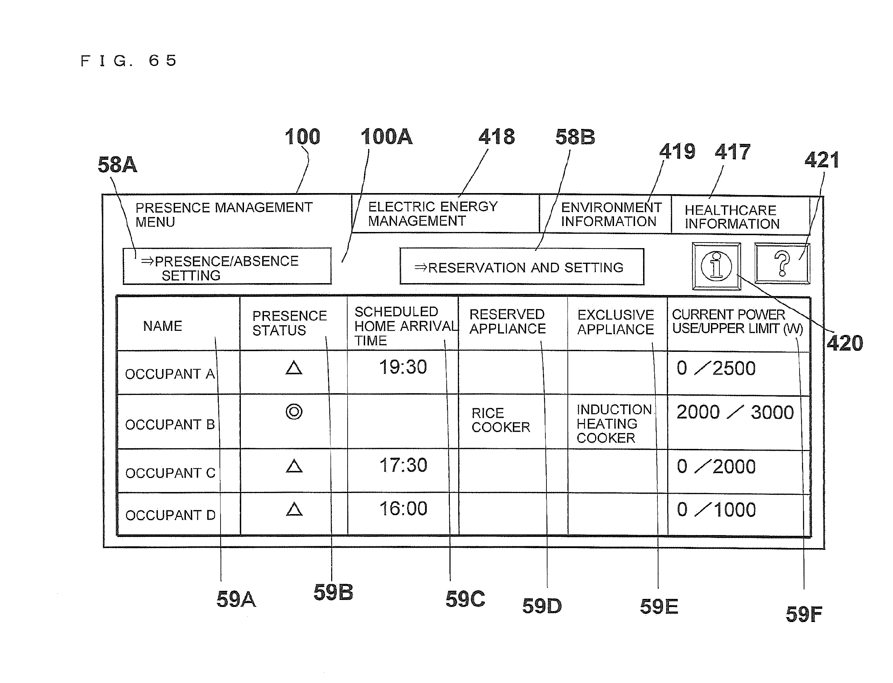

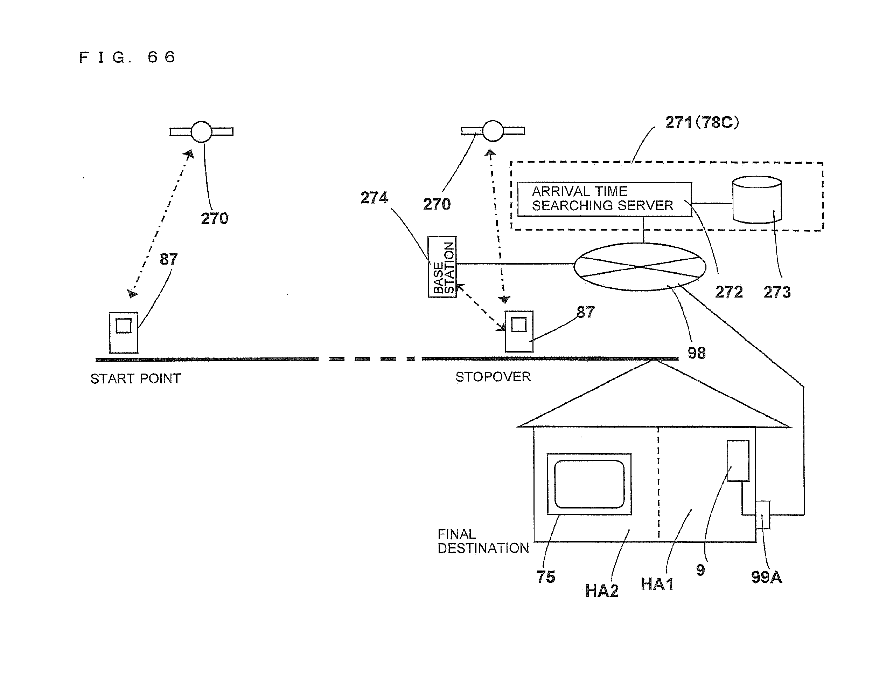

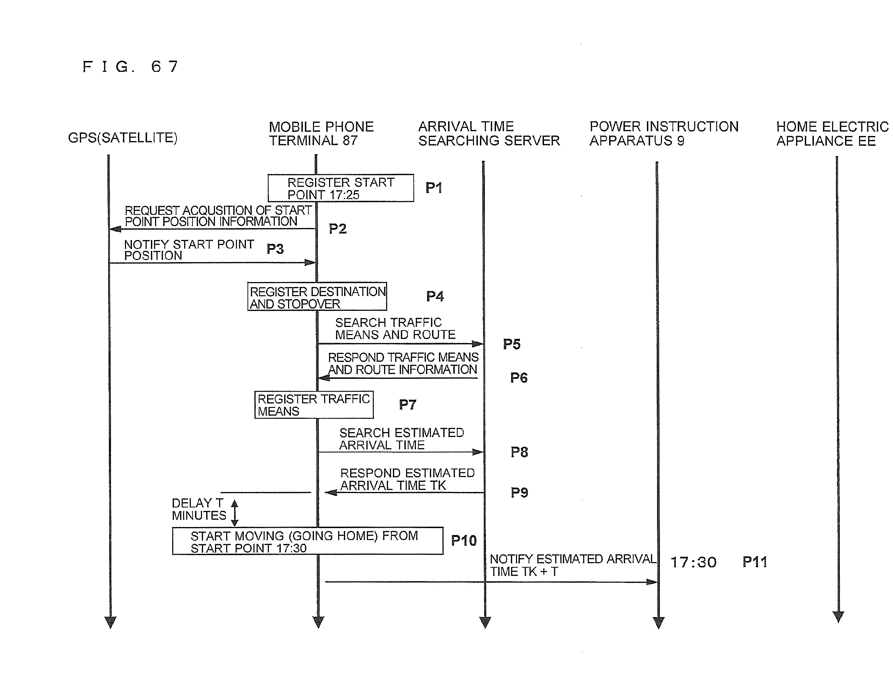

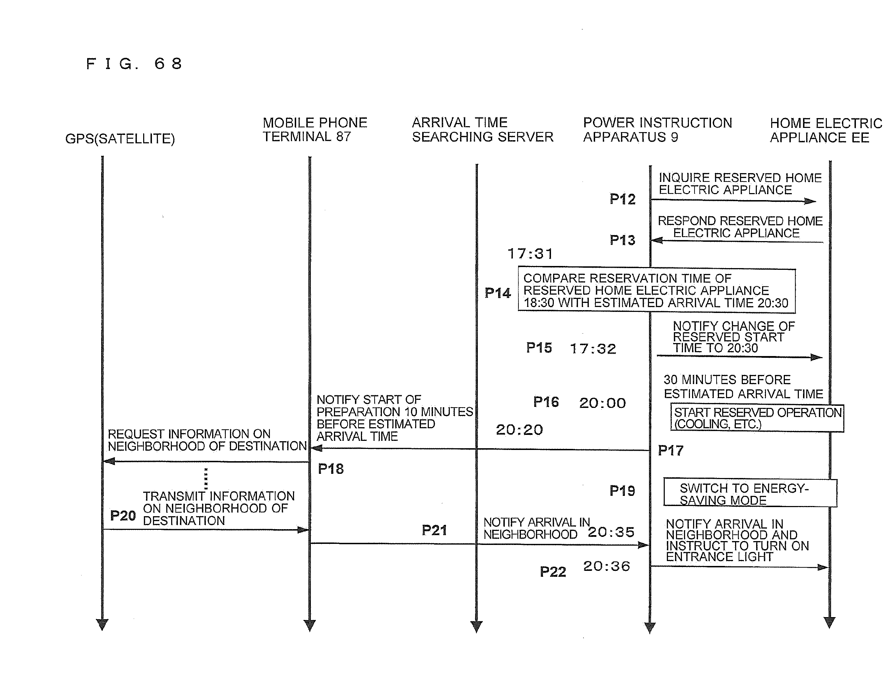

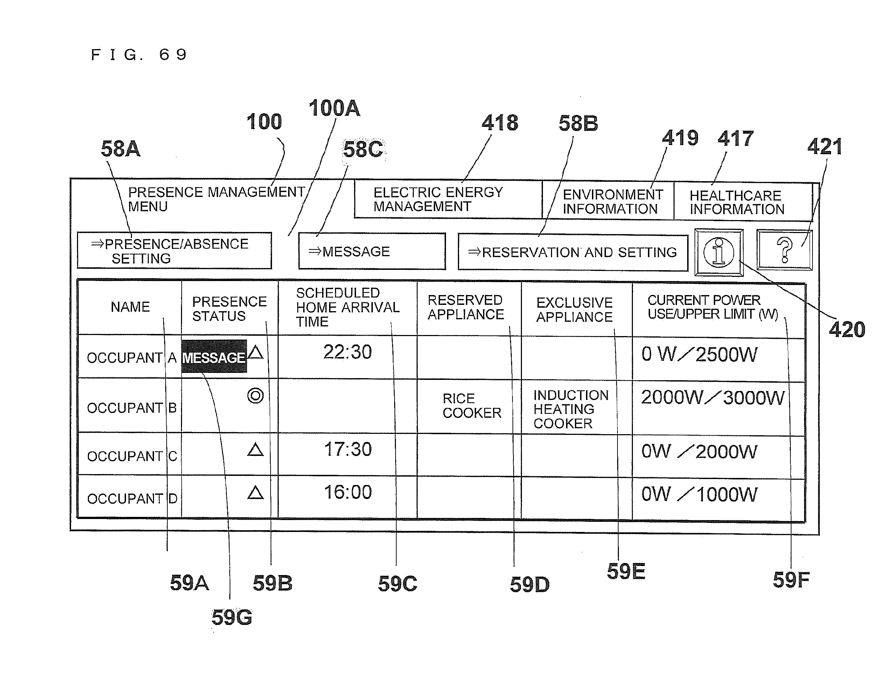

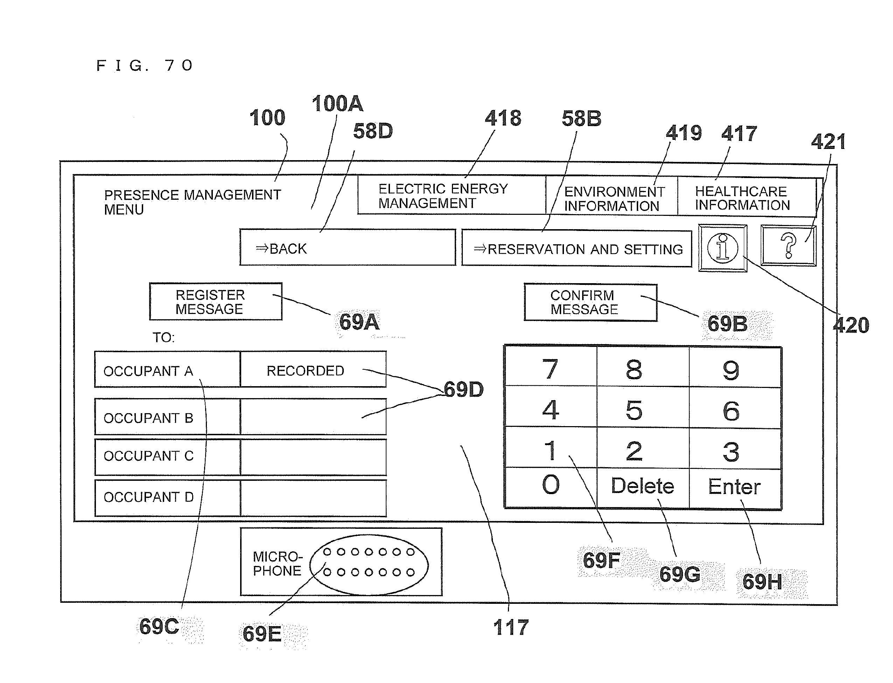

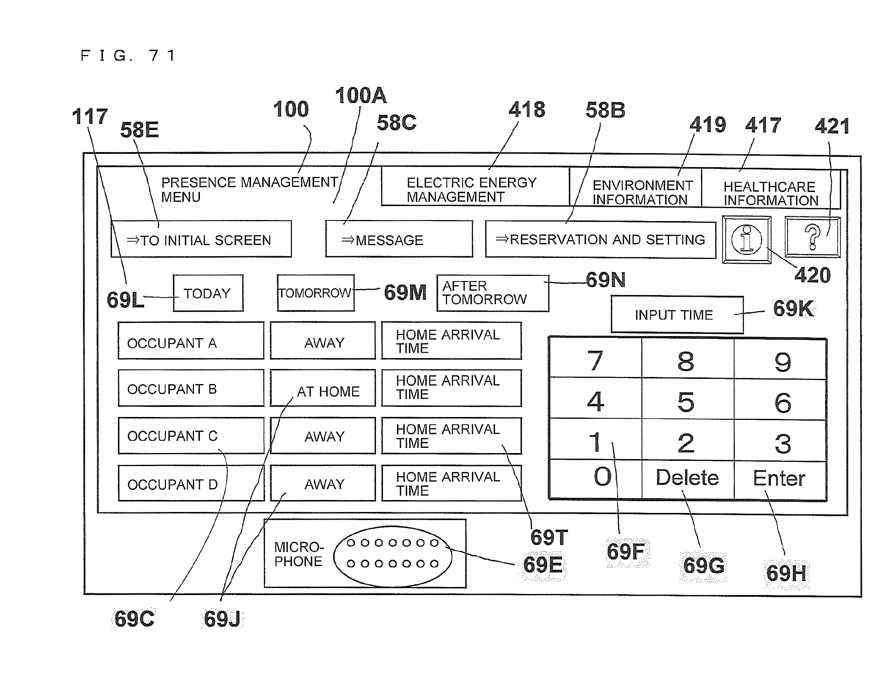

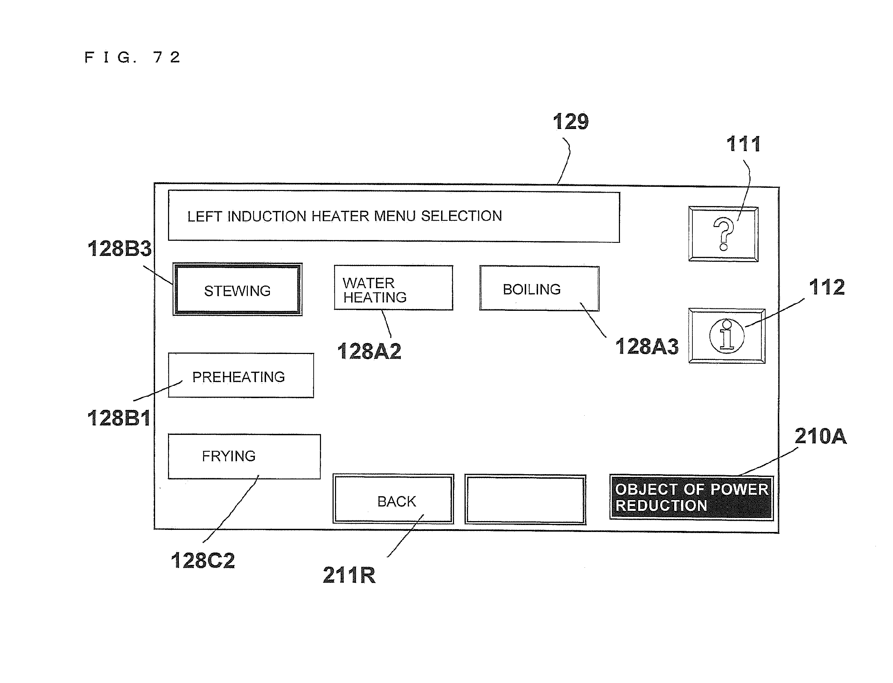

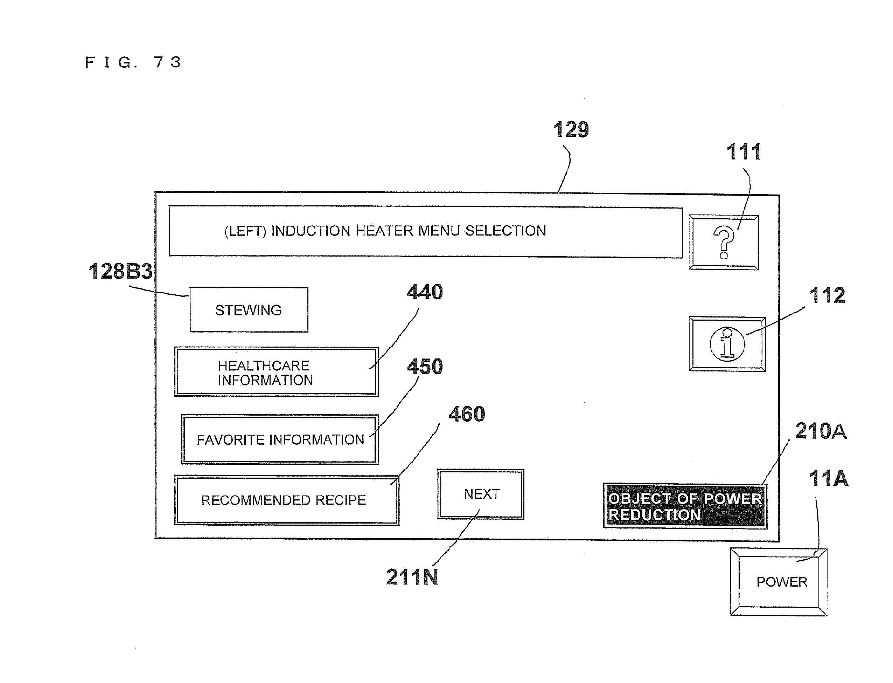

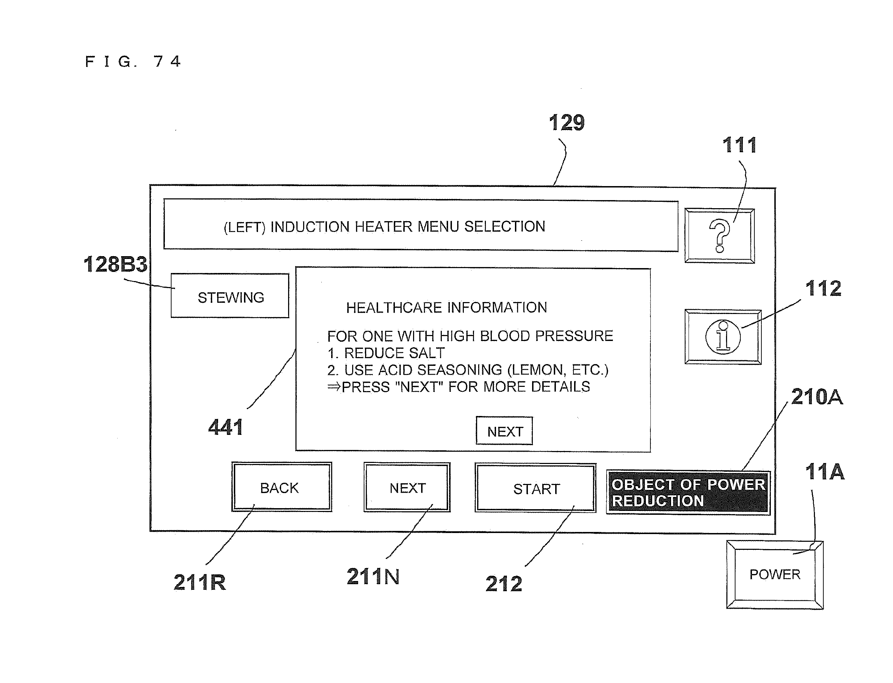

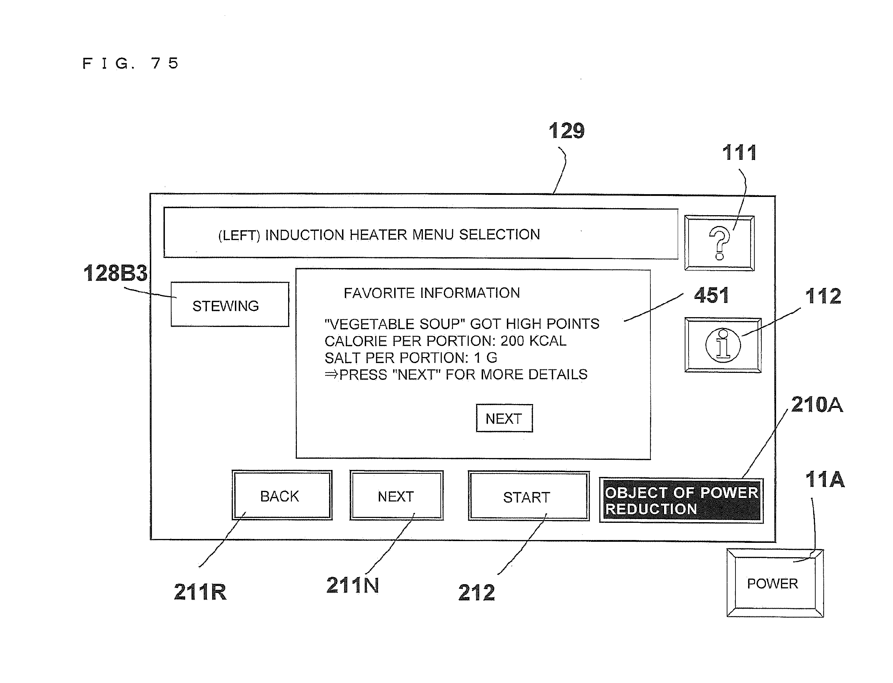

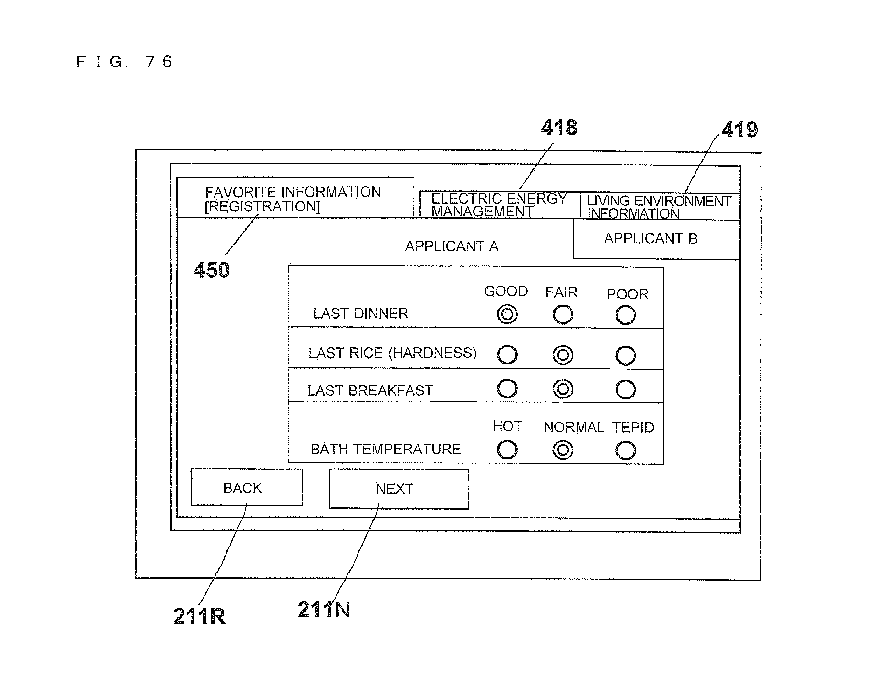

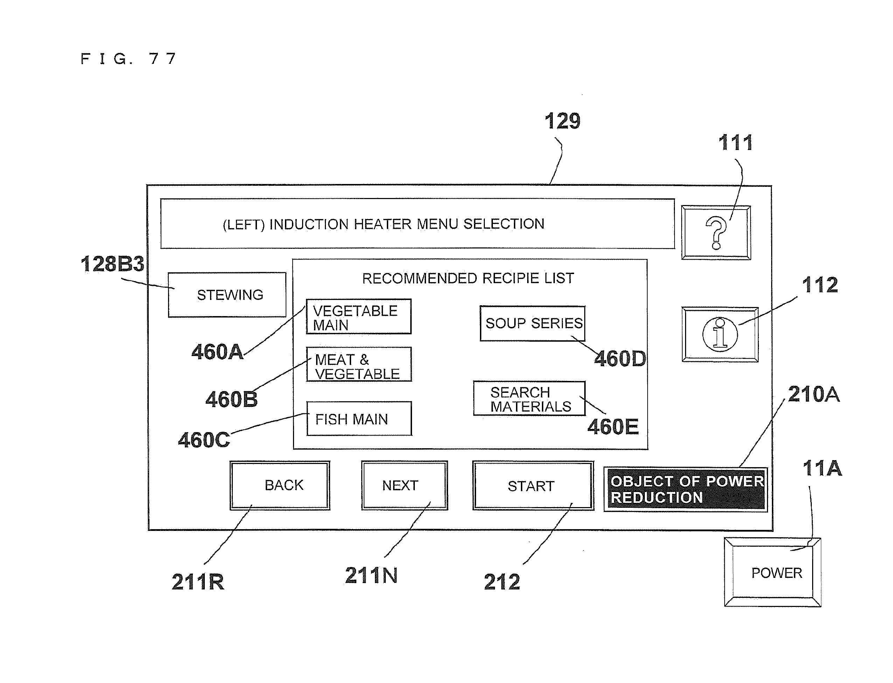

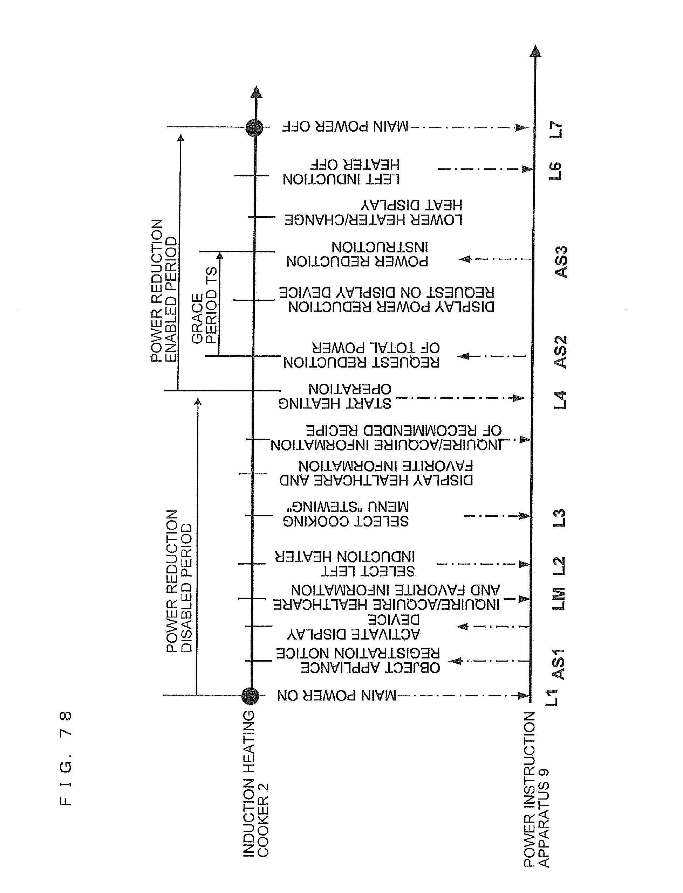

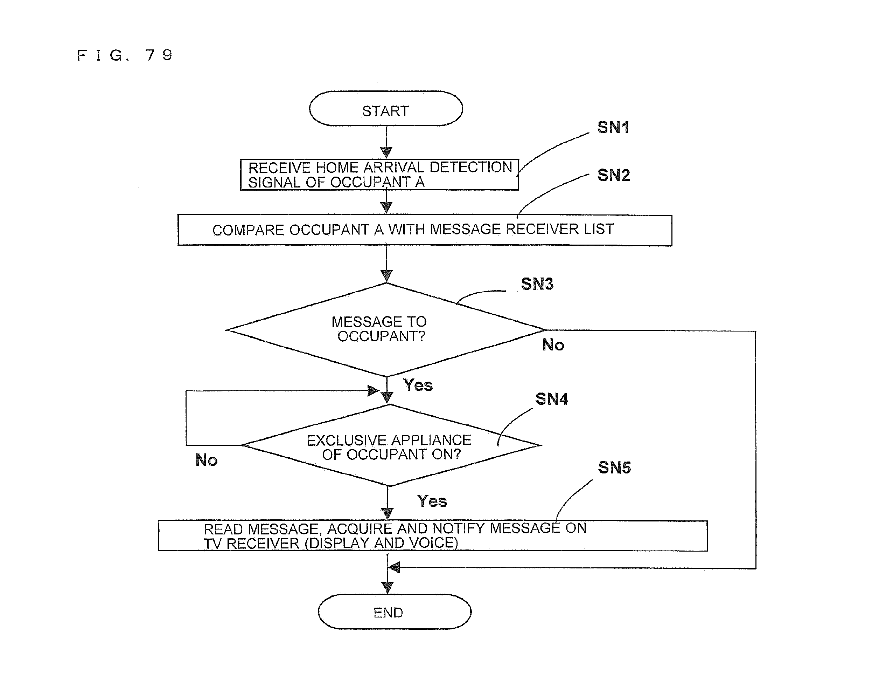

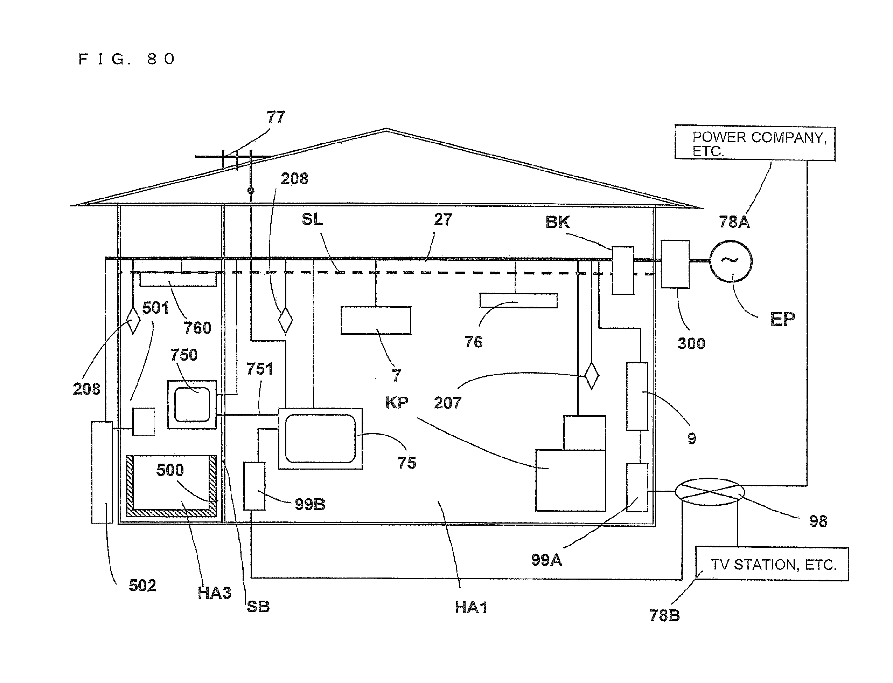

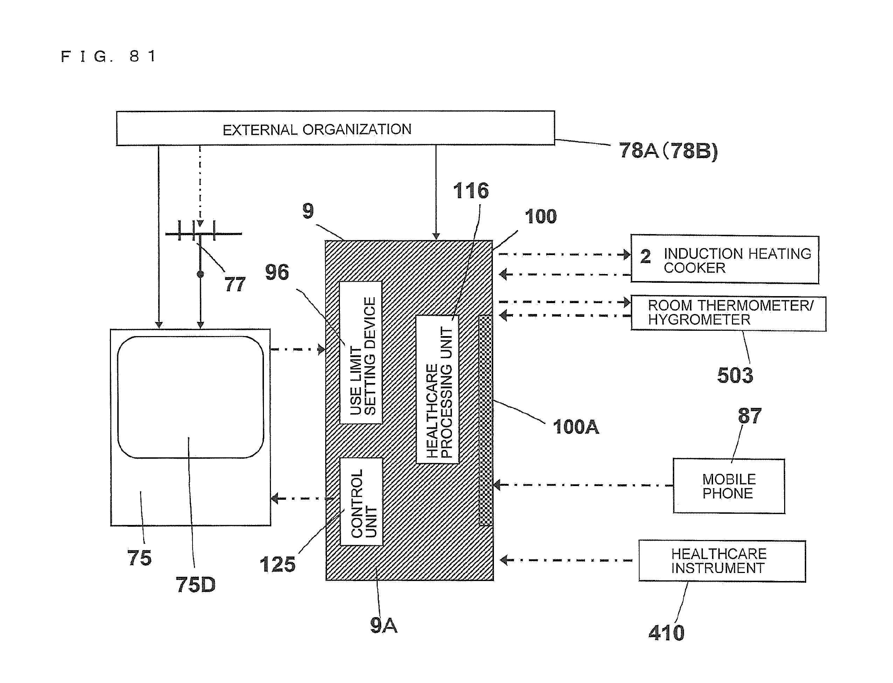

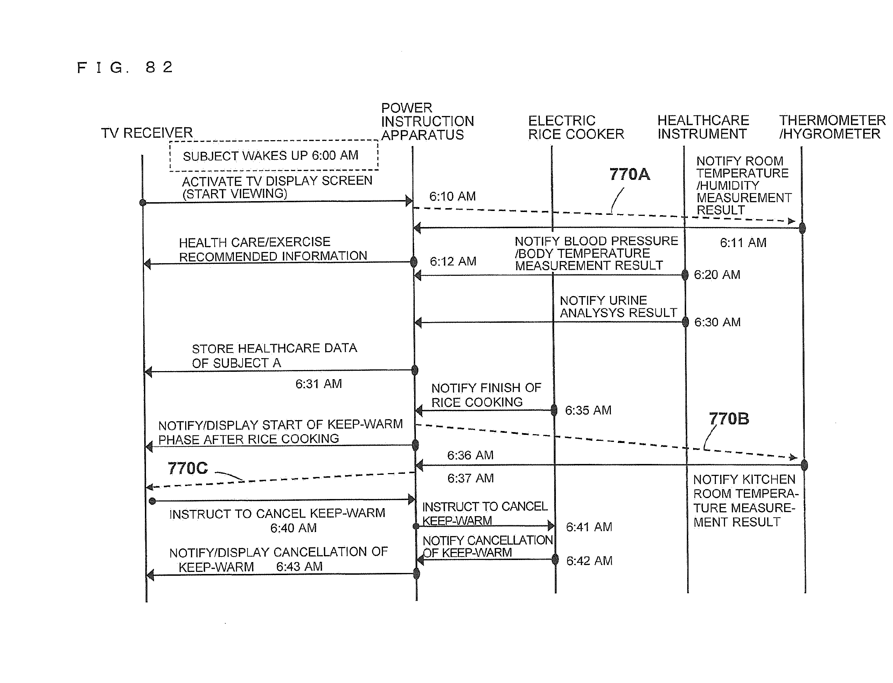

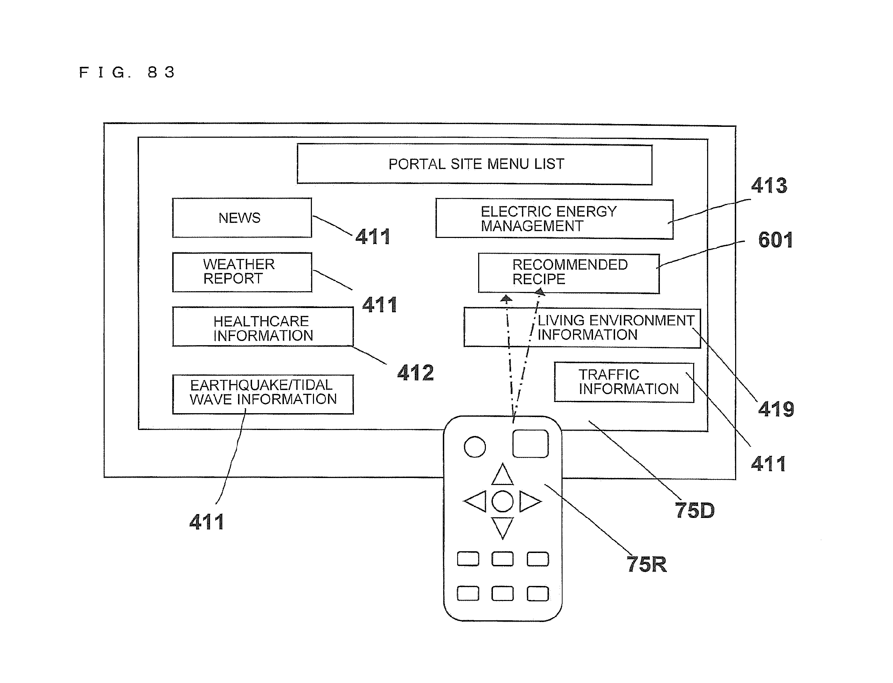

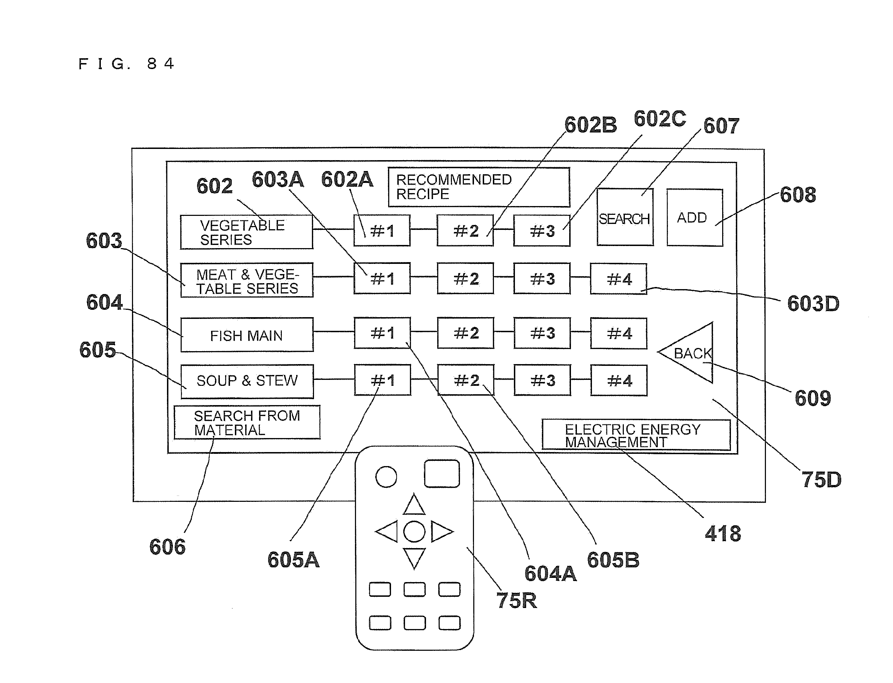

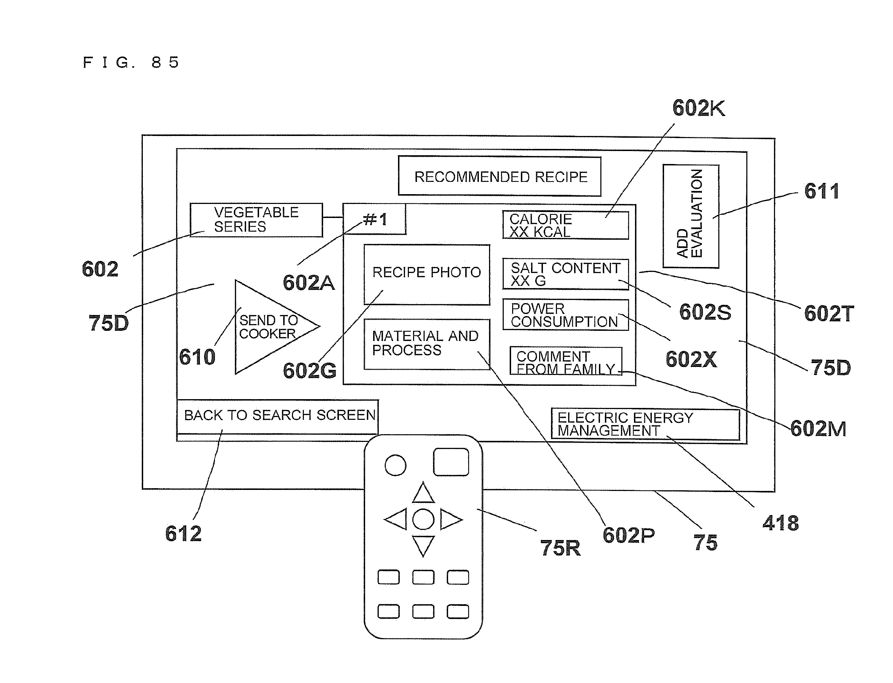

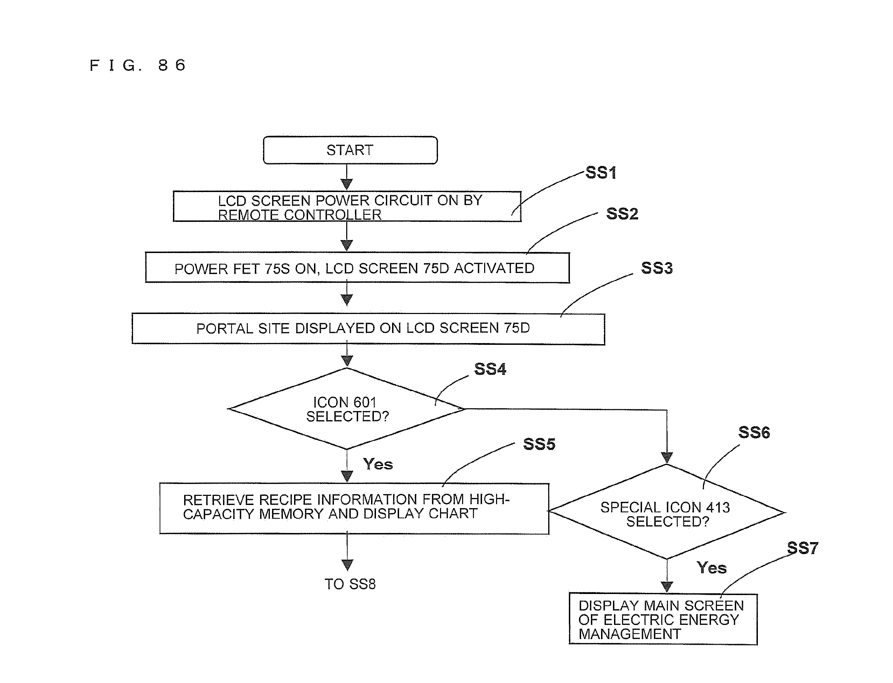

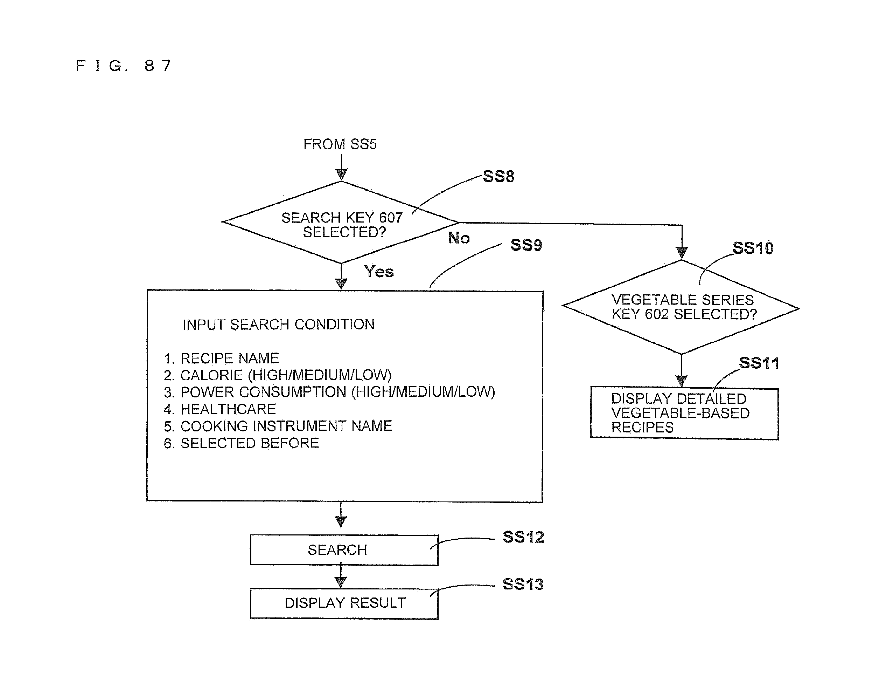

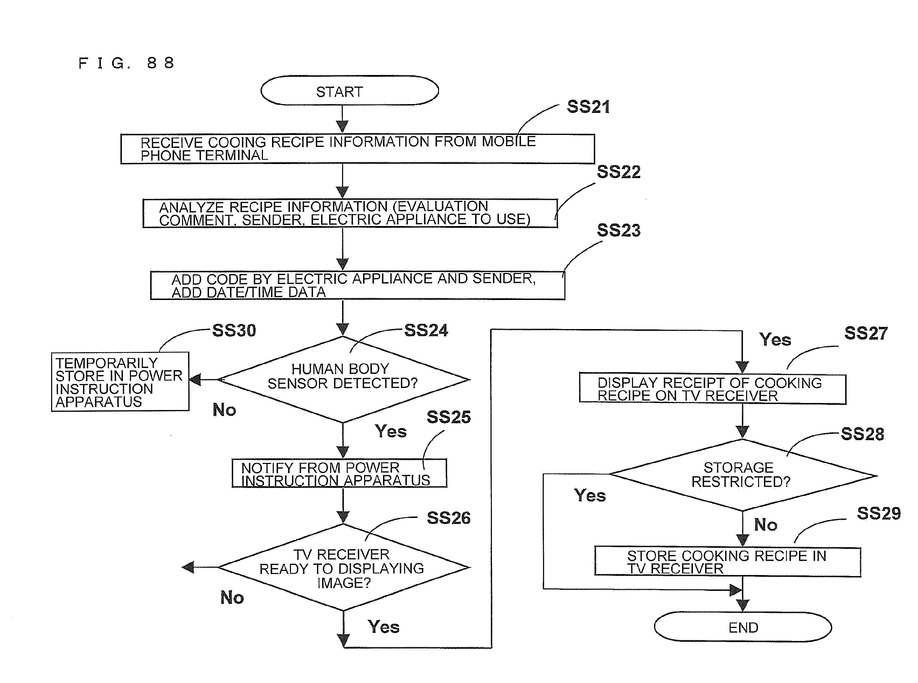

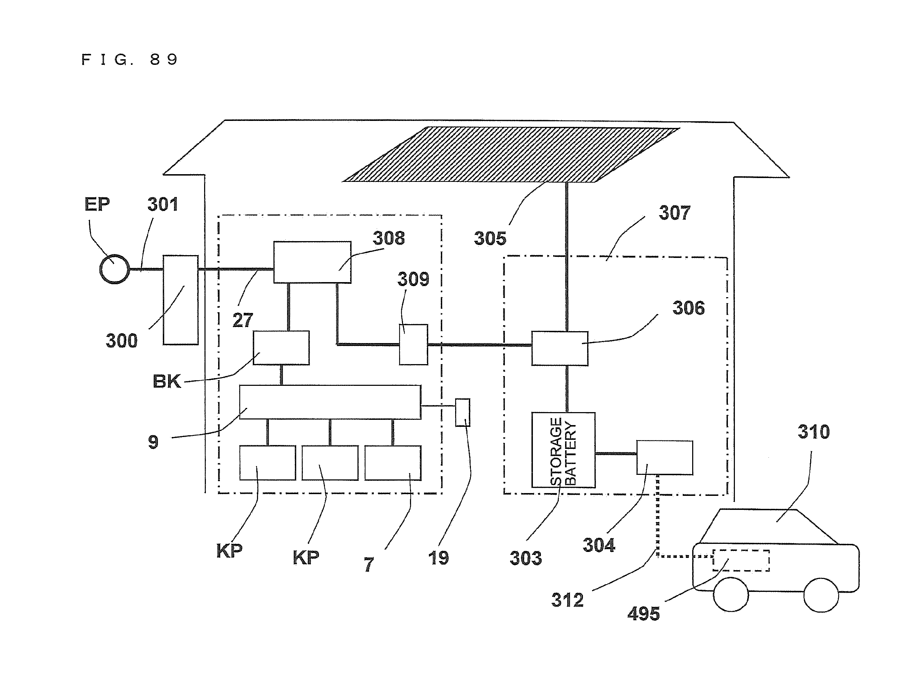

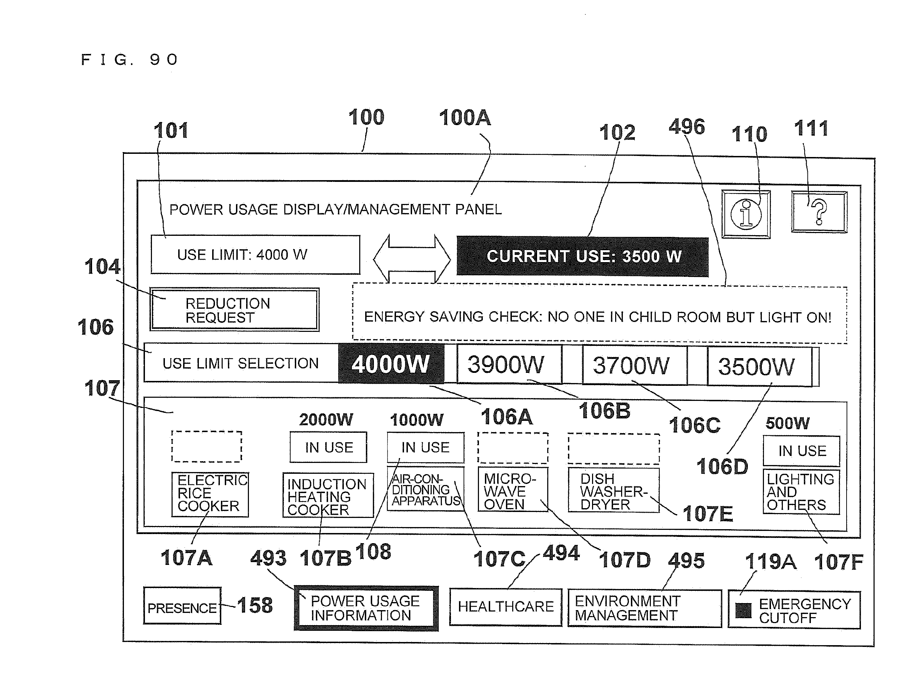

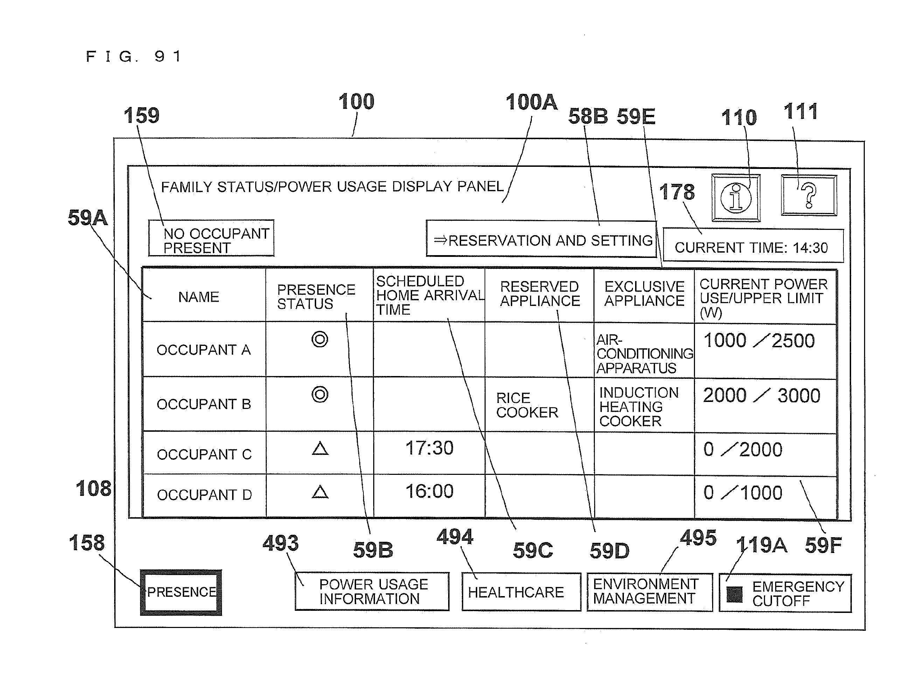

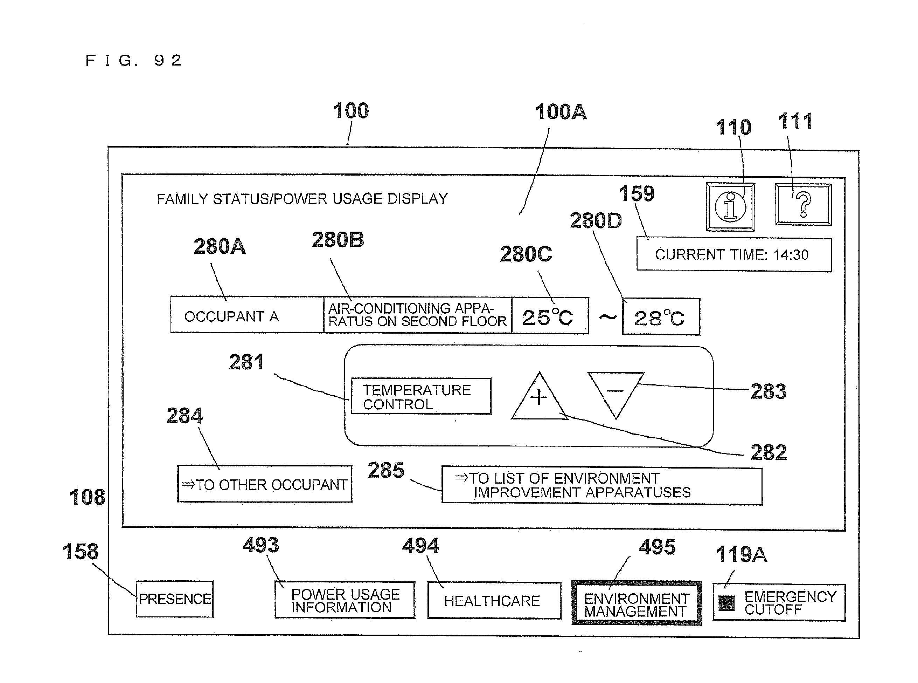

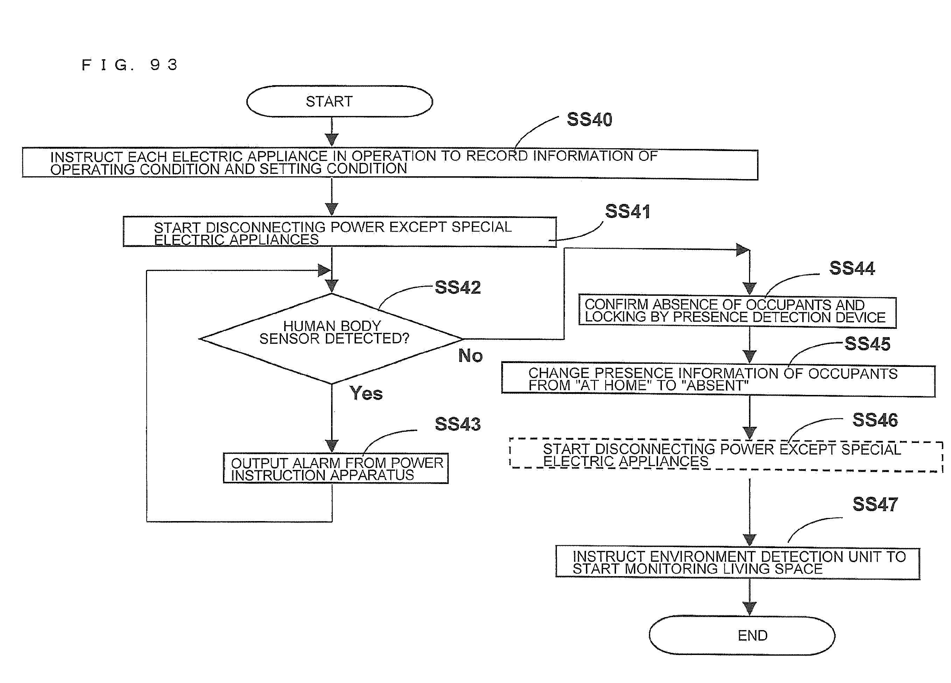

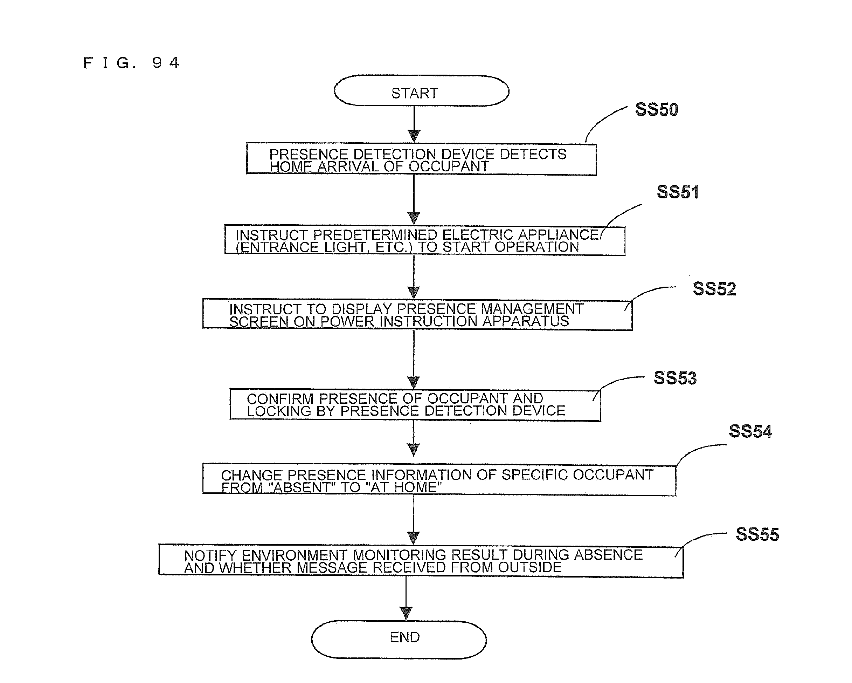

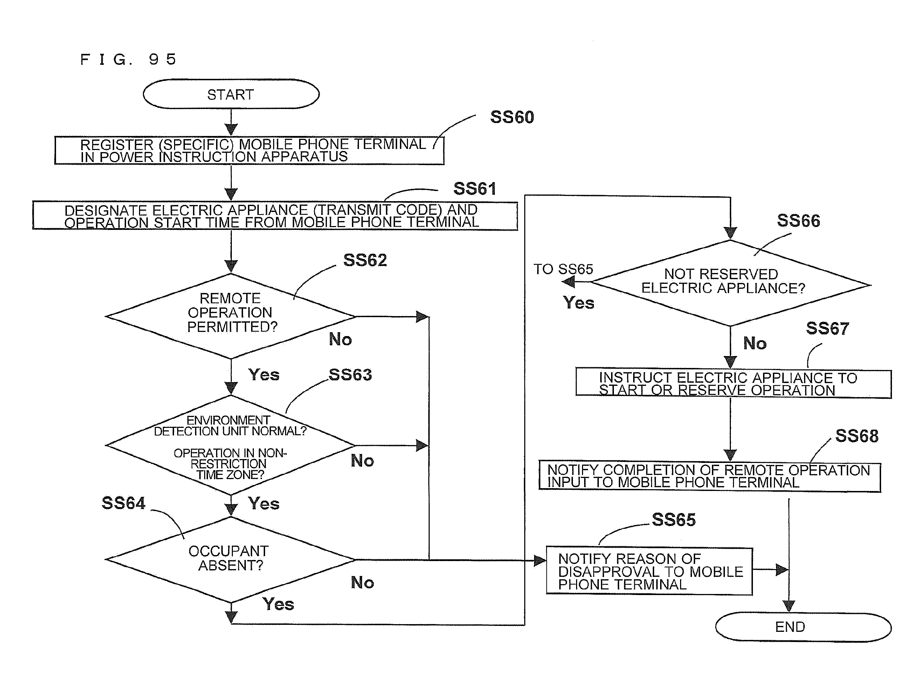

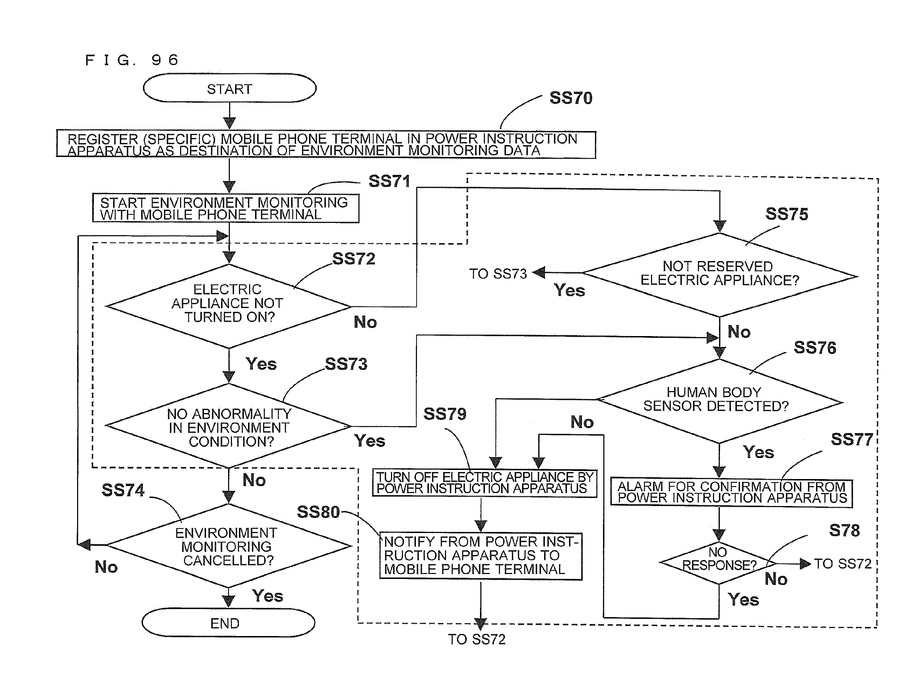

Fig. 1 to Fig. 65 are related to Embodiment 1 of the present invention. Fig. 1 is a schematic drawing showing an outline of a household in which a power control system according to Embodiment 1 of the present invention is provided. Fig. 2 is a schematic drawing showing a configuration of an external communication circuit to which the power control system according to Embodiment 1 of the present invention is connected. Fig. 3 is a schematic drawing showing a power instruction apparatus and home electric appliances included in the power control system according to Embodiment 1 of the present invention. Fig. 4 is a first block diagram showing a configuration of the power instruction apparatus and a TV receiver in the power control system according to Embodiment 1 of the present invention. Fig. 5 is a second block diagram showing a configuration of the power instruction apparatus and the TV receiver in the power control system according to Embodiment 1 of the present invention. Fig. 6 is a block diagram showing a configuration of the power control system according to Embodiment 1 of the present invention. Fig. 7 is a partially cross-sectional block diagram showing a configuration of the power instruction apparatus of the power control system according to Embodiment 1 of the present invention. Fig. 8 is a block diagram showing a configuration of a healthcare processing unit and healthcare instruments in the power instruction apparatus according to Embodiment 1 of the present invention. Fig. 9 is a block diagram showing a configuration of the healthcare processing unit of the power instruction apparatus and indoor exercise equipments, a vacuum cleaner, and a mobile phone according to Embodiment 1 of the present invention. Fig. 10 is a block diagram showing an internal configuration of one of the healthcare instruments used in the power control apparatus according to Embodiment 1 of the present invention. Fig. 11 is a first schematic drawing showing an example of the TV receiver screen and a remote controller in the power control system according to Embodiment 1 of the present invention. Fig. 12 is a first schematic drawing showing an example of the TV receiver screen in the power control system according to Embodiment 1 of the present invention. Fig. 13 is a table for explaining blood pressure data and incidental data acquired by the healthcare instrument used in the power control system according to Embodiment 1 of the present invention. Fig. 14 is a second schematic drawing showing an example of the TV receiver screen in the power control system according to Embodiment 1 of the present invention. Fig. 15 is a third schematic drawing showing an example of the TV receiver screen in the power control system according to Embodiment 1 of the present invention. Fig. 16 is a fourth schematic drawing showing an example of the TV receiver screen in the power control system according to Embodiment 1 of the present invention. Fig. 17 is a first schematic drawing showing an example of the TV receiver screen for explaining the operation thereof in the power control system according to Embodiment 1 of the present invention. Fig. 18 is a schematic drawing showing an example of a display screen of a use limit setting device for explaining the operation thereof in the power control system according to Embodiment 1 of the present invention. Fig. 19 is a first front view showing the display screen of the use limit setting device of the power instruction apparatus constituting the essential part of the power control system shown in Fig. 1 to Fig. 18. Fig. 20 is a table for explaining appliances that are objects of power reduction by the power instruction apparatus and appliances that are objects of power cut-off upon receipt of an Earthquake Early Warning, in the power control system shown in Fig. 1 to Fig. 18. Fig. 21 is a side view of a vacuum cleaner the power supply to which is controlled by the power control system according to Embodiment 1 of the present invention. Fig. 22 is a block diagram showing a general configuration of the power control system according to Embodiment 1 of the present invention, except for the healthcare instrument. Fig. 23 is a perspective view showing an appearance of a kitchen electric appliance used in the power control system according to Embodiment 1 of the present invention. Fig. 24 is a perspective view showing an appearance of an induction heating cooker used in the power control system according to Embodiment 1 of the present invention. Fig. 25 is a plan view of the induction heating cooker shown in Fig. 24. Fig. 26 is a block diagram showing a configuration of a control circuit of the induction heating cooker shown in Fig. 24. Fig. 27 is a block diagram showing a configuration of a driver circuit of the display device of the induction heating cooker shown in Fig. 24. Fig. 28 is a flowchart for explaining basic control steps of the induction heating cooker shown in Fig. 24. Fig. 29 is a first flowchart for explaining a cooking menu selection process of the induction heating cooker shown in Fig. 24. Fig. 30 is a second flowchart for explaining the cooking menu selection process of the induction heating cooker shown in Fig. 24. Fig. 31 is a first plan view showing the display device of the induction heating cooker shown in Fig. 24. Fig. 32 is a second plan view showing the display device of the induction heating cooker shown in Fig. 24. Fig. 33 is a third plan view showing the display device of the induction heating cooker shown in Fig. 24. Fig. 34 is a fourth plan view showing the display device of the induction heating cooker shown in Fig. 24. Fig. 35 is a fifth plan view showing the display device of the induction heating cooker shown in Fig. 24. Fig. 36 is a sixth plan view showing the display device of the induction heating cooker shown in Fig. 24. Fig. 37 is a seventh plan view showing the display device of the induction heating cooker shown in Fig. 24. Fig. 38 is an eighth plan view showing the display device of the induction heating cooker shown in Fig. 24. Fig. 39 is a perspective view showing a rice cooker according to Embodiment 1 of the present invention, with its lid opened. Fig. 40 is a plan view of the lid of the rice cooker according to Embodiment 1 of the present invention. Fig. 41 is a first enlarged plan view of the lid of the rice cooker according to Embodiment 1 of the present invention. Fig. 42 is a second enlarged plan view of the lid of the rice cooker according to Embodiment 1 of the present invention. Fig. 43 is a block diagram showing a configuration of the control circuit of the rice cooker used in the power control system according to Embodiment 1 of the present invention. Fig. 44 is a vertical cross-sectional view taken along a central portion of a dish washer-dryer used in the power control system according to Embodiment 1 of the present invention, for showing a basic configuration thereof. Fig. 45 is a perspective view showing a basic configuration of a self-running vacuum cleaner used in the power control system according to Embodiment 1 of the present invention. Fig. 46 is a block diagram showing a basic configuration of an air-conditioning apparatus used in the power control system according to Embodiment 1 of the present invention. Fig. 47 is a second front view showing the display screen of the use limit setting device of the power instruction apparatus in the power control system according to Embodiment 1 of the present invention. Fig. 48 is a third front view showing the display screen of the use limit setting device shown in Fig. 47. Fig. 49 is a fourth front view showing the display screen of the use limit setting device shown in Fig. 47. Fig. 50 is a graphic representation for explaining a basic frying process performed by the induction heating cooker according to Embodiment 1 of the present invention. Fig. 51 is a graphic representation for explaining a rice cooking operation performed by the rice cooker according to Embodiment 1 of the present invention. Fig. 52 is a first timechart for explaining a power controlling operation performed by the power instruction apparatus according to Embodiment 1 of the present invention. Fig. 53 is a second timechart for explaining a power controlling operation performed by the power instruction apparatus according to Embodiment 1 of the present invention. Fig. 54 is a first timechart for explaining a relationship between operation information from the induction heating cooker and the heating process, according to Embodiment 1 of the present invention. Fig. 55 is a second timechart for explaining the relationship between the operation information from the induction heating cooker and the heating process. Fig. 56 is a third timechart for explaining the relationship between the operation information from the induction heating cooker and the heating process. Fig. 57 is a fourth timechart for explaining the relationship between the operation information from the induction heating cooker and the heating process. Fig. 58 is a first flowchart showing a changing process of a reservation time of a home electric appliance. Fig. 59 is a second flowchart showing the changing process of the reservation time of the home electric appliance. Fig. 60 is a table showing relationships between reservation status of home electric appliances and permission criteria specified by an environment detection unit. Fig. 61 is a first timechart for explaining a controlling operation performed by the power instruction apparatus according to Embodiment 1 of the present invention, triggered by coming home of an occupant. Fig. 62 is a second timechart for explaining the controlling operation performed by the power instruction apparatus according to Embodiment 1 of the present invention, triggered by coming home of the occupant. Fig. 63 is a third timechart for explaining the controlling operation performed by the power instruction apparatus according to Embodiment 1 of the present invention, triggered by coming home of the occupant. Fig. 64 is a fourth timechart for explaining the controlling operation performed by the power instruction apparatus according to Embodiment 1 of the present invention, triggered by coming home of the occupant. Fig. 65 is a front view showing a presence management menu displayed on the display screen of the use limit setting device of the power instruction apparatus according to the present invention. Fig. 66 is a schematic diagram for explaining a communication channel between a household and a mobile phone terminal, according to Embodiment 2 of the present invention. Fig. 67 is a first explanatory timechart showing relationship between an operation of an arrival time estimation/prediction system used in the power control system according to Embodiment 2, and the power instruction apparatus and the home electric appliance. Fig. 68 is a second explanatory timechart showing the same relationship. Fig. 69 is a first front view showing the presence management menu displayed on the display screen of the use limit setting device of the power instruction apparatus according to Embodiment 2. Fig. 70 is a second front view showing the presence management menu displayed on the display screen of the use limit setting device of the power instruction apparatus according to Embodiment 2. Fig. 71 is a third front view showing the presence management menu displayed on the display screen of the use limit setting device of the power instruction apparatus according to Embodiment 2. Fig. 72 is a first plan view showing a part of the display device and the operation unit of the induction heating cooker, the power supply to which is controlled by the power control system according to Embodiment 2. Fig. 73 is a second plan view showing a part of the display device and the operation unit of the induction heating cooker shown in Fig. 72. Fig. 74 is a third plan view showing a part of the display device and the operation unit of the induction heating cooker shown in Fig. 72. Fig. 75 is a fourth plan view showing a part of the display device and the operation unit of the induction heating cooker shown in Fig. 72. Fig. 76 is a front view showing the display panel of the power instruction apparatus according to Embodiment 2. Fig. 77 is a schematic drawing for explaining the relationship between the operation information and the heating process of the induction heating cooker shown in Fig. 72. Fig. 78 is a timechart for explaining the relationship between the operation information from the induction heating cooker shown in Fig. 72 and the heating process. Fig. 79 is a flowchart showing an operation program performed by a control unit of the power instruction apparatus according to Embodiment 2, to control the TV receiver. Fig. 80 is a schematic drawing showing a general configuration of a power control system according to Embodiment 3 of the present invention. Fig. 81 is a partially cross-sectional block diagram showing a configuration of an essential part of the power control apparatus shown in Fig. 80. Fig. 82 is a timechart for explaining signal transmission between the respective essential parts of the power control system shown in Fig. 80 and the health management system. Fig. 83 is a front view showing an appearance of a display screen and a remote controller of a TV receiver used in the power instruction apparatus according to Embodiment 4 of the present invention. Fig. 84 is a front view showing the appearance of the display screen and the remote controller of the TV receiver shown in Fig. 83, displaying a list of cooking recipes. Fig. 85 is a front view showing an appearance of the display screen and the remote controller of the TV receiver shown in Fig. 83, displaying a search result of the cooking recipe. Fig. 86 is a flowchart showing an operation of the TV receiver shown in Fig. 83, after the display screen is turned on. Fig. 87 is a flowchart showing an operation of the TV receiver shown in Fig. 83, for finding the cooking recipe. Fig. 88 is a flowchart showing an operation of the TV receiver, performed when the power instruction apparatus receives a cooking recipe from outside of the house. Fig. 89 is a schematic drawing showing a general configuration of a household in which a power control system and a power instruction apparatus according to Embodiment 5 of the present invention are provided. Fig. 90 is a first front view showing an essential part of a display panel of the power instruction apparatus in the power control system shown in Fig. 89. Fig. 91 is a second front view showing an essential part of a display panel of the power instruction apparatus in the power control system shown in Fig. 89. Fig. 92 is a third front view showing an essential part of a display panel of the power instruction apparatus in the power control system shown in Fig. 89. Fig. 93 is a flowchart showing an operation performed by the control unit when an absence setting key is pressed in the power instruction apparatus shown in Fig. 89. Fig. 94 is a flowchart showing an operation performed by the control unit of the power instruction apparatus shown in Fig. 89, when the occupant comes home. Fig. 95 is a second flowchart showing an operation performed by the control unit of the power instruction apparatus shown in Fig. 89, to monitor environmental changes in the household. Fig. 96 is a second flowchart showing the operation performed by the control unit of the power instruction apparatus shown in Fig. 89, to monitor environmental changes in the household.

In Embodiment 1, the term "environment information" refers to information detected by an environment detection unit 202 to be subsequently described, examples of which include:
(1) Temperature information
(2) Humidity information
(3) Dust scattering information (per unit volume)
(4) Pollen scattering information
(5) Light amount (amount of visible light) information, in other words information of brightness of a living space
(6) Noise information, in other words information of quietness of a living space living space

In Embodiment 1, the term "utilization of environment information" refers to utilization of the environment information by various home electric appliances EE to be subsequently described, to realize efficient operation, effective operation, and environment-oriented operation of the home electric appliance EE, examples of which include:
(1) When the temperature is high, the keep-warm function of a rice cooker is activated immediately upon finishing the rice cooking phase.
(2) When the humidity is high, a dehumidifier, one of the home electric appliances EE, is activated, or a ventilation fan is activated.
(3) When minute dust that floats in the air is flying, an air purifier is activated, or a ventilation fan is activated.
(4) When a large amount of pollen is flying, an air purifier is activated.
(5) For sand dust or dust from clothes, relatively large in diameter or length and falling on the floor, a self-running vacuum cleaner is activated.
(6) When amount of light (visible light) is insufficient, a lighting equipment is turned on.
(7) When no noise is detected, it is decided that the current time is in a quiet time zone such as midnight, and operation of, for example, a self-running vacuum cleaner that generates operation noise of a blower motor and running noise, and a washer-dryer that generates operation noise of an electric motor for rotating a washing-drying drum, is avoided.

Another example is calculating so-called "discomfort index" from the temperature and the humidity, and activating an air-conditioning apparatus.

In Embodiment 1, further, the convenience to the occupants is improved through utilization of the environment information, for example as listed below.
(1) Guidance information is provided about the use of the home electric appliance EE, to improve the living environment (e.g., ventilation fan and air purifier).
(2) The home electric appliances EE that are currently operating can be identified.
(3) Whether a person is present in a separate living space can be detected.
(4) An uncomfortable living space where both of the temperature and the humidity are high can be identified.
(5) A living space unsuitable for exercising can be identified, when an occupant wishes to use an indoor exercise instrument.
(6) An upper limit of the room temperature may be set for the power instruction apparatus to output a warning. In this case, a room where the upper limit is exceeded can be identified, and the environment of a separate room can also be recognized.

Such home electric appliances EE that can give a favorable influence to the air in the living space or improve the quality of the air may hereafter be referred to as "first specific home appliance" ("environment improvement apparatus") SP1. A stove with an electric heater and an air-conditioning apparatus that generate heat for warming to thereby maintain and improve the degree of comfort of the room space are examples of the environment improvement apparatus. In addition, a home electric appliance EE such as an electric heating cooker that gives heat to the room space, but not for the purpose of maintaining and improving the degree of comfort of the room space, may be referred to as "second specific home appliance SP2".

Further, a specific one of a plurality of home electric appliances EE may be referred to as "first home electric appliance", and another home electric appliance may be referred to as "second home electric appliance" for distinction from the first home electric appliance.

The "environment improvement apparatus" SP1 in the present invention refers to those serve to improve the temperature, humidity, and quality of the air in the living space. By improving the quality of the air, purified air barely containing toxic substances and dust can be obtained.

In Embodiment 1, a "presence detection device" may be exemplified by the following devices, among which only a typical one will be described in details, and detailed description regarding the other devices will not be given.
(1) A device that detects coming home of an occupant from an electronic lock provided outside an entrance of the house and a PIN code or biological information (such as finger print information) inputted in the electronic lock.
(2) A device that causes the power instruction apparatus to directly read personal identification information recorded on the ID paper or ID card owned by the occupant magnetically or optically, or by near-field communication or other communication method, and to decide that the occupant is at home by analyzing the information read out.
(3) A device that causes the power instruction apparatus to directly read personal identification information recorded on an information terminal device such as a mobile phone owned by the occupant by near-field communication or other communication method, and to decide that the occupant is at home by analyzing the information read out.
(4) A device with which the occupant causes the specific home electric appliance to read personal identification information recorded on the ID paper, ID card, or information terminal device owned by the occupant, or causes the home electric appliance to read or input to the home electric appliance the ID number or password only known to the occupant, so that the power instruction apparatus decides that the occupant is at home by analyzing the personal identification information or the password that has been read.

In Embodiment 1, the term "occupants" refers to persons dwelling in a household to be subsequently described and include parents, children, brothers and sisters related by birth. In addition, a visitor who stays in a living space HA to be subsequently described for a predetermined period, and other persons who live together are also included. One or a plurality of persons borrowing one or a plurality of living spaces are also included. In Embodiment 1, the occupants will be exemplified by a typical four-member family, in which an occupant A is the father, an occupant B is the mother, an occupant C is the older child (10 years), and an occupant is the younger child (7 years). When the use of the home electric appliance is referred to, the occupant may be called "user", and when there is no need to identify any of the four occupants, the term "person" or "family member" may be used. In addition, when the occupant measures the blood pressure with a healthcare instrument 410 to be subsequently described, such occupant may be called "subject".

Fig. 1 illustrates an example of a house to which the power control system according to Embodiment 1 is applied. The present invention is also applicable to a condominium, in addition to the detached house.

In Fig. 1, HA1 denotes a living space in the house. HA2 denotes an adjacent living space partitioned by a wall SB from the living space HA1. When the living spaces are collectively referred to, a code HA will be used. Although unshown in Fig. 1, the living space also includes a "bedroom", a "living room", and a "bathroom", and some rooms may include a rest room. Other rooms may also be included.

Power of, for example, 200 V is supplied to all the living spaces HA from a commercial power source EP of a power company, provided outside the house. The power is introduced into the house through a wattmeter 300. 27 denotes a power supply line (main line) connected to the commercial power source EP of 200 V via a circuit breaker BK. A TV receiver 75, an air-conditioning apparatus 7, a lighting equipment 76, and an electric appliance for kitchen (hereinafter, "kitchen electric appliance") KP are connected to the power supply line. Although Fig. 1 only illustrates one each of the TV receiver 75, air-conditioning apparatus 7, lighting equipment 76, and kitchen electric appliance KP, a plurality of those items may be provided.

9 denotes a power instruction apparatus to which power is supplied through the circuit breaker BK. The power instruction apparatus 9 is attached to a position easily accessible by the family member such as a wall of the living space HA2 (kitchen), or placed on the floor. A plurality of other home electric appliances are also provided, such as a dish washer-dryer 6 and a non-illustrated automatic laundry-drying machine, which will be subsequently described.

The home electric appliances utilized inside the household, such as the kitchen electric appliance KP and the air-conditioning apparatus 7, will be collectively referred to as "home electric appliance" EE.

In the following description, the term "first home electric appliances" refers to the kitchen electric appliances KP other than the dish washer-dryer 6. The first home electric appliances each include a heating unit that consumes electric energy, and are each configured to be independently connected to and disconnected from the power source, and to receive a power reduction instruction from the power instruction apparatus 9 to be subsequently described.

In Fig. 1, SL denotes a surface constituting the ceiling of the living space HA. 204 denotes a composite sensor (temperature/humidity sensor) that detects the temperature and the humidity in the living space HA2, which is an example of the environment sensor. 205 denotes a temperature/humidity sensor that detects the room temperature and the room humidity of the living space HA1, which is another example of the environment sensor. 206 denotes a temperature sensor provided outside the house, which also exemplifies the environment sensor. These temperature sensors and humidity sensors are configured to transmit, wirelessly or via electrical signals, the measured temperature or humidity to an environment detection unit 202 of the power instruction apparatus 9 to be subsequently described. The power source of the sensors may be a charged cell or the power supplied through the power supply line 27. The power consumption of the sensors cited above is as small as 1 W (watt) and hence the sensors are exceptions of the power limitation performed by the power instruction apparatus 9, despite receiving power through the power supply line 27. Therefore, the sensors constantly transmit the measurement data to the power instruction apparatus 9 at a predetermined timing. Although not shown, additional environment sensors such as a pollen sensor that measures the amount of pollen flying in the air, a noise sensor that detects a noise in the room, and an illuminance sensor that detects the brightness in the room are provided at appropriate positions in each of the living spaces. A temperature sensor and a humidity sensor that respectively detect the temperature and humidity of an outdoor space may be provided in addition to the environment sensors 205. For example, the pollen sensor may be provided not only inside the room but in the outdoor space (e.g., outer wall surface or the house, outer frame of a window, and in a veranda).

In Fig. 1 and Fig. 6, 207 denotes a human body sensor that detects infrared ray naturally emitted from a human body to thereby detect whether a person is present in the living space HA1. 208 denotes another human body sensor that detects infrared ray naturally emitted from a human body to thereby detect whether a person is present in the living space HA2. Such a human body sensor may also be provided in other living spaces HA. The human body sensors 207 and 208 are configured to transmit, wirelessly or via electrical signals, the detection result indicating whether a person is present to a human body detection unit 203 of the power instruction apparatus 9 to be subsequently described. The power source of the sensors may be a precharged cell or the power branched from the power supply line 27. The power consumption of the sensors cited above is as small as 1 to several watts and hence the sensors are exceptions of the power limitation performed by the power instruction apparatus 9, despite receiving power through the power supply line 27. Therefore, the sensors constantly transmit the measurement data to the power instruction apparatus 9 at a predetermined timing, for example every 10 seconds.

In Fig. 1, further, 77 denotes an outdoor antenna connected to the tuner (not shown) of the TV receiver, and 99A denotes a router A connected to the power instruction apparatus 9. The router A connects, via a wide area communication network such as the internet (may be referred to as "communication network" or "the internet") 98, the power instruction apparatus 9 to an external organization 78A such as a regional earthquake information agency that distributes information to the region of the power company and the house. 99B denotes a router B connected to the TV receiver 75, the router B connecting the TV receiver 75 to another external organization 78B via the wide area communication network 98. The external organization 78B is, for example, a broadcast station that distributes broadcast programs, or a public agency or private company that provides medical and healthcare information, but not limited to such examples. The external organizations 78A and 78B may be identical or different from each other.

Referring now to Fig. 2, a communication environment provided outside the household will be described. Although the power instruction apparatus 9 according to Embodiment 1 is connected to the external organization 78A via the router A 99A, a device generally known as home gateway may be employed instead. In this case the home gateway refers to a home-use device provided between digital information media such as the internet, digital broadcasting, and an IP phone and a terminal of the power instruction apparatus 9 and the digital home electric appliances. The home gateway serves to control the power instruction apparatus 9 as part of the network and transmit information received from the communication or broadcasting medium to the power instruction apparatus 9 and the digital home electric appliances. Providers that supply the IP phone service and content distribution service in addition to the connection to the internet, through the always-on broadband service, generally call the router rented to the occupant (user) of the household as "home gateway".

Although the power instruction apparatus 9 is connected to the external organization 78A via the wide area communication network 98 in Fig. 1, actually the wide area communication network 98 is composed of two parts 98A and 98B as shown in Fig. 2, and the power instruction apparatus 9 makes access to an application service provider (ASP) server 89A of the external organization 78A through a relay server 88 and the wide area communication networks 98A, 98B. The ASP server 89A includes a database 89B that contains various information to be subsequently described, with respect to a large number of households.

The ASP server 89A is a control device installed by the seller of the home electric appliance EE or the provider of the information service, and serves to provide various types of services related to the home electric appliance EE through the wide area communication networks 98A, 98B. The database 89B also includes a user ID database for identifying the user and an application database containing application software for determining the controlling operation for the home electric appliance EE.

The user ID database contains user-specific information received from the user in the form of user registration, such as the log-in ID and password for the ASP server 89A, and setting information including the network address (MAC address) of the router A 99A, and the network address, type, and model of the home electric appliance EE.

The application database contains control application software that enables remote control of the power instruction apparatus 9 and the home electric appliance EE from outside the living space, for example the workplace or a far destination. To be more detailed, the remote control can be performed by making access to the ASP server 89A from a mobile phone terminal 87, an example of the information communication terminal device to be subsequently described, thereby downloading (reading) the control application software. The mobile phone terminal 87 herein refers to a terminal device constantly carried by the user for making phone calls and data communication (including mail transmission) indoors or outdoors, or at a location away from home. A device unable to make a phone call but having the function of downloading information from the internet, transmitting mails, and outputting a remote operation signal will be referred to as "portable communication device", and the "mobile phone terminal" 87 and the "portable communication device" will be collectively referred to as "information communication terminal device".

A base station 80 of the mobile phone terminal 87 is connected to the wide area communication network 98B via the relay server 88 and the wide area communication network 98A, so that the mobile phone terminal 87 can make access to the ASP server 89A and the router A 99A through the base station 80. Accordingly, the occupant of the household can make access to the ASP server 89A upon connecting the mobile phone terminal 87 to the wide area communication network 98A from a facility 79 including the occupant's workplace, located at a distant place as shown in Fig. 2, and perform the remote control of the power instruction apparatus 9 or home electric appliance EE from the facility 79 away from the household, by downloading the control application software. In Embodiment 1, however, direct remote operation of the home electric appliance EE from the mobile phone terminal 87 is disabled. This is because the home electric appliance EE includes appliances that generate high temperature such as the electric heating cooker (second specific home appliance SP2), and from the viewpoint of safety the remote operation performed through the communication circuit which many people utilize outside the houses is not adopted, and all the operations are performed through the power instruction apparatus 9. Inside the house, the mobile phone terminal 87 can only operate the TV receiver 75. The details of the remote control will be subsequently described.

Fig. 3 illustrates a hardware configuration of the power instruction apparatus, the healthcare instrument, and so forth, included in the power control system according to Embodiment 1. In Fig. 3, 9A denotes a main body of the power instruction apparatus 9, having a box shape. The main body 9A contains thereinside all of the constituents of the power instruction apparatus 9 shown in Fig. 21, such as a use limit setting device 96, a comparator 92, and a priority order setting device 95 to be subsequently described. However, a display panel 100 of the use limit setting device 96 is detachable from the main body 9A as shown in Fig. 3, and is fitted in a recess 9C formed in the front face of the main body 9A when attached thereto. 100A denotes the screen of the display panel 100, and 109 denotes a storage unit (high-capacity memory) provided inside the TV receiver 75, such as a DVD, a semiconductor memory, or a hard disk drive (HDD). The display panel 100 is constituted of a touch panel for example, to serve as a display unit that displays information, as well as an operation unit that accepts an input from the user made by touching the screen. As will be subsequently described, the display panel 100 includes an operation input region 117 (see Fig. 76) of the use limit setting device 96 in the power instruction apparatus 9.

In Fig. 3, 75R denotes the remote controller for operating the TV receiver 75, and 410A denotes a blood pressure measurement device (hereinafter, "blood pressure monitor") which is an example of the healthcare instrument 410. 87 denotes a high-function mobile phone terminal including a built-in microcomputer and capable of performing high-speed digital communication, so as to make phone calls via a communication line, make connection to a server of a communication service provider 78C such as a telecommunication company or the ASP server 89A, exchange e-mails with other persons, and download various pictures, music, contents, and information. The mobile phone terminal 87 also includes a built-in pedometer, so that the user can count the number of steps simply by carrying the mobile phone terminal 87. The information of the number of steps can be inputted to a healthcare processing unit 116 in the power instruction apparatus 9, for example via a built-in infrared transmitter of the mobile phone terminal 87. Such an operation will be subsequently described in further details.

118 denotes a confirmation button provided on the front face of the main body 9A of the power instruction apparatus 9, at a position above the recess 9C. When the confirmation button is pressed with the display panel 100 removed from the main body 9A, a search signal is wirelessly outputted from the main body 9A, so that a receiver circuit (not shown) of the display panel 100 is activated upon receipt of the signal and outputs a predetermined sound through an electronic buzzer (not shown). Accordingly, when the display panel 100 is lost in the living space HM, the display panel 100 can be easily found by pressing the confirmation button 118.

119A denotes an emergency cut-off button. When the emergency cut-off button 119A is pressed, the power supply to all of the home electric appliances currently in use (including the kitchen electric appliance KP), except the router A 99A, the router B 99B, the power instruction apparatus 9, the lighting equipment 76, and the TV receiver 75 is immediately cut off. The emergency cut-off button 119A is useful for immediately cutting off the power supply, for example upon receipt of emergency earthquake information through the electric appliance such as the TV receiver 75 when the display panel 100 is removed from the main body 9A. The display panel 100 itself includes a built-in rechargeable battery (not shown). The main body 9A includes thereinside a non-contact charger (not shown) located so as to oppose the wall face of the recess 9C on the front face of the main body 9A of the power instruction apparatus 9, and therefore the rechargeable battery is automatically charged when the display panel 100 is fitted and retained in the recess 9C on the front face of the main body 9A of the power instruction apparatus 9.

119B denotes another emergency cut-off button provided on the screen (display panel) 100 of the use limit setting device 96, and having the same function as the emergency cut-off button 119A. When the emergency cut-off button 119A is pressed, the power supply to all of the home electric appliances currently in use (including the kitchen electric appliance KP), except the power instruction apparatus 9, the lighting equipment, and the TV receiver 75 is immediately cut off.

Fig. 4 and Fig. 5 is a block diagram showing the internal configuration of the TV receiver 75 and the power instruction apparatus 9.

The TV receiver 75 includes a read-only memory (ROM) 75A, a random access memory (RAM) 75B, an image processing unit 75C, an LCD screen 75D, a system control unit 75E constituted of a microcomputer, a power supply unit 75G connected to the commercial power source EP via the circuit breaker BK, four input/output functional devices 75J, 75K, 75L, and 75M, a power field effect transistor (FET) 75S, which is a semiconductor element for power control, interposed between the input/output functional devices and the power supply unit 75G, and an external network communication device 75N.

The system control unit 75E performs signal processing operation of the components of the TV receiver in accordance with control programs stored in the ROM 75A and RAM 75B, and controls the four input/output functional devices 75J, 75K, 75L, and 75M.

The four input/output functional devices 75J, 75K, 75L, and 75M will be described hereunder.

75J is a tuner device that receives broadcast waves such as ground wave and satellite wave through the outdoor antenna 77. 75K is a video device for recording and reproducing videos.

75L is a LAN connection device that processes information from devices connected via a LAN. 75M is a PC connection device via which a personal computer (hereinafter, PC) is connected. Different types of input/output functional devices may be additionally provided. For example, a card device may be provided so as to enable the use of a card-type memory such as an SD card, which is a semiconductor recording medium.

As stated above, the power FET 75S is provided between the output terminal of the power supply unit 75G and the input terminal of each of the four input/output functional devices 75J, 75K, 75L, and 75M. The ON/OFF control of the power FET 75S is performed by the output signal of the system control unit 75E. The power source of each of the four input/output functional devices 75J, 75K, 75L, and 75M can be optionally disconnected by the user. To be more detailed, a selection switch (not shown) that can individually disconnect the power supply to the input/output functional devices 75J, 75K, 75L, and 75M may be provided at a predetermined position of the TV receiver 75, or a so-called on-screen switch may be provide on the LCD screen 75D so as to select the input/output functional device to be disconnected, with the remote controller 75R.

The power FET 75S is not provided between the external network communication device 75N and the power supply unit 75G. In other words, the system control unit 75E is configured to prevent the power supply to the external network communication device 75N from being disconnected by the operation of the user, and therefore while the TV receiver 75 is receiving the main power supply the TV receiver 75 is constantly connected to the external organization 78B by means of the external network communication device 75N via the wide area communication network 98 located outside the house, though the LCD screen 75D is not turned on and no image is displayed therein. Accordingly, when emergency information from the external organization 78B such as a request for prompt reduction of the total electric power of the household during the daytime in summer season (peak cut), or emergency earthquake information from the meteorological agency, a regional disaster prevention center, or an earthquake warning center, is transmitted to the TV receiver 75, the occupant present in the living space HM can be promptly aware of such information. Here, various proposals have thus far been made regarding a TV receiver configured to be turned on by such emergency cut-off information and announce the information even when the TV receiver 75 is off, detailed description of such a system will be omitted.

The TV receiver 75 includes exclusive circuits each constituted of an LSI, to which latest digital signal processing techniques and semiconductor techniques are applied, with respect to each of the functions of the input/output signals as exemplified by the four input/output functional devices 75J, 75K, 75L, and 75M, so that the TV receiver 75 realizes high performance at a relatively low cost. However, since a plurality of high-performance LSIs are incorporated, the power consumption of the TV receiver 75 may be increased. Embodiment 1 is configured, therefore, such that the power supply to one or more of the input/output functional devices 75J, 75K, 75L, 75M that are unused and do not need the power supply can be disconnected, on the assumption that the user does not utilize all of the input/output functional devices 75J, 75K, 75L, and 75M incorporated in the TV receiver 75 at a time. In other words, the user is able to turn on and off the power supply to each of the input/output functional devices 75J, 75K, 75L, and 75M, so as to positively reduce the power consumption. For the purpose of the ON/OFF control of the power supply, the power FET 75S is provided in the power supply circuit of each of the input/output functional devices 75J, 75K, 75L, and 75M.

The mentioned configuration allows the power supply to the input/output functional device 75J and the input/output functional device 75K in the TV receiver 75 to be kept off, even when the TV receiver 75, installed in the living room where the family member gather, is set to display, instead of the screen (display panel) 100 of the power instruction apparatus 9, the power supply-related information from the power instruction apparatus 9, such as the current total power usage in the household and information indicating that a power reduction request has been received from outside. Thus, the power consumption of the TV receiver 75 can be minimized even when the TV receiver 75 is utilized for reduction in power usage.

In Fig. 4 and Fig. 5, 124A denotes an input/output terminal for connecting the power instruction apparatus 9 to the PC connection device 75M of the TV receiver 75, and 125 denotes a control unit of the power instruction apparatus 9, which controls the use limit setting device 96 (and other constituents shown in Fig. 22, such as comparator 92 and priority order setting device 95) of the power instruction apparatus 9, and instructs the home electric appliance to transmit a power reduction instruction signal AS3. 149 denotes a storage unit including a pair of semiconductor memories 95A, 96A for power control to be subsequently described, in which the information related to power control, the healthcare information, and the exercise management information are stored in separate regions at the respective exclusive addresses. The storage unit 149 may be a random access memory (RAM) or a hard disk. The storage unit 149 may also be a USB memory, a CD, a DVD, or an optical card, or a different type of memory provided that the memory is of a non-volatile type that maintains the memory even when the power supply is disconnected. The memory 96A contains information of the upper power limit specified in the circuit breaker BK, data of power usage upper limit for restricting the power consumption of the home electric appliances EE, and information of the upper power limit specified with respect to each of the occupants. In Fig. 6, 124B denotes an input/output terminal for receiving information from the router A 99A and transmitting information from the power instruction apparatus 9 to the wide area communication network 98A through the router 99A.

In Fig. 5 and Fig. 6, 202 denotes an environment detection unit that receives information of temperature and humidity measured by the environment sensors 204, 205, and 206. 203 denotes a human body detection unit that receives human body detection information from the human body sensors 207, 208. Though not shown, each of the living spaces includes the sensor for detecting the degree of dust scattering, the pollen sensor, the illuminance sensor for detecting the amount of light (visible light), and the noise sensor, and the environment detection unit 202 is configured to receive the detection information from the mentioned environment sensors. Here, the illuminance sensor serves to distinguish whether the living space is bright or dark and hence, for example when the illuminance sensor indicates that a living space where the human body detection unit 203 indicates that the occupant is absent is bright, it is possible that the occupant has forgotten to turn off the lighting equipment 76. In such a case, accordingly, the control unit 125 of the power instruction apparatus 9 recommends the user (through the display panel 100 or LCD screen 75D of the TV receiver 75) to turn off the lighting equipment 76 from the viewpoint of energy saving, even though the total power usage at that time point is well below the upper limit specified by the use limit setting device 96. Then the control unit 125 of the power instruction apparatus 9 outputs a turn-off instruction signal to the lighting equipment (provided that the lighting equipment is connected to the power instruction apparatus 9 as object of power reduction).

In Fig. 6, 10 denotes the presence detection device (presence detection unit), configured to receive a detection signal indicating whether presence of a person has been detected, from the human body detection unit 203.

In addition, an entrance electronic lock 19 is provided outside the entrance (not shown), which is the doorway common to all of the living spaces HA. The entrance electronic lock 19 includes a personal authentication unit 29 that detects that the occupant has come home, on the basis of the PIN code or biological information (e.g., fingerprint information) inputted to the electronic lock. The personal authentication unit 29 decides whether the person is the occupant on the basis of the inputted password, and the decision result is transmitted to the presence detection device 10. Here, the electronic lock electronically locking the entrance door and the personal authentication unit will be briefly described because many proposals have thus far been made regarding these devices. In Embodiment 1, the four occupants A to D are each given an exclusive password. The rule of the password is, for example, "4-digit number common to all the occupants plus 2-digit number" should be given to all of the occupants. Thus, the password of the occupant A is "123401 ", the password of the occupant B is "123402", and the password of the occupant A is "123403". The password is inputted through 10 input keys (ten key) provided at the electronic lock of the entrance door.

When the occupant goes out through the entrance after inputting the password and entering the living space, it is not necessary to input the password. However, in the case where the human body detection unit 203 does not detect the presence of the occupant in any of the living spaces HA for a predetermined period of time (e.g., 30 minutes), the presence detection device 10 decides that all of the occupants are away from home, and deletes the all the password input records of the occupants and shifts the detection information from the presence state to the absence state. Accordingly, when the occupant comes home thereafter, the occupant has to input the password again. Here, inputting the information that the occupants is going out to the personal authentication unit when the occupants goes out of the entrance improves the accuracy of the presence detection. Further, instead of inputting the password, the coming home of the occupant may be detected on the basis of the biological information (e.g., fingerprint information), or by causing the personal authentication unit to directly read, magnetically or optically, the personal identification information recorded on the ID paper or ID card of the occupant, the detailed description of which will however be omitted.

Fig. 7 is a partially cross-sectional block diagram showing a configuration of the power instruction apparatus 9 shown in Fig. 1 to Fig. 5.

In Fig. 7, 9A denotes the main body of the power instruction apparatus 9. 148A denotes two or more projections formed at an upper and a lower position in the recess 9C, and 148B denotes recesses formed at positions respectively opposing the projections 148A. When the display panel 100 is fitted in a predetermined position in the recess 9C, the projections 148A are fitted in the respective recesses 148B, so that the display panel 100 is retained so as not to readily come off. When the projections 148A and the recesses 148B are fitted to each other, the control unit 125 detects the fitting through sensing switches (e.g., combination of a magnet and a switch that outputs a signal upon sensing the magnetism) provided on the projection 148A and the recess 148B.

The control unit 125 wirelessly outputs to the display panel 100, a display signal to be displayed on the screen of the display panel 100 and a voice instruction signal for a voice guidance device (not shown) provided inside the display panel 100. Accordingly, even when the display panel 100 is separated from the main body of the power instruction apparatus 9, the display signal and the voice instruction signal can reach the display panel 100 provided that the display panel 100 is located inside the living space HM. Conversely, an input signal is wirelessly transmitted from the display panel 100 to the main body of the power instruction apparatus 9, so that the input signal is recognized by the control unit 125. Such transmission and reception of the wireless signals is performed through a non-illustrated input/output terminal. As shown in Fig. 6 and Fig. 7, the power usage status of the region in which the household is located, in particular power shortage information, is provided to the main body 9A of the power instruction apparatus 9, from the external organization 78A such as a power company through the wide area communication network 98 and the router 99A. Thus, the main body 9A of the power instruction apparatus 9 is configured to automatically receive a signal, for example requesting power reduction, from the power company or public agency.

Fig. 8 and Fig. 9 are block diagrams each showing a configuration of the healthcare processing unit 116 and the healthcare instruments 410 in the power instruction apparatus 9. In Fig. 8 and Fig. 9, 126 denotes an operation unit through which the user inputs various types of information and instructions to the healthcare processing unit 116. For example, to cause the healthcare processing unit 116 to read measurement data of the healthcare instrument to be subsequently described, on-screen switches (corresponding to "icon" to be subsequently described) is displayed on the screen 100A as shown in Fig. 19, so that the user can make an input by selecting one of the on-screen switches. Thus, the screen 100A can be utilized by the user to input various types of information and instructions to the healthcare processing unit 116, like the operation input region 117 of the use limit setting device 96 in the power instruction apparatus 9. Instead of the on-screen switches, for example touch keys of a static capacitance detection type that enables the user to make an input by touching the display screen may be employed.

In Fig. 8 and Fig. 9, 127 denotes a data processing unit that processes measurement data of the healthcare instrument 410 to be subsequently described. The data processing unit 127 stores the data of each subject in a memory (RAM) 139, and adds caution information when the measurement data read out from the memory 139 and processed indicates a value exceeding a predetermined value, and also converts the measurement data into a graphic conversion signal to generate a table or graph. A ROM 138 contains processing formats of the measurement data and processing programs such as calculation programs for statistical processing. The data processing unit 127 is also configured to process the code for identifying the used healthcare instrument, information for identifying the type (e.g., blood pressure) and the subject of the measurement data, and information such as data and time of the measurement, measured value, and whether the value is normal, into a matrix format as shown in Fig. 13, and to temporarily store the matrix data in the memory 139, and also to transfer the measurement data to the storage unit 149 of the power instruction apparatus 9. Regarding the data of the blood pressure monitor for example, in the data processing unit 127 a range of 135 to 85 mmHg is set as normal zone in advance, so that the data processing unit 127 adds, when the blood pressure data from the healthcare instrument 410 is deviated from the normal zone, caution information (caution code) to the data as incidental information. In addition, the user may input in advance a normal zone or normal value in the healthcare instrument 410, so that the healthcare instrument 410 transmits the data to the data processing unit 127 together with the incidental information, when the measured value is deviated from the zone or value. The mentioned process can be performed by adopting a uniform data processing method in both of the data processing unit 127 and the healthcare instrument, and therefore detailed description will be omitted.

136 denotes an input/output terminal for connection to the main body 9A of the power instruction apparatus 9, and 137 denotes an information reception unit that receives the measurement data from the healthcare instruments. In Fig. 8, the healthcare instruments are, for example, the blood pressure monitor 410A, an electrocardiograph 410B, a heart rate monitor 410C, a clinical thermometer 410D, a weight scale 410E, a body fat monitor 41 OF, and a urine analyzer 410G, which respectively provide seven types of measurement data.

Fig. 10 is a block diagram showing a configuration of the blood pressure monitor 410A, a typical example of the healthcare instruments 410. In Fig. 10, 214 denotes a measurement unit of the blood pressure, 213 denotes a display unit that displays the measured blood pressure in figures, 215 denotes an operation unit for instructing, for example, starting of the blood pressure measurement. The operation unit 215 includes an input key (not shown) for inputting the identification data (e.g., 3-digit number) of the subject before the measurement for identifying the subject. The blood pressure monitor 410A serves to measure the blood pressure of the artery with a cuff wound around the wrist or arm of the user or an arm cylinder in which the user inserts the arm, and includes the measurement unit 214, a clock circuit 147, the display unit 213, the operation unit 215, a memory 216, a control unit 217, a transmission unit 314A, and a reception unit 314B. The blood pressure refers to the blood pressure in a systole phase and a diastole phase, which are respectively called systolic blood pressure (highest blood pressure) and diastolic blood pressure (lowest blood pressure). The measurement result is displayed, for example, as 140 mmHg (millimeter of mercury). The unit of "mmHg" may be omitted, and the highest blood pressure and the lowest blood pressure may be displayed together, such as 140-80. The display unit 213 (see Fig. 10) includes, for example, an LCD unit that displays the measurement result of the blood pressure in figures.

In Fig. 8, 410B denotes the electrocardiograph. The electrocardiogram is a graphic record of the electrical activity of the heart which is useful for diagnosis and treatment of heart disease, and is widely used in the daily practice in medical institutions. The electrocardiograph also includes a display unit, such as an LCD unit, which displays the measurement result in a form of a graph.

In Fig. 8, 410C denotes a heart rate monitor. The heart rate refers to the number of times that the heart beats per unit time, normally per minute. When the heart pumps out the blood pulsation is generated in the artery, and the number of such pulsations is called pulse rate, or simply pulse. The heart rate can be simultaneously measured with the blood pressure monitor, and hence the heart rate monitor and the blood pressure monitor are unified in many cases. The heart rate monitor also includes a display unit, such as an LCD unit, which displays the measurement result in figures.

In Fig. 8, 410D denotes the clinical thermometer. The clinical thermometer also includes a display unit, such as an LCD unit, which displays the measurement result in figures.

410E denotes the weight scale. The weight scale also includes a display unit, such as an LCD unit, which displays the measurement result in figures.

In Fig. 8, 410F denotes the body fat monitor. The body fat monitor also includes a display unit, such as an LCD unit, which displays the measurement result in figures. The body fat monitor serves to measure the ratio of fat to the human body (body fat rate), in other words the amount of fat in the body (ratio of fat to the body weight), and many body fat monitors that can easily measure the body fat utilizing the difference in impedance between fat and other components of the human body are commercially available. In addition, some body fat monitors include an element for detecting the body weight attached to the electrode plate for measuring the impedance of the human body, so as to also measure the body weight at the same time. The body fat monitor also includes a display unit, such as an LCD unit, which displays the measurement result in figures.

In Fig. 8, 410G denotes the urine analyzer. The urine examination is generally classified into examination of the color, specific weight, and so forth of the urine itself, and analysis of the components of the urine. In Embodiment 1, whether the urine is acid or alkaline, in the component analysis. This is because it is known that it is unfavorable that the urine is biased to either acid or alkaline. For example, it is known that the urine of a person with insufficient vegetable intake tends to be acid, and the present invention provides such healthcare information to a person who cooks at home through the power instruction apparatus 9. It is preferable that the urine analyzer 410G is incorporated, for example, in a toilet bowl in advance, for the sake of convenience. The urine analyzer also includes a display unit, such as an LCD unit, which displays the measurement result in figures.

The healthcare instruments 410 may include other instruments than the mentioned seven instruments, the blood pressure monitor 410A to the urine analyzer 410G. A plurality of the cited instruments may be unified so as to perform multiple functions. Since the urine analyzer 410G is incorporated in the toilet bowl as mentioned above, the user is unable to carry the urine analyzer unlike the blood pressure monitor 410A, and therefore the urine analyzer 410G includes a transmitter (not shown) that wirelessly transmits the measurement data to the healthcare processing unit 116 provided in the display panel 100 of the power instruction apparatus 9.

Referring to Fig. 9, exercise equipment 145 includes a treadmill 145A and a running calorie meter 145B. The treadmill 145A is installed in the living space HM, and performs calculation on the basis of the product of a period of time that the subject (user) has been running and the body weight of the subject. A calorie consumption calculation program, for example based on the knowledge that a person having a body weight of 65 kg consumes approximately 480 kcal by jogging for an hour at 120 meters per minute, is incorporated, and when the subject inputs the body weight data and makes the exercise, the calorie consumption is automatically calculated when the subject finishes the exercise.

The running calorie meter 145B also calculates the calorie consumption of the subject on the basis of the similar principle to that of the treadmill 145A. In the case where the running calorie meter 145B has the function of measuring the body weight, the calorie consumption is automatically calculated without the need for the subject to input the body weight. The treadmill 145A and the running calorie meter 145B each include a display unit, such as an LCD unit, which displays the measurement result in figures.

In Fig. 9, 312 denotes a (manual) vacuum cleaner, which has a movement measurement function in addition to the dust suction function, so as to calculate the calorie consumption. Details of the vacuum cleaner is illustrated in Fig. 21.

In Fig. 21, the vacuum cleaner 312 includes a cleaner main body 312A, a hose structure 312B, and a floor suction unit 312C, and is used to clean the floor by sucking dust from a floor surface FL while moving the floor suction unit 312C forward as indicated by an arrow in Fig. 21 or backward. The cleaner main body 312A includes an electric fan (also called a blower motor) 312D for generating a suction flow to suck the dust from the floor surface FL.

The cleaner main body 312A also includes a dust chamber 312E for collecting the sucked dust. To collect dust, some vacuum cleaners include a bag-shaped filter called paper pack attached to the dust chamber, and some vacuum cleaners utilize swirling flow to separate the dust. In Embodiment 1, either method may be adopted.

The hose structure 312B is composed of a flexible soft tube 312F of, for example, a bellows shape, an operating section 312G including an operation unit (not shown) for inputting operational instructions to the vacuum cleaner 312, and a telescopic hard extension tube 312H, and the end portion of the soft tube 312F opposite to the operating section 312G is detachably connected to the suction port of the cleaner main body 312A.

A floor suction unit 312C is detachably connected to the end portion of the hard extension tube 312H of the hose structure 312B opposite to the operating section 312G.

The cleaner main body 312A includes a handle 312J integrally formed with the ceiling portion of the cleaner main body 312A, for the use to carry the main body therewith. In addition, a pair of running wheels 312K are attached to the left and right sides of the rear portion of the cleaner main body 312A, respectively, and an auxiliary wheel 312L, horizontally rotatable by 360 degrees, is attached to the bottom of the front portion of the cleaner main body 312A. With the auxiliary wheel 312L and the running wheels 312K the cleaner main body 312A can move back and forth, and pivot about the left and right pair of running wheels 312K.

The cleaner main body 312A includes thereinside a trip meter 312M that sums the number of forward and backward rotations of the running wheels 312K, and a calculation unit (not shown) that calculates a calorie consumed by the user on the basis of information indicating the distance travelled detected by the trip meter and the weight of the cleaner main body 312A.

The trip meter starts the measurement when the main power of the vacuum cleaner is turned on and the electric fan 312D is activated. When the user utilizes the vacuum cleaner for cleaning, normally the user tows the cleaner main body 312A with the hose structure 312B, so that the cleaner main body 312A moves on the floor surface of the living space HM. Accordingly, the calculation unit calculates the kinetic energy necessary for moving the cleaner main body 312A on the basis of the data of the summed number of forward and backward rotations of the running wheels 312K, thereby calculating the calorie consumption of the user.

The cleaner main body 312A includes a device that automatically transmits the calorie consumption data obtained by the calculation unit to the healthcare processing unit 116 of the power instruction apparatus 9 via wireless communication, when the electric fan 312D is stopped. The cleaner main body 312A of the vacuum cleaner also includes a display unit such as an LCD panel for displaying the numerical data of the calorie consumption, and the display unit is also configured to display the functions and operational status of the vacuum cleaner itself, for example information indicating that the dust chamber 312E has been filled with dust.

In Fig. 10,217 denotes a control unit that combines the blood pressure data measured by the measurement unit 214 with the date and time of the measurement transmitted from the clock circuit 147 and the identification data (code), and stores such set of data in the memory 216. 314A denotes a reception unit that transmits the blood pressure measurement data accumulated in the memory 216 to outside, for example via an infrared ray signal or a specified low power wireless signal. 314B denotes a reception unit that receives the blood pressure measurement data transmitted from another device via an infrared ray signal or a wireless signal, and the received measurement data is associated with the identification data of the subject by the operation unit 215 and stored in the memory 216. Here, the memory is a semiconductor memory that retains the memory regardless that the power is turned off. Hereafter, the term "memory" will refer to the semiconductor memory that retains the memory regardless that the power is turned off, unless otherwise noted.

Although the blood pressure monitor 410A has been described as typical example of the healthcare instrument 410, the electrocardiograph 410B, the heart rate monitor 410C, the clinical thermometer 410D, the weight scale 410E, the body fat monitor 41 OF, and the urine analyzer 410G are basically of a similar configuration. The measurement data obtained by the healthcare instruments cited above may be transmitted to outside via a highly compatible connection method or recording card, such as a USB cable, a USB memory, and an SD card. The screen 100A shown in Fig. 19 indicates that new measurement data from the healthcare instruments can be registered via any of the infrared ray, the USB memory, and wireless communication. Thus, when the measurement data of the healthcare instrument 410 is stored in the healthcare processing unit 116 in the power instruction apparatus 9, the operation input region 117 can be prepared on the screen 100A of the display panel 100.

Fig. 11 is a schematic drawing showing a screen of TV receiver 75 and the remote controller. In Fig. 11, a TV portal site is displayed on the TV receiver 75. When a specific power source button provided on the remote controller 75R is pressed once, the TV receiver 75 is turned on and the system control unit 75E displays the TV portal site on the LCD screen 75D. Here, the TV portal site refers to a portal site for various types of services, mainly provided for a TV set connectible to the internet.

As shown in Fig. 11, the TV portal site displays a menu including icons (on-screen input switches) 411 surrounded by a rectangular frame indicating, for example, "news", "weather report", "traffic information", "earthquake/tidal wave information". The TV portal site also displays a special icon 412 indicating "healthcare information", a special icon 413 indicating "electric energy management", and an icon 419 indicating "living environment information". These three special icons may be displayed in a larger size or in an outstanding color, for clearer visual recognition compared with other ordinary icons. The term "icon" herein referred to is used for selecting a specific function, and includes those representing the letters indicating the specific function, not only symbols. In addition, a display for inputting (often called "tab" or "thumbnail") that indicates a purpose or a function only in letters such as "healthcare information" for example as shown in Fig. 12, will also be referred to as icon.

When the remote controller 75R is directed to the special icon 413 indicating "electric energy management" displayed on the LCD screen 75D of the TV receiver 75 as shown in Fig. 11 and a specific button (input confirmation button) on the remote controller 75R is pressed, the remote controller 75R emits an infrared ray signal. When the TV receiver 75 detects the signal the screen of "electric energy management" is selected, and the LCD screen 75D displays a single-purpose screen titled "electric energy management". Here, the input signal is generated not because the infrared ray signal from the remote controller is emitted only to the specific icon. When the remote controller emits the infrared ray signal after the specific icon is selected with the remote controller, such emission is detected so that the selection of the icon is confirmed. Since such an icon is widely known, further description will be omitted.

When the remote controller 75R is directed to the special icon 412 indicating "healthcare information" displayed on the LCD screen 75D of the TV receiver 75 and the specific button (input confirmation button) on the remote controller 75R is pressed, the LCD screen 75D displays a single-purpose screen titled "healthcare information" as shown in Fig. 12. Through further operation of the remote controller 75R, the blood pressure measurement data of the subject measured at a certain date and time is displayed, as an example of the special icon 412 as shown in Fig. 12. In the case where the blood pressure exceeds the target set in advance by the subject, the highest blood pressure exceeds 135 mmHg, or the lowest blood pressure is below 85 mmHg, a suggestion or caution for improving the blood pressure is displayed at the same time, so as to call the attention of the subject. Such suggestion or caution may be stored in advance in the ROM 138 of the healthcare processing unit 116, or stored in advance in the memory 216 in the healthcare instrument 410. Alternatively, reference information may be acquired in advance from an external specialized medical institution with the mobile phone terminal 87, to transmit such information from the mobile phone terminal 87 to the power instruction apparatus 9 through the wide area communication network 98A. Then the information may be stored in the healthcare processing unit 116 and read out the information whenever necessary.

Upon operating the remote controller 75R further, as shown in Fig. 13, the measurement results of all the family members (Fig. 13 displays only the subjects A and B, though the family includes two other members) who underwent the measurement in a certain period are displayed on the LCD screen 75D in the form of a list. The subject A corresponds to the occupant A to be subsequently described, and the subject B corresponds to the occupant B to be subsequently described.

In Fig. 13, LS1 denotes the column displaying the instrument code for identifying the healthcare instrument 410, LS2 denotes the column displaying the category of the measurement, and LS3 denotes the column for identifying the subject, and any desired form may be adopted, for example alphabets, numerals, or nickname, provided that the subject can be identified. LS4 denotes the column displaying the date and time that the metabolic data was measured with the healthcare instrument, and LS5 and LS6 denote the columns displaying the measured values, and the number of columns may be just one, or three or more, depending on the type of the metabolic data. LS7 denotes the column for a predetermined mark displayed when the measurement data is deviated from a normal range or close to a border line and precaution is required, in different forms depending on the extent of the deviation.

As shown in Fig. 13, when the measurement result is deviated from the normal range, a symbol "E" indicating that precaution is necessary is displayed in the column of "evaluation" (LS7). The information accompanied by such a symbol will hereinafter be referred to as "caution data". Here, the measurement data of a specific subject alone can be displayed by operating the remote controller 75R. The special icon 412 represents the information displayed as LS1 to LS7, for example the measurement data.

When the remote controller 75R is directed to the special icon 419 indicating "living environment information" displayed on the LCD screen 75D shown in Fig. 12 and the specific button (input confirmation button) on the remote controller 75R is pressed, the LCD screen 75D displays a single-purpose screen titled "environment information" as shown in Fig. 14.

Although the remote controller 75R of the TV receiver 75 is used to select the icons 411, 414, 417, and 418 in Fig. 17 and Fig. 18, the mobile phone terminal 87 can also be used inside the house. With the mobile phone terminal 87, the ASP server 89A can be accessed through the base station 80, and therefore upon downloading a control application software for the TV receiver 75 in the ASP server 89A, the mobile phone terminal 87 can be used to control the TV receiver 75 inside the living space (house). In addition, although the mobile phone terminal 87 is unable to perform a direct remote operation of the home electric appliance EE from outside in Embodiment 1 as stated earlier, the mobile phone terminal 87 may be allowed to control the home electric appliance EE other than the TV receiver 75, inside the house. The mobile phone terminal 87 may be brought close to (or into contact with) the input/output terminal of the home electric appliance EE, for transmission of signals via near-field communication. The near field communication (NFC) is known as international standard of wireless communication.

In Fig. 14, 470 denotes a region for displaying information of the living room environment, 471 denotes a region for displaying information of the kitchen environment, 472 denotes a region for displaying information of the bedroom environment, and 473 denotes a region for displaying information of the bathroom environment. These regions are virtually formed by the system control unit 75E of the TV receiver 75 when the screen of the living environment information is displayed. The term "virtually" refers to the state where the control program of the system control unit 75E divides the image display region of the LCD screen 75D, instead that each of the regions is physically independent. The display regions 470 to 473 each indicate the name of the corresponding living space in letters, such as "living room" and "kitchen".

474 denotes a temperature/humidity display section indicating at least one of the temperature or humidity in the room in letters, and 475 denotes a comfort mark that appears when the room temperature of the living space is within a temperature range set by the user, and the mark of three stars indicates the best of three degrees of comfort, the mark of two stars indicates the medium degree, and the marks of one start indicates the lowest degree. Such degrees may be expressed in letters instead of marks. The comfort mark 475 is an example of the information indicating the degree of comfort. The criteria of the degree of comfort can be changed by the user any time, and the occupant can freely set depending on whether it is winter or summer, or according to the climate of the district of the household. As initial setting, the best degree is set as 26 degrees Celsius in temperature, below 50% in humidity.

476 denotes a caution mark (information sign) displayed when the temperature and humidity deviate from the comfortable range and the environmental condition is uncomfortable or close thereto. The mark of one triangle indicates "slightly uncomfortable", and the mark of two triangles indicates "uncomfortable". The caution mark 476 is also an example of the information indicating the degree of comfort. In Japan, a discomfort index calculated on the basis of temperature and humidity is often employed. For example, when the temperature is 29 degrees Celsius and the humidity is 70%, the discomfort index is 80. It is said that when the discomfort index exceeds 75 10% of the population feels uncomfortable, and when the discomfort index exceeds 80 everybody feels uncomfortable. Accordingly, the caution mark 476 of one triangle may be defined as below 75 in discomfort index 75, and two triangles may be defined as 75 or higher in discomfort index.

Although the caution mark 476 of one triangle indicates "slightly uncomfortable" and the mark of two triangles indicates "uncomfortable" in this example, when the room temperature exceeds 30 degrees Celsius and the humidity exceeds 75% the discomfort index exceeds 80, in which case there is a risk of heat stroke even inside the room. It is known that, in terms of the location of the heat stroke, most of the people of 65 years and higher, both male and female, suffer the heat stroke inside the room (Reference Literature: "Heat Stroke Environmental Health Manual" by Ministry of the Environment of Japan, revision of May, 2011).

The environment detection unit 202 transmits a signal of "level 1 warning" to the control unit 125 when the temperature reaches 29 degrees Celsius and the humidity reaches 70%, and transmits a signal of "level 2 warning" to the control unit 125 when the room temperature becomes 30 degrees Celsius or higher and the humidity exceeds 75%. When the signal of "level 1 warning" is outputted in the living space where presence of an occupant is detected by the human body detection unit 203, the control unit 125 takes the following measures corresponding to "level 1 warning".
Remedy 1: Display the warning on the screen 100A in the display panel 100 of the power instruction apparatus 9
Remedy 2: Display the warning in letters on the LCD screen 75D of the TV receiver 75, when the TV receiver 75 is being viewed

In the case where the temperature does not fall below 29 degrees Celsius or the humidity does not fall below 70% within five minutes after the remedy 1 and the remedy 2 are performed, it can be assumed that the person in the living space may not be feeling the heat. In such a case, therefore, the control unit 125 takes the following measure corresponding to "level 2 warning".

Remedy 3: Forcibly turn on the air-conditioning apparatus 7 which has cooling capacity (capacity of suppressing increase of temperature) in the environment improvement apparatuses in the living space (target room temperature in this case is for example 27 degrees Celsius).

In the present invention, the expression that the air-conditioning apparatus 7 is available in the living space naturally includes the case where the apparatus itself is installed inside the living space. In addition, the case where the apparatus is located outside the living space and the conditioned air is supplied into the living space is also included. In the case where the air-conditioning apparatus 7 is not available inside the living space, or when it is detected that the air-conditioning apparatus 7 is unusable because, for example, the power cord is removed from the power outlet, another environment improvement apparatus to be subsequently described, for example a ventilation device or an air purifier, is activated.

It is known that causing the air in the room to circulate is also effective for preventing the heat stroke. In Embodiments of the present invention, therefore, an occupant located outside the living space (e.g., occupant A or B) is made aware that the environmental condition is hazardous to the health. To be more detailed, the caution information is transmitted from the input/output terminal 124B (see Fig. 6) of the power instruction apparatus 9 to the outdoor communication network (communication network) 98 through the router 99A, so that the information reaches the mobile phone terminal 87 of the occupant B. Then the occupant B is supposed to turn on the air-conditioning apparatus 7 by remote operation through the power instruction apparatus 9, however when this is unfeasible the occupant B may communicate with a relative or a home helper service office, to let someone actually visit the household (in this case, electronic lock of the entrance). Thus, in the case where the temperature and the humidity return to the first predetermined range within a predetermined time after receipt of the secondary warning signal, the control unit 125 notifies the occupant located outside the living space that the environmental condition has become hazardous. With the mentioned configuration, the environment detection unit 202 monitors the environment even while a senior person or a child unfamiliar with the use of the environment improvement apparatus is in the room alone, and therefore the safety level of the indoor living space can be upgraded.

The environment detection unit 202 immediately outputs "level 2 warning" to the control unit 125 when the room temperature reaches 30 degrees Celsius or higher and the humidity exceeds 75%, irrespective of whether "level 1 warning" has been outputted. When "level 2 warning" is outputted with respect to the living space where presence of an occupant is detected by the human body detection unit 203, the control unit 125 instructs the execution of the remedy 3. The environment detection unit 202 monitors the latest environmental condition of the living space where the warning has been outputted, at intervals of one minute after the instruction of the remedy 3 is outputted.

The operation of the environment improvement apparatus forcibly activated as above, for example the air-conditioning apparatus 7, is automatically stopped by an instruction from the control unit 125 outputted to the use limit setting device 96, when the environmental condition in the living space returns to the predetermined condition set by the occupant. Alternatively, the environment improvement apparatus may be automatically stopped after working for 30 minutes. This is because operating the environment improvement apparatus longer than is necessary is undesirable from the viewpoint of energy saving.

477 denotes a cold/hot display section displayed close to the caution mark 476, to indicate whether it is hot or cold in letters. In Fig. 13, "hot" is displayed in the cold/hot display section with respect to the bedroom and bathroom.

478 denotes an absence mark (absence information sign) that appears when the human body detection unit 203 of the power instruction apparatus 9 detects that no one is in the living space. As shown in Fig. 14, it is easily identified that no one is in the bedroom and the bathroom in view of the LCD screen 75D.

479 denotes an operation display section of the first specific home appliance SP1, for displaying the operation status of "environment improvement apparatus", which is the home electric appliance EE configured to condition the air in the living space so as to maintain and improve the degree of comfort, for example the air-conditioning apparatus 7, the air purifier (not shown), the ventilation device (not shown). Although the air purifier and the ventilation device are not shown, generally the air purifier includes a box-shaped main body having an intake port and an exhaust port, an electric air-sending device (electric fan) provided inside the main body to suck the air in the room through the intake port and discharge the air through the exhaust port, and a dust-removing filter mounted across the air passage between the intake port and the exhaust port. More preferably, the air purifier may be configured to emit negative ion or minute particle ion composed of water particles and said to be effective for suppressing mold germ, allergen, and odor, to the air passing through the air passage. The ventilation device is typically exemplified by a ventilation fan with hood, mounted right above the induction heating cooker 2 in the kitchen.

480 denotes an exercise caution mark (exercise caution information sign) indicating in letters whether the living space has a high degree of comfort and suitable for making indoor exercise. This mark may be included in the display regions 470 to 474 for the living spaces, however preferably the exercise caution mark 480 may be displayed in the display region of the living space that includes at least the health and measurement equipment configured to transmit information, wirelessly or wiredly, to the healthcare processing unit 116 of the power instruction apparatus 9, for example the indoor exercise and measurement equipment 311 A or 311B. Here, the vacuum cleaner 312 which measures the calorie consumption is also regarded as exercise and measurement equipment, and therefore in Fig. 14 the display region for the bedroom displays the exercise caution mark to indicate that the bedroom is not suitable for operating the vacuum cleaner 312.

The configuration of the LCD screen 75D of the TV receiver 75 shown in Fig. 12 to Fig. 16, in other words the types of the information to be displayed and the layout, is also applied to the screen 100A of the display panel 100. However, the size of the LCD screen 75D is 20 to 60 inches while that of the screen 100A is 10 to 15 inches and hence the effective display area of the latter is only a quarter or less of the former, and therefore it is impossible to display the same content in the same size. However, the temperature/humidity display section 474, the comfort mark 475, the caution mark 476, the exercise caution mark 480, and also a change display section 483, an unsuitable environment display section 484, a pollen scattering display section 485, and an operation display section 482 to be subsequently described, are all displayed though naturally the size of the displayed letters is reduced. Accordingly, the same types of information is displayed on the LCD screen 75D of the TV receiver 75 and the screen 100A of the display panel 100, so that the same information can be confirmed, for example, in whichever of the kitchen or the living room. Here, the display of the information on the screen 100A is realized by execution of the display control program of the control unit 125.

Fig. 15 illustrates a variation of the screen displaying the environment information shown in Fig. 14.

A distinctive feature of the screen shown in Fig. 15 is that icons 481 A to 481 D for viewing detailed information are respectively included in the display regions 470 to 473. Another feature is that the screen includes, in addition to the operation display section 479 allocated to the first specific home appliance SP1, an operation display section 482 for displaying the operation status of the second specific home appliance SP2 such as the rice cooker 3, which may have an adverse effect on the air in the living space, for example emitting heat to the air thereby increasing the temperature.

483 denotes a change display section that appears when the temperature or humidity fluctuates (increases or decreases) by a larger range than a predetermined ratio. For example, when the temperature increases or decreases by 1 degree Celsius or more within two minutes, the change display section 483 displays "increasing" or "decreasing".

484 denotes an unsuitable environment display section indicating that the space is in a physical environment undesirable for the health of the occupant but improvable by operating the first specific home appliance SP1, in other words the environment improvement apparatus. Fig. 15 illustrates the case where one liter of air contains more than a predetermined number of dust particles larger than a predetermined size in diameter. For example, when the bedclothes are moved or beaten after the occupant wakes up, dust is temporarily stirred up in the air, in which case the unsuitable environment display section displays some letters or a mark. The pollen scattering display section 485 also represents the information that indicates the degree of comfort of a specific living space.

485 denotes a pollen scattering display section for displaying an amount of pollen flying outside the house, which is useful because, for example, the occupant suffering pollen allergy can decide whether to refrain from going out. The basic data for the pollen scattering display section is available from Japan Meteorological Agency or other meteorological institutions and TV stations, and therefore the pollen scattering display section 485 may display, in addition to the information from the pollen sensor or instead of utilizing the pollen sensor, the information from one of the cited external organizations. The information from the external organizations can be acquired by the power instruction apparatus 9 or the TV receiver 75 from the external organizations 78A, 78B.

When the remote controller 75R is further operated so as to select for example the icon 481 B when the screen is set as shown in Fig. 15, the screen is switched as shown in Fig. 16.

In Fig. 16, 486 denotes a display section indicating whether the ventilation fan (not shown) provided in the kitchen is working, and 487 denotes an operation intensity display section indicating to which mode a refrigerator (not shown) also provided in the kitchen is set, "high", "medium", or "low". It is widely known that the operation intensity largely affects the power consumption of the refrigerator, and therefore further description will be omitted.

As shown in Fig. 16, the kitchen display region 471 is automatically enlarged to a largest possible size. Such an enlarged display can be realized by the control program in the system control unit 75E for controlling the display of the LCD screen 75D. 488 denotes a blank section secured along the right edge of the display region 471, in which an icon 490 for selecting the environment information of the living room, an icon 491 for selecting the environment information of the bedroom, and an icon 492 for selecting the environment information of the bathroom are displayed. Therefore, upon selecting one of those icons, the environment information of the living room, the bedroom, or the bathroom can be displayed in details on the LCD screen 75D.

489 denotes a suggestion section for displaying suggestion information, in which information indicating whether the home electric appliance, in particular the first specific home appliance SP1 may be operated, or suggestion regarding the operating condition of the appliance is displayed in accordance with the current situation of the living space. Such a display contributes to enabling more effective control of the environment of the living space. The example shown in Fig. 16 is urging the occupant to turn on the ventilation fan, as a remedy for improving the situation in the kitchen where humidity is increasing. In other words, the suggestion to use the ventilation fan, which is one of the environment improvement apparatuses, is being made to purify the air in the kitchen.

The basic data for such suggestion is stored in the storage unit 149 serving as storage device for the healthcare processing unit 116. The same data is also stored in the storage unit (high-capacity memory) 109 of the TV receiver 75. Accordingly, to display the environment information on the TV receiver 75, the system control unit 75E reads out the information from the storage unit 109 and causes the LCD screen 75D to display the information. In this process, the control unit 125 of the power instruction apparatus 9 collects the operation information of each of the home electric appliances EE as a set on a real-time basis, and therefore the information from the control unit can be utilized for the display on the LCD screen 75D.

To display the environment information on the display panel 100 of the power instruction apparatus 9, the control unit 125 reads out the information from the storage unit 149 and transmits the information to the display panel 100. In this case also, the information from the control unit 125 of the power instruction apparatus 9 can be utilized for the display on the screen 100A, since the control unit 125 collects the operation information of each of the home electric appliances EE as a set on a real-time basis.

Upon operating the remote controller 75R to select the icon 411 indicating "earthquake/tidal wave information" when this icon is displayed in the TV portal site as shown in Fig. 11, or suddenly displayed while viewing an ordinary TV program, a special icon 414 indicating "emergency cut off" and a special icon 415 indicating "emergency earthquake/tidal wave news received" are displayed as shown in Fig. 17. In this case, when the special icon 414 of "emergency cut off" is selected, the TV receiver 75 transmits an emergency cut-off instruction to the power instruction apparatus 9 and the power supply to the predetermined items of the home electric appliances EE is cut off within a few seconds, without the need for the user to go to the place where the main body 9A of the power instruction apparatus 9 is installed. The power supply to an "exclusive electric appliance" to be subsequently described is also cut off within a few seconds.

As stated earlier, the mentioned emergency cut-off is not performed with respect to the lighting equipments 76 provided in a corridor that serves as evacuation passage, in the room and the bath tub, the TV receiver 75, the power instruction apparatus 9, the router A 99A, and the router B 99B. The two special icons 414, 415 may be displayed in a larger size or in an outstanding color, for clearer visual recognition compared with other ordinary icons, like the special icons 412, 413, and 419.

Fig. 18 illustrates the front view of the LCD screen 75D, displayed while the user is viewing an ordinary TV program on the TV receiver 75. As shown in Fig. 18, an icon 418 indicating "electric energy management" is constantly displayed in the right lower corner of the LCD screen, even while the ordinary TV program is being displayed. However, the user can erase the icon 418 if so desired.

In Fig. 12, Fig. 14, Fig. 15, Fig. 16, and Fig. 18, 417 denotes an icon for switching to the single-purpose screen for the healthcare information, displayed in the form of a tab. The icon 418 is used to switch the display to the single-purpose screen for the electric energy management as stated above, and displayed in a rectangular frame shape.

In Fig. 16, 232 denotes an icon for returning to the initial screen of the TV portal site shown in Fig. 11.

Fig. 19 is a front view of the screen 100A of the display panel 100 in the power instruction apparatus 9 and a peripheral region thereof. In Fig. 19, 420 denotes an information key. Each time the user touches the information key, healthcare-related information and information for effectively performing the healthcare, which are useful for the user, are displayed on the screen 100A. To secure a sufficient display region, for example the measurement data of the blood pressure monitor 410A is not displayed.

421 denotes a help mode key. When the user touches the key 421, information that assists the user's operation is displayed, and a correct operation method is audibly announced through a voice guide device (not shown). For example when the blood pressure data is displayed, the keys are located in the periphery of the blood pressure data display, and when the key is pressed the meaning of the blood pressure data and explanation of the normal range are displayed on the screen 100A, in schematic figures and letters.

In Fig. 19, 425 denotes an icon for viewing existing data (existing data display command key). When this icon is selected, the measurement data, the exercise data, and the calorie consumption data for healthcare are retrieved into the display panel 100 of the power instruction apparatus 9 from the healthcare instruments 410 including the blood pressure monitor 410A, the electrocardiograph 410B, the heart rate monitor 410C, the clinical thermometer 410D, and the weight scale 410E, the exercise equipments (treadmill 145A, running calorie meter 145B), the vacuum cleaner 146, and the mobile phone terminal 87. In addition, 57 in Fig. 19 denotes a presence management menu selection key, which will be subsequently described in details with reference to Fig. 48.

When an icon indicating "registration" (not shown) is selected with the screen for healthcare being displayed by selecting the icon 417 shown in Fig. 14, Fig. 16, and Fig. 18, an icon (input key) 426 indicating "register new data" and an icon (input key) 425 for retrieving and displaying existing measurement data are displayed, as shown in Fig. 19.

When the icon 426 for new registration is selected, upon bringing, for example, the blood pressure monitor 410A close to the display panel 100 and pressing the transmission button on the blood pressure monitor 410A, the measurement data stored in the memory 216 of the blood pressure monitor 410A is transferred to the RAM 139 through the reception unit 129 of the healthcare processing unit 116, to be stored therein. As stated earlier, the measurement data of the healthcare instruments can be read by the healthcare processing unit 116 by any of infrared ray communication, a USB memory, and wireless communication as shown in Fig. 19. Though not shown, a connection port for inserting the USB memory is provided on the front face or side face of the main body 9A of the power instruction apparatus 9.

Each time the measurement data is received from the healthcare instrument 410, the healthcare processing unit 116 transmits the entire data to the power instruction apparatus 9. When any of the measurement results is deviated from the normal range, the healthcare processing unit 116 adds a special code (hereinafter, "abnormal value code") to the data including the abnormal value (e.g., highest blood pressure), the subject, the date and time of measurement (see Fig. 13), and transmits the entirety of such data to the power instruction apparatus 9. Accordingly, "caution data" is kept from being erased and maintained in the memory. The abnormal value code is different for each type of the healthcare instruments 410, and a plurality of numbers of codes are prepared depending on the type of the healthcare instrument 410 such that, for example, different codes are respectively added to the highest blood pressure and the lowest blood pressure measured by the blood pressure monitor 410A.

The healthcare processing unit 116 transmits the measurement data and the abnormal value code to the system control unit 75E through the PC connection device 75M, and the measurement data and the abnormal value code are finally stored in the storage unit (high-capacity memory) 109 (see Fig. 5) of the TV receiver 75. The high-capacity memory has a storage capacity of scores of gigabytes so as to store the healthcare data of one year or more, when more than 10 pieces of measurement data are daily accumulated. The high-capacity memory also stores the recorded pictures with sounds received by the TV receiver 75, and the information from the TV receiver 75 and the information from the healthcare processing unit 116 are stored in separated memory regions, so that the data in each region can be independently updated or deleted. The high-capacity memory may be composed of two portions that can be physically separated from each other, so as to store the picture data from the TV receiver 75 in a first portion and the information from the healthcare processing unit 116 in a second portion. In this case, either of the first and second portions can be repaired or replaced without affecting the other, which facilitates the maintenance work.

Hereunder, the power control system of the home electric appliance EE including the induction heating cooker 2, the rice cooker 3, and so forth will be described. First, description will be given focusing on a system kitchen (kitchen sink) 1 used in the kitchen shown in Fig. 23.

The system kitchen (also called "kitchen sink" or "kitchen furniture") 1 includes five home electric appliances described below, installed in a casing 1 A constituting the outer shell of the system kitchen. The kitchen electric appliances are the induction heating cooker 2 having two (left and right) heaters (first heater 2L and second heater 2R), the rice cooker 3, a grill cooker (electric fish roaster) 4, a microwave oven with electric heater (hereinafter, "oven range") 5, and the dish washer-dryer 6. Here, "kitchen electric appliance" KP collectively represents the rice cooker 3, the grill cooker 4, and the oven range 5 provided in the kitchen. The rice cooker 3 may sometimes be referred to without the reference numeral. Although there are cases where the grill cooker 4 is independently provided, in Embodiment 1 the grill cooker 4 is integrally incorporated in the induction heating cooker 2, so as to constitute a heating unit in a composite induction heating cooker including the electric heater. Accordingly, when the main power supply circuit of the induction heating cooker 2 is disconnected the power supply to the grill cooker 4 is also disconnected at the same time. Hereunder, description of other kitchen electric appliances such as the refrigerator and the ventilation fan will be omitted.

Before proceeding to description of "time zone-classified electricity rate information" according to Embodiment 1 of the present invention, an actual example of the household electricity rate scheme will be described hereunder.

According to the household electricity rate scheme of Tokyo Electric Power Company as of June 1, 2012, the electricity unit rate is classified into two seasons and three time zones. Because of the difference in unit rate depending on the season and time zone, it is recommended to reduce the electricity charge by, for example, using the home electric appliance having high thermal efficiency in morning/evening hours, or shifting the use of the home electric appliance normally used in daytime to night hours or morning/evening hours.

Here, the seasonal rate is classified into "summer" and "other seasons", the former being July 1 to September 30 each year, and the latter being October 1 to June 30 of next year.

The "time zone rate" is classified into the following three time zones.
"Daytime hours": 10 a.m. to 5 p.m. each day. The electricity unit rate (tax included) per kWh is 33.37 yen for summer and 28.28 yen for the other seasons.
"Morning/evening hours": 7 a.m. to 10 a.m. and 5 p.m. to 11 p.m. each day. The electricity unit rate (tax included) per kWh is 23.13 yen.
"Night hours": 11 p.m. to 7 a.m. next morning. The electricity unit rate (tax included) per kWh is 9.17 yen.

Thus, it is understood that, in terms of the electricity unit rate, the night rate is the lowest, the morning/evening rate is the second lowest, and the daytime rate is the highest.

The "time zone-classified electricity rate information" herein referred to is such information of "time zone rate" scheme, an example of which is the electricity unit rate per kWh. Another example is the information that, for example, the night rate is the lowest, the morning/evening rate is the second lowest, and the daytime rate is the highest. Accordingly, for example in terms of the electricity rate scheme, the information that "the electricity rate is the lowest in a day during the night hours from 11 p.m. to 7 a.m. of the next morning" corresponds to the time zone-classified electricity rate information. It is not mandatory that the information provides specific values of the hourly electricity rate, and it suffices that the information allows the user to recognize whether the electricity rate of a certain time zone is higher or lower in comparison with a predetermined reference (for example, the daytime rate).

Regarding the induction heating cooker 2 referred to in Embodiment 1, although the user sets the power supply start time for the heating device, the user may not set the power supply finish time. Accordingly, in a strict sense the time zone may not be set. However, the induction heating cooker 2 according to Embodiment 1 is configured as follows:
(1) A maximum continuous heating time is automatically set to 60 minutes, so that the heating operation is automatically finished after 60 minutes unless a specific operation is performed during the cooking. Therefore, it can be construed that the time zone is set when the user sets the time of day for starting the heating.
(2) The cooking menu of the induction heating (e.g., "frying", "boiling", "stewing", and "water heating") includes, as experience shows, those that finish in 15 minutes to less than 30 minutes (e.g., "water heating") and those that last an hour or more, and the power consumption also varies depending on the menu. Therefore, the cooking menu that is presumed to require a power of 500 W or more and last 30 minutes or longer (hereinafter, "specific menu") is selected in advance, and the time zone-classified electricity rate information is displayed when the specific menu is about to be cooked.

A reason of the mentioned arrangement is that displaying the time zone-classified electricity rate information each time the cooking menu that finishes in a short time and requires only a small power is selected does not make much sense because actually the information is seldom utilized. Therefore, the mentioned arrangement simplifies the control program of the heating cooker, as well as the operation of the user. In Embodiment 1, "boiling", "stewing", and "rice cooking" are selected as specific menu, however the present invention is not limited to such a setting.

7 denotes the home-use air-conditioning apparatus which, though may be sometimes installed in the kitchen where the kitchen electric appliances KP are located, is assumed to be installed in another room (e.g., living room) in Embodiment 1. In addition, a plurality of air-conditioning apparatuses, instead of just one, may be respectively installed in a plurality of rooms, however the following description is based on the assumption that there is only one air-conditioning apparatus. In the air-conditioning apparatus, a power usage control device 8E of the power instruction apparatus 9 is incorporated. Accordingly, information about the power requirement, the cooking status of the cooking devices, and permitted power usage is exchanged with the power instruction apparatus 9, so that the power usage control device 8E controls the power of the air-conditioning apparatus 7 within a power usage permitted by the power instruction apparatus 9.

The air-conditioning apparatus 7, the dish washer-dryer 6, and a washing-drying machine (washing machine unified with clothes dryer) configured to blow air heated by an electric heater while forcibly rotating clothes thereby drying the clothes, or a clothes dryer (neither shown) are hereinafter referred to as "second home electric appliance". The cited appliances each include a motor that consumes electric energy, and are configured to be turned on and off independently from one another and receive power reduction instruction from the power instruction apparatus 9 as will be subsequently described. The "second home electric appliance" also includes such appliances that include a motor that consumes power and a heater that consumes electric energy to generate hot airflow. The electric clothes dryer and the washing-drying machine that also works as a washing machine are the examples and, for example, the washing-drying machine includes a basket-shaped air-permeable container (drum) in which washed but not dried clothes are placed, a motor that rotates the container, and an electric heater serving as the heat source of the hot air supplied to the container. Some dryers include and electric compressor to collect heat from ambient air and generate hot airflow by a heat pump method.

The kitchen electric appliances KP are connected to an AC 200 V power source EP via a single circuit breaker BK. The kitchen electric appliances 1 to 3 and 5 are configured to exchange infrared ray signals or wireless signals with the power instruction apparatus 9. Accordingly, information about the power requirement, the cooking status of the cooking devices, and permitted power usage is exchanged between the power instruction apparatus 9 and power usage control devices 8A, 8B, 8C, 8D of the kitchen electric appliances 1 to 3 and 5, respectively, so that the power usage control devices 8A to 8D respectively control the power of the kitchen electric appliances 1 to 3 and 5 within a power usage permitted by the power instruction apparatus 9.

Examples of the kitchen electric appliance KP also include devices having a rated maximum power of 1000 W or so, such as an oven toaster, a table-top hot plate, and a water boiler (electric thermos pot), which are however excluded from the drawings for the sake of simplicity of the description. In addition, the kitchen electric appliances 1 to 3 and 5 and the power instruction apparatus 9 may be connected to each other via a signal line that also serves as a power line, so as to perform power line transport communication for the control.

### (Induction Heating Cooker 2)

As shown in Fig. 24 and Fig. 25, the induction heating cooker 2 is what is known as a dual-heater built-in cooker including left and right induction heating units than independently work. An operation button 11 A of a main power switch 11, and power control dials 12L, 12R for the first heater 2L on the left and the second heater 2R on the right, respectively, are provided on an operation panel 13 on the right of the front face of the induction heating cooker 2. The user turns on the main power switch 11 and adjusts the power control dial 12L or 12R depending on the cooking menu. Thus, with the power control dials 12L, 12R the heating power of the first heater 2L and the second heater 2R can be independently controlled when performing the induction heating. Here, the rated power consumption (maximum power consumption) of the induction heating cooker 2 is 5800 W.

The first heater 2L and the second heater 2R are covered with a top plate 14 made of heat-resistant reinforced glass, and ring-shaped heating devices (induction heating coils 2LC, 2RC) serving as the heating source for the first heater 2L and the second heater 2R are installed in the space under the top plate.

2C denotes a box-shaped main body casing constituting the outer shell of a main body 2A of the induction heating cooker 2, and a frame-shaped metal frame 15 covers the perimeter of the top plate 14 and fixes the top plate 14 onto the upper face of the main body casing 2C.

Along the forward end portion of the upper face of the main body 2A, the following units are provided. A central display section 16 serving as a display device including an LCD substrate for displaying set values of cooking conditions, a warning, and abnormal condition; a left display panel 17L and a right display panel 17R each including an LCD substrate for displaying a heating power value and a heating power level (high, medium, and low) during the induction heating; a left display unit 18L for indicating a heating time and oil temperature during oil cooking with the first heater 2L in LCD letters or a plurality of LEDs (light emitting body); a right display unit 18R for indicating a heating time and oil temperature during oil cooking with the first heater 2L in the same way as the left display unit 18L; and an upper face operation section 26 for starting the heating operation.

The central display section 16, the left display panel 17L, the right display panel 17R, the left display unit 18L, and the right display unit 18R are located close to the lower face of the top plate 14.

The display on the central display section 16, the left display panel 17L, the right display panel 17R, the left display unit 18L, and the right display unit 18R is controlled by a display unit driver circuit 35 shown in Fig. 27.

Referring now to Fig. 27, the display unit driver circuit 35 will be described. Although Fig. 27 only includes the central display section 16 out of the display devices, the left display panel 17L, the right display panel 17R, the left display unit 18L, and the right display unit 18R are also controlled in the same way as the central display section 16.

In Embodiment 1, the central display section 16 is shared by all the heating sources and hence also called integrated display device. Here, the heating sources include the first heater 2L, the second heater 2R, and a plurality of electric radiation heaters, for example a heater 34H, provided inside the grill chamber 22 of the grill cooker 4.

A display screen 129 constituting the central display section 16 is a known dot matrix LCD screen, and is capable of displaying high-definition images (level of QVGA of 320x240 pixels or VGA of 640x480 dots capable of displaying 16 colors) and a multitude of characters. The LCD screen may have a single-layer structure, or a dual-layer structure that displays a larger amount of information. In addition, the LCD screen may be constituted of a super twisted nematic (STN) LCD driven by a simple matrix method.

In Embodiment 1, the display region of the display screen 129 is a rectangular region of approximately 40 mm (or 80 mm) in the vertical (front-back) direction and approximately 100 mm (or 120 mm) in the transverse direction.

In Fig. 27, 35 denotes a display unit driver circuit, connected to the controller 32.

The display unit driver circuit 35 includes a display memory 35A, a display controller 35B, an interface 35C, a power source 35D, a common driver 35E, and a segment driver 35F.

The display unit driver circuit 35 is activated by the power from the power source 35D, and acquires image data from a built-in memory (not shown) of the controller 32 through the interface 35C.

The display memory 35A stores the image data acquired from the controller 32.

The display controller 35B reads out the image data stored in the display memory 35A, and continuously drives the common driver 35E and the segment driver 35F according to the image data. The common driver 35E and the segment driver 35F apply a voltage to electrodes intersecting each other respectively corresponding to the pixels of the display screen 129, to thereby drive the liquid crystal. Thus, the display unit driver circuit 35 causes the image data stored in the display memory 35A to be displayed on the display screen 129 whenever necessary. The image data to be displayed and the driving current for light emission are also provided to the right display panel 17R, the left display panel 17L, the left display unit 18L, and the right display unit 18R.

A display of "unusable" PU in Fig. 31 to be subsequently referred to, which appears when an occupant other than the occupant registered in the power instruction apparatus 9 attempts to use the induction heating cooker 2, is stored in the display memory 35A. The controller 32 instructs, upon receipt of a predetermined signal from the power instruction apparatus 9, the display controller 35B to display the message PU on the display screen 129. In addition, when a help mode key 111 to be subsequently described is pressed, the display indicating in illustrations and letters how to view and operation method of the display screen 129, which appears all over the display screen 129, and a reduction display section 36C (see Fig. 35) indicating in letters that power reduction has been forcibly done, are displayed on the display screen 129 through the same process as the display PU indicating the message of "unusable".

Although the display unit driver circuit 35 is constituted of an exclusive microcomputer independent from the microcomputer constituting the controller 32, the display unit driver circuit 35 may be constituted of the same microcomputer.

### (Basic Operation of Induction Heating Cooker 2)

Hereunder, the induction heating operation performed by the induction heating cooker 2 according to Embodiment 1 will be described with reference to Fig. 28 to Fig. 30.

The flowchart of Fig. 28 represents the basic operation process of the induction heating cooker 2. Referring to Fig. 28, when the user touches the operation button 11 A of the main power switch 11, the power is turned on (ST1). Then the power is applied to the controller 32, which acquires temperature information from a temperature detection circuit 150 and performs self-check to confirm whether the temperature of essential parts of the cooker is not abnormally high (ST2).

In the case where abnormality is not detected, the controller 32 activates the display unit driver circuit 35 to operate, for example, the central display section 16, and displays in the central display section 16 a message indicating that cooking can be started because there is no abnormality, and outputs a voice message to the same effect by using a voice synthesizer 38 (ST3). When a specific caution information (e.g., highest blood pressure exceeding upper limit) is generated as healthcare information, an exclusive caution information light 430 shown in Fig. 25 is turned on as an alarm to the user, instead of utilizing other display devices such as the central display section 16. In Fig. 26, the caution information light 430 is not included.

The exclusive caution information light 430 is turned on as an alarm to the user each time the main power of the induction heating cooker 2 is turned on, within a predetermined period of time after the specific caution data is added to the healthcare information, in other words after the caution data is transferred from the healthcare processing unit 116 to the power instruction apparatus 9. Such an arrangement ensures that the subject is made aware of the caution data. For example, when the blood pressure was measured the day before and the highest blood pressure exceeded the upper limit, the exclusive caution information light 430 is lit up for seven days after the day of the measurement to notify the user that the caution data has been made, and such notification period may be extended or shortened by the user as desired. The caution information light 430 is composed of a press-button switch and a light source such as an LED that illuminates the switch button from below, and when the user further presses the button the content of the caution information is displayed in the central display section 16. The display may indicate, for example, that the highest blood pressure of the subject A exceeded 140 mmHg the day before yesterday and last night successively. Such a display is automatically erased in a predetermined time (e.g., 10 seconds), and the operation proceeds to ST4.

At ST4, the central display section 16 then displays letters urging the user to place a heating object N such as a metal pan on the first heater 2L or the second heater 2R whichever the user wishes to use.

At this point, the first information sign 210A showing letters of "object of power reduction" appears in the screen of the central display section 16, to indicate that the induction heating cooker 2 may receive a power reduction request signal to be subsequently described, during the operation.

When the user presses an on/off button 81 c in the left heater operation unit 81, the first heater 2L on the left is selected.

When the user presses an on/off button 82c on the right, the second heater 2R on the right is selected (ST6). Then the menu of the induction heating is to be selected (ST 7). For example, when a fry button 81 a is pressed the fry cooking is selected, and when a 3kW button 81 b is pressed, water heating can be performed with a maximum heating power of 3 kW.

When a start/stop button 83b in the central position is pressed, the grill cooker 4 is selected (ST5). In other words, the heating with electric radiation heat is selected. After selecting the heating with electric radiation heat, one of the roaster cooking, the grill cooking, and the oven cooking is selected (ST9A, ST9B, ST9C).

When the user rotates a power control dial 12L for the left heater provided on a lid 42 of the main body 2A, a signal representing the rotating operation is transmitted to the controller 32. The controller 32 controls the output of the inverter circuit 33L according to the rotation signal received, to thereby adjust the induction heating power of the induction heating coil 2LC of the first heater 2L being used. In this process, the controller 32 displays the intensity of the heating power, for example in numerals indicating the power value, on the left display panel 17L for the first heater 2L.

After the heating is finished, the user presses the on/off button 81 c again, to finish the induction heating operation. In the case of the heating operation with the electric radiation heat with the grill cooker 4, the start/stop button 83b is pressed to finish the operation.

When the user places the heating object N on the second heater 2R also, the induction heating can be equally performed by using the heating device (induction heating coil 2RC) provided in the main body casing 2C at the position under the second heater 2R. In this case, the operation of the on/off button 82c and the power control dial 12R by the user, and the display on the left display panel 17L are the same as the operation of the on/off button 81 c and the power control dial 12L, and the display on the left display panel 17L for the first heater 2L.

The flowchart of Fig. 29 shows a basic process of the induction heater cooking. In Fig. 29, ST 7 represents the step of selecting the induction heating menu as described with reference to Fig. 28.

In the induction heater cooking, first the heat cooking menu is selected. The heat cooking menu includes, for example, "frying", "boiling", "stewing", and "water heating" as cited above. When the cooking menu is selected, predetermined activation information is transmitted to the power instruction apparatus 9 to be subsequently described, so that the power instruction apparatus 9 recognizes that the induction heater cooking is about to be started with the induction heating cooker 2 (ST10). Then the induction heating cooker 2 acquires the time zone-classified electricity rate information from the power instruction apparatus 9 (ST11), and stores the information in the internal memory. Since the time zone-classified electricity rate is not frequently revised, the information may be acquired every several days so as to utilize the information stored in the built-in memory for the several days.

The induction heating cooker 2 then displays the time zone-classified electricity rate information on the screen of the central display section 16, and outputs a voice message indicating the operation method to follow, through the voice synthesizer 38 to be subsequently described. In the case where the time to use the heating cooker is unchanged, the message urges the user to press a start key 212 to be subsequently described (ST12).

In the case where the time zone of use of the induction heating cooker 2 is unchanged, it is decided whether the setting has been cancelled (ST15), and in the case where cancelling has not been inputted the induction heating is started (ST16). In the case where the time zone of use has been changed, information of the new time zone of use is transmitted to the power instruction apparatus 9 (ST14). Then the electricity rate information corresponding to the changed time zone of use is displayed on the screen of the central display section 16. At ST10, a predetermined standard time, for example 45 minutes for "boiling", is transmitted to the power instruction apparatus 9, however when the user inputs both of the start time and finish time of use and sets a specific time zone (e.g., 30 minutes), the information of the scheduled time zone of use is transmitted to the power instruction apparatus 9 at ST14 described above.

The flowchart of Fig. 30 also shows the basic process of the induction heater cooking. In Fig. 30, ST20 represents a first step of selecting the induction heating menu, which is the same as ST 7 described with reference to Fig. 28. As described above, when a specific menu such as "boiling" or "stewing" is selected, the time zone-classified electricity rate information is displayed on the screen of the central display section 16 (ST22). Then the start time and finish time of the heating is set (ST23), the heating power and temperature are set if necessary (ST24), the time zone-classified electricity rate information corresponding to the time zone of use is finally confirmed (ST25), and the start key 212 is pressed provided that the electricity rate is acceptable, so as to start the induction heating (ST26).

When the non-specific menu is cooked as shown in the flowchart of Fig. 30, the time zone-classified electricity rate information is not displayed. In the case where the heating power and temperature have to be specified such data is inputted (ST28), and when the start key 212 is pressed the inputted cooking condition is confirmed and the induction heating is started (ST29). Here, the finish time of the induction heating may be reserved before the induction heating is started. Such a method is generally known as timer cooking, in which the timer is set (e.g., 15 minutes) before starting the cooking, so that 15 minutes are subtracted from the time point that the induction heating is started, and the induction heating is automatically finished when 15 minutes elapses.

Fig. 31 to Fig. 37 illustrate display examples of the display screen 129.

When the operation button 11 A of the main power switch is pressed, the screen shown in Fig. 31 is displayed first. As illustrated, a left induction heating selection key 128N1 L, a right induction heating selection key 128N1 R, a grill cooking selection key 128N2, and an oven cooking selection key 128N3 are displayed at a time (in the list form) for selection of the cooking menu that uses the induction heater and the grill chamber 22. The oven cooking refers to raising the ambient temperature in the grill chamber 22 to a predetermined temperature to cook food, for example baking a cake. Then when the left induction heating selection key 128N1 R is pressed the menu screen for the induction heating is displayed, and when the grill cooking selection key 128N2 is pressed the display is switched to the menu screen for the grill cooking. Here, instead of the left induction heating selection key 128N1 R, the fry button 81 a or the 3kW button 81 b in the left heater operation unit 81 may be pressed.

In Fig. 31, the four keys 128N1 (L, R) and 128N2, N3 are touch keys that incur fluctuation of static capacitance upon being touched by the user, and when the user lightly touches the upper surface of the glass top plate 14 covering the upper face of the display screen 129 at the position corresponding to the selected key, an effective signal to be inputted to the controller 32 is generated. These keys are different from the icons 411 to 413 shown in Fig. 10. Hereafter, when the both keys 128N1 L and 128N1 R are referred to, the numeral 128N1 will be employed.

To be more detailed, no display indicating the input function of the keys is provided, neither in letters nor in illustrations printed or carved, on the surface of the top plate 14 on which the regions (sections) corresponding to the respective input keys 128N1 to 128N3 are defined. However, the letters and figures representing the input function of the keys are displayed on the display screen 129 located under the mentioned keys in each occasion that one of those keys is to be operated, so that when the display screen 129 is touched the key located at the touched position is selected.

36A denotes a menu selection display section, and 36B denotes a display section for urging the user in letters to select the menu. The menu selection display section 36A and the display section 36B do not possess the input key function and hence no input is made to the controller 32 by touching these display sections.

111 denotes a help mode key. When the user touches the key 111, information that assists the user's operation is displayed, and the correct operation method is audibly announced through the voice synthesizer 38 (see Fig. 26) separately provided. When the key 111 is pressed a plurality of times, the information of how to view the display screen 129 and the operation method is displayed all over the display screen 129 in illustrations and letters. 112 denotes an information key. Each time the key 112 is touched the information of the heating object N being used and the cooking method, and suggestion for better cooking are displayed in details in letters on the display screen 129. 36C shown in Fig. 35 denotes a reduction display section for displaying a message in letters that the power reduction has been forcibly done, on the display screen 129.

In Fig. 31, 210A denotes the first information sign indicating that the induction heating cooker 2 may receive a power reduction request signal to be subsequently described, during the operation. In Fig. 31 the message of "object of power reduction" is displayed in the display screen 129 in white letters on colored background in a rectangular frame, which appears immediately after the non-specific menu, for example "water heating", is selected, and not displayed until "water heating" is selected. In the case where actually the power is reduced while performing "water heating", a third information sign 210C to be subsequently described is displayed as "power reduced". In either case, the user can recognize, in view of the first information sign 210A, that the power to the induction heating cooker may be forcibly reduced.

In Fig. 31, PU denotes the information sign of "unusable" which appears first when an occupant other than the occupant registered as "exclusive user" to be subsequently described in the power instruction apparatus 9 attempts to use the induction heating cooker 2. This display appears at ST2 where the display device such as the display screen 129 shown in Fig. 28 is activated. When such use restriction display associated with "exclusive user" appears, the process shown in Fig. 28 does not proceed any further. In other words, when the use restriction display appears an input by any of the four keys 128N1 (L, R) and 128N2, N3 shown on the display screen 129 is invalid (controller 32 does not recognize an input signal) despite the user pressing the keys. However, in the case where the user wishes to obtain the permission to use the induction heating cooker 2 from the exclusive user (occupant B), as exemplified by the occupant C referred to in the description of the operation process shown in Fig. 64 to be subsequently described, a "permission request key" (not shown) for selecting whether to ask for the permission may be displayed on the display screen 129. When the occupant other than the exclusive user operates the non-illustrated "permission request key", a specific signal is transmitted from the induction heating cooker 2 to the power instruction apparatus 9, and inquiry information is transmitted from the power instruction apparatus 9 to the external wide area communication network 98 to which the mobile phone terminal 87 is connected.

Fig. 32 illustrates the display screen 129 that appears immediately before "water heating" is started by the induction heating cooker 2. 210B denotes a second information sign indicating that a predetermined power reduction request signal is being received from outside while the water heating is in process. In Fig. 32, the first information sign 210A shown in the display screen 129 as illustrated in Fig. 31 is erased, and instead the second information sign 210B notifying as "power reduction request received" in white letters on colored background is displayed at the same position.

In Fig. 32, 211 R denotes an input key formed on the glass top plate 14 covering the upper face of the display screen 129. When the key 211 R is pressed the display returns to the state of the display screen 129 shown in Fig. 31. 211 N also denotes an input key, a touch of which advances the display to the state shown in Fig. 33.

In Fig. 33, 212 denotes an input key (also "start key") formed on the glass top plate 14 covering the upper face of the display screen 129. When the input key 212 is pressed the induction heater cooking with the first heater 2L is started. Fig. 34 illustrates a display that appears on the display screen 129 after the water heating is started. 213 denotes an input key for stopping (the water heating).

The input keys 211 R, 211 N, 212, and 213 are touch keys that incur fluctuation of static capacitance upon being touched by the user, and when the user lightly touches the upper surface of the glass top plate 14 covering the upper face of the display screen 129 at the position corresponding to the selected key, an effective signal to be inputted to the controller 32 is generated. To be more detailed, no display indicating the input function of the keys is provided, neither in letters nor in illustrations printed or carved, on the surface of the top plate 14 on which the regions (sections) corresponding to the respective input keys 211 R, 211 N, 212, and 213 are defined. However, the letters and figures representing the input function of the keys are displayed on the display screen 129 located under the mentioned keys in each occasion that one of those keys is to be operated, so that when the display screen 129 is touched the key located at the touched position is selected.

In Fig. 35, 210C denotes the third information sign indicating that actually the power to the induction heating cooker 2 has been reduced after receipt of the predetermined power reduction request signal from outside, while the induction heater cooking menu of "water heating" is in process with the induction heating cooker 2. In Fig. 35, the first information sign 210A (see Fig. 31) or the second information sign 210B (see Fig. 32, Fig. 33) displayed in the display screen 129 is erased, and instead the message of "power reduced" is displayed in white letters on colored background at the same position.

In Fig. 36, 210D denotes a fourth information sign indicating that the power reduction is not applied, which is displayed as "priority use" in white letters on colored background, at the same position as the first information sign 210A instead thereof. The user can recognize, in view of the fourth information sign 210D, that the power for the heat cooking with the induction heating cooker is maintained, without being forcibly reduced. A "priority cooking menu time zone" is specified in the induction heating cooker to perform a heating process with priority as will be subsequently described priority, and therefore when the cooking is performed within the mentioned time zone, the fourth information sign 210D of "priority use" appears on the right in the display screen 129. Fig. 36 shows the case where the cooking menu of "boiling" is being performed.

In Fig. 32 to Fig. 34, 128A2 denotes a key for selecting "water heating" displayed in the display screen 129, 128A3 denotes a key for selecting "boiling", 128B1 denotes a key for selecting "preheating", 128B3 denotes a key for selecting "stewing", and 128C2 denotes a key for selecting "frying". These five keys are touch keys that incur fluctuation of static capacitance upon being touched by the user, and when the user lightly touches the upper surface of the glass top plate 14 covering the upper face of the display screen 129 at the position corresponding to the selected key, an effective signal to be inputted to the controller 32 is generated. In other words, the five keys 128A2, 128A3, 128B1, 128B3, and 128C2 each include an input electrode, which is a transparent electrode bonded or vapor-deposited to the lower surface of the top plate 14, at the position corresponding to the letters indicating the input function of the key, such as "water heating", in the display screen 129. In the case where the input function of the key such as "water heating" is not displayed at the predetermined position on the display screen 129 corresponding to the key, the input function of the key is invalid and hence the input is unable to be made even though the user touches that position. Although the input keys 128A2 and 128A3 of the selected cooking menu remain displayed as shown in Fig. 35 and Fig. 36 even after the heating operation is started, the display screen is controlled by the controller 32 so as not to shift to a different screen despite the key being touched again.

Referring now to Fig. 36 to Fig. 38, display examples of the time zone-classified electricity rate information and the time zone information of the induction heating cooker will be described.

In Fig. 36, 215 denotes a time display section indicating the heating start time that appears on the display screen 129 of the central display section 16 when boil cooking menu is selected. The display section 215 shows the current time of day read out by the controller 32 from a clock circuit 240 to be subsequently described. 216 denotes a time display section indicating the time that the boil cooking is to be started, which displays the current time of day unless the user sets a different time. This time of day is also displayed in the display screen 129 by the controller 32 according to the information from the clock circuit 240 to be subsequently described. 217 denotes an information display section for displaying the classification of the time zone-classified electricity rate. The example shown in Fig. 36 displays two columns, which are a display section 218M indicating the time zone up to 23:00 to which a medium electricity rate is applied, and a display section 218L indicating the time zone after 23:00 to which a lower electricity rate is applied.

A triangular mark 219 indicates which of the electricity rate classification is applied if the heating is started right now. In view of the example shown in Fig. 36, it can be intuitively understood that, since the current time is 22:50, which is close to "night hours" from 23:00 but still earlier, the electricity rate per kWh is relatively high (23.13 yen tax included), however after 23:00 the rate of "morning/evening hours" is applied and the electricity rate per kWh is reduced to 9.17 yen (tax included). Here, the electricity rate per kWh itself may be displayed, however misunderstanding may be incurred unless the actual power usage is strictly accurate. In Embodiment 1, therefore, the rate is displayed in three levels, namely "high", "medium", and "low".

In Fig. 36, 211 R denotes a back key to be touched to return to the previous display screen, 230 denotes a shift key to delay (shift to a later time) the heating time by one minute, and 231 denotes a shift key to delay (shift to a later time) the heating time by 30 minutes.

Those two keys are also electrostatic touch keys formed on the glass top plate 14 covering the display screen 129. The letters indicating the function of the key ("shift one minute", "shift 30 minute") are displayed on the display screen. To revise the heating start time from 22:50 to 23:00 in the screen of Fig. 36, the time shift key 230 is touched 10 times. Then upon touching the input key 211 N the display is shifted to the state shown in Fig. 37, and upon touching the start key 212 the cooking conditions are confirmed and the heating operation is started. To return to the screen of Fig. 36, the input key 211 R is touched.

Back to Fig. 24, an intake port 20 for introducing air into the grill chamber 22 of the grill cooker 4 to be subsequently described, and an exhaust port 21 for discharging the smoke generated from the cooking object in the grill chamber 22 are provided in the rear portion of the upper face of the main body 2A. Through the intake port 20 the air in the room is introduced into the inner space of the main body 2A by a fan (not shown), and a part of the introduced air is used for cooling the induction heating coils 2LC, 2RC, and such air is discharged to outside through the exhaust port 21 after being used for cooling. In addition, as shown in Fig. 25, the controller 32 that controls the overall operation of the induction heating cooker 2 is provided inside the main body 2A.

### (Configuration of Grill Cooker 4)

Referring to Fig. 24 and Fig. 25, the configuration of the grill cooker 4 will be described hereunder.

The grill cooker 4 is mounted inside the main body 2A of the induction heating cooker 2, in a left lower region thereof. The grill cooker 4 at least includes a grill lid 28 openably attached to the left region of the front face of the main body 2A, the grill chamber 22 which is a cooking space having the front opening openably covered with the grill lid 28, a receiving tray 23 placed on the bottom portion of the grill chamber 22, and a gridiron 24 placed on the receiving tray 23 for a cooking object 25 such as fish to be placed thereon. The grill lid 28 includes a handle 28A to be held by the user to open and close the grill lid.

In addition, an exhaust duct (not shown) communicating between the grill chamber 22 and the exhaust port 21 is connected to the rear portion of the grill chamber 22, to discharge the air introduced through the intake port 20, from the grill chamber 22 through the exhaust port 21 together with the smoke generated from the cooking object 25.

### (Configuration of Upper Face Operation Unit 26)

Hereunder, the configuration of the upper face operation unit 26 will be described with reference to Fig. 25.

In a plan view of the induction heating cooker 2 shown in Fig. 25, the upper face operation unit 26 has an elongate strip shape transversely extending along the front edge of the upper face of the induction heating cooker 2. The upper face operation unit 26 extends closely along the inner edge of the frame-shaped metal frame 15, at a position forward of the front edge of the top plate 14.

The upper face operation unit 26 includes, from the left, a left heater operation unit 81 for operating the first heater 2L on the left, a grill chamber operation unit 83 for operating the grill heating, and a right heater operation unit 82 for operating the second heater 2R on the right. In addition, a pair of caution information lights 430 are provided on the upper face operation unit 26.

The left heater operation unit 81 includes the fry button 81 a, the 3kW button 81 b, and the on/off button 81 c. The right heater operation unit 82 includes the fry button 82a, the 3kW button 82b, and the on/off button 82c. The grill chamber operation unit 83 includes a grill menu button 83a, a start/stop button 83b, a left arrow button 83c, a right arrow button 83d, a time-down button 83e, and a time-up button 83f.

The start/stop button 83b includes a start/stop button LED 84. An arrow button LED 85 is provided between the left arrow button 83c and the right arrow button 83d. A time button LED 86 is provided between the time-down button 83e and the time-up button 83f.

Details of the function of the cited buttons and the LEDs will be subsequently described.

The types and layout of the button provided on the upper face operation unit 26 shown in Fig. 25 are merely exemplary, and different configurations may be adopted.

### (Control Unit of Induction Heating Cooker 2)

In Fig. 26, 27 denotes the power supply line connected to the commercial power source EP of 200 V via the circuit breaker BK, 11 denotes a main power switch to be turned on and off by the user, 31 denotes a power supply circuit to which electric energy is supplied through the main power switch, and 32 denotes the controller essentially constituted of a microcomputer to which a predetermined constant-voltage current is supplied from the power supply circuit. The microcomputer is constituted of four components, namely an input terminal, an output terminal, a storage unit, and a central processing unit (CPU), and a power supply control program designed for various cooking menus is stored in advance in the storage unit.

33L denotes an inverter circuit for supplying a high-frequency current to the left induction heating coil 2LC. The induction heating coil 2LC is included in a known resonance circuit in which a resonance capacitor is provided.

33R denotes an inverter circuit for supplying a high-frequency current to the right heating device (induction heating coil 2RC). The heating device (induction heating coil 2RC) is included in a known resonance circuit in which a resonance capacitor is provided.

The two inverter circuits 33L, 33R are controlled by the controller 32 independently from each other.

34 denotes a driver circuit for driving a plurality of electric radiation heaters provided inside the grill chamber 22 of the grill cooker 4, for example the heaters 34H. The heaters 34H are horizontally mounted inside the grill chamber 22 at a position close to the ceiling and close to the bottom face respectively, so as to heat the gridiron 24 from above and from below.

37 denotes a catalyst heater that heats a catalyst (not shown) located at the inlet or halfway of the exhaust duct (not shown) provided between the grill chamber 22 and the exhaust port 21, to thereby promote the removal of the smoke generated from the grill chamber 22. By heating the catalyst (not shown), oxidation and reduction are promoted.

38 denotes the voice synthesizer that synthesizes voices electronically generated and outputs voice messages, such as an operation guidance and notice of abnormality, to the user through a speaker 39.

150 denotes a temperature detection circuit. The temperature detection circuit receives detection information of the temperature of the heating object N placed on the top plate 14 to be heated by the induction heating coil 2LC or 2RC, the temperature of the top plate 14 itself, and the ambient temperature inside the grill chamber 22 from a plurality of temperature sensors (not shown), and transmits the temperature detection result to the controller 32. The temperature sensors (not shown) may be of a non-contact type such as an infrared ray sensor or a contact type such as a thermistor, and may be used independently or in a combination.

41 denotes a steam generator for supplying high-temperature steam into the grill chamber 22, so as to perform steam cooking inside the grill chamber 22 with the high-temperature steam. 42 denotes a front operation unit provided on the operation panel 13 and including the operation button 11A of the main power switch 11 and the pair of power control dials 12L and 12R.

240 denotes a clock circuit, also called real-time clock, driven by a power source (built-in battery) in the controller 32. The clock circuit, which may be a radio-wave clock for example, serves to tell the current time of day in the unit of second to the controller 32 whenever requested, and is set to the correct date and time in the manufacturing process of the induction heating cooker. Therefore, even though the main power of the induction heating cooker 2 is once turned off and again turned on, the time-of-day information of the clock circuit is not thereby affected, and the latest correct time of day can be constantly provided to the controller 32.

241 denotes a vibration sensor for detecting vibration generated upon occurrence of earthquake, which transmits a vibration detection signal to the controller 32 once seismic intensity (acceleration) higher than a predetermined level is detected. The controller 32 decides that earthquake has occurred upon receipt of the signal, and instantly cuts off the power supply to all of the heating devices currently in use. Such emergency cut-off information is immediately transmitted also to the power instruction apparatus 9 to be subsequently described, so that in the case where any of other home electric appliances (in particular those having an electric heat source) is in use, the power instruction apparatus 9 performs the emergency cut-off of the power supply to such electric appliance at a time.

Hereunder, oil cooking performed with the induction heating cooker 2 shown in Fig. 24 and Fig. 25 will be described. The oil cooking refers to the fry cooking of tempura, for example. The fry cooking is not included in the specific cooking menu.

The user places a frying pan loaded with cooking oil on the first heater 2L. When the user presses the on/off button 81 c provided in the upper face operation unit 26, the heating operation for the frying pan is started in the same way as the induction heating described above. Then the user presses the fry button 81 a a predetermined times to thereby input the amount of the oil in the frying pan to the controller 32 and stores therein the oil amount. The user then rotates the left power control dial 12L so as to set desired oil temperature. In this process, the oil amount and the oil temperature that have been set may be displayed, for example, in numerals in the left display unit 18L. When the user presses the on/off button 81 c again, the oil cooking can be finished. As stated above, in the fry cooking the heating power is controlled by the controller 32 such that the oil temperature is automatically increased to the target temperature, which is defined as "automatic frying" in the cooking menu. The frying can be performed while manually controlling the heating power, which is defined as "manual frying". In the description given below, the fry cooking will refer to "automatic frying", unless otherwise noted.

When the user places the frying pan on the second heater 2R on the right also, the induction heating of the frying pan can be equally performed. In other words, the operation of the on/off button 82c, the fry button 82a, and the right power control dial 12R by the user, as well as the display content of the right display unit 18R, are the same as the operation of the on/off button 81 c, the fry button 81 a, and the left power control dial 12L, and the display content of the left display unit 18L.

Here, at the time that the fry cooking is started, the first information sign 210A indicating the letters of "object of power reduction" is displayed in the screen of the central display section 16.

The power supply control pattern for the fry cooking will now be described hereunder. Although the description will be given with respect to the first heater 2L, the same control pattern can be applied to the second heater 2R on the right.

When the user selects the (automatic) fry cooking in the cooking menu, the controller 32 sequentially performs a preheating phase, a frying phase, and a power increasing phase as shown in Fig. 50. The fourth information sign 210D showing the letters of "priority use" appears in the screen of the central display section 16. Accordingly, the user can recognize that the power for the fry cooking is secured with priority, despite receiving a power reduction request signal to be subsequently described.

In the preheating phase, when the target oil temperature set by the user is 180 degrees Celsius, the inverter circuit 33L starts to be driven by a predetermined heating power (maximum 1500 W) so as to rapidly increase the oil temperature from the room temperature (e.g., 20 degrees Celsius), up to the target temperature T1 which is 180 degrees Celsius.

The temperature increase is being monitored on a real-time basis by the temperature detection circuit 150, and therefore when the temperature detection circuit 150 detects that the target temperature T1 (first temperature) of 180 degrees Celsius has been reached, the controller 32 adjusts the induction heating amount, in other words the inverter output so as to maintain the target temperature. The automatic control of the high-frequency heating power based on the temperature detection information, so as to bring the temperature close to the target temperature, will hereinafter be referred to as "temperature feedback control".

When the process of "temperature feedback control" is entered, the first information sign 210A of "object of power reduction" is erased in the screen of the central display section 16, and instead the fourth information sign 210D indicating the letters of "priority use" is displayed. Therefore, the user can easily recognize, in view of the display screen 129, that the power for "frying phase" which is the essential part of the fry cooking is secured with priority even though the power reduction request signal to be subsequently described is received.

In addition, the voice synthesizer 38 outputs a voice message to the user, for example saying "Target oil temperature has been reached. Please put in the materials".

When the user puts the material in the oil, for example a croquette that has been frozen, the oil is quickly cooled by the cold material, and therefore the temperature sharply drops as shown in Fig. 50. However, since the temperature detection circuit 150 is monitoring the fluctuation of the oil temperature, the heating power of the inverter circuit 33L is immediately increased to the predetermined heating power of 1500 W or 1800 W, and therefore the oil temperature is again increased (temperature feedback control). Immediately after the oil temperature thus reaches the target temperature T1 again (or when a predetermined time has elapsed), the cooking proceeds from the frying phase to the power increasing phase.

In the power increasing phase shown in Fig. 50, the controller 32 controls the inverter circuit 33L so as to maintain the oil temperature between a second temperature T2 of 225 degrees Celsius which is higher than the target temperature T1 and a still higher upper limit temperature (third temperature) T3 of 230 degrees Celsius. As shown in Fig. 50, the heating power of approximately 900 W is intermittently supplied. The process that follows the point where the third temperature T3 is reached is called "fry finishing phase", which is an important phase for obtaining a crispy finish of the fried food. The food may fail to be finished as desired if a sufficient heating power is applied in the power increasing phase. The duration of the frying phase is not specifically limited in the cooking program, and therefore the entire process of the fry cooking is finished when the user presses the on/off button 81 c.

As shown in Fig. 50, in the cooking menu of the (automatic) fry cooking the period including the frying phase and the power increasing phase is defined as "priority cooking menu time zone", during which the power is restricted from being reduced by an operation or command from outside. In other words, the controller 32 of the induction heating cooker 2 constantly recognizes whether the cooking menu in process is in "priority cooking menu time zone", and when the cooking process is in this time zone the controller 32 notifies to this effect to outside. In addition, the third information sign 210C indicating "priority use" continues to be displayed in the screen of the central display section 16, and therefore the user can recognize that the controller 32 automatically works for securing the power with priority.

The water heating operation will now be described. The "water heating" menu is not included in the specific cooking menu either.

The user places the heating object N such as a pan or a kettle loaded with water on the first heater (left heater) 2L. When the user presses the on/off button 81 c provided in the upper face operation unit 26, the heating operation is started in the same way as the induction heating described above. Then the user presses the 3kW button 81 b a predetermined times to thereby input the heating time. In this process, the heating time that has been set may be displayed, for example, in the left display unit 18L. The heating operation is automatically finished when the heating time set as above has elapsed after the heating operation is started.

When the user places the heating object N such as the pan or kettle loaded with water on the second heater 2R on the right also, the induction heating of the frying pan can be equally performed. In other words, the operation of the on/off button 82c, the 3kW button 82b, as well as the display content of the right display unit 18R, are the same as the operation of the on/off button 81 c, the 3kW button 81 b, and the display content of the left display unit 18L.

### (Heating Operation with Grill Cooker 4 of Induction Heating Cooker 2)

Still referring to Fig. 24 to Fig. 26, the heating operation in the grill chamber 22 of the induction heating cooker 2 according to Embodiment 1 will be described.

First the user holds the handle 28A of the grill lid 28 and pulls it toward him/herself, thus to draw out the receiving tray 23 and the gridiron 24 from the grill chamber 22. Then the user places the cooking object 25 such as fish on the gridiron 24 which has been drawn out. The user again holds the handle 28A and pushes the grill lid 28 forward into the grill chamber 22 of the main body 2A, thereby introducing the receiving tray 23 and the gridiron 24 into the grill chamber 22, and closes the grill lid 28. The user then presses the grill menu button 83a located in the upper face operation unit 26 a predetermined times, to select one of the grill menus of "whole grilling", "grilling", and "oven cooking".

Hereunder, the grill heating operation performed when the user selects the grill menu of "whole grilling" will be described.

The user presses the left arrow button 83c and the right arrow button 83d a predetermined times to thereby set a browning degree of the cooking object 25. The signal representing the browning degree setting is transmitted to the controller 32, which displays the browning degree which has been set, in the central display section 16 according to the setting signal. When the user presses the start/stop button 83b, the grill heating operation for "whole grilling" is started. To be more detailed, the press-down signal of the start/stop button 83b is transmitted to the controller 32 and, upon receipt of the press-down signal the controller 32 calculates the cooking time for the cooking object 25, on the basis of the browning degree setting signal received earlier. Then the controller 32 causes the heater driver circuit 34 (see Fig. 26) to supply power to the heaters 34H provided inside the grill chamber 22, so as to heat the cooking object 25 until the browning degree set as above is obtained. When the calculated cooking has elapsed after the heating operation is started, the controller 32 finishes the heating operation.

The grill heating operation performed when the user selects the grill menu of "grilling" will be described.

The user presses the left arrow button 83c and the right arrow button 83d a predetermined times to thereby set the heating power to be employed in the heating operation of the cooking object 25. The signal representing the heating power setting is transmitted to the controller 32, which displays the heating power which has been set, in the central display section 16.

The user presses the time-down button 83e and the time-up button 83f a predetermined times to thereby set a heating time for the cooking object 25. The signal representing the heating time setting is transmitted to the controller 32, which displays the heating time which has been set, in the central display section 16 according to the setting signal. When the user presses the start/stop button 83b, the grill heating operation for "grilling" is started. To be more detailed, the press-down signal of the start/stop button 83b is transmitted to the controller 32 and, upon receipt of the press-down signal the controller 32 causes the heater driver circuit 34 to supply power to the heaters 34H provided inside the grill chamber 22, so as to heat the cooking object 25. When the heating time set as above has elapsed after the heating operation is started, the controller 32 finishes the heating operation.

The grill heating operation performed when the user selects the grill menu of "oven cooking" will be described.

The user presses the left arrow button 83c and the right arrow button 83d a predetermined times to thereby set the heating temperature in the heating operation of the cooking object 25. The signal representing the heating temperature setting is transmitted to the controller 32, which displays the heating temperature which has been set, in the central display section 16.

The user presses the time-down button 83e and the time-up button 83f a predetermined times to thereby set a heating time for the cooking object 25. The signal representing the heating time setting is transmitted to the controller 32, which displays the heating time which has been set, in the central display section 16 according to the setting signal. When the user presses the start/stop button 83b, the grill heating operation for "oven cooking" is started. To be more detailed, the press-down signal of the start/stop button 83b is transmitted to the controller 32 and, upon receipt of the press-down signal the controller 32 causes the heater driver circuit 34 to supply power to the heaters 34H provided inside the grill chamber 22, so as to heat the cooking object 25 at the heating temperature set as above. When the heating time set as above has elapsed after the heating operation is started, the controller 32 finishes the heating operation. In the grill menu of "oven cooking", the controller 32 automatically controls the heating power of the heater 34H such that the ambient temperature inside the grill chamber 22 matches the heating temperature set by the user (temperature feedback control).

### (Configuration of Rice Cooker 3)

The rice cooker 3 according to Embodiment 1 includes, as shown in Fig. 22, Fig. 23, Fig. 39, Fig. 40, Fig. 41, and Fig. 42, a box-shaped main body casing 41, a lid 42, and a steam processor 50. An operation unit 43 to be operated by the user is provided on the surface of the main body casing 41, more accurately on the upper surface of the lid 42, and the operation unit includes a rice cooking start button 44. As widely known, when the rice cooking start button 44 is pressed the rice cooking is automatically started, and the rice is subjected to a water absorption phase and then quickly cooked through a boiling phase. After the rice cooking is finished the rice is kept warm by a keep-warm heater (not shown) so as to maintain a predetermined temperature (e.g., 70 degrees Celsius) for a predetermined time (e.g., 7 hours). The rice cooker 3 can be carried by the user to a desired place, and is hence usable in a location other than the system kitchen 1.

The main body casing 41 of the rice cooker 3 has a rectangular shape longer than wide or a square shape, in a plan view. The main body casing 41 includes an inner pot 40 made of a magnetic metal and having a circular shape in a plan view with an opening oriented upward, the lid 42 supported by a hinge mechanism at the rear edge of the main body casing 41 so as to open and close the upper opening of the inner pot, and a heating device 45 for heating the inner pot 40. The heating device is based on the induction heating method, and includes an induction heating coil that serves as the actual heating body, which is composed of a multitude of fine copper wires of scores of microns in diameter, bundled and twisted and then formed in a disk (or annular) shape. The heating coil is provided over a broad area of the outer bottom face of the inner pot 40, in close contact with or with a fine gap from the outer bottom face.

A circular inner lid 46 made of a highly heat-conductive metal is removably attached to the inner face of the lid 42, the inner lid 46 having an annular seal material made of rubber for preventing leakage of steam through between the lid 42 and the upper edge of the inner pot 40 when the lid 42 is closed. The inner lid 46 includes a steam port 47 for discharging the steam generated in the inner pot 40 to outside.

An LCD unit 49 (see Fig. 40 to Fig. 42) is fitted in the lid 42 and exposed in the upper surface thereof. The display screen of the LCD unit is configured to display letters, symbols, and illustrations, so as to enable visual recognition of condition setting information specified before starting the rice cooking and information of the rice cooking process being performed. In addition, incidental information indicating the operation status of the heating device 45 and useful suggestions regarding the rice cooking (including information for pointing out abnormal use and notifying irregularity in operation) is also displayed in the screen of the LCD unit 49 as the case may be.

In Fig. 40, 54A denotes a sixth information sign for indicating that a "high heat" phase to be subsequently described in "rice cooking process" is being performed, in which letters of "boiling in process" is displayed. 54C denotes a seventh information sign for indicating, like the fourth information sign 210D, that the process for which the power has to be secured with priority (cooking with high heat) is being performed, since an abrupt power reduction is undesirable. Further, a fifth information sign 54B (not shown) for indicating, like the first information sign 210A of the induction heating cooker 2, that the power supply may be reduced, and an eighth information sign 54D (not shown) for indicating, like the third information sign 210C, that the power has been reduced, may also be displayed in the LCD unit 49.

43 denotes the operation unit of the rice cooker as shown in Fig. 40, which includes: a "rice cooking start button" 44 for starting the rice cooking and confirming reservation; a "keep-warm key" 55B for starting the keep-warm mode in which the cooked rice is kept warm at a predetermined temperature; a "menu key" 55C for selecting one of rice cooking menus, for example ordinary rice, porridge, and mixed rice; a "rice type key" 55D for inputting the type of the rice to be cooked, for example whether polished rice or unpolished rice; a "voice navigation key" 55E for notifying the status of the rice cooker 3 and the next step to be followed, controlling the volume of the voice message, and turning on and off the voice mode; a "reservation key" 55F for setting details of rice-cooking reservation; a "stop/cancel key" 55G for suspending or cancelling input operations and modes; and a "cooking mode key" 55H for selecting one of "normal finish" and "hard finish" by the ordinary cooking, and "porridge" different from the ordinary cooking. The cited keys may be a mechanical switch that closes a built-in contact so as to generate an input signal upon being pressed by the user, or an electrostatic touch key like the one provided in the induction heating cooker 2, and different types of switches may be employed in combination.

56 denotes a power saving switch that reduces the power consumption by a predetermined rate with each press. When the power saving switch is pressed for example in the preheating phase, the power consumption can be reduced for the initial several minutes, however the duration of the preheating phase is proportionally prolonged. Therefore a message to this effect is displayed in the screen of the LCD unit 49, and also a voice guidance such as "Energy saving mode has been selected. Preheating time is prolonged by several minutes" is outputted, without the need to press the voice navigation key 55E each time.

48 denotes a steam duct having an end portion connected to the steam port 47 and including a steam outlet 53 formed at the other end portion, the steam duct 48 being routed through inside the lid 42.

The steam processor 50 includes a water tank (not shown) having an opening directed upward and configured to store water for condensing the steam discharged from the steam port 47, and a tank lid 51 formed so as to open and close the upper opening of the water tank.

52 denotes a steam inlet provided in the tank lid 51 at a position corresponding to the steam outlet 53. A communication pipe (to be subsequently described) is connected to the lower portion of the steam inlet in communicating therewith the steam inlet. When the lid 42 is closed, the inner lid 46 tightly closes the upper opening of the inner pot 40 and the steam inlet 52 is brought into close contact with the steam outlet 53.

The communication pipe (not shown) has its upper end portion fixed to the lower face of the tank lid 51 and vertically disposed such that the majority of the pipe is submerged in the water in the water tank (not shown). The vertical length of the communication pipe and the size (height) of the water tank are determined such that the lower end of the communication pipe is located at a predetermined depth (H) from the surface of the water in the water tank. Accordingly, the steam emitted from the lower end of the communication pipe can be efficiently brought into contact with the water in the water tank thus to be condensed.

Therefore, the depth (H) is determined so as to condense the entirety of the steam emitted from the steam port 47 even when the maximum heating power is supplied to the heating device 45. To be more detailed, the depth (H) is determined on the basis of the velocity of steam bubbles blowing up in the water when the high-temperature steam is emitted from the lower end of the communication pipe, and the condensation rate of the steam being cooled and condensed. The "steam" refers to the steam generated inside the inner pot 40 in "rice cooking phase" and "steaming phase" to be subsequently described and conducted into the communication pipe. In Embodiment 1, the entirety of the steam generated from "water absorption phase" to "keep-warm phase" can be collected. Although the keep-warm phase is set to 7 hours after "steaming phase" in Embodiment 1, the duration of the keep-warm phase may be changed as desired.

When the lid 42 is closed, a seal member provided at the steam outlet 53 in the end portion of the steam duct 48 is brought into close contact with the steam inlet 52 of the tank lid 51, so as to ensure that the high-temperature steam passing through inside the lid 42 flows into the communication pipe in the water tank (not shown), without leaking halfway.

When the reservation key 55F for setting the rice-cooking reservation function is pressed, the operation unit displays the reservation setting screen as shown in Fig. 41.

The rice cooker is one of the first electric appliances capable of setting the finish time of the rice cooking operation. In other words, the time of day that the rice cooking operation is to be finished (reserved finish time A) can be set with the rice cooker.

250 and 251 denote a pair of time-setting keys displayed on the left of the LCD unit 49 on the upper face of the lid 42 as shown in Fig. 41, when the finish time of the rice cooking operation is to be reserved (hereinafter, "reserved rice cooking"). The keys 250 and 251 are electrostatic touch switches. The outline and the triangular shape of these switches are made visible with light from an LED provided under the switches, when the input function of the switch is effective. One of the time-setting keys 250 is used for delaying the time and the other time-setting key 251 is used for reversing the time.

An upward arrow mark 219 indicates, as those shown in Fig. 36 and Fig. 37, which of the electricity rate classification is applied if the rice cooker is used right now. A word "now" is displayed close to the mark 219 in the screen of the LCD unit 49. 253 denotes a rice-cooking finish time indicator displayed at a predetermined position depending on a time difference from the mark 219, and letters "rice cooking finish" are displayed in the screen of the LCD unit 49. In the case where the rice cooking is started at the mark 219 corresponding to the current time, the rice-cooking finish time indicator 253 is displayed at a position corresponding to approximately 40 minutes later, when the amount of rice to be cooked is about 0.54 liters. The cooking finish time varies depending on the amount of rice to be cooked. 254 denotes an indication of the time boundary at which the electricity rate classification is switched. With the indication 254 and the electricity rate classification information 218M, the user can easily recognize that, for example, the rate of "morning/evening hours" is applied from 17:00 to 23:00, and the rate of "night hours", which is lower, is applied after 23:00 and before 7:00 next morning. The longest time of the rice cooking reservation is 10 hours in this example.

By each touch of one of the pair of time-setting keys 250, 251, for example the time-setting key 250, the rice-cooking start time can be delayed by 30 minutes, and the rice-cooking finish time indicator 253 moves to the right each time as shown in Fig. 42. 253A denotes a time indicator displaying the time corresponding to the position of the indicator. For example when the time indicator 253A is displaying 10 p.m. (22:00), the rice-cooking finish time can be delayed by 30 minutes from 22:00 each time the time-setting key 250 is touched. Upon touching the time-setting key 250 so as to move the time indicator until the indicator shows 6:00, the reservation for finishing the rice cooking by the desired time (6:00) can be set, though the start time of the rice-cooking is unclear. 55K denotes the key for confirming the reservation, displayed at the same position as the reservation key 55F with the letters switched to "confirm reservation". After the reservation (of rice cooking finish time) is confirmed, the key 55K remains lit up by the LED provided thereunder, until the rice cooking is finished.

Referring primarily to Fig. 43, a control device 60 of the rice cooker 3 will be described hereunder.

The control device 60 includes a power source unit 61 and a control unit 62. The control unit 62 is essentially constituted of one or a plurality of microcomputers. The microcomputer includes an input terminal, an output terminal, a storage unit, and a central processing unit (CPU), and is driven by DC power supplied from the power source unit 61 so as to control the heating device 45 and the LCD unit 49.

The control unit 62 contains, as operating conditions of the heating device 45, a cross-reference table of the temperature of the bottom face of the inner pot 40 and the temperature of rice, and cooking menus (selection of polished rice and wash-free rice, "normal finish" and "hard finish", and "porridge" different from ordinary rice cooking). In addition, the control unit 62 contains a control program specifying the rice cooking process including "preheating phase", "rice cooking phase", "steaming phase" and "keep-warm phase" to be sequentially performed. One of "operating conditions" is a power supply condition related to electrical and physical conditions of the heating device 45, and collectively specifying the time and amount of power supply to the heating device 45, and power supply patterns (continuous, intermittent, and ED percent).

Referring to Fig. 43, a temperature sensor 63 is pressed against the bottom face of the inner pot 40 from below by a compression spring or the like, to detect the temperature of the bottom face of the inner pot 40 and output a detection signal. The temperature sensor 63 is a thermistor-based temperature sensor. 43 denotes the operation unit provided in the forward portion of the upper face of the lid 42 of the main body casing 41, and including the plurality of press keys 55D, 55H, and so forth as shown in Fig. 40 for setting the operating conditions of the heating device 45. The operation unit 43 (operation unit 43 of Fig. 40) is located forward of the LCD unit 49. The rice cooking start button 44 is located on the right of the front end portion of the LCD unit 49.

In Fig. 43, 65 denotes a clock device (clock circuit) constituted of a timer, and the clock signal outputted by the clock device 65 is inputted to the control unit 62. The clock device 65 also outputs the current time of day and time setting information to the LCD unit 49, so that such information is displayed in the screen of the LCD unit 49. The clock device 65 continues to work for a long period of time with a built-in battery in the rice cooker, regardless that the power cord of the rice cooker is disconnected. The clock device 65 may be given a function to acquire the time-of-day information from outside, as does a radio-wave clock, to thereby eliminate error and self-correct the current time of day.

In Fig. 43, 66 denotes a water level sensor for detecting the amount of water in the water tank from the water level, configured to detect the water level of the water tank on the basis of an optical or physical condition, for example light or weight. The water level sensor 66 is located either on the forward portion of the main body casing 41 so as to oppose the water tank, or in the forward region of the upper face of the bottom plate 67 on which the water tank is placed.

In Fig. 43, 68 denotes a water temperature sensor for detecting the temperature of the water in the water tank, which is located either on the forward portion of the main body casing 41 so as to oppose the water tank to detect the water temperature through the sidewall of the water tank, or in the forward region of the upper face of the bottom plate 67 on which the water tank is placed as shown in Fig. 39.

The rice cooking operation with the rice cooker 3 will now be described, regarding the case where the rice cooking is immediately started, instead of the reserved rice cooking.

As shown in Fig. 51, the control unit 62 of the rice cooker according to Embodiment 1 possesses the control program specifying the rice cooking process including "preheating phase", "rice cooking phase", "steaming phase" and "keep-warm phase" to be sequentially performed.

First, the tank lid 51 of the water tank taken out of the main body casing 41 is removed, and water is introduced in the water tank. Then a predetermined amount of rice and water is introduced in the inner pot 40, and the rice cooking start button 44 on the upper face of the lid 42 of the main body casing 41 is pressed, to start the rice cooking. Accordingly, the heating device 45 is heated up and the rice cooking is performed. In an initial stage where the water absorption phase is performed, the fifth information sign 54B (not shown) indicating that the power supply may be reduced is displayed in the LCD unit 49. Therefore, the user can recognize that the power supply to the rice cooker may be reduced by an instruction from outside in the initial stage of use of the rice cooker.

Referring to Fig. 51, in the preheating phase H1 the heating device 45 receives power in the continuous power supply pattern to obtain high heating power at first. When the temperature sensor 63 detects that the temperature in the inner pot 40 has reached a predetermined temperature (55 degrees Celsius), the information to this effect is inputted to the control unit 62, which suppresses the power supply so as to maintain 55 degrees Celsius and also shifts the pattern to the intermittent power supply. Therefore, steam is barely generated and the steam processing (condensation) is not yet performed in the water tank. The temperature of 55 degrees Celsius is maintained for a certain period of time. The clock device 65 measures the time elapsed after the temperature reached 55 degrees Celsius, so that the control unit 62 controls the finish time of the preheating phase on the basis of the clock signal is inputted thereto.

When the rice cooking phase H2 is entered, the heating power of the heating device 45 is increased during a high heat phase H2A, so that the water temperature in the inner pot 40 is gradually increased, until the water in the inner pot 40 is boiled. When the boiling becomes more intense and the amount of steam increases, the pressure in the inner pot 40 exceeds the atmospheric pressure and therefore the steam generated in the inner pot 40 is driven out by the pressure through steam port 47 and enters the closed passage in the steam duct 48 inside the lid 42. The steam then spouts through the steam duct 48 into the water tank serving as part of the steam processor. Thus, the rice cooking phase H2 is composed of the high heat phase H2A in which the maximum heating power, for example 1300 W, is supplied for heating, and the low heat phase H2B which follows the high heat phase H2A.

In the rice cooking phase, the fifth information sign 54B (not shown) is erased in the LCD unit 49 and instead the seventh information sign 54C appears in the LCD unit 49. Accordingly, the user recognizes that the power supply for the rice cooking operation is secured with priority. Here, the same message may be audibly outputted by a voice navigation device such as a voice synthesizer. Alternatively, the fifth information sign 54B (not shown), the sixth information sign 54A, the seventh information sign 54C, or a ninth information sign 54E (not shown) indicating that the power reduction request has been received may be displayed, instead of in the LCD unit 49, in the form of a light emitting button or the like located in the vicinity of the LCD unit 49.

The steam which has entered the water tank serving as part of the steam processor spouts out into the water from the lower end of the communication pipe (not shown), to make contact with the water in the water tank thus to lose heat and be condensed, and turns into water.

The steam generated in the inner pot 40 is thus processed and hence prevented from leaking outward. Therefore, the steam generated during the rice cooking operation is prevented from being directly emitted to the room space, and an increase in humidity, which degrades the comfortableness, can be suppressed.

At a certain point halfway of the rice cooking phase (determined by the control unit 62 monitoring the time elapsed after the boiling began), the heating power of the heating device 45 is reduced to enter the low heat phase H2B. At the end of the low heat phase H2B the moisture in the inner pot 40 is decreased because the water has been evaporated and discharged, and the temperature in the inner pot 40 sharply increases from 100 degrees Celsius or so to approximately 130 degrees Celsius. Such sharp increase in temperature is detected by the temperature sensor 63, and the control unit 62 decides that the rice cooking has been finished upon receipt of the temperature detection information from the temperature sensor 63.

When the low heat phase H2B is entered, the seventh information sign 54C displayed in the LCD unit 49 is erased. In the case where the power reduction request signal is received from the power instruction apparatus 9 in the low heat phase or preheating phase, the ninth information sign 54E (not shown) notifying to this effect is displayed in the LCD unit 49.

The low heat phase H2B is followed by the steaming phase H3, in which the generation of steam gradually decreases with the lapse of time, and when the rice cooking is finished the inside of the inner pot 40 is cooled and the pressure decreases. Although at this point the pressure in the steam duct 48 decreases, the communication pipe (not shown), located under the tank lid 51 and mostly submerged in the water in the water tank (not shown), includes a check valve (not shown). Therefore, ambient air is introduced through the check valve, so that the pressure in the inner pot 40 is recovered to a level close to the atmospheric pressure, and the water in the water tank can be prevented from being sucked up toward the lid 42 and flowing inside the lid 42.

The amount of steam generated during the rice cooking process varies depending on combinations of the type of rice (polished rice, wash-free rice), the cooking mode (hard, viscous), and the menu (ordinary rice cooking, porridge), and the amount of water in the water tank is determined such that, in any of the cases, the steam processing is performed without fail before the cooking operation is finished, and that the temperature of the water in the water tank falls to a level that prevents scald, for example below 55 degrees Celsius, after the cooking is finished.

The rice cooking phase is followed by the keep-warm phase H4, in which a keep-warm heater (not shown) provided independent of the heating device 45 is employed to maintain the temperature in the inner pot 40 at a predetermined temperature, for example 70 degrees Celsius.

Since the steam is generated in the rice cooking phase H2 and the steaming phase H3 as stated above, in Embodiment 1 of the present invention the amount of steam emitted through these phases has been studied through calculations and experiments, and the amount of water to be put in the water tank and the water level have been accordingly determined. It has been discovered that, even though a sufficient amount of water is provided, in the case where the steam spouts into the water at a shallow position in the water the steam is unable to make sufficient contact with the water and therefore floats up to the water surface maintaining the form of bubbles, thus being emitted to the ambient air. In Embodiment 1, therefore, the water level sensor 66 is employed so that the control unit 62 decides whether a sufficient amount of water is in the water tank on the basis of the detection information from the water level sensor 66, before the water absorption phase, which is the first step of the rice cooking operation, is started.

Further, the water temperature sensor 68 for detecting the temperature of the water in the tank is provided, and therefore the control unit 62 can decide whether the temperature of the water in the tank is higher than a predetermined temperature, on the basis of the output from the water temperature sensor. In the case where the water temperature is excessively high, the control unit 62 does not supply power to the heating device 45, and therefore even the preheating phase is inhibited.

Further, once the cooking process enters the rice cooking phase, the temperature of the water in the tank is to be maintained at the predetermined temperature until the rice cooking is finished. However, in case that the temperature of the water in the tank exceeds the predetermined temperature for some reason (e.g., room temperature of the space where the cooker is placed has suddenly increases), the water temperature sensor detects such increase, and the control program of the control unit 62 is designed so as to, in the mentioned case, change the power supply condition for the heating device 45 and substantially reduce the heating power. The extent of the heating power reduction is determined within a level that does not affect the intended finish quality of the rice cooking operation. To lower the heating power a desired method may be employed, for example reducing the power supply itself or lower the ED percent. In Embodiment 1, the rice cooker is programed so as to start the rice cooking operation when the water temperature is 35 degrees Celsius or lower at the time to start, and not to start the rice cooking when the water temperature is higher than 35 degrees Celsius. Such a program prevents the temperature of the water in the water tank from increasing up to an abnormal level at the end of the rice cooking operation.

Regarding the rice cooker, it is the high heat phase H2A in the rice cooking phase H2 performed in the initial stage that most affects the quality of the rice cooking operation. In the rice cooker 3, accordingly, the control unit 62 designates the high heat phase H2A as "priority cooking menu time zone". In other words, the control unit 62 constantly monitors whether the cooking menu currently being performed is in "priority cooking menu time zone", and in the affirmative case the control unit 62 notifies the power instruction apparatus 9 to this effect through the power usage control device 8B. Therefore, abrupt power reduction can be prevented. In addition, when the high heat phase H2A is entered the seventh information sign 54C is displayed in the LCD unit 49, so that the user can recognize that the rice cooking operation is being performed with the power supply secured with priority.

Although the rice cooker according to Embodiment 1 is configured to collect the steam generated in the rice cooking process using the steam processor 50, the rice cooker may be without the steam processor 50, and emit the steam to the room space during the rice cooking operation.

### (Oven Range 5)

Referring to Fig. 23, the oven range (microwave range with electric heater) 5 includes a heating chamber (not shown) made of a metal in which a microwave of a frequency of for example 2450 MHz is introduced, a main body casing (not shown) of the microwave range accommodating therein the heating chamber, and a door 70 for opening and tightly closing the heating chamber. 70A denotes a handle of the door 70.

An operation unit 71 to be operated by the user is provided in a right region of the front face of the main body casing of the oven range 5, and the operation unit includes a power source switch 72, a start button 73, and a heating time setting dial 74. When the heating time is set with the heating time setting dial 74 and the start button 73 is pressed, the predetermined power is outputted for the time that has been set, to finish the cooking. The oven range 5 may include a heat sensitive element such as an infrared ray sensor for detecting the temperature of the heating object placed in the heating chamber, so that the oscillation source of the microwave is automatically turned off when the temperature of the heating object reaches a target temperature.

### (Dish Washer-Dryer 6)

A basic configuration of the dish washer-dryer according to Embodiment 1 of the present invention will be described hereunder.

Referring to Fig. 44, the dish washer-dryer 6 includes a main body 160 constituting the outer shell, and a main body washing unit 161 mounted inside the main body.

The main body 160 has a box shape and includes a front opening 160A formed in the front face. The washer-dryer 6 also includes a main body-side supply pipe 162 for supplying tap water that serves as washing water into a washing unit 161, and a main body-side drain pipe 163 for discharging the washing water from the washing unit 161, both routed between inside and outside of the washer-dryer 6.

The main body-side supply pipe 162 includes a connector 162A attached to an end portion located inside the main body, and the other end portion located outside is connected to a tap water pipe. The connector 162A includes a water supply valve 162B attached to the upstream side for controlling the flow of the water supplied to the washing unit 161.

The main body-side drain pipe 163 includes a connector 163A attached to an end portion located inside the main body, and the other end portion located outside is connected to an external drain pipe. The main body-side supply pipe 162 and the main body-side drain pipe 163 are constituted of a flexible hose or the like, so as to follow up the front-back movement of the washing unit 161 to be subsequently described.

A pair of first rails 164 are fixed with a screw to the respective inner sidewalls 160C of the main body 160 so as to oppose each other, with the longitudinal direction oriented in the front-back direction.

A stopper 165 is fixed with a screw to a bottom portion 160B of the main body 160, at a position close to the front opening 160A.

The rear face of the stopper 165 oriented to the rear side of the main body 160 is generally perpendicular to the bottom portion 160B, and the front face is a sloped surface inclined toward the front opening 160A.

The washing unit 161 includes a washing tank 166, a front door 167 integrally attached to the front face of the washing tank 166, and a cover 168 attached to the outer side of the washing tank 166 so as to cover function components to be subsequently described.

A handle 167C to be held by the user to draw out the washing unit 161 from the main body 160, and an operation unit 179 for inputting operations of dish washer-dryer 6 are provided on the front face of the front door 167.

The washing tank 166 has a box shape having an opening 166A formed all over the upper face for introducing the tableware, and is placed inside the main body 160 during the washing process. When the washing tank 166 is drawn out from the main body 160 the tableware can be taken out through the opening 166A.

The washing tank 166 includes, in an inner space 166B, a washing nozzle 169 configured to rotate and to inject and circulate the washing water, a heater 170 for heating the washing water, and a dish basket 171 in which the tableware to be washed is placed in a predetermined position.

A control unit 172 and a water level sensor 173 are provided between the washing tank 166 and the front door 167.

The control unit 172 is configured to control a washing pump 174 and a discharge pump 175 to be subsequently described, an electric fan 176, the heater 170, and the water supply valve 162B, according to user's instruction inputted through the operation unit 179 and signals from detectors.

The water level sensor 173 detects a water level of the washing water in the washing tank 166 and transmits detection information to the control unit 172. The operation unit 179 includes an operation mode selection key 190 for selecting one of basic operation modes of the dish washer-dryer, a display unit 191 for displaying the result of the selection by the selection key, and a switch 192 for starting and stopping the operation. The operation modes include "washing mode", "rinsing mode", and "drying mode". These operation modes are performed according to an operation program stored in a semiconductor storage element provided in the control unit 172.

A water inlet 166C and an air inlet 166D are opened in the rear wall of the washing tank 166.

A washing unit-side supply pipe 177 is connected to the water inlet 166C. The washing unit-side supply pipe 177 includes a connector 177A provided at an end portion, to be detachably connected to the connector 162A of the main body-side supply pipe 162.

The electric fan 176 that sends air in "drying mode" for drying the washing objects such as tableware is connected to the air inlet 166D. The electric fan 176 includes a fan 176A for generating an airflow, a heater 176B for heating the flowing air, and a motor 176M serving as driving source of the fan. The heater 176B is activated when "drying mode" is performed.

The washing pump 174 and the discharge pump 175 are provided under the washing tank 166, and covered with the cover 168.

The washing pump 174 serves to take in the washing water from the washing tank and supply the washing water into the washing nozzle 169 with a predetermined pressure, to thereby cause the washing nozzle 169 to rotate and circulate the washing water, in "washing mode". In "rinsing mode" also, the washing pump 174 is activated so as to inject clean hot water or water free from detergent, through the washing nozzle 169.

The discharge pump 175 is connected to the washing unit-side drain pipe 180 so as to suck up from the washing tank the washing water stained through the washing and to discharge the stained water out of the dish washer-dryer 6. The other end portion of the washing unit-side drain pipe 180 is connected to a connector 180A detachably connectible to a connector 163B of the main body-side drain pipe 163.

The rated maximum power consumption of the dish washer-dryer 6 is approximately 900 W to 1000 W, which can be classified as 100 W for the washing pump 174, 800 W for the heater 170 for heating the washing liquid, 200 W for the heater 176B for drying, and 10 W for the fan 176A. Not all of the cited components are activated at a time, and therefore the power consumption does not exceed the rated maximum power consumption.

The cover 168 includes an opening 168B formed in a rear portion of a bottom plate 168A, so as to oppose a lower face 166E of the washing tank 166.

A movable engagement unit 181 is provided at a position corresponding to the opening 168B. The movable engagement unit 181 includes a base portion 182 (not shown) fixed to the bottom plate 168A, a shaft 183 (not shown) mounted on the base portion, an engaging portion 184 (not shown) pivotably supported by the shaft, and an elastic member 185 that biases the engaging portion in one direction. The elastic member 185 may be, for example, a hinge spring.

The engaging portion 184 is disposed so as to move into and out of the opening 168B by pivoting about the shaft 183. The engaging portion 184 is elastically supported by the elastic member 185 such that a part of the engaging portion 184 sticks out from the opening 168B, unless an external force is applied.

A disengaging unit 186, connected to the movable engagement unit 181 via a joint member 186A, is attached to the front end portion of the bottom plate 168A of the cover 168. By operating the disengaging unit 186, the engaging portion 184 (not shown) can be caused to pivot against the elastic force of the elastic member 185 (not shown), by means of the joint member 186A.

The disengaging unit 186 may be constituted of, for example, a lever attached to the cover 168 so as to move back and forth, and the joint member 186A that follows up the movement of the lever is connected to the movable engagement unit 181.

The front door 167 includes a maintenance hole 167A formed at a position corresponding to the disengaging unit 186. The maintenance hole is normally closed with a cover 167B, and when the washing unit 161 is to be detached from the main body 160, the disengaging unit 186 becomes accessible from the front side of the dish washer-dryer 6 by removing the cover 167B.

A pair of second rails 187 are fixed with a screw to the respective (left and right) sidewalls of the cover 168 overlapping the side face of the washing unit 161, the second rails being oriented in the front-back direction.

Between the main body 160 and the washing unit 161 configured as above, the second rails 187 fixed to the respective (left and right) side faces of the washing tank 166 is slidably engaged with the first rails 164 fixed to the respective (left and right) inner sidewalls 160C of the main body 160.

Thus, the main body 160 and the washing unit 161 are assembled so as to allow the washing unit 161 to move back and forth out of and into the main body 160 through the front opening 160A. Here, the power usage control device 8D is enclosed inside the control unit 172.

Fig. 45 illustrates the general configuration of a self-running vacuum cleaner 320 according to Embodiment 1 of the present invention.

The "self-running vacuum cleaner" herein referred to includes, in terms of cleaning function, a suction port and an electric brush provided in the bottom portion of the main body and, in terms of moving function, driving wheels and a steering device such as a caster wheel, an obstacle detection device such as an ultrasonic sensor for detecting an obstacle while moving, and a position recognition device for recognizing the current position. The cleaner recognizes the cleaning region with the position recognition device while moving along a wall in a place to be cleaned in the living space using the obstacle detection device, and reciprocates in the cleaning region by repeating linear movements in one direction and opposite thereto, to thereby clean the entire floor surface of the cleaning region in the living space.

In Fig. 45, 321 denotes the main body of the self-running vacuum cleaner 320, which includes a main body casing 321A having a circular shape in a plan view. 322L, 322R denote a pair of left and right driving wheels located on a rear side of the main body 321 in a plan view. The pair of driving wheels are respectively driven by driving motors 323R, 323L independently from each other. 324 denotes a caster supporting the forward portion of the main body 321 from below at a central position in the left-right direction, the caster being rotatable by 360 degrees about a support shaft (not shown) fixed to the bottom face of the main body 321 (caster wheel). Thus, the caster 324 and the pair of driving wheels 322R, 323L constitute the driving and steering units. When both of the driving wheels 322L, 322R are driven to rotate by the driving motors 323R, 323L by the same amount, the main body 321 moves straight ahead, and for example when only the right driving motor 323R is driven by a certain amount, the main body 321 turns to the left.

325 denotes a suction port formed in an elongate shape in the left-right direction in the lower face (bottom face) of the main body casing 321 A. A flexible and elastic brush (not shown), disposed along a horizontal central shaft so as to be rotated about the shaft, is provided in the suction port, and when the cleaning is performed the brush is rotated at a high speed by an electric motor (not shown), while the tip portion of the brush is beating the floor surface.

326 denotes a dust chamber having a lower opening located right above the suction port, so as to take in dust through the suction port. A blower motor (not shown) is enclosed in the ceiling of the dust chamber. An exhaust port (not shown) is provided on the rear face or top face of the main body casing 321 A, for discharging therethrough the air on the floor sucked with great force by the blower motor through the suction port 325.

The dust contained in the air on the floor sucked with great force through the suction port 325 is captured by one or a plurality of filters provided inside the dust chamber 326.

327 denotes a circuit board provided in the main body casing 321 A and outside the dust chamber 326. The circuit board includes a wireless communication unit 328 similar to the input/output terminal 124B, for communication with the input/output terminal (not shown) of the power instruction apparatus 9. A control circuit (not shown) is mounted on the circuit board, to turn on and off the blower motor according to a signal received through the wireless communication unit 328.

329 denotes a display unit provided on the top face of the main body casing 321 A, and 330 denotes a manual operation unit provided in the vicinity of the display unit, in which a plurality of switches to be operated by the user to input a starting or stopping instruction and operation conditions to the self-running vacuum cleaner 320.

331 denotes range finders provided at a central position of the front face and on the left and right side faces of the self-running vacuum cleaner 320, each constituted of an ultrasonic sensor or the like, main body casing 321 A. The range finders each constitute the obstacle detection device that measures the distance to an object located ahead or on the left or right side, to thereby detect an obstacle. 332 denotes an imaging device such as a small CCD, located right below the range finder at the central position of the front face of the main body 321, and directed forward. Information (image data) from the imaging device is stored in an image memory (not shown) mounted on the circuit board 327, to be read out by a control unit (not shown) when necessary. 333 denotes a storage battery that supplies power to the main body 321. The storage battery can be charged by non-contact charging method when the self-running vacuum cleaner 320 turned off is brought close to a predetermined charging stand. Therefore, the self-running vacuum cleaner 320 is operated by the storage battery without receiving power instruction from the power instruction apparatus 9. However, when an instruction of starting and stopping the operation and power of the operation ("high" or "low") is received through the wireless communication unit 328, the self-running vacuum cleaner 320 is operated according to the instruction. The self-running vacuum cleaner 320 is configured to automatically move toward the charging stand (not shown) placed at a predetermined position, for example at the foot of a wall, and stops the operation upon contacting or coming up close to the charging stand, thus to be recharged while the power is off, in preparation for the next cleaning job.

The self-running vacuum cleaner 320 is one of the first electric appliances in which the start time can be set using a built-in timer (not shown), and the user can set the start time (reserved start time A) of the cleaning. Therefore, the cleaning can be automatically started and finished while the occupant is away from home.

In the self-running vacuum cleaner 320, the route along which the main body 321 has moved from the start of the operation to the finish thereof, in other words the locus is stored in the semiconductor memory (not shown) in the form of two-dimensional data, and the stored data is transmitted to the power instruction apparatus 9 through the wireless communication unit 328, upon finishing the cleaning operation. Accordingly, the locus data can be read out on the display panel 100 of the power instruction apparatus 9 or on the TV receiver 75 and, for example, a plan-view drawing of the living space can be superposed on the locus data. In such a case, the occupant can confirm how the self-running vacuum cleaner 320 travelled in the living space for cleaning, which exempts the user from the trouble of finding afterward a space left uncleaned because the self-running vacuum cleaner 320 circumvented obstacles such as furniture and objects. Further, when the forward movement is disturbed a predetermined times, the imaging device 332 is activated by the control unit (not shown) so as to shoot the forward view, and therefore upon replaying the disturbance scene the location or furniture that disturbed the cleaning can be confirmed on the display panel 100 (screen 100A) of the power instruction apparatus 9 or on the LCD screen 75D of the TV receiver 75.

### (Air-Conditioning Apparatus 7)

Hereunder, a basic configuration of the air-conditioning apparatus according to Embodiment 1 of the present invention will be described.

In Fig. 46, 7 denotes the home-use air-conditioning apparatus. The air-conditioning apparatus 7 may be installed in the kitchen in which the kitchen electric appliances KP are provided, however in Embodiment 1 the air-conditioning apparatus 7 is provided in another room, for example the living room. In the air-conditioning apparatus, the power usage control device 8E of the power instruction apparatus 9 is incorporated. Therefore, information about requested power, operating status of the cooking appliances, usable power, and so forth can be exchanged with the power instruction apparatus 9, so that the power usage control device 8E controls the power supplied to the air-conditioning apparatus 7 within the power consumption permitted by the power instruction apparatus 9.

The air-conditioning apparatus 7 includes an indoor unit 220 installed inside the room, and an outdoor unit 200. The indoor unit 220 and the outdoor unit 200 are connected via a refrigerant pipe in a closed loop arrangement, thus constituting a loop-shaped refrigerant circuit KC.

In the section of the refrigerant circuit KC on the side of the outdoor unit 200, an electric compressor 193 driven by a motor (not shown) serving as compression driving source, a four-way valve 194, an outdoor heat exchanger 195, and an electric expansion valve 196.

197A, 197B each denote a connector provided between the refrigerant pipe on the side of the indoor unit 220 and the refrigerant pipe on the side of the outdoor unit 200.

198 denotes an outdoor fan driven by a motor 198M to send air to the outdoor heat exchanger 195. 199 denotes an outdoor air temperature detection device for detecting an outdoor temperature.

201 denotes an outdoor control unit that controls the motor 198M, the electric compressor 193, the four-way valve 194, and the electric expansion valve 196, on the basis of temperature detection information from the outdoor air temperature detection device 199 and the outdoor control unit 201.

The indoor unit 220 includes an indoor fan 222 located in the vicinity of an indoor heat exchanger 221, a motor 222M that drives the indoor fan 222, an indoor temperature detection device 224 for detecting a temperature of the room or wall, and indoor control unit 225, and a power source unit 226 that supplies the commercial power of 200 V to the indoor control unit 225 and the outdoor control unit 201.

The outdoor control unit 201 includes a control circuit board (not shown). The circuit board includes a converter (not shown) that converts the 200 V commercial power to DC, and an inverter (not shown) operating with the power rectified by the converter into DC. The inverter receives a driving signal from the outdoor control unit 201 and outputs frequency-controlled AC power to the electric compressor 193, so as to control the rotation speed of the electric compressor 193.

The inverter is controlled by a control circuit including as a core a microcomputer 201 M provided in the outdoor control unit 201. The microcomputer 201 M is driven by the power from a constant-voltage circuit (not shown) provided in the outdoor control unit 201 and receiving power from the power source unit 226. A read-only memory (ROM, not shown) containing a control program is provided inside or outside the microcomputer 201M, and an erasable and alterable non-volatile memory (not shown) provided outside the microcomputer 201 M contains control data for the entirety of the air-conditioning apparatus 7.

The microcomputer 201 M in the outdoor control unit 201 controls the operation of the electric compressor 193 through the inverter, on the basis of the control program stored in the read-only memory and the control data stored in the non-volatile memory (not shown).

227 denotes an operation unit provided for example in a main body outer case of the indoor unit 220, and a display unit 228 including an LCD screen for displaying an operation result, indoor temperature, and a target temperature in cooling or heating operation is located in the vicinity of the operation unit 227. In the air-conditioning apparatus 7, a mode selection switch (not shown) is provided in the operation unit 227 for selecting one of at least four operation modes, namely cooling, heating, dehumidifying, and ventilating.

For the outdoor control unit 201 of the air-conditioning apparatus 7, a current capacity is specified so as to secure the rated cooling capacity when a maximum load is imposed. Under load conditions lower than the maximum load, the upper limit of the driving current of the electric compressor 193 is lowered according to the load condition.

One of the detection method of the air-conditioning load is providing the temperature detection information from the outdoor air temperature detection device 199 to the outdoor control unit 201, and deciding the load condition on the basis of the detected outdoor temperature. In this case, for example in the cooling operation, when the outdoor temperature is low, in other words when the operation load is low, a cooling capacity is set according to that load from the viewpoint of stability of the room temperature and energy saving, and therefore the power consumption can be reduced. Here, the outdoor air temperature detection device 199 may utilize the information from the environment sensor (outdoor temperature sensor) 206 shown in Fig. 1. In this case, the outdoor temperature is transmitted from the outdoor temperature sensor 206 to the environment detection unit 202 of the power instruction apparatus 9, and therefore the air-conditioning apparatus 7 utilizes the temperature information from the environment detection unit 202 so as to decide the load condition on the basis of the outdoor temperature.

The indoor control unit 225 receives the temperature detection information from the indoor temperature detection device 224, and decides the load condition on the basis of the indoor temperature information. In this case, for example in the cooling operation, when the outdoor temperature is low and also the cooling target temperature is low, in other words when the operation load is low, a cooling capacity is set according to that load from the viewpoint of stability of the room temperature and energy saving, and therefore the power consumption can be reduced. In general, the majority of the power consumption of the air-conditioning apparatus 7 configured as above is occupied by the electric compressor 193, and therefore decreasing the rotation speed of the electric compressor leads to reduced power consumption. In the cooling operation for example, when the user sets a (room) target temperature to 26 degrees Celsius and 28 degrees Celsius in the condition where the outdoor temperature is 35 degrees Celsius and the indoor temperature is 31 degrees Celsius, the former setting imposes a larger cooling load and therefore the rotation speed of the electric compressor 193 is increased.

The air-conditioning apparatus 7 is one of the first electric appliances in which the start time can be set using a built-in timer (not shown), and therefore the user can set the start time (reserved start time A) of, for example, the cooling operation. Therefore, the cooling operation can be automatically started while the occupant is away from home.

Further, the air-conditioning apparatus 7 is one of the first electric appliances in which the finish time can be set using the built-in timer (not shown), and therefore the user can set the finish time (reserved finish time A) of, for example, the cooling operation. Therefore, when the occupant starts the cooling operation at home and the reserved finish time is reached while the occupant is away, the cooling operation can be automatically finished.

### (Power Instruction Apparatus 9)

Referring to Fig. 22, the power instruction apparatus 9 constituting the core of the present invention will now be described hereunder.

The power instruction apparatus 9 is configured to exchange information about operating status of the cooking appliances, usable power, and so forth with the power usage control devices 8A, 8B, 8C, and 8D of the kitchen electric appliances KP. Accordingly, the power usage control devices 8A to 8D controls the power of the respective kitchen electric appliances KP within the power consumption permitted by the power instruction apparatus 9. The power usage control devices 8A, 8B, 8C, and 8D may be incorporated in the respective kitchen electric appliances KP, or attached, like an adapter, to the power supply circuit board of the kitchen electric appliances KP, however in Embodiment 1 all of the usage control devices are located inside the main body 9A constituting the outer shell of the power instruction apparatus 9, as stated earlier.

As described earlier the power to the air-conditioning apparatus 7 and the dish washer-dryer 6 are also collectively controlled by the power instruction apparatus 9. Here, "adapter" refers to a control device provided between each of the home electric appliances and the power source thereof. Examples of the adapter herein referred to include the one according to Japanese Unexamined

Patent Application Publication No. 2012-83453, which includes a power source plug and a power outlet, and an electric appliance the power to which is to be controlled is connected to the power outlet. Upon receipt of the power instruction signal through a wireless or wired communication device, the adapter limits or cuts off the power to the home electric appliance to be controlled. Thus, the adapter is connected to the existing home electric appliance and the power instruction signal is transmitted to the adapter from the power instruction apparatus 9 so that the adapter controls the home electric appliance in accordance with the signal. Therefore, the power instruction apparatus 9 can integrally control the power supply, by providing the adapter on the power source side of the existing home electric appliances.

The power instruction apparatus 9 includes a power request adder 91 that sums the requested power from the power usage control devices 8A to 8D of the kitchen electric appliances KP and the requested power from the power usage control device 8E of the air-conditioning apparatus 7, a comparator 92 that compares between a total power summed by the power request adder 91 and a first capacity limit (e.g., 8000 W) of the circuit breaker BK, a power request excess decision device 93 that decides an excess amount of the total power on a basis of the comparison result from the comparator 92 and detains the comparison result when the total power is 8000 W or lower and outputs the excess amount when the total power exceeds 8000 W, a power usage reduction decision device 94 that (i) returns the same usable power as the requested power to each of the power usage control devices 8A to 8D of the kitchen electric appliances KP and the power usage control device 8E of the air-conditioning apparatus 7 when no output is made from the power request excess decision device 93 (i.e., excess amount is 0), and (ii) decides, when the excess amount is outputted, a reduction amount of the power consumption of each of the kitchen electric appliances KP and the air-conditioning apparatus 7 on the basis of the excess amount of the total power and a predetermined priority order and responds to the power usage control devices 8A to 8E of the kitchen electric appliances KP and the air-conditioning apparatus 7, a priority order setting device 95 that reads out "priority order" registered in advance in the semiconductor memory 95A and transmits "priority order" information of the power reduction to the power usage reduction decision device 94, and the control unit 125 that controls the healthcare processing unit 116 and the use limit setting device 96.

While some of the healthcare instruments 410 are driven by a battery, those healthcare instruments 410 driven by the commercial power source EP are not subjected to the limitation of the power usage or disconnection of the power supply performed by the power instruction apparatus 9.

In Fig. 1 and Fig. 3, 300 denotes a wattmeter to which the power of AC 200 V from the power company is supplied through a single-phase 3-wire power line 301 (see Fig. 22). The power line 301 is composed of three wires respectively allocated to a first phase, a second phase, and a third phase, and a power clamp 302 is inserted in each of the first phase and the second phase, and the current value is detected on the power source side (upstream side) of the circuit breaker BK. The power clamp 302 is interposed between the wattmeter 300 and the circuit breaker BK.

313 denotes a power detector that calculates power consumption on the basis of the current from the power clamp 302, and the output from the power detector is inputted to the comparator 92 of the power instruction apparatus 9.

315 denotes small and portable electric appliances used in the household, other than the kitchen electric appliances KP, the air-conditioning apparatus 7, and the dish washer-dryer 6. Examples of the electric appliances 315 include a hair dryer, an electric iron, and a vacuum cleaner, which consume electric energy of approximately 1000 W with a built-in heater or motor, and do not possess the self power-limitation device like the power usage control devices 8A to 8E. In Fig. 22, such appliances are denoted as "unregistered appliances" because the rated maximum power information and the names of those appliances are unable to be registered in the power instruction apparatus 9. Not only one but a plurality of the unregistered appliance may be utilized at a time. Since the unregistered appliances 315 are not the object of the power limitation directly subjected to power reduction or power increase by the power instruction apparatus 9, the power supplied through the circuit breaker BK is directly applied to the unregistered appliances 315. The healthcare instruments 410 are also included in "unregistered appliances". In the case of utilizing an oxygen inhaler or electric medical device for home medical care or nursing, such devices are also categorized as "unregistered appliance" so as to prevent abrupt reduction of power usage.

The power usage reduction decision device 94 decides the power usage reduction amount with respect to the kitchen electric appliances KP and the air-conditioning apparatus 7 from which the power requests have been received, such that the total power does not exceed the capacity of the circuit breaker BK (8000 W), and also that power usage of the power usage control devices 8A to 8E of the kitchen electric appliances KP and the air-conditioning apparatus 7 at lower ranks of "priority order" is reduced. Hereinafter, the rated capacity given to the circuit breaker BK in advance (for example 8000 W as above) may be referred to as "first capacity limit".

The "priority order" refers to the order determined so as to supply power to those kitchen electric appliances KP to which the power has to be secured with priority in order to maintain the expect cooking quality and cooking work efficiency, within the limited first capacity (8000 W) of the circuit breaker BK. Accordingly, the priority order is registered in advance such that the kitchen electric appliances that do not cause much inconvenience to the user even though the power is reduced are given lower ranks. Among "first home electric appliances" the priority to secure the power is determined in the order of the rice cooker 3, the induction heating cooker 2, and the oven range 5 from the higher side, so as to prevent the work efficiency of the user from being degraded. However, in the process of deciding the priority, in the case where the kitchen electric appliance KP in which "priority cooking menu time zone" is specified is currently in use in "priority cooking menu time zone", the power supply to such a kitchen electric appliance KP is not reduced by the power instruction apparatus 9 until the time zone is over.

The information sign indicating that the power reduction is avoided, such as the fourth information sign 210D and the seventh information sign 54C may be individually provided on all of "first home electric appliances". Likewise, the first information sign 210A and the fourth information sign 210D indicating that the appliance is an object of power reduction may be provided on all of "first home electric appliances". Further, the information sign indicating that the appliance is an object of power reduction and the information sign indicating that the power supply is actually being reduced may be provided on "second home electric appliances" such as the air-conditioning apparatus 7. In addition, a display device like the second information sign 210B indicating that the power reduction request has been received may be provided on the first home electric appliances other than the induction heating cooker 2 and the second home electric appliances. In the case of the air-conditioning apparatus 7, the mentioned displays may be visibly provided on the surface of the indoor unit 220, or in the display screen (where the indoor temperature and the operation mode are displayed) of the indoor remote controller or operating the indoor unit 220.

In the case where, in an independent kitchen electric appliances KP having a plurality of heating devices (heaters), one of the heating devices is actually performing the cooking in "priority cooking menu time zone" while other heating devices are not in "priority cooking menu time zone", the power for the heating device ion "priority cooking menu time zone" is maintained, and the power for the remaining heating devices is designated as object of power reduction.

In "second home electric appliances", the priority for securing the power supply is given in the order of air-conditioning apparatus 7, and the dish washer-dryer 6 from the higher side, so as to prevent the work efficiency of the user from being degraded.

Although the air-conditioning apparatus 7 is not installed in the kitchen, the power thereto is disconnected via the same circuit breaker BK, and therefore the air-conditioning apparatus 7 is given a lower rank than the rice cooker 3 and the induction heating cooker 2 which are "first home electric appliances". However, the air-conditioning apparatus 7 is given a higher priority than the dish washer-dryer 6, which is also one of the second home electric appliances. Although "second home electric appliances" also includes the washing-drying machine for clothes, detailed description thereof will be omitted for the sake of simplicity.

96 denotes the use limit setting device that instructs revision of the total power to be used for comparison by the comparator 92 to a designated power value. The use limit setting device 96 is optionally operated by the user to set a second capacity limit lower than 8000 W, and the value can be selected, for example, from 7500 W, 7000 W, and 6500 W. In Fig. 22, the designated power value is denoted as "designated capacity". The designated capacity may hereafter be referred to as "second capacity". Here, although the designated capacity corresponds to "second capacity limit" (e.g., 7500 W) in the present invention, it is not mandatory in the present invention that the user is able to recognize the absolute value of "second capacity". For example, the second capacity may be set in a desired ratio to "first capacity limit", such as "98% of the rated capacity (first capacity limit)" (i.e., reduction by 2%).

99A denotes the router A described earlier with reference to Fig. 1. Via the router A the power instruction apparatus 9 is connected to the server of a power company or other external organizations 78A. Accordingly, for example when the power shortage information is transmitted from a public agency or the power company in the district, the information is displayed on the display panel 100 of the use limit setting device 96. The use limit setting device 96 and its screen 100A will be subsequently described in details. The power shortage information is classified at least into a compulsory instruction to reduce the power consumption of each household, and a non-compulsory request to optionally reduce the power consumption. Here, the communication device 97 is also configured to transmit information on the side of the power instruction apparatus 9 to the external wide area communication network. Therefore, the occupant of the household can make access to the wide area communication network 98 from the mobile phone terminal 87 or other information communication terminal device when the occupant is away from home, to recognize the power usage status of the household, and also input the upper limit of the power usage to the use limit setting device 96 from outside.

Fig. 47 and Fig. 48 illustrate the details of the screen 100A of the use limit setting device 96. In these drawings, 101 denotes maximum allowable power information indicating in figures the rated capacity (first capacity limit: 8000 W) of the circuit breaker BK allocated to the household, and 102 denotes current power consumption information sign indicating in figures the current power consumption of the household. 103 denotes power allowance information sign indicating a degree of allowance of the power being consumed with respect to the maximum allowable power. The allowance may be indicated in letters such as "allowance: large" or "allowance: small", instead of indicating the figure of "600 W" as it is, as shown in Fig. 47.

104 denotes a power reduction request notification section to be lit up when the power shortage information is received from the wide area communication network 98 through the router 99A, 105 denotes a display of the current time of day, and 106 denotes an information sign indicating the setting keys of the use limit setting device 96 and the figure of each key, the use limit setting device 96 being configured to instruct revision of the total power value used for comparison by the comparator 92 to a designated power value. In the state illustrated in Fig. 47 and Fig. 48, only the key of 8000 W is displayed in white letters on colored background, which indicates that the power use limit is 8000 W which is the same as the rated capacity of the circuit breaker BK. As shown in Fig. 47, four setting keys are provided, namely a setting key 106A for 8000 W, a setting key 106B for 7500 W, a setting key 106C for 7000 W, and a setting key 106D for 6500 W. These setting keys are touch keys of a static capacitance detection type, and the outline of the key and the letters representing a part of the function (e.g., 6500 W) are visibly displayed only when inputting by a touch is effective. In other words, when the key is unusable for inputting by a touch the input key itself is not displayed, or barely visibly displayed. Basically, the static capacitance-based input keys are formed on the glass plate covering the surface of the screen 100A, so that when the key of a predetermined position is touched an input signal corresponding to the touched key is given to the use limit setting device 96.

107 denotes use status information sign indicating the list of the electric appliances in the household that are the objects of the control by the power instruction apparatus 9, such as 107A showing the name of the induction heating cooker 2 and 107B shown the name of the rice cooker 3. The use status information sign 107 is arranged such that the appliance given the higher priority for securing the power supply is located on the left side. 108 denotes a use display section to be lit up when the corresponding appliance is currently in use. From Fig. 47, it can be recognized that the induction heating cooker 2, the rice cooker 3, the air-conditioning apparatus 7, and the lighting equipment are in use. The figures displayed close to the use display section 108 indicate the power consumption of the corresponding appliance. For example, an average power value through the latest one minute is displayed, and updated every one minute. The screen layout may be designed such that when the priority of the home electric appliances EE is set the names of the home electric appliance are displayed from the left to the right in the order of priority, the farthest left being the highest. In this case, the user can instantly recognize the home electric appliances given a higher priority order.

110 denotes an information key. Each time the user touches the information key 110, power supply-related information useful to the user, and information about cooking methods for effectively utilizing the power and how to set a target temperature of the air-conditioning apparatus, are displayed on the screen 100A. To secure a sufficient display region, for example the information sign 105 of the current time of day and the power allowance information sign 103 are not displayed.

111 denotes a help mode key. When the user touches the key 111, information that assists the user's operation is displayed, and a correct operation method is audibly announced through a voice guide device (not shown) separately provided. When the key 111 is further pressed a plurality of times, displays indicating in illustrations and letters how to view the screen 100A, a use limit setting method, and so forth appear all over the screen 100A.

In Fig. 48, 57 denotes a presence management menu selection key displayed in the screen 100A of the use limit setting device 96. The presence management menu selection key is touched when the user intends to switch the display screen, like the icon 419 for selecting the screen of the living environment information. When the user touches the presence management menu selection key, the screen is switched to a single-purpose display screen showing the list of all the family members indicating the presence status of each member (see Fig. 65). Therefore, the presence status of all the family members can be recognized in view of the mentioned display screen.

In Fig. 65, 58A denotes a selection key for displaying the input screen for use by the occupant who is at home. When the occupant touches the key 58A, the input screen appears in which an updated presence status, the time known in advance that the occupant will be away, scheduled home arrival time, and the absence period (month, date) can be inputted, with respect to each of the occupants. 58B denotes a selection key for displaying the input screen for setting the home electric appliance in which the occupant can reserve the start time or finish time in advance (e.g., rice cooker), and setting the exclusive electric appliance of the occupant. When the occupant touches the key 58B, the input screen appears in which the electric appliance that the occupant intends to reserve, and the designated exclusive electric appliance can be inputted, with respect to each of the occupants.

In Fig. 65, 59A denotes a family name column for displaying the names or nicknames for identifying each of the family members, and 59B denotes a presence status display column displaying in symbols the presence status with respect to each of the occupants. In the example shown in Fig. 65, a double circle indicates that the corresponding occupant is at home and a blank triangle indicates that the corresponding occupant is absent. 59C denotes a scheduled home arrival time display column for displaying the scheduled home arrival time with respect to each of the occupants, and 59D denotes a reserved appliance display column for displaying the exclusive electric appliance in letters, symbols, or illustrations with respect to each of the occupants, so that the home electric appliance in which the reservation (start time or finish time) has been made can be identified. With the mentioned columns, the presence status, the scheduled home arrival time, and so forth of each of the occupants can be easily confirmed on the screen 100A of the power instruction apparatus 9.

In Fig. 65, 59E denotes an exclusive electric appliance display column for displaying the exclusive electric appliance in letters, symbols, or illustrations with respect to each of the occupants, so that the home electric appliance registered as exclusive electric appliance can be identified. 59F denotes a power value display column for displaying the power consumption and the upper power limit of the exclusive electric appliance being used, with respect to each of the occupants. The "power" referred to here may be, for example, an average power of one minute, instead of an instantaneous maximum power. The "upper power limit usage" of each occupant can only be set by the occupant A or occupant B, on a different screen. In addition, the home electric appliances that may be used by any of the occupants, such as the lighting equipment in the kitchen, the home electric appliance in the living room, and the air-conditioning apparatus in the living room, are common home electric appliances, and therefore the use of such common home electric appliances is not included in the power usage of the occupant who is using the home electric appliance, whoever of the occupants A to B may be using it. In the case where the occupant A registers the air-conditioning apparatus in the bedroom of the occupant A as exclusive electric appliance, the upper power limit usage of the occupant A (2500 W) is applied when the occupant A uses the air-conditioning apparatus, and therefore the occupant A is not permitted to use the air-conditioning apparatus if the total power exceeds 2500 W (i.e., the power instruction apparatus 9 restricts the use so as not to exceed the upper power limit usage). Further, the control unit 125 sums the monthly power usage (kWh) of the exclusive electric appliances with respect to each occupant, and the result is displayed in figures or illustrations on the LCD screen 75D of the TV receiver or the screen 100A of the power instruction apparatus 9. With the mentioned configuration, the existence of the exclusive electric appliance and the power consumption thereof can be easily confirmed with respect to each occupant.

Fig. 48 illustrates the screen that appears first when the user touches the key 107B of the induction heating cooker 2 on the screen of Fig. 47. In view of Fig. 48, it is understood that the induction heating cooker 2 is currently performing the stew heating operation, which is estimated to finish at 12:50. Further, it is understood that it takes 15 minutes from now before the cooking is finished. 113S denotes the use start time information sign, and 113E denotes the estimated finish time information sign.

Thus, by utilizing the screen 100A of the use limit setting device 96, the outline of the status of the home electric appliances currently in use can be recognized, without taking the trouble of going to the actual place where the electric appliance is located.

Fig. 49 illustrates the screen that automatically appears after a predetermined time, for example 10 seconds, after the screen of Fig. 48 is displayed. In view of Fig. 49, it is understood that the induction heating cooker 2 is currently performing the stew heating operation, and that the process is still halfway in view of marks 114, 115 showing the degree of progress. With the progress of the cooking the marks 114 sequentially increase to the right, and finally the marks 114 will be aligned to the left end position of the estimated finish time information sign 113.

A distinctive feature of Embodiment 1 is that the limitation can be determined so as to allow the user to spontaneously reduce the power consumption of the household collectively, in view of the screen 100A of the use limit setting device 96, regardless of whether the first capacity limit of the circuit breaker BK (8000 W) is exceeded.

To be more detailed, the user can select the power usage limit from a plurality of levels, at a desired time. For example, when the power shortage information is received from the wide area communication network 98 the power reduction request notification section 104 is lit up, and therefore the user can spontaneously set an appropriate power usage limit. In addition, when the user decides to reduce the power consumption on the basis of information from a different source, the user can set the upper limit of power consumption through the use limit setting device 96 at any desired time. As described above, the user can select a power limit, for example from 7500 W, 7000 W, and 6500 W ("second capacity limit" can be optionally determined).

Accordingly, although considerable allowance is available with respect to the first capacity limit of the circuit breaker BK (e.g., 8000 W), the second capacity limit can be set as desired. The user can spontaneously set the upper limit to 7500 W for example, in which case the power consumption of the home electric appliances in the household can be automatically suppressed by the power instruction apparatus 9, within the limit of 7500 W. Further, the signals received from the wide area communication network 98 may be automatically classified so as to select a specific signal if any, and when the specific signal is received the power instruction apparatus 9 may execute power reduction so as to automatically reduce the power consumption by 5%, of revise the upper limit to a value one stage lower, for example to 7500 W when the capacity of the circuit breaker BK is 8000 W.

Referring to Fig. 52, the operation of the power control system for electric appliance according to Embodiment 1 will be described hereunder. Here, it will be assumed that some home electric appliances EE, which are kitchen electric appliances KP, are about to be used by the user. Specifically, the kitchen electric appliances KP other than the rice cooker 3 and the induction heating cooker 2 have already started to work, and the rice cooker 3 is to start working next, and the operation of the induction heating cooker 2 will follow.

At the time point immediately before the induction heating cooker 2 starts the heating operation, the power instruction apparatus 9 has already received the information about the power necessary for performing the scheduled operation, for example starting the cooking from the kitchen electric appliances KP, and then from the induction heating cooker 2. Accordingly, in the power instruction apparatus 9, the power request adder 91 sums the power values requested by each of the kitchen electric appliances KP and the comparator 92 compares the summed total power with the circuit breaker capacity (e.g., 8000 W), and the comparison result is outputted to the power request excess decision device 93.

The power request excess decision device 93 does not output a signal when the total power is within 8000 W (excess is 0), and when the total power is larger than 8000 W the power request excess decision device 93 outputs the excess amount to the power usage reduction decision device 94. The power usage reduction decision device 94 returns the same usable power as the requested power to each of the power usage control devices 8A to 8D of the kitchen electric appliances KP when no output is made from the power request excess decision device 93, and decides, when the excess amount is outputted, a reduction amount of the power consumption of each of the kitchen electric appliances KP on the basis of the excess amount of the total power and the priority order determined by the priority order setting device 95, and responds to the power usage control devices 8A to 8D of the kitchen electric appliances KP.

The first time point that the power instruction apparatus 9 receives the power request from the kitchen electric appliance KP is when the main power of one of the kitchen electric appliances KP has been turned on or cooking start instruction has been made. For example, when the plug at the distal end of the power cord of the rice cooker 3 is inserted in a power supply port (power outlet or receptacle) and then a predetermined operation is performed (e.g., press rice cooking start key), the rated maximum power of the rice cooker 3 is requested. In the case of the built-in type induction heating cooker 2, when the main power switch is pressed so as to turn on the main power supply and then the heater is selected and the heating power is set (or, at latest, when the heating operation is started after the heating power is set), the power request is received. Here, a specific heating power such as 1000 W may be automatically set as a default value (initial value) at the time point that the heater of the induction heating cooker 2 is selected, however in this case the power including the power required by the internal electric parts of the induction heating cooker 2 (e.g., rated maximum power of the motor for the cooling fan) in addition to the heating power 1000 W (e.g., 1050 W) is determined as the requested power transmitted to the power instruction apparatus 9. Unless permission is received from the power instruction apparatus 9 in response to the power request, the operation with the requested power is unable to be started. This is because the power usage control devices 8A to 8D each restrict the power supply to the corresponding kitchen electric appliance KP.

In other words, the power usage control devices 8A to 8D each control the power of the corresponding kitchen electric appliance KP within the power consumption permitted by the power instruction apparatus 9, and reduces the power consumption in the case where the power consumption reduction instruction is received from the power instruction apparatus 9 so as to control the power of the kitchen electric appliance KP within the reduced power consumption limit. The power instruction apparatus 9 is configured to permit the upper power limit usage for each individual kitchen electric appliance KP, taking into account the total electric power in advance, instead of collectively setting the total electric power for the plurality of kitchen electric appliances KP. Accordingly, for example in the case of the induction heating cooker 2, a specific value of the upper limit is determined, such as 4000 W in response to the power request of 4800 W.

Likewise, when the air-conditioning apparatus 7 is in use, the power usage control device 8E transmits the power request signal to the power instruction apparatus 9, and when the power consumption reduction instruction is received from the power instruction apparatus 9 in response, the power usage control device 8E accordingly reduces the power consumption of the air-conditioning apparatus 7. This also applies to the dish washer-dryer 6.

As described above, in the power control system for electric appliance according to Embodiment 1, the power instruction apparatus 9 determines the reduction amount of power consumption with respect to each of the kitchen electric appliances KP according to the predetermined priority order, so that the total of the requested power from the power usage control devices 8A to 8D of the respective kitchen electric appliances KP does not exceed the capacity of the circuit breaker BK, and outputs the instruction to the power usage control devices 8A to 8D of the respective kitchen electric appliances. Consequently, the total power consumption can be prevented from exceeding the capacity of the circuit breaker. Unlike the conventional mechanical method of limiting the power supply, the power supply to the kitchen electric appliances KP which require a sufficient power in order to maintain the cooking quality and cooking work efficiency can be secured with priority.

In addition, the power instruction apparatus 9 instructs the kitchen electric appliance KP of a lower priority order to reduce the power consumption, which facilitates other kitchen electric appliances KP to maintain the cooking quality and cooking work efficiency.

As already stated, the kitchen electric appliances KP are given the priority order. Specifically, the priority is given in the order of the rice cooker 3, the induction heating cooker 2, and the oven range 5 from the highest, such that the kitchen electric appliances that do not cause much inconvenience to the user even though the power is reduced are given lower ranks. In other words, when the power has to be reduced, the power is reduced in the order of the oven range 5, the induction heating cooker 2, and the rice cooker 3. However, in the case where reducing the power of the oven range 5 according to the priority order of these home electric appliances is not sufficient for achieving the required power reduction, the induction heating cooker 2 is designated as object of power reduction, among the specific kitchen electric appliances KP in which "priority cooking menu time zone" is specified. In this case, however, until "priority cooking menu time zone" is over, the power instruction apparatus 9 does not reduce the power for the heating source of the kitchen electric appliance KP currently cooking the priority cooking menu. In this case, the power reduction instruction is outputted to the rice cooker 3, which is currently in the next rank in priority order. When the air-conditioning apparatus 7 and the dish washer-dryer are both being used, the dish washer-dryer 6 is designated as object of power reduction before the induction heating cooker 2 is. When the power reduction of the dish washer-dryer 6 is still insufficient, the air-conditioning apparatus 7 may also be designated as object of power reduction.

Hereunder, description will be given regarding the case where the total value of the power request from the kitchen electric appliances KP summed by the power request adder 91 is below the circuit breaker capacity (e.g., 8000 W) and hence the power reduction instruction is not outputted, but the user has spontaneously reduced the power consumption upper limit in view of the screen 100A of the use limit setting device 96. In other words, the case where the user sets "second capacity limit" will be described.

Referring to Fig. 52, at step (hereinafter, S) 1, the power instruction apparatus 9 decides that the instruction of total power reduction has been given from outside (S1).

The power instruction apparatus 9 compares between the new upper limit (e.g., 7000 W) and the power request from the kitchen electric appliances KP with the comparator 92 (S2), and determines the power reduction amount with the power usage reduction decision device 94 when the power request exceeds the upper limit (S3).

The power instruction apparatus 9 outputs the power reduction instruction to the kitchen electric appliances KP being used. The induction heating cooker 2, which had started the heat cooking prior to S1, reduces the power consumption according to the instruction. In the case where the power reduction amount is 1000 W, and the total power usage of the induction heating cooker 2 is 4200 W, the heating power of the first heater 2L being 3000 W and the heating power of the second heater 2R being 1000 W, and both heaters performing the water heating menu (non-priority cooking menu), the induction heating cooker 2 reduces the total heating power to 3000 W (S4), thereby reducing the power consumption to 3200 W. Here, 200 W corresponds to the power consumption of the built-in electric parts such as the fan. Then induction heating cooker 2 notifies the power instruction apparatus 9 to the effect that the power consumption has been reduced by 1000 W.

In the power instruction apparatus 9 the power requests from the kitchen electric appliance KP are summed again (S5), and in the case where the total of the power request is still small and allowance exceeding the power reduction amount of 1000 W is available, for example when the total power request at this point is not more than 5900 W while the new upper limit is 7000 W, in which case the allowance of 1100 W is available, the power instruction apparatus 9 proposes (notifies) the induction heating cooker 2 that the power consumption of the induction heating cooker 2 reduced as above may be recovered to the original level. The induction heating cooker 2 does not automatically recover the heating power for safety sake unless an operation for increasing the heating power is performed within a predetermined time after receipt of the notification, however in the case where the user operates the induction heating cooker 2 so as to recover the heating power, for example increases the heating power, the induction heating cooker 2 increases the (total) heating power to the initial level of 4000 W (S6). To simplify the operation to increase the heating power in such a case, a key of "recovery" may be provided in the upper face operation unit 26 of the induction heating cooker 2, so that upon pressing "recovery" key the original heating power is regained, provided that the allowance is available.

In the case where, in the independent induction heating cooker 2, the first heater 2L is performing "frying" and has entered "priority cooking menu time zone" in which a maximum power of 1800 W may be used and the second heater 2R is performing "water heating" (non-priority cooking menu) which consumes 2000 W at maximum, and the power reduction amount instructed by the power instruction apparatus 9 is 1000 W, the second heater 2R performing the water heating is subjected to the power reduction, and the heating power for the water heating is reduced such that the power consumption of the induction heating cooker 2 as a whole is reduced by 1000 W.

In the case where the induction heating cooker 2 is not in use in the situation of Fig. 52, the reduction of power consumption with the induction heating cooker 2 is unfeasible, and therefore the rice cooker 3 is designated as object of power reduction according to the priority order. However, in the case where the rice cooker 3 is in "priority cooking menu time zone" as shown in Fig. 52 when the power usage reduction decision device 94 determines the power reduction amount (S3), the rice cooker 3 is not subjected to the power reduction.

In the kitchen, relatively small electric heaters that receive power through the same circuit breaker BK and consume approximately 1000 W for 10 minutes to 60 minutes are also provided, for example a thermos pot, a hot plate, and an oven toaster, and also a refrigerator. Accordingly, even though the induction heating cooker 2 is used at 4000 W in the kitchen as above, the power consumption of the induction heating cooker 2 may be limited, if the user reduces the total power consumption to 7000 W (sets the second capacity limit) through the use limit setting device 96.

Hereunder, description will be given regarding the case where the power instruction apparatus 9 has outputted an instruction to reduce the total electric power, when the air-conditioning apparatus 7, the induction heating cooker 2, and the rice cooker 3 are being used at the same time.

Fig. 53 represents the case where the total value of the power request from the kitchen electric appliances KP and the air-conditioning apparatus 7 summed by the power request adder 91 is below the circuit breaker capacity (e.g., 8000 W), but the user has spontaneously reduced the power consumption upper limit in view of the screen 100A of the use limit setting device 96.

Referring to Fig. 53, the power instruction apparatus 9 decides that the instruction of total power reduction has been given from outside (S1).

The power instruction apparatus 9 compares between the new upper limit (second capacity limit, e.g., 7000 W) and the power request from the kitchen electric appliances KP and the air-conditioning apparatus 7 with the comparator 92 (S2), and determines the power reduction amount with the power usage reduction decision device 94 when the power request exceeds the upper limit (S3).

The power instruction apparatus 9 then outputs the power reduction instruction to the air-conditioning apparatus 7 in use, according to the priority order. The air-conditioning apparatus 7 reduces the power consumption accordingly (S4). In the case where the power reduction amount is 300 W, the air-conditioning apparatus 7 revises the cooling target temperature from 26 degrees Celsius to 28 degrees Celsius to thereby decreasing the rotation speed of the electric compressor 193 which consumes a largest power in the air-conditioning apparatus 7, this entering an energy-saving operation in which the power consumption is reduced. Here, the power consumption of the electric compressor 193 at a lower rotation speed is determined in advance on the basis of the correlation between the target temperature and the actual indoor temperature obtained through experiments, and such data is stored in the air-conditioning apparatus 7. Therefore, the driving condition of the electric compressor 193 for the power reduction can be instantaneously determined according to the power reduction instruction from the power instruction apparatus 9.

In the case where the air-conditioning apparatus 7 is not in use, neither the rice cooker 3 nor the induction heating cooker 2 are designated as object of power reduction immediately. This is because the rice cooker 3 is performing the high heat phase (boiling phase) H2A and the induction heating cooker 2 is performing the fry cooking, and therefore both are in "priority cooking menu time zone".

Then the air-conditioning apparatus 7 notifies the power instruction apparatus 9 that the power consumption has been reduced by 300 W. In the power instruction apparatus 9 the power requests from the kitchen electric appliance KP and the air-conditioning apparatus 7 are summed again (S5), and in the case where the total of the power request is still small and the allowance exceeding the power reduction amount of 300 W is available, for example when the total power request at this point is not more than 6500 W while the new upper limit is 7000 W, in which case the allowance of 500 W is available, the power instruction apparatus 9 proposes (notifies) the air-conditioning apparatus 7 that the power consumption of the air-conditioning apparatus 7 once reduced by 300 W may be recovered to the original level. The air-conditioning apparatus 7 automatically resumes the operation with the target temperature of 26 degrees Celsius, within a predetermined time after receipt of the notification (S6). The air-conditioning apparatus 7 transmits, upon reducing the power consumption and upon recovering the power, the information about the power consumption to the power instruction apparatus 9 as shown in Fig. 53.

As described above, the kitchen electric appliances KP transmits the operation information (selection of cooking menu, setting of heating power) to the power instruction apparatus 9 at each occasion, throughout the process from turning on to turning off of the power supply. The air-conditioning apparatus 7 also transmits the operation information (selection of cooling/heating operation menu, setting of target temperature) to the power instruction apparatus 9 at each occasion, throughout the process from turning on to turning off of the power supply. Therefore, the power instruction apparatus 9 can constantly recognize the power usage status of a plurality of home electric appliances EE. This aspect will be described in further details hereunder.

Fig. 54 is a timechart showing how the operation information (selection of cooking menu, setting of heating power) is transmitted to the power instruction apparatus 9 at each occasion throughout the process from turning on to turning off of the power supply, with respect to the induction heating cooker 2 as a typical example. The other kitchen electric appliances KP and the air-conditioning apparatus 7 are also transmitting the operation information to the power instruction apparatus 9 at each occasion, basically in the same way.

In Fig. 54, L1 to L7 denote the operation information signal transmitted from the induction heating cooker 2 to the power instruction apparatus 9. L1 denotes the signal indicating the turning on of the main power supply, L2 denotes the selection information of the heater, namely the first heater 2L in Fig. 54. L3 denotes the selection information of the cooking menu, indicating that "frying" has been selected from among the cooking menus of water heating, stewing, fry cooking, and so forth. As described earlier, the induction heating cooker 2 is configured to acquire the time zone-classified electricity rate information, however it is not necessary to acquire the rate each time the main power supply to the induction heating cooker 2 is turned on. In addition, when "frying", a nonspecific menu, is selected as shown in Fig. 54, the time zone-classified electricity rate information is not notified to the user. However, if the time zone-classified electricity rate is to be acquired, the time point of the acquisition is between the signals L3 and L4 in Fig. 54. The induction heating cooker 2 transmits a signal requesting for the information to the power instruction apparatus 9, and analyzes the signal returned from the power instruction apparatus 9 thereby acquiring the time zone-classified electricity rate information.

L4 denotes the information indicating that the inverter circuit 33L has actually been activated and the induction heating has been started. L5 denotes the information indicating that the frying phase has been started. As described earlier the process including the frying phase and the power increasing phase is defined as "priority cooking menu time zone", and the power reduction is not performed by operation or instruction from outside in this time zone. Accordingly, whether the induction heating cooker 2 is actually in "priority cooking menu time zone" is decided depending on whether the information L5 has been transmitted (but before transmission of information L6). L6 denotes the information indicating that the operation of the inverter circuit 33L has actually been stopped and the induction heating has been finished. L7 denotes the information indicating that the main power supply has been turned off. The information L1 to L7 are accompanied with the time of day of the transmission, to the second.

As is apparent from Fig. 54, in the entire process of the induction heating cooker 2 from turning on to turning off of the power supply, the operation with reduced power can be performed according to the power reduction instruction from the power instruction apparatus 9, in the time zone other than the period between the signals L1 and L4 and "priority cooking menu time zone". The time zone between the signals L1 and L4 is the phase where the cooking menu has not been fixed and "frying" may be selected immediately thereafter, and therefore this phase is designated as preliminary period exempted from the power reduction. During the phase from L1 to L4 the heating operation has not started substantially, and therefore a visible effect of power reduction can barely be expected even though the phase from L1 to L4 is designated as object of power reduction.

In contrast, in the process of for example "water heating", in which "priority cooking menu time zone" is not specified, the power supply can be reduced any time, whenever the power reduction instruction is received. Even when the heating operation is started in the process of performing "water heating" as cooking menu as shown in Fig. 54, the power can be reduced at any desired time.

Fig. 56 is a timechart showing the process of performing the cooking menu for which a different "priority cooking menu time zone" is specified. Fig. 56 represents the case where the induction heating cooker 2 is performing the cooking menu of "preheating". The information L3 indicates that the cooking menu of "preheating" has been selected out of various cooking menus. L4 denotes the information indicating that the inverter circuit 33L has actually been activated and the induction heating has been started. Here, although "preheating" requires a heating power of approximately 1500 W at maximum, "preheating" is not classified as specific menu since the timing for such a menu is unable to be shifted.

L5 denotes the information indicating that the temperature detection circuit (temperature detection device) 150 has detected that the temperature of the heating object N, for example the frying pan, has reached a preheating temperature set by the user (e.g., 160 degrees Celsius). After the preheating temperature is detected, the controller 32 automatically adjusts the heating power for the inverter circuit 33L so as to maintain the preheating temperature.

At the point of the information L5, "priority cooking menu time zone" is entered. Accordingly, the power reduction based on operation or instruction from outside is invalid after the point of L5. In case that the heating power accidentally falls in "priority cooking menu time zone" the preheating temperature is unable to be maintained, and therefore when the user starts to cook (e.g., rolled egg) believing that the desired preheating temperature has been reached, the user is unable to satisfactorily perform the cooking because the temperature of the frying pan is only 140 degrees Celsius or so.

L6 denotes the information indicating that the operation of the inverter circuit 33L has actually been stopped and the induction heating has been finished. L7 denotes the information indicating that the main power supply has been turned off.

As is apparent from Fig. 56, in the entire process of the induction heating cooker 2 from turning on to turning off of the power supply, the operation with reduced power can be performed according to the power reduction instruction from the power instruction apparatus 9, in the time zone other than the period between the signals L1 and L4 and "priority cooking menu time zone". The time zone between the signals L1 and L4 is the phase where the cooking menu has not been fixed and "automatic stewing" may be selected immediately thereafter, and therefore this phase is designated as preliminary period exempted from the power reduction. During the phase from L1 to L4 the heating operation has not started substantially, and therefore a visible effect of power reduction can barely be expected even though the phase from L1 to L4 is designated as object of power reduction.

As stated earlier, in the power control system according to Embodiment 1 the power instruction apparatus 9 gives the highest priority order to the power request from the rice cooker 3, so as to secure the power for the rice cooker 3 with highest priority. Accordingly, the power for the rice cooker 3 is kept from being reduced once the boiling phase is entered despite the total power usage being about to exceed the capacity of the circuit breaker BK (8000 W) or the upper limit set by the user (e.g., 7000 W), and therefore excellently finished rice can be enjoyed.

In the case of the dish washer-dryer 6, when the power is reduced during the washing process, the rotation speed of the motor driving the washing pump 174 is decreased and the supply capacity of water or hot water significantly declines. Accordingly, the power of water flow injected from the washing nozzle 169 is weakened and stains such as residual grains become unable to be completely removed. In Embodiment 1, therefore, the power necessary for the washing process is maintained, and hence the time zone of the washing process corresponds to "priority cooking menu time zone" specified in the induction heating cooker 2 and the rice cooker 3, and is exempted from the power reduction by the power instruction apparatus 9. Accordingly, during the washing process the jet water flow from the washing nozzle 169 can be secured and the stain removing performance can kept from being degraded. However, the priority for securing the power for the dish washer-dryer 6 is lower than that of the induction heating cooker 2 and the rice cooker 3, the dish washer-dryer 6 is subjected to the power reduction in the case where the capacity of the circuit breaker BK is about to be exceeded. In addition, the power consumption of the heater 170 is considerably large (800 W) as stated above, and reducing the power for the heater 170 barely affects the washing performance itself, though it takes longer before the temperature of the washing liquid is sufficiently increased. Therefore, the control unit 172 is programmed in advance such that the washing process is not specified as a zone corresponding to "priority cooking menu time zone" of the induction heating cooker 2 and the rice cooker 3.

When the power is reduced, the washing process is temporarily suspended, and therefore when the power is recovered and the washing process is resumed the temperature of the washing water may have dropped because of the interruption. In such a case, the time for heating the washing liquid so as to increase the temperature to a predetermined temperature is needed, and hence the overall operation time is prolonged. Therefore, a message to the effect that the washing is temporarily suspended is displayed in the display unit 191 when the washing process is suspended, and also a message to the effect that it will take longer before the scheduled washing is completed is displayed when the washing is resumed, with a specific indication of the time prolonged.

In the case of the induction heating cooker 2, the cooking time has to be prolonged because power has been reduced in the process other than "priority cooking menu time zone", and therefore the initially set cooking time is prolonged and the notice to this effect is outputted to the user. On the part of the power instruction apparatus 9, the progress of the heating process has been recognized in view of the signals L1 to L4 from before the power reduction, and therefore misrecognition of the finish time of the heating operation, as well as increase of power usage based on the misrecognition can be avoided.

Fig. 57 is a timechart for sequentially explaining how the home electric appliance such as the induction heating cooker 2 can recognize whether the home electric appliance is the object of power control of the power instruction apparatus 9, and L1 to L7 in Fig. 57 each denote the operation information signal transmitted from the induction heating cooker 2 to the power instruction apparatus 9, as described above. LM denotes a signal for inquiring whether the healthcare information is stored in the power instruction apparatus 9.

AS1 denotes an object appliance registration signal transmitted from the power instruction apparatus 9 to the induction heating cooker 2 upon receipt of the operation information signal L1 from the induction heating cooker 2. The operation information signal L1 contains the appliance code for identifying the induction heating cooker 2, and therefore the power instruction apparatus 9 transmits the object appliance registration signal AS1 only to the induction heating cooker 2.

The object appliance registration signal AS1 indicates that the induction heating cooker 2 is electrically connected to the power instruction apparatus 9 and may receive the power instruction signal from the power instruction apparatus 9 thus to be subjected to power reduction.

The object appliance registration signal AS1 outputted from the power instruction apparatus 9 is received by the power usage control device 8A of the induction heating cooker 2, and enters the interface unit of the display unit driver circuit 35 shown in Fig. 27 through the controller 32. Then the display controller 35B recognizes the receipt of the object appliance registration signal AS1, and the letters "object of power reduction" as shown in Fig. 31 are displayed in the display screen 129 of the central display section 16, as first information sign 210A. Before the receipt of the object appliance registration signal AS1, the display unit driver circuit 35 is driven by the controller 32 so as to display necessary information as shown in Fig. 31, because the main power is turned on. Accordingly, in the case where the exclusive caution information light 430 serving also as the display instruction switch is lit up as shown in Fig. 25, and the healthcare data stored in the power instruction apparatus 9, in particular the caution data, is retrieved into the induction heating cooker 2 and notified to the user through the display screen already activated by the display controller 35B, when the user presses the caution information light 430. After the generation of the signal LM shown in Fig. 57 also, the caution data can be displayed in the display screen 129 by pressing the caution information light 430.

Then the operation information signal L4 indicating that the inverter circuit 33L has actually been activated and the induction heating has started is transmitted to the power instruction apparatus 9 through the power usage control device 8A. Further, the display unit driver circuit 35 changes the content on the central display section 16, when the induction heating cooker 2 receives a request signal (advance notice signal) AS2 from the power instruction apparatus 9 indicating that the total electric power of all the home electric appliances connected to the power instruction apparatus 9 is to be reduced. When the request signal is received, the first information sign 210A in the central display section 16 of the induction heating cooker 2 is erased and instead the second information sign 210B is displayed in order to notify the user that the power should be reduced. For example, such a message as "power reduction request received" or "requested to reduce power" is displayed in white letters on colored background.

The power reduction request signal AS2 is an instruction of the power instruction apparatus 9 urging prompt power reduction, and in the case where the total electric power is not reduced within a predetermined time after the transmission of the signal AS2, the power instruction apparatus 9 forcibly reduces the power. Accordingly, the power instruction apparatus 9 transmits a power reduction instruction signal AS3 to the power usage control device 8A within a predetermined time (e.g., a few seconds to 10 seconds) after the transmission of the power reduction request signal AS2. When sufficient allowance of the power becomes available, for example because one or more of the home electric appliances have spontaneously reduced the power within the predetermined time, or because the user has reduced the upper limit to 7000 W through the use limit setting device 96, the power reduction request signal AS2 may be revoked and the power supply to other home electric appliances may be maintained unchanged. Even though the power reduction request signal AS2 is revoked, the first information sign 210A of "object of power reduction" is again displayed and remains on all the electric appliances that had received the object appliance registration signal AS1 earlier.

In the case where the power reduction instruction signal AS3 is outputted, the display unit driver circuit 35 changes the content of the central display section 16 and displays the third information sign 210C such as "power reduced" in the display screen 129 (see Fig. 35).

As shown in Fig. 57, the period between the time that the power reduction request signal AS2 requesting reduction of the total electric power is received and the time that the power reduction is actually executed will be referred to as "grace period" TS. The grace period is provided in expectation of spontaneous power reduction by the user of the home electric appliance, and set in a minimum time necessary to do so. The grace period may be displayed in increments of 1 second, for example. For example, the remaining time may be displayed in the display screen 129 in a count-down mode, such as 10 seconds, 9 seconds, 8 seconds, and so on. Alternatively, a figure like a bar-graph that becomes shorter every second may be displayed, to visually notify the user that the grace period is about to end.

In the examples described above, the first information sign 210A and the second information sign 210B are displayed in the central display section 16 of the induction heating cooker 2, however such information may be displayed in a different position. In addition, the mentioned information may be displayed on a display unit of other home electric appliances EE as well, for example the rice cooker 3.

In Embodiment 1, as may be understood through the foregoing description, for example the induction heating cooker 2 is configured to accept, throughout the process from turning on to turning off of the power supply except for "priority cooking menu time zone", the power reduction in compliance with the power reduction request from the power instruction apparatus 9. Therefore, the first information sign 210A of "object of power reduction", indicating that the induction heating cooker 2 may receive the power reduction request signal during the operation, is displayed in the display screen 129 of the central display section 16. In addition, when the power reduction request is received the second information sign 210B appears in the display screen. When the power is actually reduced, the third information sign 210C is displayed in the display screen 129.

Further, the fourth information sign 210D is displayed for indicating that in "priority cooking menu time zone" the power reduction is not applied despite an instruction having been received from outside the induction heating cooker 2. Therefore, the user can recognize the influence of the power reduction instruction on the heating cooker being used, in view of the first to fourth information signs. To be more detailed, when the induction heating cooker 2 receives the object appliance registration signal AS1, the first information sign 210A of "object of power reduction" is displayed first in the display screen 129 of the central display section 16 as shown in Fig. 31. However, when the induction heating cooker 2 starts the boil cooking thereby entering "priority cooking menu time zone", no message is displayed in the display screen 129 and no voice guidance is outputted, even though the induction heating cooker 2 receives the power reduction request signal AS2 in this time zone. Such an arrangement prevents the user from being induced to reduce the heating power in haste during the boiling process.

Alternatively, during the time that the heating operation of "priority cooking menu time zone" is being performed, a voice guidance such as "Power reduction request has been received but power is automatically maintained for this important process. Power may be reduced when the current process is over" may be outputted so as to ensure that the user recognizes the situation. Naturally, such a message may be displayed in letters in the display screen 129.

In the examples described above, the time zone-classified electricity rate information and the information of the time that power is supplied to the heating device are displayed at the same time. Here, the expression "at the same time" means that both information are displayed together for a predetermined period of time so that the user can visually compare the electricity rate classification information and the power supply time information, and not that each information appears exactly simultaneously.

Hereunder, the case of revising a reservation time of the "start time (reserved start time A)" of the first home electric appliance, and the case of revising a reservation time of the "finish time (reserved finish time A)" of the first home electric appliance will be described, as one of the distinctive features of Embodiment 1.

Fig. 58 is a flowchart showing an operation of the control unit 125 of the power instruction apparatus 9. The basic operation program (information processing program) shown in the flowchart is stored in the semiconductor memory (ROM) in the microcomputer (not shown) constituting the control unit 125 of the power instruction apparatus 9.

The following description refers to the case where the occupant B (user B) made rice cooking reservation with the rice cooker 3 beforehand, and set "finish time" to 20:00 (8 p.m.).

When the occupant B, who went out after making the rice cooking reservation, changed the predicted home arrival time to 22:00 from a remote facility 79 as shown in Fig. 2 using the mobile phone terminal 87 exclusive to the occupant B, the information of the scheduled (predicted) home arrival time is transmitted from the mobile phone terminal 87 and reaches the power instruction apparatus 9 through the wide area communication network (communication network) 98. More specifically, the information reaches the control unit 125 through the input/output terminal 124B (step 1; hereinafter "step" will be denoted by "SU").

Then the control unit 125 of the power instruction apparatus 9 identifies the home electric appliance EE in which the reservation time (operation start time or operation finish time) acquired in advance from the home electric appliances EE is set, and compares the reservation time with the scheduled home arrival time (SU2).

It is decided through the comparison whether there is a time difference of 30 minutes or more (SU3), and when the time difference is 30 minutes or more the control unit 125 outputs an instruction to change the reservation time so as to match the scheduled (predicted) home arrival time, to the home electric appliance (SU4). Accordingly, the reserved cooking finish time of the rice cooker 3 is revised to 22:00.

A reason of setting the threshold of 30 minutes is that revising the reservation time each time a minor schedule change is made may force the home electric appliance to perform an operation that may impose thereon an adverse impact. For example, it generally takes approximately 30 minutes before the rice cooker finishes the boiling phase after the rice cooking started and therefore, although "finish time" is advanced by 20 minutes because the home arrival time is unexpectedly advanced by 20 minutes, the rice cooking is unable to be completed before the scheduled home arrival time. Accordingly, in the case where the difference is less than 30 minutes as result of the comparison at SU3, SU4 is skipped, in other words the reservation change instruction is not outputted.

Fig. 59 is a flowchart showing an actual operation of the control unit 125 of the power instruction apparatus 9. The basic operation program (information processing program) shown in this flowchart is stored in the semiconductor memory (ROM) in the microcomputer (not shown) constituting the control unit 125 of the power instruction apparatus 9.

The following description refers to the case where the occupant B (user B) made rice cooking reservation with the rice cooker 3 beforehand, and set "finish time" to 20:00 (8 p.m.).

When the occupant B, who went out after making the rice cooking reservation, changes the predicted home arrival time to 22:00 using the mobile phone terminal 87, the information of the scheduled (predicted) home arrival time reaches the control unit 125 of the power instruction apparatus 9 (SU1).

Then the control unit 125 of the power instruction apparatus 9 identifies the home electric appliance EE in which the reservation time (operation start time or operation finish time) acquired in advance from the home electric appliances EE is set, and compares the reservation time with the scheduled home arrival time (SU2). To be more detailed, in the case where reservation has been made only with the rice cooker 3, the control unit 125 compares between the reservation time (finish time in the case of rice cooker) 20:00 of the rice cooker 3 and the scheduled home arrival time 22:00 (SU2).

It is decided through the comparison whether there is a time difference of 30 minutes or more (SU3), and when the time difference is 30 minutes or more the control unit 125 compares between the electricity unit rate applied to the time zone before the change and the electricity unit rate applied to the time zone after the change (SU4), before outputting to the rice cooker 3 the instruction to change the reservation time so as to match the scheduled (predicted) home arrival time of 22:00. In this case, indices of "high" and "low" may be prepared with reference to the time zone-classified electricity unit rate for comparison purpose, instead of comparing the specific values of the electricity unit rate.

In the case where the reservation time is changed to the time zone where the unit rate is increased (economically disadvantageous time zone) as result of the comparison, the control unit 125 notifies the mobile phone terminal 87 of the occupant who transmitted the information of the scheduled (predicted) home arrival time (22:00) to the effect that the changed home arrival time corresponds to the time zone where the electricity rate is disadvantageous. For example, a predetermined mail such as "With the change of rice cooking reservation time because of the delay of home arrival time, electricity rate is increased from "low" to "medium"" is transmitted to the mobile phone terminal 87 (SU6). The occupant B may transmit a revised home arrival time in view of such a mail.

Here, in the example of the rice cooker 3 cited above, although the reserved cooking finish time is changed from 20:00 to 22:00, "morning/evening hours" emcompasses both before 20:00 and before 22:00 and hence there is no gain or loss in terms of the electricity rate.

The control unit 125 then decides whether the revised reservation time (operation start time or operation finish time) of the electric appliance adjusted to the scheduled home arrival time overlaps "operation restriction time zone" specified in specific home electric appliances (SU7). The "operation restriction time zone" is, for example in the case of the self-running vacuum cleaner 320, from 22:00 (10 p.m.) to 6 a.m. next morning. The home electric appliances for which "operation restriction time zone" is to be specified and the hours thereof can be individually set by the user (occupant) in the power instruction apparatus 9. This is because when the self-running vacuum cleaner 320 is operated, the blower motor generates operation noise, which not only disturbs the slumber of the occupants but also causes annoyance to the neighborhood with the noise, especially in a condominium.

The "operation restriction time zone" is not specified in the rice cooker 3, and therefore the decision at SU7 is YES, and the operation proceeds to SU8. At SU8, it is decided whether the environmental conditions are satisfied when the relevant electric appliance is operated at the revised reservation time. In the case of the rice cooker 3 for example, the control unit 125 decides as "suitable" when the room temperature is between 2 degrees Celsius and 35 degrees Celsius, in accordance with the information in the environment detection unit 202 as shown in Fig. 60. According to the example shown in Fig. 60, when the room temperature of the kitchen is 4 degrees Celsius at the rice-cooking start time (e.g., 21:20), the rice cooking operation is started at 21:20 (more specifically, the water absorption phase is started at 21:20). In the case where the room temperature is 0 degrees Celsius, the water in the steam collection device of the rice cooker may be frozen and the collection of the generated steam may be impossible, because of which the temperature range shown in Fig. 60 is adopted to decide whether to start the rice cooking. Here, normally the rice cooking operation is automatically shifted to the keep-warm phase after the rice cooking phase is over, and the keep-warm phase continues 7 hour s at maximum. In the rice cooker 3 whether to perform the keep-warm phase can be selected before the rice cooking is started, and in the case where the keep-warm phase is cancelled the power consumption is accordingly reduced. In this case, however, the cooked rice may go bad when the room temperature is high, and therefore the control unit 125 decides as "suitable" when the room temperature is between 2 degrees Celsius and 23 degrees Celsius, in accordance with the information in the environment detection unit 202 as shown in Fig. 60. For example, in the case where the room temperature of the kitchen is 30 degrees Celsius at the time that the boiling phase is over and the keep-warm phase is about to be entered, the keep-warm operation is not cancelled despite the "keep-warm cancel" mode is selected, and the cooking operation is automatically shifted to the keep-warm phase.

At SU9 in Fig. 59, it is decided whether the reservation time should be changed, on the basis of the environmental condition such as room temperature in the living room where the home electric appliances are provided, in other words "environmental condition acceptability" is decided. The "permission criteria" that serve as reference for this decision are specified by the control unit 125 of the power instruction apparatus 9 and stored in advance in the storage unit 149.

At SU10 in Fig. 59, amendment possibility is examined. Regarding the air-conditioning apparatus 7 for example, when the reserved operation does not satisfy the environmental condition (e.g., room temperature is too low to perform cooling operation), the operation may be shifted to the energy-saving mode, for example by raising the target room temperature or lowering the cooling capacity. Accordingly, it is decided whether such operating conditions (heating amount, motor output, cooling capacity, and so on) can be amended. When the amendment is possible the amendment is performed (SU10), and the control unit 125 of the power instruction apparatus 9 outputs the operating condition change instruction to the relevant home electric appliance (in this case, air-conditioning apparatus 7).

In the case where it is decided that the environmental conditions are satisfied at SU8, and after the operation is switched to the energy-saving mode at SU10, the reservation time (operation start time or operation finish time) is revised. To be more detailed, the control unit 125 of the power instruction apparatus 9 outputs the change instruction of the start time or finish time to the relevant home electric appliance (SU11), and the home electric appliance revises the start time or finish time in accordance with the change instruction. In the case of the rice cooker 3, the reservation is rewritten such that the rice cooking is to finish at 22:00.

At SU9 in Fig. 59, it is decided whether the reservation time should be changed, on the basis of the environmental conditions such as room temperature in the living space where the home electric appliances are provided, in other words "environmental condition acceptability" is decided. The "permission criteria" that serve as reference for this decision are specified by the control unit 125 of the power instruction apparatus 9 and stored in advance in the storage unit 149.

In contrast, in the case where the operation of the home electric appliance enters the operation restriction time zone if the reservation time (operation start time or operation finish time) is changed, such a change of the reservation time is not permissible, and therefore a response of disapproval is outputted (SU12). To be more detailed, the control unit 125 of the power instruction apparatus 9 transmits information indicating the reason of the disapproval to the mobile phone terminal 87 through the wide area communication network (communication network) 98. Accordingly, the occupant who intends to use the self-running vacuum cleaner 320 can recognize, in view of the information from the power instruction apparatus 9, that the home arrival time is close to midnight and hence the self-running vacuum cleaner 320 is unusable from the viewpoint of noise problem.

Also in the case where "environmental condition acceptability" is denied at SU8 and the change of operation mode at SU10 is impossible, the operation equally proceeds to SU12 and the power instruction apparatus 9 transmits the information indicating the reason of the disapproval, and the sequential process is finished. When the response of disapproval is outputted at SU12 various response messages may be used depending on the type of the electric appliance and the environmental conditions. Such responses are prepared in predetermined patterns in advance and stored in the storage unit 149, and the control unit 125 selects an appropriate one each time and transmits the selected one. The responses may preferably be briefly composed, such as "Use prohibited because of midnight time zone" or "Unusable due to low indoor temperature" when the disapproval is based on, for example, the operation restriction time zone. A reason of transmitting the reason of the disapproval is to provide the occupant (user) with exact information. To be more detailed, in the case where changing the home arrival time does not automatically achieve the change of the reservation time (operation start time or operation finish time) of the home electric appliance, the power instruction apparatus 9 notifies the occupant (user) to this effect, and therefore the occupant (user) can be made aware before arriving home that the response of disapproval has been received, and predict the operation status of the home electric appliance. Depending on the case, the user may think of expediting the home arrival time, or revise the details of the reservation of the home electric appliance.

In the case where it is decided throughout the mentioned process that the reservation time should be changed, control unit 125 outputs the instruction to change the initially set reservation time (operation start time or operation finish time) so as to match the scheduled home arrival time that has been notified, to the home electric appliance (SU10 in Fig. 59).

Although the home electric appliance in which the start time (reserved start time A) can be reserved ("operation reservable appliance") is exemplified by the self-running vacuum cleaner 320 and the air-conditioning apparatus 7 in the foregoing description, examples of such a home electric appliance also include:
(1) Dish washer-dryer 6
(2) Lighting equipment 76
(3) Air purifier (not shown)
(4) Electric heater (electric hot air heater, electric floor heater) (not shown)

In addition, although the first home electric appliance in which the finish time (reserved finish time A) can be reserved is exemplified by the rice cooker 3 in the foregoing description, examples of such a home electric appliance also include:
(1) Air-conditioning apparatus 7
(2) Dish washer-dryer 6

Thus, the air-conditioning apparatus 7 and the dish washer-dryer 6 are the home electric appliances in which the start time and the finish time can both be reserved.

Fig. 61 to Fig. 64 are timecharts for explaining a configuration of a household power control apparatus and a power control system including the power control apparatus, according to a first aspect of the present invention.

The power instruction apparatus 9 shown in Fig. 61 to Fig. 64 includes the presence detection device 10 that detects presence of one or more occupants, the exclusive user information storage unit (storage unit 149) containing exclusive user information in which a specific home electric appliance for exclusive use by the occupant B (exclusive electric appliance) in the plurality of home electric appliances EE and information for identifying the occupant B are associated with each other, the use limit setting device 96 that limits power usage of each of the home electric appliances EE, and the control unit 125 that permits or restricts the operation of the home electric appliances.

The control unit 125 decides, upon receipt of a signal requesting permission of use from the exclusive electric appliance, whether the exclusive user and the occupant B at home are the same, on a basis of the exclusive user information in the exclusive user information storage unit and the occupant information detected by the presence detection device, and outputs a signal permitting the exclusive electric appliance (e.g., induction heating cooker 2) to start operation, when the exclusive user and the occupant B at home are the same.

The examples shown in Fig. 61 to Fig. 64 are based on the situation where the occupant A, the occupant B, the occupant C, and the occupant D are all away from home. As described earlier, the occupant A is the father, the occupant B is the mother, the occupant C is the elder child (10 years), and the occupant is the younger child (7 years). The occupant B carries the mobile phone terminal 87 when she goes out. In the kitchen a thermos pot (not shown) is provided, which is also subjected to reduction of the power consumption by the power instruction apparatus 9 like the induction heating cooker 2 (thermos pot is not shown in Fig. 22 either).

Fig. 61 will be described on the premise mentioned above. Fig. 61 represents the case where the occupant B comes home first. The steps performed by the power instruction apparatus 9 are denoted by S61 to S67. Arrows in Fig. 61 to Fig. 64 represent that notifications or instructions have been made. The timing of the notifications and the instructions is sequentially denoted by M1, M2, M3 ... in Fig. 61 to Fig. 64.

When the occupant B comes home first and unlocks the electronic lock of the entrance (inputting the password or biological information authentication), the entrance electronic lock 19 transmits an unlock signal to the personal authentication unit 29 (M1), and a signal representing the decision result whether the person is the occupant B is inputted to the presence detection unit 10. The presence detection unit 10 transmits a home arrival signal of the occupant B to the control unit 125, to thereby update the presence information in the storage unit 149 (in this case, "all are absent" is updated to "only occupant B is at home") (S61).

In the case where the living space is dark, the control unit 125 turns on the light located outside and inside of the entrance, out of the common electric appliances designated in advance, to facilitate the occupant B to safely walk into the room. Here, although the environment detection unit 202 may detect whether the living space is dark, the control unit 125 may automatically instruct to turn on the light depending on the home arrival time.

The occupant B goes to the kitchen and uses the thermos pot (not shown) which is one of the common home electric appliances and the rated maximum power of which is 1000 W. When the occupant B operates the operation unit of the thermos pot or connects the power cord, the thermos pot transmits an operation permission request signal (M2), and the control unit 125 of the power instruction apparatus 9 decides whether to permit the request. This decision corresponds to S62 in Fig. 61. To be more detailed, the power request excess decision device 93 decides the power excess amount. When allowance is available with respect to the total power usage, the control unit 125 transmits the operation permission signal to the common home electric appliance (M3). In this case, the upper power limit is set to 1000 W. In response, the home electric appliance (thermos pot) transmits the operation start information indicating that the maximum power value is 850 W, to the control unit 125 of the power instruction apparatus 9 (M4). The control unit 125 of the power instruction apparatus 9 updates the power consumption of the common home electric appliances to 900 W, by adding 900 W of the thermos pot to 50 W of the lighting equipment (S63).

When the use of the thermos pot is finished (power consumption of the common home electric appliances returns to 50 W), the occupant B uses the induction heating cooker 2 registered in advance as exclusive electric appliance of the occupant B. As described with reference to Fig. 26 and Fig. 28, when the occupant B touches the operation button 11 A of the main power switch 11 thereby turning on the power supply, normally the controller 32 activates the display device of the central display section 16, and at the same time the induction heating cooker 2 transmits the operation permission request to the power instruction apparatus 9 (M5). In other words, as described with reference to Fig. 54, the induction heating cooker 2 transmits the operation information signal L1 first, and therefore the first operation information signal L1 indicates that the main power supply has been turned on.

Then the control unit 125 of the power instruction apparatus 9 decides whether to permit the request. This decision corresponds to S63 and S64 in Fig. 61. At S63, since the induction heating cooker 2 is one of the exclusive electric appliances the control unit 125 looks up the memory data stored in advance, to check the right of use of the occupant B at home, and proceeds to S64 upon confirming that the occupant B has the right to use, where the power request excess decision device 93 decides the power excess amount as done at S62. When allowance is available with respect to the total power usage, the control unit 125 transmits the operation permission signal to the exclusive electric appliance (in this case, induction heating cooker 2). In this case, the maximum power consumption of the induction heating cooker 2 is 3000 W, and the upper limit of the power consumption allocated to the occupant B is also 3000 W, and therefore the operation permission signal is outputted, with an upper limit of 3000 W (M6).

When the occupant B actually starts using the induction heating cooker 2 with the power of 2000 W, the information indicating the power of 2000 W is transmitted to the power instruction apparatus 9 (M7), to be used by power request excess decision device 93 for subsequent decision. When the occupant B stops using the induction heating cooker 2, the induction heating cooker 2 transmits the notification signal indicating that the operation has finished to the power instruction apparatus 9 (M8). At this point, the control unit 125 updates the power usage information of the exclusive electric appliance of the occupant B (2000 W to 0 W), and inputs this information in the storage unit 149.

Referring now to Fig. 62, description will be given regarding the case where the occupant C (child) has come home while the occupant B is at home.

When the occupant C unlocks the electronic lock of the entrance (inputting the password or biological information authentication), the signal representing the personal authentication decision result is inputted to the presence detection unit 10 as in the case of the occupant B. The presence detection unit 10 transmits the home arrival signal of the occupant C to the control unit 125 (M9), to thereby update the presence information in the storage unit 149. In this case, "only occupant B is at home" is updated to "occupants B and C are at home". (S68).

When the occupant C attempts to use one of the common home electric appliances (e.g., lighting equipment), the home electric appliance outputs the operation permission request signal (M10), and the control unit 125 of the power instruction apparatus 9 decides whether to permit the request. This decision corresponds to S69 in Fig. 62. To be more detailed, the power request excess decision device 93 decides the power excess amount. When allowance is available with respect to the total power usage, the control unit 125 immediately transmits the operation permission signal to the common home electric appliance (M11). In this case, the upper power limit is set to 300 W, which is the rated maximum power of the lighting equipment. In response, the home electric appliance (lighting equipment) transmits the operation start information indicating that the power consumption is 250 W, to the control unit 125 of the power instruction apparatus 9 (M12). The control unit 125 of the power instruction apparatus 9 updates the power consumption of the common home electric appliances to 300 W, by adding 250 W of the lighting equipment to 50 W of the lighting equipment (S70).

The occupant C then attempts to use the induction heating cooker 2 registered in advance as exclusive electric appliance of the occupant B. As described with reference to Fig. 26 and Fig. 28, when the occupant C touches the operation button 11 A of the main power switch 11 thereby turning on the power supply, normally the controller 32 activates the display device of the central display section 16, and at the same time the induction heating cooker 2 transmits the operation permission request to the power instruction apparatus 9 (M13).

Then the control unit 125 of the power instruction apparatus 9 decides whether to permit the request. This decision corresponds to S71 in Fig. 62. At S71, since the induction heating cooker 2 is one of the exclusive electric appliances, the control unit 125 looks up the memory data stored in advance to check the right of use of the occupant B and the occupant C who are at home, and when it is confirmed that the occupant B has the right to use, the power request excess decision device 93 decides the power excess amount (S72) as done at S69. When predetermined allowance (e.g., 1000 W) is available with respect to the total power usage, the control unit 125 transmits the operation permission signal to the exclusive electric appliance (in this case, induction heating cooker 2) with indication that the upper power limit is 1000 W which corresponds to the allowance (M14). In this case, the maximum power consumption allocated to the occupant B is 3000 W as stated above, and therefore the upper limit of power usage is 3000 W. In this example, it is known that allowance of 2500 W is available with respect to the total power usage, and therefore the control unit 125 outputs the operation permission signal to the induction heating cooker 2, with an upper limit of 2500 W.

When the occupant B (or occupant C supervised by occupant B) actually starts using the induction heating cooker 2 with the power of 2000 W taking into account the cooking mode and the amount of food to be heated, the information indicating the power of 2000 W is transmitted to the power instruction apparatus 9 (M15), to be used by power request excess decision device 93 for subsequent decision. When the occupant B stops using the induction heating cooker 2, the induction heating cooker 2 transmits the notification signal indicating that the operation has finished to the power instruction apparatus 9. At this point, the control unit 125 updates the power usage information of the exclusive electric appliance of the occupant B (2000 W to 0 W), and inputs this information in the storage unit 149 (S73). In the case where the heating power is decreased halfway (e.g., to 1000 W), the information to this effect is immediately transmitted to the power instruction apparatus 9, to be used by the power request excess decision device 93 for subsequent decision.

Referring now to Fig. 63, description will be given regarding the case where the occupant C (child) has come home while the occupant B is away. Although reference codes M20 to M31 are utilized in Fig. 63 and Fig. 64, it is to be noted that the code is not continuous from the series of steps denoted by M1 to M15.

When the occupant C (child) unlocks the electronic lock of the entrance (inputting the password or biological information authentication), the signal representing the personal authentication decision result is inputted to the presence detection unit 10 as in the case of the occupant B. The presence detection unit 10 transmits the home arrival signal of the occupant C to the control unit 125 (M20), to thereby update the presence information in the storage unit 149. In this case, "all are absent" is updated to "only occupant C is at home". (S80).

In the case where the living space is dark, the control unit 125 turns on the light located outside and inside of the entrance, out of the common home electric appliances designated in advance, to facilitate the occupant C to safely walk into the room. Here, although the environment detection unit 202 may detect whether the living space is dark, the control unit 125 may automatically instruct to turn on the light depending on the home arrival time. In this example it is assumed that the occupant C has come home in the daytime, and hence no lighting equipment is turned on. The description given hereunder represents the case where the common lighting equipment is turned on first and the power consumption thereof is 200 W.

The occupant C goes to the kitchen and uses for example the thermos pot (not shown) which is one of the common home electric appliances. When the occupant C operates the operation unit of the thermos pot or connects the power cord, the thermos pot transmits an operation permission request signal (M21), and the control unit 125 of the power instruction apparatus 9 decides whether to permit the request S81). At S81, the power request excess decision device 93 decides the power excess amount. When allowance is available with respect to the total power usage, the control unit 125 transmits the operation permission signal to the common home electric appliance (M22). In this case, the upper power limit is set to 1000 W. In response, the home electric appliance (thermos pot) transmits the operation start information indicating that the maximum power value is 850 W, to the control unit 125 of the power instruction apparatus 9 (M23). The control unit 125 of the power instruction apparatus 9 updates the power consumption of the common home electric appliances to 1050 W, by adding 850 W of the thermos pot to 200 W of the lighting equipment (S82).

The occupant C then attempts to use, while using the thermos pot, the induction heating cooker 2 which is the exclusive electric appliance of the occupant B. When the occupant C touches the operation button 11A of the main power switch 11 thereby turning on the power supply, normally the controller 32 activates the display device of the central display section 16, and at the same time the induction heating cooker 2 transmits the operation permission request to the power instruction apparatus 9 (M24).

Then the control unit 125 of the power instruction apparatus 9 decides whether to permit the request. This decision corresponds to S83 in Fig. 63. At S83, since the induction heating cooker 2 is one of the exclusive electric appliances, the control unit 125 looks up the memory data stored in advance to check the right of use of the occupant C who is at home, and proceeds to 84 upon confirming that the occupant B who is away has the right to use, where the control unit 125 inputs in the storage unit 149 to the effect that the use permission request of the occupant C has been disapproved (S84), and transmits the operation disapproval signal to the exclusive electric appliance (in this case, induction heating cooker 2) (S85). Upon receipt of this signal, the induction heating cooker 2 displays the reason of the disapproval on the display screen 129. The display may be an error code, however it is preferable to display a brief message so that the user (in this case, occupant C) can easily understand. Naturally, a voice message may be outputted by the voice synthesizer 38.

When the control unit 125 of the power instruction apparatus 9 displays the reason of the approval on the display screen 129 of the induction heating cooker 2 as notification of the approval (M25) following the transmission of the operation disapproval signal (S85), a guidance is outputted urging to perform, in the case where use permission request has to be made to the occupant B, a specific operation on the induction heating cooker 2, for example pressing one or a plurality of specific input keys or buttons. When the control unit 125 of the power instruction apparatus 9 detects that such operation has been made, or immediately after or at the same time as the transmission of "disapproval" (S85), the control unit 125 notifies the occupant B who is away to the effect that the use disapproval has been outputted, and asks whether the occupant B accepts the use permission request from the occupant C (M26).

Such an inquiry is transmitted from the input/output terminal 124B of the power instruction apparatus 9 to the wide area communication network (communication network) 98 through the router 99A, and then reaches the mobile phone terminal 87 of the occupant B. In the case where the occupant B responds that the exclusive user may be temporarily changed to the occupant C in view of the inquiry mail transmitted from the power instruction apparatus 9 (M27), the record of the exclusive user in the storage unit 149 is temporarily rewritten and a message to the effect that the occupant C has been granted the right to use is displayed on the screen 100A of the use limit setting device 96, on the part of the power instruction apparatus 9 (S86).

When the occupant C who has been waiting for the permission signal of the right to use again requests the permission to use the induction heating cooker 2 (M28), the control unit 125 of the power instruction apparatus 9 decides whether to permit the request (S87). At S87, the power request excess decision device 93 decides the power excess amount. When allowance (e.g., 2500 W) is available with respect to the total power usage, the control unit 125 transmits the operation permission signal to the induction heating cooker 2. In this case, however, the upper power limit of the occupant C is 2000 W (total power of electric appliances used at a time should be 2000 W or less), and therefore the control unit 125 of the power instruction apparatus 9 does not allow the occupant C to utilize the allowance power (2500 W), and transmits a message to the induction heating cooker 2 to the effect that the "upper limit" is 2000 W which is the maximum power usage allocated to the occupant C (M29). When the occupant C actually starts using the induction heating cooker 2 with power consumption of 2000 W, the information indicating the power of 2000 W is transmitted to the power instruction apparatus 9 (M30), to be used by power request excess decision device 93 for subsequent decision. In addition, the power usage information of the electric appliance exclusive to the occupant B who is still away is updated from 0 W to 2000 W (S88). Although the occupant B has not come home yet, 2000 W is counted as power usage of the occupant B since the occupant B permitted the use.

When the occupant C finishes the cooking and stops using the induction heating cooker 2, the induction heating cooker 2 transmits the notification signal indicating that the operation has finished to the power instruction apparatus 9 (M31). At this point, the control unit 125 updates the power usage information of the exclusive electric appliance of the occupant B (2000 W to 0 W), and inputs this information in the storage unit 149 (S89). The control unit 125 automatically rewrites the exclusive user of the induction heating cooker 2, which is one of the exclusive electric appliances, to the occupant B (S90), and inputs such a change in the storage unit 149 (S91).

As is apparent from the foregoing description, the induction heating cooker 2 according to Embodiment 1 includes the induction heating coils 2RC and 2LC, the upper face operation unit 26 for setting the power supply condition to the heating device and controlling the electric energy, and the controller 32 configured to control the heating device and containing a predetermined heating program. The upper face operation unit 26 includes the central display section 16 (display screen 129) for displaying the power supply condition, and the input devices (time shift keys 230, 231, 212, and so on) for changing the display content in the display section 16 and fixing the power supply condition.

The controller 32 is configured to reduce the power when the conditions for reducing the power are satisfied, upon receipt of the predetermined power reduction request signal AS2 and the power reduction instruction signal AS3 from outside of the induction heating cooker while power is being supplied to the induction heating coils 2RC and 2LC.

The controller 32 is also configured to display the memory 216 and the mark 219 indicating the power supply to the induction heating coils 2RC and 2LC and the time zone-classified electricity rate information 218L and 218M applied to the time of the power supply, in the central display section 16 before the power supply condition is fixed.

The induction heating cooker 2 allows the user to recognize that the power supply to the heating cooker may be reduced in compliance with the power reduction request signal from outside, and be notified, before starting the heating operation, whether a lower electricity rate is applied at the time of use. Accordingly, the user becomes more conscious of the electricity rate when using the induction heating cooker 2 even when the power reduction request is not received from outside, and resultantly the use of electric appliances in each household, in particular during the high-demand time zone in the daytime, can be reduced. In other words, since the user can recognize through the display device the time zone to which the lower electricity rate is applied before setting the condition for the heat cooking, and easily change the use time to the time zone of the lower rate, the induction heating cooker 2 provides a higher level of user-friendliness.

The power control system according to Embodiment 1 includes the circuit breaker BK provided inside the house and configured to cut off the electric circuit when the first capacity limit is exceeded, the plurality of home electric appliances EE each receiving power through the circuit breaker BK and including the power usage measurement unit, and the power instruction apparatus 9 that controls the total power usage of the home electric appliances. The power instruction apparatus 9 is configured to receive the power reduction request information from outside through the communication device. The home electric appliances EE include the induction heating coils 2RC, 2LC, and 45, the reception units 8A and 8B that receive the object appliance registration signal and the power reduction request information from the power instruction apparatus 9, and the display units (central display section 16, LCD unit 49) for notifying the reception result to the user. The home electric appliances EE include the upper face operation unit 26 and the operation unit 43 configured to set the power supply time zone for the induction heating coils 2RC, 2LC, and 45, and the display devices (16, 49) for displaying the time zone-classified electricity rate information 218L and 218M to outside of the home electric appliance 2 and the rice cooker 3, and the display devices (central display section 16, LCD unit 49) are configured to display, before the power supply time zone of the electric energy consuming unit is fixed through the upper face operation unit 26 and the operation unit 43, the time zone-classified electricity rate information 218L and 218M applied when the home electric appliance is used in the power supply time zone to be set.

With the mentioned power control system, the power instruction apparatus 9 receives the power reduction request information from outside of the house through the communication device and reduces the power to the home electric appliances EE, and on the part of the home electric appliance the power supply time zone for the induction heating coils 2RC, 2LC, and 45 can be set and the time zone-classified electricity rate information is displayed. Accordingly, the user can recognize the time zone-classified electricity rate information 218L, 218M to be applied, before the power supply time zone of the electric energy consuming unit is fixed. Therefore, the electric appliance can urge the user to change the time of use to the time zone to which a lower electricity rate is applied. In addition, the power instruction apparatus 9 acquires the time zone-classified electricity rate information from outside of the house through the communication device, and provides such information to the home electric appliance, which exempts the user from acquiring the mentioned information and taking the trouble of inputting the information in each of the home electric appliances and the power instruction apparatus 9.

The healthcare instrument 410 according to Embodiment 1 includes the measurement unit 214 that measures metabolic data of a human body (measurement data from a human body) and acquires the measurement data, the memory 216 for temporarily storing the measurement data acquired by the measurement unit, the transmission unit 314 that transmits the measurement data accumulated in the memory to outside, the operation unit 215 the controls the measurement and the transmission, the display unit 213 that retrieves the measurement data from the memory and displays the data, and the control unit 217 that processes the measurement data.

The transmission unit 314 transmits the measurement data so that the power instruction apparatus 9, configured to control the total electric power in the household by individually controlling the plurality of home electric appliances, displays the measurement data on the display device (display panel) 100.

With the healthcare instrument 410, the information related to health management can also be displayed on the display panel 100 of the power instruction apparatus 9 on the basis of the measurement data transmitted to the power instruction apparatus 9, and therefore the electric energy management and the health management can be performed with a single instrument.

The household power control system according to Embodiment 1 includes the power instruction apparatus 9 that controls the total electric power in the household by individually controlling the plurality of home electric appliances, and the display device (display panel) 100 and the LCD screen 75D of the TV receiver 75 connected to the power instruction apparatus via wired or wireless communication and configured to display the operation information of the power instruction apparatus 9. The power instruction apparatus 9 includes the healthcare processing unit 116 that processes the metabolic data (healthcare information) measured by the healthcare instrument 410, and the display panel 100 is configured to switch the display between the operation information of the power instruction apparatus 9 and the metabolic data (biological data) processed by the healthcare processing unit 116, according to the operation of the user. The LCD screen 75D of the TV receiver 75 is also configured to switch the display between the measurement data (healthcare information) measured by the healthcare instrument 410 and the operation information of the power instruction apparatus 9 according to the operation of the user.

Thus, with the household power control system according to Embodiment 1, the information related to healthcare can be displayed utilizing the information transmission system of the power instruction apparatus 9, and therefore the user is motivated to become more conscious of energy saving and health management.

The household power instruction apparatus according to Embodiment 1 includes, for limiting the total electric power in the household by individually controlling the power usage of the plurality of home electric appliances EE, the use limit setting device 96 that receives the operation information from the home electric appliance and transmits the power control signal to the home electric appliance, the healthcare processing unit 116 that receives the measurement data of the human body from the healthcare instrument 410, the control unit 125 that controls the healthcare processing unit 116 and the use limit setting device 96, the environment detection unit 202 that collects environment data such as indoor temperature, and the display device (display panel) 100 for displaying the power usage information, the information of the measurement data from the healthcare instrument received by the healthcare processing unit 116, and the environment data acquired by the environment detection unit 202.

With the household power instruction apparatus, the centralized control of the total power usage of the plurality of home electric appliances can be performed. In addition, the measurement results of the data such as blood pressure received from the healthcare instrument, as well as the environment data of the living space can be displayed, and therefore the user is motivated to become more conscious of energy saving and health management, so as to make the living space more comfortable.

As is apparent from the foregoing description, the household power instruction apparatus according to Embodiment 1 includes the use limit setting device 96 that receives the operation information from the plurality of home electric appliances EE and transmits the power control signal to each of the home electric appliances EE, the healthcare processing unit 116 that receives the measurement data of the human body from the healthcare instrument 410, the environment detection unit 202 that receives the environment data measured by the environment sensor that detects the physical environment of the living space where the home electric appliances EE are provided, the control unit 125 that controls the environment detection unit, the healthcare processing unit 116, and the use limit setting device 96, and the screen 100A for displaying the power usage information, the environment data, and the information related to the human body measurement data.

With the mentioned power control apparatus, the electric energy management and the health management can both be performed. In addition, the environment data such as indoor temperature and the humidity can be displayed for confirmation, and therefore the environment of the living space can be confirmed on a real-time basis, which facilitates realization of a healthy life space. Further, the state of the living space where the healthcare instrument 410 is to be used can be confirmed on the display panel 100, which is the display device of the power instruction apparatus 9, without the need to go to the living space (room), and therefore a higher level of user-friendliness can be obtained.

Further, the operation status of the home electric appliances that may affect the quality of indoor air, such as the induction heating cooker 2, the air-conditioning apparatus 7, and the air purifier (not shown) can be confirmed on the display panel 100 of the power instruction apparatus 9.

The household power instruction apparatus includes, for individually controlling the power usage of the first specific home appliance SP1 having at least one of the air-conditioning function and the air-purifying function and other electric appliances (home electric appliances EE, second specific home appliance SP2), the use limit setting device 96 that receives the operation information from the first specific home appliance SP1 and other home electric appliances and transmits the power control signal to the group of home electric appliances including the first specific home appliance SP1 and other home electric appliances, the healthcare processing unit 116 that receives the measurement data of the human body from the healthcare instrument 410, the environment detection unit 202 that receives the environment data measured by the environment sensor that detects the physical environment of the living space where the home electric appliances EE are provided, the control unit 125 that controls the environment detection unit 202, the healthcare processing unit 116, and the use limit setting device 96, and the display panel 100 serving as the display device for displaying the power usage information of the home electric appliance, the environment data, and the information related to the measurement data. The display panel 100 also serves as input unit of the control unit 125 for setting the upper limit of the power usage of the first specific home appliance SP1 and other electric appliances, and is located in the living space (e.g., kitchen) other than the space where the first specific home appliance SP1 is installed (e.g., bedroom), and is configured to display, by remote control through the operation of the input unit, the operation information of the first specific home appliance SP1 and the environment data.

With the mentioned power instruction apparatus, the information related to the health management can be displayed on the same display panel 100 of the power instruction apparatus 9, and therefore the user is motivated to become more conscious of energy saving and health management.

In addition, the user can confirm the environment data such as indoor temperature, humidity, and dust scattering degree displayed on the display panel 100, and therefore the environment of the living space can be confirmed on a real-time basis, which facilitates realization of a healthy life space.

Further, the state of the living space where the healthcare instrument is to be used (e.g., living room and bedroom) can be confirmed on the display panel 100 of the power instruction apparatus 9 without the need to go to the living space (room), and therefore a higher level of user-friendliness can be obtained.

Still further, the start of the operation and the operating conditions of the first specific home appliance SP1 (air-conditioning apparatus 7 or air purifier) can be remote-controlled without the need to go to the specific living space. Therefore, in case that one of the family members is infected with a contagious disease such as influenza, the air quality (generic term of temperature, humidity, purity, and so forth) of the patient's room can be improved by remote control from another room (e.g., kitchen), so as to make the patient's room more comfortable and care for the patient.

The mentioned household power instruction apparatus includes the main body 9A of the power instruction apparatus 9 that limits the total power usage in the household by individually controlling the home electric appliances EE provided in each of the plurality of living spaces in the household. The main body includes therein the use limit setting device 96 that transmits the power control signal to the home electric appliances to thereby limit the total electric power, the healthcare processing unit 116 that receives the measurement data of the human body from the healthcare instrument 410, the environment detection unit 202 that receives the environment data measured by the environment sensor provided in each living space where the home electric appliances EE is provided and configured to detect the physical environment of the living space, the human body detection unit 203 that detects whether a person is present in the living space where the home electric appliances is provided, the control unit 125 that controls the environment detection unit 202, the human body detection unit 203, the healthcare processing unit 116, and the use limit setting device 96, and the display panel 100 for displaying the power usage information, the environment data, and the information related to the human body measurement data. The control unit 125 is configured to limit the power usage of the home electric appliance provided in the room where the human body detection unit 203 has not detected the presence of a human, out of the plurality of living spaces.

With the mentioned power control apparatus, the electric energy management and the health management can both be performed. In addition, the environment data such as indoor temperature and the humidity can be displayed for confirmation, and therefore the environment of the living space can be confirmed on a real-time basis, which facilitates realization of a healthy life space and makes the family members to become more conscious of the healthcare management.

Further, the power usage of the living space where no one is present is limited, and therefore unnecessary power consumption can be suppressed and higher energy-saving effect can be achieved.

The healthcare instrument 410 according to Embodiment 1 includes the clock circuit 147 for fixing the date and time of the measurement of the data obtained from a human body, and the operation unit 215 of the healthcare instrument 410 may include the input key (not shown; preferably designed to input a two-digit number) for inputting the identification information (identification code) for associating the measurement data with the personal identification data for identifying the subject of the measurement data, when the measurement data is stored in the memory 216, so that the operation unit 215 may retrieve the measurement data of a specific person out of the measurement data stored in the memory and transmit the data to the healthcare processing unit 116 through the transmission unit 314a.

The mentioned arrangement facilitates the healthcare processing unit 116 to aggregate the measurement data with respect to each person (subject), after the healthcare instrument 410 has transmitted the measurement data acquired from a human body to the healthcare processing unit, thereby simplifying the statistical processing and the program configuration of the power instruction apparatus.

In addition, the healthcare processing unit 116 includes the memory 216 for storing a plurality of different types of measurement data (healthcare information for example blood pressure and blood sugar) with respect to each subject, and the display panel 100 is configured to display the measurement data (biological data) aggregated by the healthcare processing unit 116 with respect to each subject. Accordingly, the measurement data acquired through different types of healthcare instruments with respect to each subject can be displayed on the display panel 100, also serving as the display device of the power instruction apparatus, and therefore the user is motivated to become more conscious of energy saving and health management.

Further, the measurement data displayed on the display panel 100 is displayed in letters as shown in Fig. 13, and includes the information for identifying the subject and the date/time information for identifying the date and time of the measurement, and therefore the measurement data can be confirmed with respect to each of the subjects, so that the whole family can be aware of the healthcare information, to take care and cooperate in promoting dietary therapy and improving the living environment.

Out of the measurement data displayed on the display panel 100, the information for identifying the subject, the date/time information for identifying the date and time of the measurement, and the data showing values deviating from predetermined ranges ("caution data", for example high blood pressure and high uric acid) can be extracted by operating the healthcare processing unit 116 and view the extracted data at the same time (in the form of a list). Therefore, the measurement data to which attention has to be paid can be confirmed with respect to each subject, so that the whole family take care and cooperate in promoting dietary therapy and improving the living environment.

The power control system includes a plurality of display devices, namely the display panel 100 of the power instruction apparatus 9 and the TV receiver 75, at least one of which is the TV receiver 75 that can turn on and off the power supply to the LCD screen 75D independently from the power instruction apparatus. The other is the display panel 100 formed independently from the TV receiver 75 and configured to collectively display the total electric power in the household. Accordingly, the measurement data (healthcare information) measured by the healthcare instrument 410 can be transferred to the TV receiver 75 located in the space (e.g., living room) separated from the space such as the kitchen where the main body 9A of the power instruction apparatus 9 is placed, to be displayed on the TV receiver 75. Therefore, the power usage information and the healthcare information can be shared and confirmed among the family members when the whole family is watching TV receiver 75 in the living room, and therefore the family is motivated to become more conscious of energy saving and health management. Here, the size of the LCD screen 75D of the TV receiver 75 used in a household is 20 to 60 inches, which is far larger than the screen of the display panel 100 (normally 10 to several inches) and hence the detailed power use data and metabolic data, and the graphs thereof, can be displayed in a large size at a time, so as to accurately and easily show the situation to the user.

In the case where the TV receiver 75 also serves as the display device of the household power control system, the TV receiver 75 includes the LCD screen 75D, the image processing unit 75C, the plurality of input/output functional devices 75J, 75K, 75L, and 75M, and the power supply unit 75G, and the power instruction apparatus 9 is detachably connected to one of the input/output functional devices 75J, 75K, 75L, and 75M. Accordingly, when the TV receiver 75 is unusable because of failure or repair work, the power instruction apparatus 9 may be disconnected from the input/output functional device and connected to another (new) TV receiver. In this case, when the memory of the sounds and pictures of the TV and the memory of the data of power management and health management are stored in different regions in the storage unit (high-capacity memory) 109, and separable from each other, the data of power management and health management can be kept at hand when the used TV receiver is disposed of.

In addition, the power FET 75S is provided between the power supply unit 75G and each of the plurality of input/output functional devices 75J, 75K, 75L, and 75M to serve as a swathing device for connecting and disconnecting the line, so that the user can optionally disconnect the unused input/output functional device. Therefore, when the TV receiver 75 is utilized for the power control system, the power supply to the exclusive LSI (semiconductor integrated circuit) associated with the input/output functional device (e.g., video device) not in use can be cut off, which leads to reduced power consumption of the TV receiver 75.

One of the input/output functional devices is the external network communication device 75N, which is configured to receive power from the power supply unit 75G, so as to continue to work even when the power supply to the LCD screen 75D is disconnected. Accordingly, the power instruction apparatus 9 and the healthcare processing unit 116 can be connected to the external organization 78B through the wide area communication network outside the household, even when the display screen 75 of the TV receiver 75 is not in use. Therefore, emergency information from the external organization, for example Earthquake Early Warning, can be received without fail.

In addition, the healthcare processing unit 116 is configured to receive the calorie data from the exercise and measurement equipments 211 A and 211 B that estimate the calorie consumption from the exercise amount (distance covered, number of steps), and includes the storage unit for accumulating therein the calorie data, so as to display the accumulated calorie data on either of the display panel 100 or the TV receiver 75. Accordingly, the exercise information can also be confirmed among the family members, in addition to the power usage information and the healthcare information, and therefore the family is motivated to become more conscious of energy saving and health management.

One of the home electric appliances the power supply to which is controlled by the power instruction apparatus 9 is the vacuum cleaner 312 which the user cause to suck dust while towing by man power. The vacuum cleaner includes the calorie consumption calculation unit based on measurement of the work time in use (e.g., cumulative moving time of floor brush), and the healthcare processing unit acquires the calorie consumption data from the calorie consumption calculation unit at the time that the use of the vacuum cleaner is finished. The vacuum cleaner 312 includes the trip meter 312M, and the calorie consumption is calculated on the basis of the distance data from the trip meter 312M. The healthcare processing unit 116 stores the calorie data calculated as above in the internal storage unit. Therefore, the calorie consumption is calculated while the user is simply doing the cleaning work as usual, and the user can view and confirm the calorie consumption upon finishing the cleaning work.

When the LCD screen 75D of the TV receiver 75 is turned on, the portal site is displayed on the LCD screen 75D, in which the special icon 413 for selecting the screen of the power instruction apparatus 9, the special icon 412 for selecting the screen of the healthcare processing unit, and the icon 419 for selecting the screen of the living environment information are displayed at a time. Therefore, upon turning on the TV screen, one of the screen related to the power instruction apparatus 9, the screen related to the healthcare information, and the screen related to the environment information can be easily selected from the list displayed on the portal site.

Further, when the power supply to the LCD screen 75D of the TV receiver 75 is turned on and the user is watching ordinary TV programs on the display screen, the icon 423 for selecting the screen of the power instruction apparatus 9 is constantly displayed at a peripheral position (inside or outside) of the TV program screen, as shown in Fig. 16. Accordingly, the viewer can visually recognize the icon for selecting the screen of the power instruction apparatus 9 while watching the ordinary TV program screen after turning on the TV screen, and therefore for example the status of the power usage monitoring can be selected at any desired time while primarily viewing the TV program.

Whereas the main body 9A of the power instruction apparatus 9 includes the emergency cut-off button 119, such an emergency cut-off switch may also be provided in the TV receiver 75. For example, a press-button type or touch type selection key may be provided in the periphery of the LCD screen 75D on the front face of the TV receiver 75. Although the emergency cut-off is unable to be performed when the main power of the TV receiver 75 is disconnected, it is safer to provide such a key also in the power instruction apparatus 9.

One of the plurality of home electric appliances EE is the heating cooker such as the induction heating cooker 2, which includes the display unit in which the subject having the caution data (e.g., high blood pressure and high uric acid) in the metabolic data is displayed when the main power is turned on. Accordingly, the user is urged to decide the cooking method and seasoning mode in consideration of the family member having the caution data, to contribute to promoting the health of the family.

The power instruction apparatus 9 is also configured to retrieve the metabolic data (measurement data) of the family and display the caution data (e.g., high blood pressure and high uric acid) and the subject on the display panel 100. Therefore, the user can recognize the points to note about the health of the family members (e.g., high blood pressure), thereby being urged to consider the cooking method and seasoning mode, for example reducing the use of salt.

Further, the induction heating cooker 2, one of the home electric appliances connected to the power instruction apparatus 9, includes at least one vibration detection device, and in the case where the power instruction apparatus 9 receives the emergency earthquake information from outside the household when the vibration detection device has not detected seismic intensity higher than a predetermined level,
(1) the power cut-off of the specific electric appliances in the home electric appliances currently in use is made possible through a predetermined key operation on the power instruction apparatus 9, and
(2) display the special icon 412 for performing the emergency power cut-off of the specific electric appliances in the home electric appliances currently in use, also on the LCD screen 75D of the TV receiver 75.

Therefore, the emergency power cut-off can be performed before the occurrence of the earthquake, both on the side of the power instruction apparatus 9 and on the side of the TV receiver 75 (however, the power supply to the specific electric appliances such as the lighting equipments is maintained for the purpose of securing evacuation passage and confirming safety).

The measurement data (healthcare information) measured by each of the healthcare instruments 410 may be once transferred to the mobile phone terminal 87, and then transferred to the healthcare processing unit 116. In addition, the data measured outside may be carried home in the mobile phone terminal 87, and transferred to the healthcare processing unit 116. These are variations of data inputting to the healthcare processing unit 116.

The household power instruction apparatus according to Embodiment 1 limits the total electric power in the household by individually controlling the power usage of the first home electric appliances and the second home electric appliances in the household. To be more detailed, the power instruction apparatus includes the environment detection unit 202 that receives the environment data measured by the environment sensor that detects the physical environment of the living space where the first and second home electric appliances are provided, the control unit 125 that receives the information of the scheduled home arrival time (including predicted home arrival time) from the occupant and processes the information from the environment detection unit and the information of the home arrival time, and the screen 100A for displaying the power usage information and the environment data from the environment detection unit.

The first home electric appliance (e.g., rice cooker 3) is configured to accept the reservation of the operation start time set by a direct input of the operation finish time made by the occupant.

The control unit 125 outputs to the first home electric appliance, in the case where the scheduled home arrival time shown in the communication data received from the occupant is earlier than the operation finish time (reserved finish time A) of the first home electric appliance (e.g., rice cooker 3) in which the finish time is reserved, the instruction to advance the finish time of the first home electric appliance (reserved finish time B) by a predetermined time from the scheduled home arrival time, provided that the condition specified in the control unit 125 is satisfied.

With the configuration according to Embodiment 1, the environment-related information can be displayed in addition to the power information, and therefore the user is motivated to become more conscious of energy saving and health management.

In addition, the user can confirm the environment data such as indoor temperature, humidity, and dust scattering degree in view of the display, and therefore the environment of the living space can be confirmed on a real-time basis, which facilitates realization of a healthy life space.

Further, the state of the living space can be confirmed on the screen 100A of the power instruction apparatus 9 without the need to go to the living space (room), and therefore a higher level of user-friendliness can be obtained.

In addition, the operation finish time of the first home electric appliance (e.g., rice cooker 3) reserved by inputting the operation finish time can be changed by the communication data from the occupant showing the scheduled home arrival time, so that the operation can be started and finished before the occupant comes home.

Further, such situation of use of the first home electric appliance can be confirmed on the display device (display panel) 100 of the power instruction apparatus 9.

Further, the operation finish time (reserved finish time A) of the first home electric appliance is restricted from being changed by remote operation, unless the condition specified in the control unit 125 is satisfied. Therefore, the first home electric appliance (e.g., rice cooker 3) can be prevented from being set to work with useless electric energy consumption, and be allowed to perform the operation without compromising the expected quality and in an environment-friendly manner so as not to affect the operation of other home electric appliances.

The household power control apparatus according to Embodiment 1 includes the power instruction apparatus 9 that limits the total electric power in the household by individually controlling the power usage of the first home electric appliances and the second home electric appliances in the household, the environment detection unit 202 that receives the environment data measured by the environment sensor that detects the physical environment of the living space where the first and second home electric appliances are provided, the control unit 125 that receives the information of the scheduled home arrival time (including predicted home arrival time) from the occupant and processes the information from the environment detection unit and the information of the home arrival time, and the display panel 100 for displaying the power usage information and the environment data from the environment detection unit.

The first home electric appliance (e.g., rice cooker 3) is configured to accept the reservation of the operation start time set by a direct input of the operation finish time made by the occupant.

The control unit 125 outputs to the first home electric appliance, in the case where the scheduled home arrival time shown in the communication data received from the occupant is earlier than the operation finish time (reserved finish time A) of the first home electric appliance (e.g., rice cooker 3) in which the finish time is reserved, the instruction to advance the finish time of the first home electric appliance (reserved finish time B) by a predetermined time from the scheduled home arrival time, provided that the condition specified in the control unit 125 is satisfied.

With the configuration according to Embodiment 1, the operation finish time of the first home electric appliance can be changed according to the scheduled home arrival time received from the occupant, which provides a higher level of user-friendliness.

The household power control system according to Embodiment 1 includes the circuit breaker BK configured to cut off the electric circuit when the first capacity limit is exceeded, the first home electric appliances and the second home electric appliances each receiving power through the circuit breaker BK, the power instruction apparatus 9 that controls the total power usage of the first home electric appliances and the second home electric appliances, the environment detection unit 202 that receives the environment data measured by the environment sensor that detects the physical environment of the living space where the first and second home electric appliances are provided, and the display device (TV receiver 75, display panel 100) for displaying the power information and the environment information.

The power instruction apparatus 9 accepts the setting of the upper power made by the user, to the second capacity limit lower than the first capacity limit.

The first home electric appliance (e.g., rice cooker 3) is configured to accept the reservation of the operation start time set by a direct input made by the occupant.

The power instruction apparatus 9 includes the input/output terminal 124B for receiving the information of the scheduled home arrival time from outside through the communication network, and the control unit 125 that permits the first home electric appliance to start the operation when the start time is reached.

The control unit 125 compares the scheduled home arrival time shown in the communication data received from the occupant with the operation start time of the first home electric appliance in which the operation start time is reserved, and outputs, in the case where the time difference between the mentioned times is larger than a predetermined time, the instruction to change the operation start time of the first home electric appliance so as to match the scheduled home arrival time, provided that the predetermined environmental condition, specified in the control unit 125 on the basis of the environment information related to the first home electric appliance, is satisfied.

With the configuration according to Embodiment 1, the environment-related information can be displayed in addition to the power information, and therefore the user is motivated to become more conscious of energy saving and health management. For example, the user can confirm the environment data such as indoor temperature, humidity, and dust scattering degree in view of the display, and therefore the environment of the living space can be confirmed on a real-time basis, which facilitates realization of a healthy life space.

In addition, the state of the living space can be confirmed on the display panel 100 of the power instruction apparatus 9 and the LCD screen 75D of the TV receiver 75, without the need to go to the living space (room), and therefore a higher level of user-friendliness can be obtained.

Further, the operation finish time of the first home electric appliance (e.g., rice cooker) reserved by inputting the operation finish time can be changed by the communication data from the occupant showing the scheduled home arrival time, so that the operation can be started and finished before the occupant comes home.

Further, the situation of use of the first home electric appliance can be confirmed in view of the display panel 100 of the power instruction apparatus 9 and the LCD screen 75D of the TV receiver 75.

Still further, the operation finish time (reserved finish time A) or the operation start time (reserved start time A) of the first home electric appliance is restricted from being changed by remote operation, unless the condition specified in the control unit 125 is satisfied. Therefore, the first home electric appliance can be prevented from being set to work with useless electric energy consumption, and be allowed to perform the operation without compromising the expected quality and in an environment-friendly manner so as not to affect the operation of other home electric appliances.

### (Recapitulation of Embodiment 1)

As described thus far, the household power instruction apparatus according to the first aspect described as Embodiment 1 includes the presence detection device 10 that detects the presence of one or more occupants, the storage unit 149 containing the exclusive user information in which the specific home electric appliance (induction heating cooker 2) exclusive to the specific occupant (occupant B) in the plurality of home electric appliances EE subjected to the power control and the information for identifying the occupant B are associated with each other, and the control unit 125 that permits or restricts the operation of the home electric appliances.

The control unit 125 decides, upon receipt of the signal requesting permission of use from the exclusive electric appliance (induction heating cooker 2), whether the exclusive user and the occupant B at home are the same, on the basis of the exclusive user information in the storage unit 149 and the occupant information (occupant B at home) detected by the presence detection device 10, and outputs the signal permitting the exclusive electric appliance (induction heating cooker 2) to start the operation, in the case where the exclusive user and the occupant at home are the same.

With the power instruction apparatus 9 according to the first aspect described as Embodiment 1, once the information of the specific occupant B is registered with respect to the specific home electric appliance (induction heating cooker 2), the registered electric appliance is set up as exclusive electric appliance of the occupant B. Therefore, when another occupant comes home and attempts to use the exclusive electric appliance (induction heating cooker 2) while the occupant B is not at home, the use of the exclusive electric appliance is automatically restricted at this point.

As described above, the household power instruction apparatus according to the second aspect described as Embodiment 1 includes the presence detection device 10 that detects presence of one or more occupants, the storage unit 149 containing the exclusive user information in which the specific home electric appliance (induction heating cooker 2) exclusive to the specific occupant (occupant B) in the plurality of home electric appliances EE subjected to the power control and the information for identifying the occupant B are associated with each other, and the control unit 125 that permits or restricts the operation of the home electric appliances, the environment detection unit 202 that receives environment information from the environment sensors 204, 205, and 206 that measure the physical environment of the living spaces in which the plurality of home electric appliances are installed, and the human body detection unit 203 that detects the presence of a person on the basis of detection information from the human body sensors 207 and 208 provided in the living space to indicate the presence of a person in the living space.

At least one of the home electric appliances EE is the environment improvement apparatus (air-conditioning apparatus 7) that maintains or improves the comfortableness of the living space.

The control unit 125 decides, upon receipt of the signal requesting permission of use from the exclusive electric appliance (induction heating cooker 2), whether the exclusive user and the occupant at home (occupant B) are the same, on the basis of the exclusive user information in the exclusive user information storage unit and the occupant information (occupant B at home) detected by the presence detection device 10, and outputs the signal permitting the exclusive electric appliance (induction heating cooker 2) to start the operation, in the case where the exclusive user and the occupant at home are the same.

The control unit 125 also forcibly controls the operation of the environment improvement apparatus (air-conditioning apparatus 7), upon deciding, on the basis of the environment information from the environment detection unit 202, that the predetermined environmental condition (e.g., room temperature lower than 30 degrees Celsius and humidity lower than 75%) is not satisfied in the specific living space, when presence of a person in the specific living space where the environment improvement apparatus is installed is detected by the human body detection unit 203.

The configuration according to the second aspect enables, in addition to the advantageous effects provided by the power instruction apparatus of Embodiment 1, management of the electric energy and maintenance and improvement of the environmental conditions such as temperature and humidity in the living space where the occupant is present, with the single power instruction apparatus. Regarding the environmental conditions, setting the dry bulb room temperature and the humidity appropriately (e.g., room temperature lower than 30 degrees Celsius and humidity lower than 75%) is effective for prevention of heat stroke in the indoor living space, thereby providing enhanced sense of security in such a household where the parents are out in the daytime leaving an old-aged person or children alone inside the room.

The household power instruction apparatus according to the third aspect described as Embodiment 1 is configured to control the total electric power in the household by individually controlling the plurality of home electric appliances. The power instruction apparatus includes the presence detection device 10 that detects the presence of one or more occupants, the storage unit 149 containing the exclusive user information in which the specific home electric appliance for exclusive use by the specific occupant (exclusive electric appliance, e.g., induction heating cooker 2) in the plurality of home electric appliances EE and the information for identifying the occupant are associated with each other, and the control unit 125 that permits or restricts the operation of the home electric appliances.

The control unit 125 decides, upon receipt of the signal requesting permission of use from the exclusive electric appliance (induction heating cooker 2), whether the exclusive user (occupant B) and the occupant at home (occupant B) are the same, on the basis of the exclusive user information in the exclusive user information storage unit and the occupant information detected by the presence detection device 10, and outputs the signal permitting the exclusive electric appliance (induction heating cooker 2) to start the operation, in the case where the exclusive user and the occupant at home are the same.

The control unit 125 also displays the information indicating that the operation of the exclusive electric appliance (e.g., induction heating cooker 2) is not permitted on the display section 16 (129) or 38 mounted in the exclusive electric appliance (e.g., induction heating cooker 2), in the case where the exclusive user (occupant B) and the occupant at home (occupant C) are not the same as result of comparison between the exclusive user information associated with the exclusive electric appliance (e.g., induction heating cooker 2) that has received the use permission request signal and the occupant identification information detected by the presence detection device.

With the mentioned configuration, the information indicating that the use of the exclusive electric appliance is not permitted is outputted through the own notification device of the exclusive electric appliance. Therefore, the occupant can be prevented from misunderstanding that, for example, the exclusive electric appliance has failed, in addition to the advantageous effects provided by the power instruction apparatus of Embodiment 1.

The household power control system according to the fourth aspect described as Embodiment 1 includes:
the circuit breaker BK configured to cut off the electric circuit when the predetermined capacity limit is exceeded,
the first home electric appliances (e.g., rice cooker 3) and the second home electric appliances each receiving power through the circuit breaker BK,
the power instruction apparatus 9 that controls the total power usage of the first home electric appliances and the second home electric appliances,
the environment detection unit 202 that receives the environment information measured by the environment sensor that detects the physical environment of the living space where the first and second home electric appliances are provided,
the LCD screen 75D and the screen 100A for displaying the power information and the environment information,
the presence detection device 10 that detects the presence of one or more occupants,
the exclusive user information storage device containing the exclusive user information in which the specific home electric appliance for exclusive use by the occupant (e.g., induction heating cooker 2) in the plurality of home electric appliances and the information for identifying the occupant are associated with each other, and
the control unit 125 that permits or restricts the operation of the plurality of home electric appliances with the indication of the upper limit of power usage.

The control unit 125 decides, upon receipt of the signal requesting permission of use from the exclusive electric appliance, whether the exclusive user (occupant B) and the occupant at home (occupant B) are the same, by making access to the storage unit 149 and comparing between the exclusive user information in the storage unit 149 and the occupant information detected by the presence detection device 10, and outputs the signal permitting the exclusive electric appliance (induction heating cooker 2) to start the operation, in the case where the exclusive user and the occupant at home are the same.

With the mentioned configuration, the environment-related information such as room temperature can be displayed in addition to the power information, and therefore the user is motivated to become more conscious of energy saving and health management. In addition, the user can confirm the environment data such as indoor temperature, humidity, and dust scattering degree in view of the display, and therefore the environment of the living space can be confirmed on a real-time basis, which facilitates realization of a healthy life space.

With the configuration according to fourth aspect, further, once the information of the specific occupant B is registered with respect to the specific home electric appliance, the registered electric appliance is set up as exclusive electric appliance of the occupant B. Accordingly, when another occupant C comes home alone and attempts to use the exclusive electric appliance while the occupant B is not at home, the use of the exclusive electric appliance is automatically restricted at this point. Such a configuration suppresses occurrence of an unexpected trouble originating from misuse by the occupant other than the occupant B (e.g., occupant B).

The household power control system according to the fifth aspect described as Embodiment 1 includes:
the circuit breaker BK configured to cut off the electric circuit when the first capacity limit is exceeded,
the first home electric appliances and the second home electric appliances each receiving power through the circuit breaker BK, and
the power instruction apparatus 9 that controls the total power usage of the first home electric appliances and the second home electric appliances.

The power instruction apparatus includes the LCD screen 75D and the screen 100A for displaying the power information and the environment information, the presence detection device 10 that detects the presence of one or more occupants, and
the storage unit 149 containing the exclusive user information in which the specific home electric appliance for exclusive use by the specific occupant (exclusive electric appliance, e.g., induction heating cooker 2) in the plurality of home electric appliances and the information for identifying the occupant are associated with each other.

The power instruction apparatus 9 includes the transmission unit (input/output terminal) 124B that transmits, through the communication line (communication network) 98, information for confirming whether the exclusive user information in the exclusive user information storage device may be updated, to the mobile phone terminal 87 of the occupant located outside the living space, and the reception unit 124B that receives the response from the occupant.

The control unit 125 (i) decides, upon receipt of the signal requesting permission of use from the exclusive electric appliance (e.g., induction heating cooker 2), whether the exclusive user and the occupant at home are the same, by making access to the storage unit 149 and comparing between the exclusive user information in the storage unit 149 and the occupant information detected by the presence detection device 10, and outputs the signal permitting the exclusive electric appliance (induction heating cooker 2) to start the operation, in the case where the exclusive user and the occupant at home are the same, and (ii) transmits, in the case where the exclusive user and the occupant at home are not the same, the inquiry asking whether the use of the home electric appliance may be permitted, to the exclusive user in the exclusive user information storage device from the transmission unit (input/output terminal) 124B, and outputs the signal permitting the exclusive electric appliance (e.g., induction heating cooker 2) to start operation, in the case where the information permitting the use of the exclusive electric appliance is received after the transmission.

With the mentioned configuration, once the specific occupant B is registered as exclusive user with respect to the specific home electric appliance, the registered electric appliance is set up as exclusive electric appliance of the occupant B. Accordingly, when another occupant C comes home alone and attempts to use the exclusive electric appliance while the occupant B is not at home, the use of the exclusive electric appliance is restricted at this point. Such a configuration suppresses occurrence of an unexpected trouble originating from misuse by the occupant other than the occupant B (e.g., occupant B). Although the use of the exclusive electric appliance by the occupant C while the occupant B is away from home is once disapproved, in the case where the occupant B away from home transmits the instruction to permit the use to the control unit in response to the notice of disapproval transmitted to the occupant B, the control unit permits the use of the exclusive electric appliance by the occupant B. Such an arrangement further improves the user-friendliness of the system. Here, the occupant B away from home may transmit the information to the effect that the exclusive user is changed from the occupant B to the occupant C upon receipt of the notice of disapproval, and the control unit 125 may store the new exclusive user information in the storage unit 149, and then decide whether the exclusive user and the occupant at home are the same, on the basis of the newly stored exclusive user information and the occupant information detected by the presence detection device 10. Thus, the content of the signal transmitted from the occupant B to the power instruction apparatus 9 may be modified as desired, without limitation to the example of Embodiment 1.

Further, as an improvement of the power instruction apparatus 9 according to the second aspect, the environmental conditions that are suitable to each occupant, such as the room temperature and humidity, may be determined according to the occupant located in a specific living space. For example, old-aged people often fail to notice a change or worsening of the environment, and nowadays the risk that such people suffer heat stroke in the summer daytime despite staying indoors is often pointed out. Accordingly, when an old-aged person is in the living space, it is preferable to set the environment improvement apparatus provided in that space, typically the air-conditioning apparatus, so as to start the operation at an early stage when the indoor temperature starts to rise, in particular in summer season. Such an arrangement further enhances the sense of security of the family.

### Embodiment 2

Fig. 66 to Fig. 79 illustrate a power control system according to Embodiment 2 of the present invention, and Fig. 66 is a schematic diagram for explaining a communication channel between a household and a mobile phone terminal, according to Embodiment 2 of the present invention, Fig. 67 is a first explanatory timechart showing relationship between an operation of an arrival time estimation/prediction system used in the power control system according to Embodiment 2, and the power instruction apparatus and the home electric appliance, Fig. 68 is a second explanatory timechart showing the same relationship, and Fig. 69 is a first front view showing the presence management menu displayed on the display screen of the use limit setting device of the power instruction apparatus according to Embodiment 2. Fig. 70 is a second front view showing the presence management menu displayed on the display screen of the use limit setting device of the power instruction apparatus according to Embodiment 2, and representing a screen for recording a message. Fig. 71 is a third front view showing the presence management menu displayed on the display screen of the use limit setting device of the power instruction apparatus according to Embodiment 2, and representing a screen for inputting presence and absence setting. Fig. 72 is a first plan view showing a part of the display device and the operation unit of the induction heating cooker, the power supply to which is controlled by the power control system according to Embodiment 2. Fig. 73 is a second plan view showing a part of the display device and the operation unit of the induction heating cooker shown in Fig. 72. Fig. 74 is a third plan view showing a part of the display device and the operation unit of the induction heating cooker shown in Fig. 72. Fig. 75 is a fourth plan view showing a part of the display device and the operation unit of the induction heating cooker shown in Fig. 72. Fig. 76 is a front view showing the display panel of the power instruction apparatus according to Embodiment 2. Fig. 77 is a schematic drawing for explaining the relationship between the operation information and the heating process of the induction heating cooker shown in Fig. 72. Fig. 78 is a timechart for explaining the relationship between the operation information from the induction heating cooker shown in Fig. 72 and the heating process. Fig. 79 is a flowchart showing an operation program performed by a control unit 125 of the power instruction apparatus 9 according to Embodiment 2, to control the TV receiver. In the cited drawings, the same constituents as those of Embodiment 1 are given the same numeral. In addition, the home electric appliances including the induction heating cooker 2, the rice cooker 3, the oven range 5, the dish washer-dryer 6, and the air-conditioning apparatus 7, and the healthcare instrument 410 are the same as those of Embodiment 1. However, the power instruction apparatus 9 is different in that "favorite information", which is personal evaluation information of meal menu, and information of room temperature and bathing temperature can be recorded with respect to each of the occupants.

Embodiment 2 corresponds to the sixth aspect of the present invention, an essential feature of which is that the power instruction apparatus includes a personal information storage unit in which the occupant can store desired information regarding another occupant. In addition, at least one of the exclusive electric appliances is the TV receiver, and when the TV receiver is turned on the information useful to the particular occupant is displayed on the TV receiver, and also outputted as voice message.

A feature of Embodiment 2 is that the user of the home electric appliance can control the timing to start or finish the operation of the home electric appliance EE from outside by remote control, according to the home arrival time estimated by the user when the user is away from home. In Fig. 67 and Fig. 68, P1 to P22 denote the timing of processes performed by the control program contained in the mobile phone terminal 87 and the power instruction apparatus 9, and the timing of receiving signals from outside, which are sequentially described in chronological order from P1, P2, P3, P4, ... to P22.

In Embodiment 2, a plurality of TV receivers 75 are provided, one of which is located in the bedroom of the occupant A and registered as exclusive electric appliance of the occupant A. Regarding the occupant B, it will be assumed that the rice cooker 3 and the induction heating cooker 2 are registered as exclusive electric appliances of the occupant B in the power instruction apparatus 9.

In Fig. 66, 270 denotes artificial satellites for realizing the global positioning system (GPS), and normally three or more satellites are utilized to accurately measure the current positions on the earth.

In Fig. 66, 271 denotes a works agency (external organization) that provides a communication service and traffic information, and 272 denotes a server for arrival time search operated by the external organization, which calculates and provides the time necessary to arrive at a destination, on the basis of the position information provided by the satellite 270 and the destination information inputted by the user. 273 denotes a traffic information database containing map information, routes and service information of transport facilities (e.g., railway company), information of average travel time, and so forth.

The power instruction apparatus 9 is connected to the external organization 271 via the wide area communication network 98. Although not shown in Fig. 66, the power instruction apparatus 9 can also make access to the ASP server 89A shown in Fig. 2 of Embodiment 1. 87 denotes the mobile phone terminal that the occupant can freely carry, and 275 denotes a base station for communication with the mobile phone terminal.

Referring to Fig. 66 and Fig. 67, the estimation process of the home arrival time will be described. The description given below refers to the case where the occupant B goes to a place distant from home with the mobile phone terminal 87, and attempts to perform a remote operation of the home electric appliance EE at the distant place using the mobile phone terminal 87.

First, the occupant B registers the start point in the mobile phone terminal 87 (P1; time 17:25). For the registration it is not necessary to input the address in the mobile phone terminal 87 using the keys, but upon pressing an input key of "current position registration" provided (or displayed when necessary) in the mobile phone terminal 87, the mobile phone terminal 87 transmits a request for information for identifying the position of the occupant B (mobile phone terminal), to the satellite 270 (P2). The satellite 270 notifies the information indicating the position (latitude, longitude) where the mobile phone terminal 87 is located (P3).

Then the destination is inputted in the mobile phone terminal 87 (P4). Here also, instead of inputting the address in the mobile phone terminal 87 using the keys each time, an input key of "destination" may be provided (or displayed when necessary) in the mobile phone terminal 87, so that upon pressing this input key the address information registered in advance is inputted.

The mobile phone terminal 87 then transmits the information indicating its location and the destination information in a set to the server 272 for arrival time search, to request the search of traffic means and route (P5). In response, the server 272 transmits the information of traffic means and route to the mobile phone terminal 87. There may be cases where one optimum choice of traffic means and route is provided, however normally some options are shown for selection by the occupant B.

Then the mobile phone terminal 87 registers the traffic means (e.g., the train station to ride, the train station to get off, bus stops, and so forth) (P6), as well as the information indicating the destination and the route thereto (P7). The sequence of P6 and P7 may be reversed, or both steps may be collectively performed at a time.

The mobile phone terminal 87 requests the server 272 for arrival time search to calculate the time of day of arrival at the destination on the assumption that the departure is now, on the basis of the information registered thus far (P8; search request). In return, the server 272 responds the predicted arrival time (P9). Hereafter, the predicted arrival time will be denoted by a reference code TK.

The occupant may not immediately depart, and in the case where the occupant departs 5 minutes after the predicted arrival time was acquired (P9), when the occupant inputs "departure" in the mobile phone terminal 87 at this point, the mobile phone terminal 87 transmits the time of day 5 minutes later than the predicted arrival time to the communication network (communication network) 98. Accordingly, the predicted arrival time to which 5 minutes has been added is received by the power instruction apparatus 9 (P11).

The control unit 125 of the power instruction apparatus 9 identifies, upon receipt of the predicted arrival time (hereafter, it will be assumed that the arrival time is 20:30 as result of a delay of 5 minutes), the home electric appliances EE in which the operation start reservation or operation finish reservation has been made, from among all the home electric appliances EE in the household (P12). The control unit 125 may ask each of the home electric appliances about the current situation, or may find a latest operation information signal (like the signals L1 to L7 in Embodiment 1) transmitted from each home electric appliance to the power instruction apparatus 9, to thereby identify the home electric appliances in which the operation is reserved (P13). In the example shown in Fig. 66, the specific home electric appliance (e.g., air-conditioning apparatus 7) has responded.

Then the control unit 125 of the power instruction apparatus 9 compares the predicted arrival time (20:30) with the reservation time (start or finish, for example 18:30) of the home electric appliance EE in which the operation start reservation or operation finish reservation has been made (P14), and transmits, in the case where the time difference is 30 minutes or more, an instruction signal to change the finish time (reserved finish time A) or start time (reserved start time A) of the home electric appliance to the predicted arrival time (20:30), to the home electric appliance (P15).

In the case where the home electric appliance in which the operation start time is reserved is the air-conditioning apparatus 7 and the operation mode is cooling, the control unit 125 starts the reserved operation, in other words the cooling operation at 20:00, which is 30 minutes before the predicted arrival time (20:30) (30 minutes is merely an example and may instead be 5 minutes), taking into account that it will take a while before the room is cooled.

The stores Here, the operation starting condition of the air-conditioning apparatus 7 (e.g., room temperature 28 degrees Celsius or higher), which is one of the "first specific home appliances" ("environment improvement apparatus") SP1, is stored in the storage unit 149. Accordingly, the control unit 125 decides whether the operation starting condition (e.g., room temperature 28 degrees Celsius or higher) is satisfied at the time point of 20:00, which is 30 minutes before the predicted arrival time, before starting the operation according to the predetermined instruction information regarding the air-conditioning apparatus 7 received from the occupant B.

In the case where the operation starting condition is satisfied at 20:00, the control unit 125 starts the reserved operation, in other words the cooling operation. On the other hand, in the case where the permission criteria for starting the operation of the air-conditioning apparatus 7 (room temperature 28 degrees Celsius or higher) is not satisfied, the control unit 125 does not permit the operation of the air-conditioning apparatus 7 despite the instruction information having been received. In this case, the control unit 125 transmits a message indicating the reason of disapproval such as "Room temperature is too low" to the mobile phone terminal 87.

The control unit 125 of the power instruction apparatus 9 is constantly monitoring the time with reference to the predicted arrival time (20:30) stored in the storage unit 149, and when it is 10 minutes before the predicted arrival time, the control unit 125 notifies the mobile phone terminal 87 to the effect that the reserved home electric appliance (in this case, the air-conditioning apparatus 7 which is one of the first specific home appliance SP1) has been set ready to start or finish the operation (P17). In this example of the air-conditioning apparatus 7, however, the cooling is started before such notice, because of the specific situation that it takes a while before the room is cooled.

In the case where any of the home electric appliances is already in operation at the time that the power instruction apparatus 9 has received the predicted arrival time (P11), preparation for finishing the operation is started by the time point of P17. However, in the case where an operation that emits high temperature (e.g., heat cooking or heating-drying) has been performed, depending on the type of the home electric appliance, the electric appliance is not immediately cooled to the normal temperature though the operation is stopped. In such a case, it is preferable to determine the operation finish time taking the time required for cooling into account. Such adjustment of the time may be performed by the occupant with various input keys displayed in the display panel 100 of the power instruction apparatus 9.

The mobile phone terminal 87 requests the satellite 270 to provide information for identifying the latest position of itself (mobile phone terminal) (P18). The satellite 270 transmits the information indicating the position (e.g., latitude, longitude) at which the mobile phone terminal 87 is located (P20). The mobile phone terminal 87 repeats the request to the satellite 270 for the information indicating the latest position of itself (mobile phone terminal), until receiving information indicating a position close to the destination (e.g., every 10 seconds).

When the air-conditioning apparatus 7 decides that it is not necessary to continue the cooling operation because a certain time has elapsed after starting the cooling and it is night time now, and the room temperature and outdoor temperature have both dropped, switches the operation to the energy-saving mode by itself. The control unit 125 also instructs the air-conditioning apparatus 7, upon deciding the same in view of the room temperature information from the environment detection unit 202, to perform the energy-saving operation (e.g., raising the target temperature for cooling, or temporarily switching from cooling to ventilation mode) (P19).

When the information of the latest position of the mobile phone terminal 87 received from the satellite 270 in response to the request indicates that the latest position of the mobile phone terminal 87 is in the vicinity of the destination, for example close to the station in the occupant's neighborhood (transit point) shown in Fig. 66, the mobile phone terminal 87 transmits the notice to the effect that the occupant is now in the vicinity of home, to the power instruction apparatus 9 (P21). Upon receipt of the notice that the occupant is in the vicinity of home, the control unit 125 may display a message that a family member (in this case, occupant B) is about to come home, on the LCD screen 75D when the TV receiver 75 is being watched. In this case, it is preferable to specifically indicate, for example, who is the member about to come home and the hour and minute of the arrival. This can be easily realized because the power instruction apparatus 9 can transmit such information to the TV receiver 75 for generating the display, since from the viewpoint of the power instruction apparatus 9 the mobile phone terminal 87 is identified and the predicted arrival time is known.

Then the power instruction apparatus 9 turns on the home electric appliance registered in advance (in this case, lighting equipment at the entrance), upon receipt of the signal indicating that the occupant B is in the vicinity of home, to illuminate the path along which the occupant B walks up to the entrance (P22). When the occupant B arrives at the destination, which is the home, the air-conditioning apparatus 7 is already in operation because of the reservation, and therefore the occupant B can come back to the comfortable living space.

Fig. 69 is a front view showing the screen 100A of the use limit setting device 96 of the power instruction apparatus 9, displaying the presence management menu like Fig. 65.

In Fig. 69, 58A denotes a selection key for displaying the input screen for use by the occupant who is at home. When the occupant touches the key 58A, the input screen appears in which an updated presence status, the time known in advance that the occupant will be away, scheduled home arrival time, and the absence period (month, date) can be inputted, with respect to each of the occupants. 58B denotes a selection key for displaying the input screen for setting the home electric appliance in which the occupant can reserve the start time or finish time in advance (e.g., rice cooker), and setting the exclusive electric appliance of the occupant. When the occupant touches the key 58B, the input screen appears in which the electric appliance that the occupant intends to reserve, and the designated exclusive electric appliance can be inputted, with respect to each of the occupants.

In Fig. 69, 58C denotes a message setting selection key. Upon touching the key 58C, an input screen (see Fig. 70) appears in which the home electric appliance reserved by the occupant or the exclusive electric appliance of the occupant can be inputted, with respect to each of the occupants. 59G denotes a mark indicating that a message to a specific occupant (in Fig. 69, occupant A) is recorded in the power instruction apparatus 9.

In Fig. 69, 59A denotes a family name column for displaying the names or nicknames for identifying each of the family members, and 59B denotes a presence status display column displaying in symbols the presence status with respect to each of the occupants. In the example shown in Fig. 65, a double circle indicates that the corresponding occupant is at home and a blank triangle indicates that the corresponding occupant is absent. 59C denotes a scheduled home arrival time display column for displaying the scheduled home arrival time with respect to each of the occupants, and 59D denotes a reserved appliance display column for displaying the exclusive electric appliance in letters, symbols, or illustrations with respect to each of the occupants, so that the home electric appliance in which the reservation (start time or finish time) has been made can be identified.

In Fig. 69, 59E denotes an exclusive electric appliance display column for displaying the exclusive electric appliance in letters, symbols, or illustrations with respect to each of the occupants, so that the home electric appliance registered as exclusive electric appliance can be identified. 59F denotes a power value display column for displaying the power consumption and the upper power limit of the exclusive electric appliance being used, with respect to each of the occupants. From Fig. 69 it is understood that at present the occupant B has already come home, the occupant A is scheduled to come home at 22:30, the occupant C (child) is scheduled to come home at 17:30, and the occupant C (child) is scheduled to come home at 16:00. In other words, at present only the occupant B is at home. In addition, a message is left for the occupant A.

When the occupant touches the message setting selection key 58C with the finger on the screen displayed as Fig. 69, the display content of the screen 100A is switched to a screen for registering a message and confirming the message, as shown in Fig. 70. In Fig. 70, 69A denotes a message registration instruction key, and 69B denotes a message replay instruction key. The message herein referred to is recorded in the storage unit 149 of the power instruction apparatus 9 in one's natural voice.

In Fig. 70, 69C denotes a personal display section that also serves as occupant selection key, showing whether all the messages of each occupant are recorded, and 69D denotes a display section that shows the letters "recorded" when a message is recorded. From the example of Fig. 70, it is understood that a message is recorded for the occupant A only. 69E denotes a sound pickup of a microphone (not shown) through which the occupant intending to leave a message records the message, the sound pickup being located in a lower region of the display panel 100, at a position under the screen 100A.

To leave a message through the screen displayed as Fig. 70, the occupant touches the personal display section/occupant selection key 69C first, and speaks the message toward the sound pickup 69E. When the recording of the message is finished, the occupant touches the message registration instruction key 69A to register the message.

In Fig. 70, 69F denotes 10 independent number input keys (ten key), 69G denotes a cancel key for cancelling the input made with the ten key 69G, and 69H denotes an enter key for fixing the numerals inputted with the ten key 69G. The ten key 69F and the enter key are also static capacitance-based touch keys displayed when the use of those keys is valid, so as to be visually recognized through the surface of the screen 100A.

When the occupant wishes to confirm a message left for him/herself on the screen displayed as Fig. 70, the occupant touches the message replay instruction key 69B first, inputs a predetermined password or PIN code using the number input key (ten key) 69F, and touches the enter key 69H. Then the message is outputted from a small speaker (not shown) provided in the display panel 100. In the case where the occupant B has recorded a message for another occupant (e.g., occupant A), the occupant B can confirm the message each time the occupant B touches the message replay instruction key 69B on the screen displayed as Fig. 70, without the need to input the PIN code. Though not shown in Fig. 70, a key for erasing the recorded message is also provided.

When the occupant B at home touches the selection key 58A on the screen displayed as Fig. 69 for switching to the input screen for use by the occupant at home, the display content of the screen 100A is switched as shown in Fig. 71. In Fig. 71, 69J denotes a presence display section that indicates whether each occupant is at home or away. When the occupant is at home the letters of "present" is displayed, and when the occupant is away the letters of "absent" is displayed. 69L, 69M, and 69N are selection keys for inputting the home arrival time or the day when the occupant will be away (absent), 69L being the key for selecting today, 69M being the key for selecting tomorrow, and 69N being the key for selecting the day after tomorrow.

69K denotes an input command key of the scheduled home arrival time, and 69T denotes a time display section for displaying the scheduled time of day inputted with the number input keys (ten key) 69F.

When the occupant wishes to input his/her scheduled home arrival time on the screen displayed as Fig. 70, the occupant touches the input command key 69K first, and sequentially presses the number input keys (ten key) 69F according to the time of day to be inputted, and then touches the enter key 69H. To input the home arrival time of tomorrow first, the occupant touches the key 69M for selecting tomorrow, and then inputs the time of day as described above. Though not shown in Fig. 71, a key for erasing the inputted time of day is also provided. When only the occupant B is at home, the occupant B can only input her own home arrival time or other data, not the schedule of other occupants. When a plurality of occupants are at home, the occupant touches the personal display section/occupant selection key 69C first, to identify the occupant who makes the input, and then input the home arrival time or other data.

Referring to Fig. 72 to Fig. 75, the display screen 129 of the induction heating cooker 2 will be described.

129 denotes, as described with reference to Embodiment 1, the display screen such as an LCD screen, serving as the display device of the induction heating cooker 2 under the control of the power instruction apparatus 9. Like in Embodiment 1, the induction heating cooker 2 includes a pair of induction heaters aligned in the left-right direction.

When the first heater 2L (not shown) on the left is selected first, the key 128A3 for selecting boil cooking, the key 128B3 for selecting stewing cooking, and so forth are displayed in a list as shown in Fig. 72, on the display screen 129 constituted of for example the LCD screen. Fig. 72 represents the display that appears when the key 128B3 for selecting stewing cooking is touched. Since the stewing cooking is not a priority cooking menu, the first information sign 210A of "object of power reduction", indicating that the power usage may be limited during the heat cooking operation in case that the power reduction instruction is received from the power instruction apparatus 9, is displayed in the lower right position in the display screen 129.

When the key 128B3 for selecting stewing cooking is touched first on the screen displayed as Fig. 72, the content of the display screen 129 largely changes as shown in Fig. 73. In Fig. 73, 440 denotes a healthcare information selection key, 450 denotes a favorite information selection key, and 460 denotes a recommended recipe selection key, which are also touch-type input keys like the keys 128A2, 128A3, 128B1, and 128B3 for selecting the cooking menu, and displayed in the shape of a rectangular frame in which the titles are displayed in letters, when the input through these keys is valid. The term "recipe" herein refers to information describing the cooking method, which may also include material names, amount to use, photos of the food in process or finished, and incidental information such as salt content and calorie consumption.

When the healthcare information selection key 440 is touched on the screen displayed as Fig. 73, the content of the display screen 129 largely changes as shown in Fig. 74. In Fig. 74, 441 denotes a healthcare information display region. When any of the health-related data (e.g., blood pressure) of any occupant measured by the healthcare instrument 410 is deviated from the normal range (caution data), a message to this effect is displayed in the display region 441. More specifically, letters such as "A family member has high blood pressure" are displayed. Here, although the blood pressure data stored in the storage unit 149 of the power instruction apparatus 9 is tagged with the identification code for identifying the subject and therefore the information indicating a specific individual can also be displayed, it is herein assumed that all family members eat the same meal, and not that a special meal is cooked for a specific member. Accordingly, the personal identification information is not displayed in the example shown in Fig. 74.

When the favorite information selection key 450 is touched on the screen displayed as Fig. 74, the content of the display screen 129 largely changes as shown in Fig. 75. In Fig. 75, 451 denotes a favorite information display region for displaying information of personal preference, impressions after the meal, tastes and thoughts in the living space, and so forth that the family inputted in the display panel 100 of the power instruction apparatus 9.

Fig. 76 illustrates the screen of the display panel 100 serving as the operation input region 117 of the use limit setting device 96 of the power instruction apparatus 9, in which the icon 450 for favorite information registration is displayed in the same way as the icon 418 for switching to the screen exclusive to the electric energy management and the input key 211 N for proceeding to the next screen.

Fig. 76 illustrates the screen for "favorite information registration" displayed when the icon 450 is selected. As shown in Fig. 76, impressions about recent meals of home, thoughts about the rice cooking mode (hardness of rice), preference of hot water temperature in the bath tub, for example higher or cooler than 40 degrees Celsius, can be inputted as favorite information. In Fig. 76, the impression of the meal of last evening is indicated as "good".

Fig. 77 illustrates the display screen 129 that appears when the recommended recipe selection key 460 (see Fig. 73) is touched. As shown in Fig. 77, the letters of "recommended recipe list" are displayed in the central region of the display screen 129, and recipe selection keys 460A, 460B, 460C classifying the materials into three categories are displayed under the letters.

Specifically, the recipe selection key 460A for selecting vegetable-main recipes, the recipe selection key 460B for selecting combination recipes of meat and vegetable, and the recipe selection key 460C for selecting fish-main recipes are displayed.

In addition, a recipe selection key 460D for selecting soup recipes, and a recipe selection key 460E for finding recipes by material are also displayed at the same time. In the case of high blood pressure, for example, excessive salt intake is one of primary causes and hence adopting recipes that use less salt and recipes that promote salt excretion is useful for improvement. Accordingly, the induction heating cooker 2 is configured to propose the measures for improvement, for which purpose the recipes tailored for the two types of measures are stored in advance in the display memory 35A (see Fig. 27) of the induction heating cooker 2. When the recipe selection key 460E for finding recipes by material is pressed with the intention of promoting the salt excretion from the body for example, several recipes that use lotus root are displayed on the display screen 129 of the induction heating cooker. However, a sufficient number of detailed recipes such as those sequentially describe the materials and the cooking process with images may be unable to be stored in advance in the display memory 35A, because of the limitation of the memory capacity. In this example, therefore, when the user presses a key for further search of recipes (not shown) after pressing the recommended recipe selection key 460, the induction heating cooker 2 makes access to the storage unit (high-capacity memory) 109 in the TV receiver 75 and a cooking recipe database provided by the external organization 78A, and downloads the recipes from outside. In this relation it is preferable to add an index or keyword to the recorded data of cookery programs and dietary supplement promotion programs viewed on the TV receiver 75, when storing such programs in the storage unit (high-capacity memory) 109, because the searching of the program can be quickly performed. In addition, the capacity for each session of downloading may be capacity automatically limited, for example to a content (images and characters) of 1 MB or less.

Here, when the input key 211 N for selecting the next screen is pressed in the healthcare information screen of Fig. 74 according to the message "Press "next" for more details" shown therein, two types of recommended recipes for reducing the salt intake and promoting the salt excretion tailored for those having high blood pressure are displayed, out of "recommended recipe" as shown in Fig. 77.

Likewise, when any of the occupants has a high body fat rate, remedies for reducing energy intake by approximately 200 to 250 Kcal per day in the ordinary daily life, in order to lose 1 kg of fat each month, are suggested on the screen of Fig. 74, since it is preferable to improve the menu in addition to making some exercise, in order to reducing the body fat without stress. Further, recommended recipes (materials and cooking process for one portion), the calorie value of the recipe, and actual use amount of salt are displayed.

Fig. 78 is a timechart for explaining in chronological order how the home electric appliance such as the induction heating cooker 2 recognizes whether the home electric appliance is the object of power control of the power instruction apparatus 9. Fig. 78 represents the case of the induction heating cooker 2. In Fig. 78, L1 to L7 each denote the operation information signal transmitted from the induction heating cooker 2 to the power instruction apparatus 9, as in Embodiment 1.

Referring to Fig. 78, when the cooking menu of "stewing" is selected, the induction heating cooker 2 outputs the menu selection information signal L3, after which the healthcare information selection key 440, the favorite information selection key 450, and the recommended recipe selection key 460 are displayed at the same time on the display screen 129 of the induction heating cooker 2, as shown in Fig. 73. When the recommended recipe selection key 460 is touched, the instruction signal is transmitted to the power instruction apparatus 9, an in return the induction heating cooker 2 acquires the recipe information from the power instruction apparatus 9.

Here, the induction heating operation may be started upon touching one of the healthcare information selection key 440, the favorite information selection key 450, and the recommended recipe selection key 460. For example, when the start key 212 is touched after the healthcare information is displayed as shown in Fig. 74, the induction heating is immediately started. Regarding the transmission of the inquiry signal LM from the induction heating cooker 2 to the power instruction apparatus 9 for acquiring the healthcare information shown in Fig. 78, the induction heating cooker 2 has extracted the caution data out of the measurement data for a "predetermined data collection period" (e.g., 7 days for high blood pressure) before the date of the inquiry. In the case where no caution data has been extracted during such a period, the healthcare information is decided as "unavailable", and the healthcare information selection key 440 is left undisplayed, or a message of "no data" is displayed instead. However, the healthcare information includes categories that have to be improved through an extended period (e.g., body fat rate), the collection period is prolonged (e.g., 1 month) depending on the category of the healthcare information. In the case of high blood pressure also, "predetermined data collection period" can be prolonged to 1 month if desired. In addition, when the healthcare information selection key 440 is used at the step of selecting the cooking menu, the caution data is extracted only from "predetermined data collection period" as above, however when the existing data display command key 425 shown in Fig. 19 is used, all the measurement data accumulated in the past (including data other than the caution data) can be displayed.

The screen shown in Fig. 76 includes input pages for the respective evaluators, and when the occupant selects the own page with an evaluator selection icon 452 and inputs the evaluation, the content inputted is immediately stored in the storage unit 109 of the power instruction apparatus 9, like the measurement data (metabolic data, exercise data) in the healthcare processing unit 116. When the accumulated data increases, the data more than one month old may be automatically transferred to the storage unit 109 of the TV receiver 75, or automatically deleted (erased). This page can also be utilized, for example when filling the bath tub with an automatic hot water supplier (not shown), to input the evaluator code in the remote controller of the hot water supplier and set the temperature according to the preferred bathing temperature. In addition, the target temperature for air conditioning of the rooms the user of which is fixed, or example the room of each child (occupant C, occupant D) may also be set through the favorite information screen, so that the power instruction apparatus 9 performs remote control of the temperature of a specific room so as to match the favorite temperature.

The power control system and the power control apparatus are configured as described above, and therefore provides the same advantageous effects as those provided by Embodiment 1. In addition, the favorite information of the family members are centralized in the power instruction apparatus 9, so that the information can be retrieved on the display panel 100 of the power instruction apparatus 9, the induction heating cooker 2, or the rice cooker 3 whenever necessary, to utilize the information as reference for cooking.

Hereunder, the process of notifying the message recorded in the power instruction apparatus 9 to the intended occupant will be described. Fig. 79 is a flowchart showing the operation program of the control unit 125 of the power instruction apparatus 9 for controlling the TV receiver 75. In Fig. 79, the steps are numbered with a code SN.

When the occupant A comes home, the control unit 125 detects that the occupant has come home on the basis of the signal from the presence detection device 10 (SN1). The control unit 125 compares the occupant A who has come home with the list of message receivers stored in the storage unit 149 (SN2), to decide whether the occupant A is included in the list (SN3). In the case where the occupant A is included in the list, the control unit 125 periodically (e.g., every one minute) checks for a predetermined period of time whether the TV receiver 75 has been turned on, when the exclusive electric appliances of the occupant A include the TV receiver 75. When the TV receiver 75 is turned on, the control unit 125 retrieves the message information stored in a predetermined memory region of the storage unit 149, and displays the message in letters on the LCD screen 75D of the TV receiver 75. The message information may be converted to synthetic voice with an automatic speech generator and outputted. Accordingly, even though the occupant A comes home at midnight, the occupant A can confirm the content of the message despite other occupants (occupant B in Embodiment 2) being asleep. In addition, when the occupant A comes home and checks the screen 100A, the occupant A instantly recognizes that there is a message in view of the mark 59G (see Fig. 69) indicating that the message has been recorded.

As is apparent from the foregoing description, the power instruction apparatus 9 according to Embodiment 2 is configured to limit the total electric power in the household by individually controlling the power usage of the first home electric appliances and the second home electric appliances in the household, and includes:
the control unit 125 that receives the instruction information to start or finish the operation of the first home electric appliance or second home electric appliance transmitted by the occupant from outside the household using the mobile phone terminal 87 through the external communication circuit, and stores the instruction information in the storage unit 149, and
the display device for displaying the memory content of the control unit 125 and the power information of the first and the second home electric appliances.
The control unit 125 compares, upon receipt of the instruction information for the at least one of the first home electric appliances and the second home electric appliances, the instruction information with the permission criteria for permitting start or finish of the operation of the at least one of the first home electric appliances and the second home electric appliances stored in the storage unit 149, and
the control unit 125 transmits, in the case where the start or finish of the operation of the at least one of the first home electric appliances and the second home electric appliances at a predetermined timing based on the instruction information received from the occupant does not satisfy the permission criteria, the information indicating the reason of disapproval of the start or finish of the operation of the at least one of the first home electric appliances and the second home electric appliances based on the instruction information, to the communication terminal device.

With the mentioned power instruction apparatus, the power use status of the electric appliances and the instruction information to start or finish the operation of the at least one of the first home electric appliances and the second home electric appliances can be displayed on the display panel 100 (display device), and therefore the occupant can be made aware of not only the power usage information but also the remote operation from outside, while the occupant is at home.

In addition, when the instruction information for the remote operation is received from the mobile phone terminal 78 located outside the household, the remote operation of the designated first home electric appliance or the second home electric appliance is not permitted unless the permission criteria specified in the control unit 125 is satisfied. Therefore, the use of the home electric appliance not in accordance with the environment of the living space or power usage status can be suppressed, and also inefficient operation can be avoided. Thus, the home electric appliances can be operated without compromising the expected performance and with sufficient care for other home electric appliances and the ambient environmental conditions.

In the power control system according to Embodiment 2,
the occupant (user of home electric appliance) acquires the information of current position from the GPS satellite through the mobile phone terminal 87, and the information of the time of arrival at the destination from the server 272 for arrival time search on the basis of the acquired current position, and transmits the information of the predicted arrival time to the power instruction apparatus 9. The power instruction apparatus 9 permits the remote operation to start the operation of the home electric appliance designated by the mobile phone terminal 87 when the predetermined permission criteria is satisfied, and therefore the home electric appliances in the household are controlled by the power instruction apparatus 9 such that the operation start time or finish time is changed so as to match the home arrival time of the occupant. Consequently, the operation of the predetermined home electric appliances can be started or finished at the time point close to the actual home arrival time of the occupant, as an additional advantageous effect.

As is apparent from the foregoing description, the household power instruction apparatus according to the sixth aspect described as Embodiment 2 is configured to control the total electric power in the household by individually controlling the plurality of home electric appliances EE, and includes the presence detection device 10 that detects the presence of one or more occupants, the storage unit 149 containing the exclusive user information in which the specific home electric appliance (e.g., TV receiver 75) for exclusive use by the occupant A in the plurality of home electric appliances and the information for identifying the occupant A are associated with each other, the control unit 125 that permits or restricts the operation of the home electric appliances, and the storage unit 149 for storing useful information for each of the occupants.

The control unit 125 decides, upon receipt of the signal requesting permission of use from the exclusive electric appliance (e.g., TV receiver 75), whether the exclusive user and the occupant at home are the same, on the basis of the exclusive user information in the exclusive user information storage unit and the occupant information detected by the presence detection device 10, and outputs the signal permitting the exclusive electric appliance (e.g., TV receiver 75) to start the operation, in the case where the exclusive user and the occupant at home are the same.

At least one of the exclusive electric appliances is the TV receiver 75 having the LCD screen 75D.

The control unit 125 outputs, when the presence detection device 10 detects that the occupant A who is the exclusive user of the TV receiver 75 has come home and when the TV receiver 75 is turned on, the instruction to cause the TV receiver 75 to display or notify the useful information (message) for the occupant A, out of the information accumulated in the storage unit 149.

With the power instruction apparatus according to Embodiment 2, in addition to the advantageous effects provided by the first aspect, when the specific person comes home and turns on the TV receiver 75, the useful information for the specific person (occupant A) registered as exclusive user of the TV receiver 75 (e.g., a message left by a family member while the specific person is away from home, or an important regular job to be done after coming home) is displayed on the display screen 75 of the TV receiver 75 or outputted as voice message when the specific person comes home and turns on the TV receiver 75, which allows the useful information to be delivered to the target occupant and making the communication among the family members smoother.

According to Embodiment 2, when the presence detection device 10 detects that the occupant A who is the exclusive user of the TV receiver 75 has come home and when the TV receiver 75 is turned on, the control unit 125 outputs the instruction to cause the TV receiver 75 to automatically and immediately display or notify the useful information (message) for the occupant A, out of the information accumulated in the storage unit 149. Alternatively, letters or a symbol merely indicating that there is a message may be displayed first, and the content of the message may be outputted at the timing that the occupant to which the message is directed instructs the replay of the message. To be more detailed, when a message is recorded, a sign as "recorded" like the display section 69D may be displayed on the TV receiver 75, or a voice guidance to this effect may be outputted, with a key for the occupant to choose whether to confirm the content of the message immediately or at a later time, so that the message is replayed at the timing designated by the occupant.

Further, Embodiment 2 represents the case where the exclusive electric appliance of the specific occupant is the TV receiver. This is based on concern about the privacy issue because, though it may depend on the content of the message, when another occupant turns on the TV receiver the message for the occupant A is automatically displayed or replayed, thus being disclosed to another occupant. However, in the case where the message is intended to be delivered to all of the occupants, it is advantageous that all the TV receivers in the household are configured to output the message, so that the message can be shared among all family members. In such a case, the present invention is valid even though the TV receiver is not registered as exclusive electric appliance of a specific occupant and all the TV receivers are accessible by all the occupants of the household.

### Embodiment 3

Fig. 80 is a schematic drawing showing a general configuration of a power control system according to Embodiment 3 of the present invention, Fig. 81 is a partially cross-sectional block diagram showing a configuration of an essential part of the power control apparatus shown in Fig. 80, and Fig. 82 is a timechart for explaining signal transmission between the respective essential parts of the power control system shown in Fig. 80 and the health management system. In the cited drawings, the constituents same as or corresponding to those of Embodiment 1 are given the same numeral.

A distinctive feature of Embodiment 3 is that data showing correspondence between the TV receiver, which is a picture information apparatus that notifies messages to a specific occupant (occupant A), and the location thereof is contained in the database in the storage unit 149 of the power instruction apparatus 9, and the TV receiver 75 in the bedroom is operated as exclusive electric appliance of the occupant A when the occupant A simply designates the bedroom as the place where the occupant A is, through the operation input region 117 of the use limit setting device 96 of the power instruction apparatus 9 (unless such designation is cancelled),

In Embodiment 2, a plurality of TV receivers 75 are provided, one of which is located in the bedroom of the occupant A and customarily registered as exclusive electric appliance of the occupant A. Another TV receiver is placed in the living room as common home electric appliance. Further details will be subsequently described.

In Fig. 80, HA1 denotes a living space 1 in a house. HA2 also denotes a living space, actually a bathroom. 500 denotes a bath tub installed in the bathroom, to which hot water is supplied from an electric hot water system 502 installed outside. 501 denotes a remote controller for the hot water system attached to an inner sidewall of the living space HA2, to be operated by the user to start the hot water supply or set the temperature of the hot water.

The remote controller 501 is electrically connected to the electric hot water system 502, which is connected to the main circuit (power supply line) 27 to receive the power supply.

750 denotes a TV receiver for bathroom placed inside the bathroom HA2 and connected to the main circuit (power supply line) 27, and is connected to the (main) TV receiver 75 placed in the living room via a normal signal cable 751. Still another TV receiver 75 is provided in the bedroom of the occupant A. The signal cable cited above is used to transmit broadcast signals and the signals from the power instruction apparatus 9, however the transmission and reception of signals may be performed utilizing the power supply line as power line carrier, or by wireless infrared communication, instead of the wired connection with a specialized cable. 760 denotes the lighting equipment for the bathroom.

The (main) TV receiver 75 and the bathroom TV receiver 750 are not registered as exclusive electric appliance of any of the occupants and are hence common home electric appliances, however when for example the occupant A designates the bedroom as the place where the occupant A is through the operation input region 117 of the power instruction apparatus 9, the bedroom TV receiver 75 is operated as exclusive electric appliance of the occupant A, unless the designation is cancelled. In addition, when the occupant A designates the bathroom as the place where the occupant A is going to be through the operation input region 117 of the power instruction apparatus 9, the bathroom TV receiver 750 is thereafter operated as exclusive electric appliance of the occupant A. Therefore, a message or information useful to the occupant A is preferentially provided to the occupant A through the exclusive electric appliance.

The bathroom TV receiver 750 according to Embodiment 3 is provided primarily for receiving pictures, sounds, and information, and is configured, though not provided with all of the functions of the TV receiver 75 in the living room, to display the same broadcast content as the TV receiver 75 and all types of information transmitted from the power instruction apparatus 9. In addition, the bathroom TV receiver 750 can be independently operated regardless that the TV receiver 75 is turned on, to display pictures and so forth. However, the bathroom TV receiver 750 does not include a high-capacity memory like that of the TV receiver 75. The storage device of the bathroom TV receiver 750 is only capable of storing a short movie, and the metabolic data acquired by the healthcare instrument 410 is not accumulated. Further, when the TV receiver 75 receives the emergency earthquake information from the external organization 78B or through the power instruction apparatus 9, or when an earthquake detection device (though not shown, mounted in the power instruction apparatus 9 and kitchen electric appliance KP) detects seismic vibration, the bathroom TV receiver 750 is turned on at the same time as the TV receiver 75, and the related information is displayed on the display screen.

As shown in Fig. 81, the main body 9A of the power instruction apparatus 9 includes the use limit setting device 96 that sets the power usage of the home electric appliances EE including the kitchen electric appliance KP, the control unit 125 constituted of electronic circuits, primarily a microcomputer, and the healthcare processing unit 116 operated under the control of the control unit 125. The screen 100A having a size of 10 to 15 inches is attached to the front face of the main body 9A. The main body 9A of the power instruction apparatus 9 is depiced in a box shape having a certain thickness in Fig. 81, actually the main body 9A is of a flat plate shape having a thickness of 2 to 3 cm and a weight of approximately 2 kgs. Accordingly, although the main body 9A is usually hooked on the kitchen wall, the main body 9A can be placed on a kitchen table or moved to another room.

The power instruction apparatus 9 includes the power cord (not shown) connectible to the power supply line 27, however the main body 9A includes therein a high-performance storage battery (not shown), so as to work without the power supply line 27. When the power supply through the power cord is disconnected, the power source is immediately switched to the storage battery automatically. The communication between the use limit setting device 96 and each of the home electric appliances EE in the household is performed via infrared ray or wireless communication.

In addition, the main body 9A of the power instruction apparatus 9 is connected via a router (not shown) or the like to the external organization 78A having an exclusive server for providing various types of information and content through the internet. When information is transmitted from the side of the external organization 78A, the power instruction apparatus 9 immediately confirms the content of the information. The healthcare processing unit 116 in the main body 9A of the power instruction apparatus 9 includes the information reception unit 137 for receiving the information outputted from the healthcare instruments 410, for example the blood pressure monitor 410A, as described in Embodiment 1. The reception unit 137 is configured to receive the information acquired by the mobile phone terminal 87, the exercise information and calorie consumption information acquired by the exercise equipments (e.g., indoor exercise and measurement equipment 311 A), and so forth.

503 denotes composite measurement devices each including a thermometer and a hygrometer, located at least on the inner wall of the kitchen space, in the rooms such as the living room where the TV receiver 75 is placed, and inside the bathroom, and connected to the environment detection unit 202 according to Embodiment 1, via wireless or wired communication. The composite measurement devices 503 respectively located in three places separated from each other also perform infrared or wireless communication with the environment detection unit 202 mounted in the main body 9A of the power instruction apparatus 9. Accordingly, the environment detection unit 202 measures the temperature and humidity at predetermined time points, and transmits the measured data to the control unit 125 of the power instruction apparatus 9 each time. The environment detection unit 202 may periodically transmit (e.g., every one minute) the measurement result of the temperature and humidity to the control unit 125 of the power instruction apparatus 9. In Embodiment 3, further, the environment detection unit 202 is configured to transmit to the composite measurement device 503 an instruction to provide latest measurement data, in compliance with an instruction from the control unit 125.

The composite measurement devices 503 are each given an identification code according to the location, and the identification code is added as header to the temperature and humidity measurement data when the composite measurement devices 503 transmits the data, and therefore the environment detection unit 202 of the power instruction apparatus 9 can identify to which location the environment measurement data corresponds.

Fig. 82 is a timechart showing the signal transmission process between the power control system and the essential parts of the power control apparatus in chronological order, in which the home electric appliance EE is exemplified by the TV receiver 75 and the rice cooker 3. Here, it will be assumed that the timer of the rice cooker 3 was set the night before in the kitchen so as to finish the rice cooking at 6:35 a.m. the next morning.

Referring to Fig. 82, the operation of the power control system and the health management system starting from the wake-up time will be described.

The occupant A gets up at 6:00 a.m. and presses the designated switch of the TV receiver 75 (registered as exclusive electric appliance of the occupant A by the night before) provided in the bedroom to watch a TV program. At this point, the activation signal of the LCD screen 75D is immediately transmitted from the TV receiver 75 to the power instruction apparatus 9 (time: 6:10). The power instruction apparatus 9 outputs the measurement instruction signal as indicated by a broken-line arrow 770A in Fig. 82, to the composite measurement device 503 (thermometer and hygrometer) in the living room where the TV receiver 75 is located, and the composite measurement device 503 transmits the measurement result of the temperature and humidity to the power instruction apparatus 9 (time: 6:11).

The power instruction apparatus 9 then recommends the occupant A to measure the blood pressure with the healthcare instrument 410 within 30 minutes after waking up, unless the data of temperature and humidity in the bedroom where the TV receiver 75 is located acquired by the environment detection unit 202 is not at an uncomfortable level to the occupant A. The power instruction apparatus 9 also recommends to perform a light exercise such as radio calisthenics or relaxing exercise after the measurement. Such recommendation (suggestion for action) is displayed on the screen of the TV receiver 75 in letters, and also outputted as voice message to be notified to the viewer. Since the TV receivers 75 are located in the living room and the bedroom on the second floor, in the case where the occupant who has woken up turns on the TV receiver 75 in the bedroom the TV receiver 75 in the living room is not activated, and the recommendation of the measurement for health management and the exercise is displayed on the display screen 75 of the TV receiver 75 in the bedroom on the second floor (time: 6:12). This is because the occupant A registered his presence in the bedroom in the power instruction apparatus 9 in advance, and designated the TV receiver 75 in the bedroom on the second floor as exclusive electric appliance of the occupant A.

When the occupant measures the blood pressure thereafter, the blood pressure monitor 410A automatically transmits the blood pressure measurement data to the healthcare processing unit 116 of the power instruction apparatus 9, after the measurement (time: 6:20). In the case where the occupant goes to the lavatory and measures the urine components with the urine analyzer, the urine analyzer 410G automatically and immediately transmits the urine analysis result to the healthcare processing unit 116 of the power instruction apparatus 9.

The healthcare processing unit 116 of the power instruction apparatus 9 immediately transmits the blood pressure data and the urine analysis data to the TV receiver 75 which has already been activated. Thus, when the occupant turns on the TV receiver in the 75 in the bedroom on the second floor upon waking up, the TV receiver 75 on the second floor automatically displays the healthcare data. Here, it is also possible to activate the TV receiver 75 in the living room on the first floor to view the healthcare data. In this case, although the TV receiver 75 on the first floor has to be registered in advance as exclusive electric appliance of the occupant A, the occupant A can make a special input of "healthcare data disclosable" in the healthcare processing unit 116 of the power instruction apparatus 9, provided that the occupant A does not mind the blood pressure data being seen by other occupants. As above, the healthcare data of the occupant A who is now awake is temporarily stored in the healthcare processing unit 116 of the power instruction apparatus 9, and then recorded and accumulated in the storage unit (high-capacity memory) 109 of the TV receiver 75 in the living room (time: 6:31).

When the rice cooker 3 transmits the information to the effect that the rice cooking has finished and the keep-warm phase is entered to the power instruction apparatus 9 at 6:35, the power instruction apparatus 9 outputs the instruction to submit the latest measurement result of the indoor temperature and humidity to the composite measurement device 503 in the kitchen where the rice cooker 3 is located, as indicated by a broken-line arrow 770B in Fig. 82.

The composite measurement device 503 transmits the indoor temperature and humidity in the kitchen to the power instruction apparatus 9. The TV receiver 75 outputs the instruction to stop the keep-warm operation to the power instruction apparatus 9, in the case where it is decided that the keep-warm operation is unnecessary, after the receipt of the notice from the power instruction apparatus 9 to the effect that the rice cooking has finished and the keep-warm phase is entered, and of the temperature and humidity information from the environment detection unit 202 indicated by an arrow 770C (time: 6:40). The power instruction apparatus then instructs the rice cooker 3 to stop the keep-warm operation (6:41).

Thereafter, the rice cooker 3 notifies the power instruction apparatus 9 that the keep-warm operation has been stopped, and the power instruction apparatus 9 notifies that the keep-warm operation has been stopped, to the TV receiver 75 which outputted the instruction to stop the keep-warm operation. Accordingly, in view of the TV receiver 75 it is understood that the rice cooking has been finished but the keep-warm operation is not being performed, from the letters or illustration displayed on the LCD screen 75D. Since the rice cooking finish information is not a message for a specific occupant, such information is broadly announced so that everybody can be made aware.

Here, although the energy-saving effect of the rice cooker 3 is improved when the keep-warm operation is stopped, the nicely cooked rice may emit offensive odor with the lapse of time. However, when the room temperature around the rice cooker 3 is sufficiently low (e.g., winter time) the keep-warm operation may be skipped. Accordingly, the power instruction apparatus 9 compares the room temperature detected by the environment detection unit 202 with criteria that permits the keep-warm phase to be skipped specified in the rice cooker 3, and outputs the instruction to stop the keep-warm operation to the rice cooker 3 in the case where the rice cooker 3 is in the environment that satisfies the criteria. Thus, when the keep-warm operation is stopped from a remote place through the TV receiver 75 and the power instruction apparatus 9, unlike the case where the user actually goes to the place where the rice cooker 3 is located and stops the keep-warm operation, the power instruction apparatus 9 looks up the situations that restrict the use of the rice cooker 3 and the criteria specified therein, and outputs the instruction to stop the keep-warm operation only when the situation is on the safe side, so as not to provoke an erroneous operation of the user.

Since the rice cooker 3 is configured so as to automatically enter the keep-warm phase upon finishing the rice cooking operation, when one of the occupants stops the keep-warm operation through TV receiver 75 the remaining occupants (family members) are unaware of such operation, and also the occupant who stopped the keep-warm operation may forget having done so, and hence a trouble may be later incurred (e.g., an occupant may misunderstand that the rice cooker 3 has failed) when it is known after a considerable period of time that the keep-warm operation has been stopped. Accordingly, the notice that the keep-warm operation has been stopped is displayed on the TV receiver 75, so that all the occupants may be made aware of the operation. In addition, also in the TV receivers 75 other than the one in which the instruction about the keep-warm operation has been inputted, the fact that the keep-warm operation has been stopped is displayed in the screen of the electric energy management of the home electric appliances, and the same information is also displayed in the screen 100A of the power instruction apparatus 9, so that the occupant can be made aware that the keep-warm operation has been stopped. As a matter of course, the user can visually confirm immediately that the keep-warm operation has been stopped, in view of the LCD unit 49, or the keep warm switch 55 being lit up, on the rice cooker 3.

With the configuration according to Embodiment 3, for example in the case where the external organization 78B outputs the Earthquake Early Warning, or when the house itself shakes because of the earthquake while the occupant is taken the bath, the occupant can immediately notice the occurrence on the bathroom TV receiver, and hence exempted from falling into a panic owing to the sudden unexpected occurrence of earthquake and getting hurt trying to escaping from the bathroom in haste. With the bathroom TV receiver 750, the occupant can also confirm the healthcare data in a relaxed mode inside the bathroom, and register the favorite information. Here, even though the occupant located outside the bathroom presses the emergency cut-off button 119A to disconnect the power supply all at once, the lighting equipment 760 in the bathroom is kept on.

Further, the temperature of the hot water for bathing can be confirmed and set to a preferred temperature with the remote controller 501, so as to realize a comfortable bathing temperature. In the case where the bathroom TV receiver 750 is configured to display the special icon 414 of "emergency power cut-off" and the special icon 415 of "emergency earthquake/tidal wave news received" like the screen of the TV receiver 75 shown in Fig. 17, the power supply to a predetermined types of electric appliances in the household can be disconnected by selecting the special icon 414 of "emergency power cut-off" without the need to go to the place where the main body 9A of the power instruction apparatus 9 is located, and also the occupants can start evacuating the house in preparation for the attack of the tidal wave. Thus, a higher level of safety can be achieved.

The power instruction apparatus 9 according to Embodiment 3 is also configured to display on the screen 100A, as in Embodiment 1, the power usage status of the home electric appliances EE, as well as the instruction to start or finish the operation of the first home electric appliance or the second home electric appliance transmitted to the power instruction apparatus 9 from the mobile phone terminal 78 located outside. Therefore, the occupant can recognize while staying at home not only the power usage information but also whether remote operation has been performed from outside.

When the instruction of remote operation is received from the mobile phone terminal 78 located outside, the remote operation of the designated first home electric appliance or second home electric appliance is not permitted unless the predetermined permission criteria specified by the control unit 125 and stored in the storage unit 149 is satisfied. Therefore, the use of the home electric appliance not in accordance with the environment of the living space or power usage status can be suppressed, and also inefficient operation can be avoided. Thus, the home electric appliances can be operated without compromising the expected performance and with sufficient care for other home electric appliances and the ambient environmental conditions.

The power control system according to Embodiment 3 also includes, as in Embodiment 1, the power instruction apparatus 9 that controls the total power usage of the first home electric appliances and the second home electric appliances, the environment detection unit 202 that receives the environment data measured by the environment sensor that detects the physical environment of the living space where the first and second home electric appliances are provided, and the display device (display panel 100) for displaying the power information and the environment information.

The power instruction apparatus 9 includes the input/output terminal 124B for receiving the information of the scheduled home arrival time from outside through the communication network, and the control unit 125 that permits the first home electric appliance to start the operation when the start time is reached.

The control unit 125 compares the scheduled home arrival time shown in the communication data received from the occupant with the operation start time of the first home electric appliance (e.g., air-conditioning apparatus 7) in which the operation start time is reserved, and outputs, in the case where the time difference between the mentioned times is larger than a predetermined time, the instruction to change the operation start time or operation finish time of the first home electric appliance so as to match the scheduled home arrival time, provided that the predetermined environmental condition (e.g., room temperature), specified in the control unit 125 on the basis of the environment information related to the first home electric appliance, is satisfied.

With the mentioned configuration, the environment-related information can be displayed on the screen 100A of the power instruction apparatus 9 and the TV receiver 75, in addition to the power information, and therefore the user is motivated to become more conscious of energy saving and health management. For example, the user can confirm the environment data such as indoor temperature, humidity, and dust scattering degree in view of the display, and therefore the environment of the living space can be confirmed on a real-time basis, which facilitates realization of a healthy life space.

In addition, the state of the living space can be confirmed on the display device of the power instruction apparatus 9 provided for displaying the power usage status of the home electric appliances, without the need to go to the living space (room), and therefore a higher level of user-friendliness can be obtained.

Further, the operation finish time of the first home electric appliance (e.g., rice cooker 3) reserved by inputting the operation finish time can be changed by the communication data from the occupant showing the scheduled home arrival time, so that the operation can be started and finished before the occupant comes home.

The environment of use of the first home electric appliance can also be confirmed through the screen 100A of the power instruction apparatus 9 and the TV receiver 75.

Still further, the operation finish time (reserved finish time A) or the operation start time (reserved start time A) of the first home electric appliance is restricted from being changed by remote operation, unless the condition specified in the control unit 125 is satisfied. Therefore, the first home electric appliance can be prevented from being set to work with useless electric energy consumption, and be allowed to perform the operation without compromising the expected quality and in an environment-friendly manner so as not to affect the operation of other home electric appliances.

As is apparent from the foregoing description, the power instruction apparatus 9 according to the sixth aspect described as Embodiment 3 is configured to control the total electric power in the household by individually controlling the plurality of home electric appliances EE, and includes the presence detection device 10 that detects the presence of one or more occupants, the storage unit 149 containing the exclusive user information in which the specific home electric appliance (e.g., TV receiver 75) for exclusive use by the occupant A in the plurality of home electric appliances and the information for identifying the occupant A are associated with each other, the control unit 125 that permits or restricts the operation of the home electric appliances, and the storage unit 149 for storing useful information for each of the occupants.

The control unit 125 decides, upon receipt of the signal requesting permission of use from the exclusive electric appliance, whether the exclusive user and the occupant at home (e.g., occupant A) are the same, on the basis of the exclusive user information in the exclusive user information storage unit and the occupant information detected by the presence detection device 10, and outputs the signal permitting the exclusive electric appliance to start the operation, in the case where the exclusive user and the occupant at home are the same.

At least one of the exclusive electric appliances is the TV receiver 75 having the display screen.

The control unit 125 outputs, when the presence detection device 10 detects that the occupant who is the exclusive user of the TV receiver 75 (e.g., occupant A) has come home and when the TV receiver 75 exclusive to the occupant (e.g., occupant A) is turned on, the instruction to cause the TV receiver 75 to display or notify the useful information for the occupant A, out of the information accumulated in the storage unit 149.

With the configuration according to the sixth aspect allows, in addition to the advantageous effects provided by the first aspect, when the specific person comes home and turns on the TV receiver, the useful information for the specific person registered as exclusive user of the TV receiver (e.g., a message left by a family member while the specific person is away from home, or an important regular job to be done after coming home) can be displayed on the display screen of the TV receiver, so that the useful information can be visually transmitted to the occupant.

### Embodiment 4

Fig. 83 is a front view showing an appearance of a display screen and a remote controller of a TV receiver used in the power instruction apparatus and the power control system according to Embodiment 4 of the present invention. Fig. 84 is a front view showing the appearance of the display screen and the remote controller of the TV receiver shown in Fig. 83, displaying a list of cooking recipes. Fig. 85 is a front view showing an appearance of the display screen and the remote controller of the TV receiver shown in Fig. 83, displaying a search result of the cooking recipe. Fig. 86 is a flowchart showing an operation of the TV receiver shown in Fig. 83, after the display screen is turned on. Fig. 87 is a flowchart showing an operation of the TV receiver shown in Fig. 83, for finding the cooking recipe. Fig. 88 is a flowchart showing an operation of the TV receiver, performed when the power instruction apparatus receives a cooking recipe from outside of the house. In the cited drawings, the constituents same as or corresponding to those of Embodiment 1 are given the same numeral.

In Embodiment 4, the cooking instruments such as the induction heating cooker 2, the rice cooker 3, the grill cooker 4, and the oven range 5 are improved so that the desired cooking recipe can be more simply determined. In addition, the memory storing operation of the TV receiver and the power instruction apparatus, performed when the power instruction apparatus receives the cooking recipe transmitted from outside the house for example through the mobile phone terminal, is improved.

Fig. 83 is a front view of the TV receiver displaying the TV portal site. When the power-ON button on the remote controller 75R is pressed once, the TV receiver 75 is activated and the system control unit 75E displays the ordinary broadcast program on the LCD screen 75D. Then when the portal site selection button (not shown) on the remote controller R is pressed, the system control unit 75E displays the TV portal site on the LCD screen 75D.

As shown in Fig. 83, the TV portal site displays a menu including icons (on-screen input switches) 411 surrounded by a rectangular frame indicating, for example, "news", "weather report", "traffic information", "earthquake/tidal wave information". The TV portal site also displays a special icon 412 indicating "healthcare information", a special icon 413 indicating "electric energy management", a special icon 601 indicating "recommended dish", and an icon 419 indicating "living environment information". These four special icons may be displayed in a larger size or in an outstanding color, for clearer visual recognition compared with other ordinary icons.

When the special icon 601 of "recommended dish" is selected with the remote controller 75R on the screen displayed as Fig. 83, the content of the LCD screen 75D largely changes as shown in Fig. 74. Fig. 84 shows the recipes of the dishes stored in the storage unit 109 of the TV receiver 75. As shown in Fig. 84, three recommended recipes are horizontally aligned to the right from an information sign 602 of "vegetable series" for showing vegetable-main recipes. In Fig. 84, the farthest left recipe is numbered as "#1", and the recipes on the right are sequentially numbered as "#2" and "#3". 602A denotes an information sign of "#1" which represents the most recommended recipe. The second recommended recipe is denoted by an information sign 602B of "#2", and the third one is denoted by an information sign 602C of "#3", to distinguish the recipes.

603 denotes an information sign of "meat & vegetable" for showing recipes of meat and vegetable mixed dishes, and four specific recommended recipes are horizontally aligned on the right of the information sign 603. A farthest left recipe information 603A is numbered as "#1".

604 denotes an information sign of "fish series" for showing fish-main recipes, and four specific recommended recipes are horizontally aligned on the right of the information sign 604. A farthest left recipe information 604A is numbered as "#1".

605 denotes an information sign of "soup & stew" for showing recipes of liquid-based dishes such as soup and stew, and four specific recommended recipes are horizontally aligned on the right of the information sign 605. A farthest left recipe information 605A is numbered as "#1".

Among the recipes, the farthest left one is given the highest priority, and for example when the vegetable-main recipe is displayed in the display screen 129 of the induction heating cooker 2, the recipe represented by the information sign 602A is displayed first, and when the next recommended recipe is selected the information sign 602B is displayed. Thus, the recipes aligned from left to right in Fig. 84 are sequentially selected, and the individual recipes are sequentially displayed.

In the cooking instruments such as the induction heating cooker 2, the rice cooker 3, the grill cooker 4, and the oven range 5, when one of the recipes is once selected, the selected recipe is given the highest priority, and displayed at the farthest left position in the LCD screen 75D next time. As a matter of course, when the recipe is selected on the induction heating cooker 2 also, the recipe newly given the highest priority is retrieved first and displayed on the corresponding cooking instrument.

In Fig. 84, 606 denotes a selection key (icon) for finding recipes by material, like the recipe selection key 460E of Embodiment 2 shown in Fig. 77. 418 denotes the icon for switching to the single-purpose screen of electric energy management, as shown in Fig. 14, Fig. 15, and Fig. 16 of Embodiment 1.

607 denotes an icon for finding the recipe, and 608 denotes an icon for adding a new recipe or modifying a part of the existing recipe.

609 denotes an icon for returning to the screen of the TV portal site shown in Fig. 83.

When the recipe 602A corresponding to the vegetable series recipe (#1) is selected with the remote controller 75R on the screen displayed as Fig. 84, the content of the LCD screen 75D largely changes as shown in Fig. 85. Fig. 85 illustrates the LCD screen 75D of the TV receiver 75 displaying specific details of the recipe. In Fig. 85, 602T denotes a section for displaying the information regarding the selected recipe 602A, and 602G denotes a section for displaying photos or illustrations showing the dish in finished state or in process.

602P denotes a section for displaying the detailed description of the materials and cooking process, 602K denotes a section showing the calorie value of one portion of the recipe 602A, and 603 denotes a section showing the salt content (weight) of one portion of the recipe 602A.

602X denotes a section showing the power usage (kwh) of the heat cooking instrument required for cooing one portion of the relevant dish. Here, the power usage is merely a reference because it depends on the type and grade of the heat cooking instrument.

602M denotes a section of the evaluation comment written by one of the family members about the relevant dish, displaying either or both of the comment written on the page of "favorite information registration" of Embodiment 2 shown in Fig. 76 and the comment written on the screen selected by an icon 611 of "add evaluation" shown in Fig. 85 (a plurality of comments can be recorded).

610 denotes an icon for transmitting the recipe 602A shown in Fig. 85 to, for example, the induction heating cooker 2. Regarding the transmission of the recipe, actually the information for identifying the recipe 602A is transmitted to the power instruction apparatus 9, and when the information indicating that the induction heating cooker 2 is searching for the recipe is transmitted from the induction heating cooker 2 to the power instruction apparatus 9 the recipe information is retrieved from the storage unit 109 of the TV receiver 75 and provided to the induction heating cooker 2. This is because some of the recipes contain photos and image data and when the recipe composed of a large amount of information is transmitted to the cooking instrument as it is the data may exceed the storage capacity of the built-in memory of the cooking instrument. In the case where the cooking instrument has sufficient storage capacity, the recipe information may be transmitted to the cooking instrument in advance as described in Embodiment 1, or temporarily stored in the built-in memory of the power instruction apparatus 9.

Regarding the content of the recipe, for example a recipe of "gratin" is unable to be transmitted to the rice cooker 3, while a recipe of "mixed rice" can be transmitted to the rice cooker 3. Thus, the property information of the recipes includes the code of the applicable cooking instruments, the code being identical with that of the cooking instruments constituting the kitchen electric appliances KP.

Here, for example when the recipe 602A is transmitted to the induction heating cooker 2 the transmission record is maintained in the power instruction apparatus 9, and therefore when the induction heating cooker 2 requests for the recipe the power instruction apparatus 9 looks up the transmission record to identify the recipe. Therefore, when the vegetable series recipe is later searched for from the induction heating cooker 2 (see Fig. 77 in Embodiment 2), the recipe 602A is displayed first in the display screen 129, with priority over other recipes.

Fig. 86 is a flowchart showing the operation of the TV receiver 75 for selecting the desired recipe. In this case it will be assumed that the main power of the TV receiver is already turned on.

First, the designated button on the remote controller 75R is pressed to activate the LCD screen 75D of the TV receiver 75 (step 1; hereafter, the steps will be denoted by "SS"). Then the system control unit 75E turns on the power FET 75S interposed between the LCD screen 75D and the power supply unit 75G thereby activating the LCD screen 75D (SS2).

Accordingly, the LCD screen 75D displays the portal site screen of Fig. 83 (SS3). When the special icon 601 for selecting the recommended recipe is selected (SS4), the system control unit 75E outputs the instruction to retrieve the recipes of various dishes stored in the high-capacity memory 109, and the list of the recipes is displayed as shown in Fig. 84 (SS5).

Here, when the special icon 413 for selecting the electric energy management is selected (SS6) instead of the special icon 601 for selecting the recommended recipe, the display is switched to the screen of the electric energy management (SS7).

75J denotes a tuner device for receiving broadcast waves such as ground wave and satellite wave, through the outdoor antenna 77.

When one of the recipes displayed as Fig. 84 is selected, the content of the selected recipe is displayed on the large-sized LCD screen 75D as shown in Fig. 85. At this point, the recipe selected on the screen of Fig. 85 can be transmitted to the cooking instrument by pressing the icon 610.

When so many recipes are displayed in the screen of Fig. 85 (Fig. 85 only shows 15 recipes for the sake of visual clarity) that it is difficult to find the preferred recipe, the icon 607 for searching may be selected (SS8), so that a screen for inputting search conditions is displayed on the LCD screen 75. In this example, six conditions are listed as shown in Fig. 87. When the item 4 "health management" is selected, for example the condition of "high blood pressure" can be inputted (input items are listed for selection of one or more). Other search conditions that can be inputted are, "name of recipe", "calorie value", "electric energy consumption", "name of cooking instrument", and "past selection".

As result of the search with respect to the healthcare information (SS12), the recipe suitable for those having high blood pressure is displayed on the LCD screen 75D as shown in Fig. 85 (SS12), which can be transmitted to the cooking instrument by pressing the icon 610.

To search for the recipe by material (e.g., vegetable series) instead of the mentioned search, the information sign 602 may be selected (SS10), in which case the content of the vegetable-based recipes 602A to 602C is displayed on the LCD screen 75 (SS11). Thereafter, one or more of the vegetable-based recipes 602A to 602C may be selected.

Referring now to Fig. 88, description will be given regarding the operation of the power instruction apparatus 9 performed upon receipt of the cooking recipe from the mobile phone terminal located outside the house.

When the user goes out with the mobile phone terminal 87 and transmits from outside the cooking recipe to the power instruction apparatus 9 inside the house, the cooking recipe reaches the power instruction apparatus 9 through the wide area communication network (communication network) 98 (SS21).

The control unit 125 of the power instruction apparatus 9 analyzes the information of the cooking recipe received (SS22). The information of the transmitted cooking recipe includes, in addition to the inherent information of the recipe such as the material and cooking method, the name, letters, mark, or code for identifying the occupant B who performed the transmission from the mobile phone terminal 87. The information also includes incidental data indicating which of the evaluation information and which of the heating cookers in the household the occupant who performed the transmission is intending to use, in relation to the transmitted recipe.

Accordingly, the control unit 125 analyzes such content of the information and converts the information into a predetermined data format. At this point, the current date and time (e.g., 15:00, October 10, 2012) of this data processing is also automatically added to the information of the cooking recipe (SS23).

Then the human body detection unit 203 decides whether any of the occupants (four occupants A, B, C, and D) is in the living space (SS24), and when no detection data indicating the presence of a person is obtained it is decided that all the occupants are away, and such decision result is acquired by the control unit 125. Accordingly, the control unit 125 transmits the data of the cooking recipe converted into the predetermined format to the storage unit 149 of the power instruction apparatus 9 and instructs the storage unit 149 to temporarily store the data, so that the storage unit 149 performs the storage operation (SS30).

Regarding the temporarily stored data, when the presence detection device 10 later detects that the occupant (e.g., occupant B) has come home and the operation of the cooking instrument configured to utilize the information of the cooking recipe, for example the induction heating cooker 2, is started (in this case also, human body detection unit 203 detects the presence of a person and transmits the detection signal to the control unit 125), the operation proceeds to SS25, where the notice to the effect that the data of cooking recipe has been received from outside is displayed on the screen 100A of the power instruction apparatus 9. For example, letters stating to the effect that the data of cooking recipe has been received from outside are displayed on the screen 100A, together with the name, letters, mark, or code for identifying the occupant who performed the transmission. The receipt of the data of cooking recipe may also be announced with the voice guidance device (not shown).

The control unit 125 of the power instruction apparatus 9 then decides whether the main power of the TV receiver 75 is already turned on and the display screen 75 is activated (SS26). To do so, the control unit 125 may transmit a signal to the TV receiver 75 for inquiring whether the LCD screen 75D is activated, however normally an operation information signal is transmitted to the power instruction apparatus 9 at the time that the LCD screen 75D of the TV receiver 75 is activated, and therefore it is not necessary to confirm each time from the side of the power instruction apparatus 9. The operation information signal refers to the signal transmitted each time the TV receiver is activated or changes the operation mode, like the operation information signals L1 to L7 outputted from the induction heating cooker 2 described in Embodiment 1.

Then the information to the effect that the data of cooking recipe has been received from outside is displayed on the LCD screen 75D of the TV receiver 75 (SS27). The receipt of the data of cooking recipe may also be announced with the voice guidance device (not shown).

Accordingly, the occupants (if all the occupants A, B, C, and D are at home, all of those) can recognize the receipt of the cooking recipe by the LCD screen 75D of the TV receiver 75 and by the power instruction apparatus 9. In the case where one of the occupants at home expresses the intention of inhibiting the storage in a predetermined form (e.g., occupant B wishes to revoke the cooking recipe once transmitted from outside), the data of cooking recipe is neither stored in the storage unit 109 of the TV receiver 75 nor in the storage unit 149 of the power instruction apparatus 9 (the data of cooking recipe once stored in the storage unit 149 is automatically erased). In other words, the intention of the occupant currently at home is given the priority over the intention of the occupant transmitting the data from outside. Here, the data of cooking recipe is temporarily stored in a predetermined region in the storage unit 149 allocated to each of the occupants who transmit the data from outside the house to the power instruction apparatus 9 through the communication circuit. On the assumption that the occupant B is the homemaker and the occupant C and the occupant D are the children, the data respectively transmitted from the occupants C and D may be the cooking recipe of their favorite food, and therefore the power instruction apparatus 9 is configured to accept such cooking recipes.

In the case where the predetermined storage inhibition is performed on the TV receiver 75 or on the operation input region 117 of the (screen 100A of the) power instruction apparatus 9 within a predetermined time (e.g., 30 seconds) after the receipt of the data of cooking recipe is notified on the TV receiver 75, the data of cooking recipe is temporarily stored in the storage unit 149, and then automatically transferred to the storage unit (high-capacity memory) 109 of the TV receiver 75 (SS29).

The data of cooking recipe stored in the storage unit 109 contains, as sated above, the inherent information of the recipe such as the material and cooking method, as well as the name, letters, mark, or code for identifying the occupant who performed the transmission from the mobile phone terminal 87 with respect to each of the recipes. Therefore, the data can be retrieved using any of such information as index and, for example, the occupant who transmitted the data from outside can easily retrieve only the cooking recipes tagged to his/her name on the LCD screen 75D of the TV receiver 75 after coming home.

Further, when the occupant who transmitted the information of the cooking recipe to the power instruction apparatus 9 from outside using the mobile phone terminal 87 comes home, the presence detection device 10 detects that the occupant B has come home. In this case, accordingly, when the TV receiver 75 is turned on it can only be the occupant B who is to watch the TV receiver 75, and therefore the notice to the effect that the information of cooking recipe transmitted by the occupant B has been received is displayed on the screen immediately after the TV receiver 75 is turned on, whichever of the TV receivers 75 located in the plurality of living spaces HA1, HA2, such as the living room and the bedroom, is turned on. Accordingly, even though the occupant who transmitted the information forgets having done so, the occupant can be notified of the transmission performed by him/herself, so as to decide whether to utilize the information inside the household.

As is apparent from the foregoing description, the household power control system and the household power control apparatus according to Embodiment 4 are configured to retrieve the recipe of the recommended dish and display the recipe on the screen 100A of the power instruction apparatus 9. In addition, the evaluation information about the cooking can be accumulated in the storage circuit and displayed on the display screen. Accordingly, the screen 100A of the power instruction apparatus 9 can be effectively utilized, so as to display the power usage status and the information useful for cooking.

The household power control system and the household power control apparatus according to Embodiment 4 are also configured to receive the cooking recipe transmitted from outside the house using the mobile phone terminal with the power instruction apparatus 9 and accumulate the cooking recipe in the high-capacity memory 109 of the TV receiver 75 and in the power instruction apparatus 9, through the predetermined process.

In addition, when the cooking recipe is transmitted, the power instruction apparatus 9 decides whether any of the occupants is in the living space, and in the case where no detection data indicating the presence of a person is obtained it is decided that all the occupants are away from home, and the control unit 125 automatically acquires such decision result and transmits the cooking recipe to the storage unit 149 of the power instruction apparatus 9 for temporary storage.

When the presence of a person is later detected, the notice to the effect that the data of cooking recipe has been received is displayed on the screen 100A of the power instruction apparatus 9 and the LCD screen 75D of the TV receiver 75, and therefore the family members other than the one who transmitted the data of cooking recipe can be made aware of the receipt of the cooking recipe. Such an arrangement allows the information of the cooking recipe acquired from outside the household using the mobile phone terminal 78 to be shared among all family members and utilized by everyone. Further, when the occupant at home decides it unnecessary to store any of the cooking recipes, the data of cooking recipe can be erased through the predetermined deletion procedure. Therefore, even though a large amount of data of cooking recipe is suddenly transmitted from outside the household, the occupant in the living space can prevent the unnecessary data from being accumulated.

As described with reference to Fig. 88, in Embodiment 4 the information of the cooking recipe is received by the power instruction apparatus 9 and temporarily stored in the storage unit 149 of the power instruction apparatus 9 before the occupant B who transmitted the cooking recipe comes home, so that the occupant B can confirm the cooking recipe immediately after coming home, on the screen 100A of the power instruction apparatus 9 and the LCD screen 75D of the TV receiver 75, however the present invention is not limited to such arrangement. For example, the occupant may transmit the information of the cooking recipe to an information server of a communication provider installed outside the house, and notify the power instruction apparatus 9 in the house to the effect that the information of the cooking recipe is stored in the server.

In this case, when the occupant B comes home the power instruction apparatus 9 causes for example the TV receiver 75 to display the notice to the effect that the information of the cooking recipe is stored, so that the information of the cooking recipe can be acquired by making access to the universal resource locater (URL) code included in the notice, through the power instruction apparatus 9. Although it is preferable that such useful information as the cooking recipe is displayed first immediately after the LCD screen 75D of the TV receiver 75 is activated, it is not mandatory that the cooking recipe is displayed first. For example, after the TV receiver 75 is activated and then the screen of the TV receiver is switched to the portal site screen, the cooking recipe may be displayed as part of the screen of the portal site, or as part of the screen of an ordinary program to be viewed first.

As is apparent from the foregoing description, the household power control system according to the seventh aspect described as Embodiment 4 includes the power instruction apparatus 9 including the control unit 125 that controls the total electric power in the household by individually controlling the plurality of home electric appliances, the presence detection device 10 that detects the presence of one or more occupants, the storage unit 149 containing exclusive user information in which the specific home electric appliance for exclusive use by one of the occupants in the plurality of home electric appliances and the information for identifying the occupant are associated with each other, and the storage unit 149 for storing the useful data including the cooking recipe transmitted from outside through the communication line. The control unit 125 decides, upon receipt of the signal requesting permission of use from the exclusive electric appliance, whether the exclusive user and the occupant at home are the same, on the basis of the exclusive user information in the exclusive user information storage unit and the occupant information detected by the presence detection device, and outputs the signal permitting the exclusive electric appliance to start operation, in the case where the exclusive user and the occupant at home are the same. At least one of the home electric appliances is the TV receiver 75 with the display screen. The control unit 125 outputs, when the presence detection device 10 detects that the occupant who transmitted the useful data has come home and when the useful data for the occupant has been received or is stored in the external storage medium, the instruction to cause the TV receiver 75 to display or notify the receipt of the useful data with preference, when the occupant turns on the TV receiver after coming home.

The configuration according to the seventh aspect allows, in addition to the advantages provided by the first aspect, the useful data such as the cooking recipe transmitted from outside to be temporarily stored in the power instruction apparatus 9, and causes the TV receiver to notify through the display screen that the useful data such as the cooking recipe is temporarily stored in the recording medium or has already been received by the power instruction apparatus, when the occupant who transmitted the useful data comes home and turns on the TV receiver 75. Therefore, the occupant can receive and utilize the useful data without fail, after coming home.

In addition to the foregoing description of Embodiment 4, a finished dish cooked, for example, in a cooking school may be shot by the mobile phone terminal 78, and the photo image may be transmitted to the power instruction apparatus 9. In this case, when some data is missing as result of the analysis of the inherent information and the incidental information of the cooking recipe on the side of the power instruction apparatus 9, the data of cooking recipe may be temporarily stored in the storage unit 149 or the storage unit 109 of the TV receiver 75, and then the data of cooking recipe may be again retrieved and the incidental data or evaluation information about the cooking may be added, to be again stored.

Further, though not referred to in the foregoing description of Embodiment 4, on the basis of the configuration of Embodiment 1 in which the healthcare data such as blood pressure acquired by the healthcare processing unit 116 of the power instruction apparatus 9 is transferred to the power instruction apparatus 9 and stored therein, the healthcare data and exercise data acquired in an external athletic facility or medical institution may be transmitted to the power instruction apparatus 9 from outside using the mobile phone terminal 87, like the information of the cooking recipe. In this case, when the healthcare data reaches the power instruction apparatus 9, power instruction apparatus 9 notifies the receipt of the healthcare data, as described with reference to Embodiment 4. To be more detailed, the human body detection unit 203 decides whether any of the occupants (four occupants A, B, C, and D) is in the living space, and when no detection data indicating the presence of a person is obtained it is decided that all the occupants are away, and such decision result is acquired by the control unit 125. Accordingly, the control unit 125 transmits the healthcare data to the storage unit 149 of the power instruction apparatus 9 and instructs the storage unit 149 to temporarily store the data, so that the storage unit 149 performs the storage operation. Therefore, in the case where the occupant B transmits the healthcare data measured by a healthcare instrument of the external facility to the power instruction apparatus 9 using the mobile phone terminal 87, when the occupants B comes home the presence detection device 10 detects the return of the occupant B, who is the subject of the data, and when the occupant B turns on the exclusive electric appliance, such as the TV receiver 75 or the induction heating cooker 2, the receipt of the healthcare data is notified by the exclusive electric appliance, provided that the mentioned appliance is registered as one of the exclusive electric appliance of the occupant B. Therefore, the information useful to the occupant can be transmitted to home from outside, and accumulated in the power instruction apparatus 9 or TV receiver 75 as exclusive inherent data, like the healthcare data measured at home.

### Embodiment 5

Fig. 89 to Fig. 94 illustrate a household power control system and a power instruction apparatus according to Embodiment 5 of the present invention, and Fig. 89 is a schematic drawing showing a general configuration of a household in which a power control system and a power instruction apparatus are provided. Fig. 90 is a first front view showing an essential part of a display panel of the power instruction apparatus in the power control system shown in Fig. 89. Fig. 91 is a second front view showing an essential part of a display panel of the power instruction apparatus in the power control system shown in Fig. 89. Fig. 92 is a third front view showing an essential part of a display panel of the power instruction apparatus in the power control system shown in Fig. 89. Fig. 93 is a flowchart showing an operation performed by the control unit when an absence setting key is pressed in the power instruction apparatus shown in Fig. 89. Fig. 94 is a flowchart showing an operation performed by the control unit of the power instruction apparatus shown in Fig. 89, when the occupant comes home. Fig. 95 is a second flowchart showing an operation performed by the control unit of the power instruction apparatus shown in Fig. 89, to monitor environmental changes in the household. Fig. 96 is a second flowchart showing the operation performed by the control unit of the power instruction apparatus shown in Fig. 89, to monitor environmental changes in the household. In the cited drawings, the same constituents as those of Embodiment 1 are given the same numeral. The induction heating cooker 2, the rice cooker 3, the oven range 5, the dish washer-dryer 6, and the air-conditioning apparatus 7 have the same configuration as those of Embodiment 1. In addition, the healthcare processing unit 116, the environment detection unit 202, the human body detection unit 203, and the healthcare instruments 410 are also configured in the same way as in Embodiment 1.

In the household according to Embodiment 5, although the kitchen electric appliance KP and the air-conditioning apparatus 7 are connected to the AC 200 V power source EP, a private power source unit such as a photovoltaic generation unit is provided, so that the power from the private power source can be utilized for the kitchen electric appliance KP.

Another feature of the household according to Embodiment 5 is that the environment monitoring function of the power instruction apparatus 9 is enhanced in order to enable the mobile phone terminal 87 carried outside the household to start the operation of the home electric appliances EE in the household and to monitor the fluctuation of environment in the living space.

In addition, the household power instruction apparatus according to Embodiment 5 includes the presence detection device that detects the presence of one or more occupants, the control unit that permits or restricts the operation of the home electric appliances to be controlled, and an absence input device configured to input in the control unit to the effect that no occupant is in the living space.

The control unit keeps all the home electric appliances designated in advance by the occupant (except some special home electric appliances) in an absence mode in which all the home electric appliances are restricted from starting the operation, in the case where all the occupants are inputted as being absent by the absence input device, and cancels the absence mode when the presence detection device detects that one or more of the occupants have come home.

Further, in Embodiment 5 the configuration of the front face of the use limit setting device 96 of the power instruction apparatus 9 is modified, such that the emergency cut-off button 119A described in Embodiment 1 is provided closely under the screen 100A of the display panel 100 located on the front face. Accordingly, by a press of the emergency cut-off button 119A, the power supply to all the home electric appliances EE (including the kitchen electric appliances KP) currently in operation, except the power instruction apparatus 9, the lighting equipment and the TV receiver 75 is immediately disconnected. In addition, four press-button keys (operation unit) for operating a screen selection switch (not shown) that switches the screen 100A are horizontally aligned on the left of the emergency cut-off button 119A, in other words close to the lower end portion of the screen 100A. One of the press-button keys (operation unit) 493 has the same function as the icon 417 (for selecting healthcare information) of Embodiment 1. The press-button key (operation unit) 494 has the same function as the icon 418 (for electric energy management) of Embodiment 1. The press-button key (operation unit) 495 has the same function as the icon 419 (for living environment information) of Embodiment 1. Further, 158 is a press-button key (operation unit) for selecting a screen for display and input of the presence status of the occupants, similar to the presence management menu selection key 57 of Embodiment 2.

As shown in Fig. 89, the main body of the household includes the private power source unit 307 including a storage battery 303, a bidirectional charger 304 for motor vehicle, and a controller (power conditioner) 306 that converts the power from the photovoltaic panel 305 and the power from the bidirectional charger 304 into alternating current of a predetermined voltage. 308 denotes a power source switching device to which the power from the private power source unit is supplied through a circuit breaker 309, the power source switching device serving to switch between the commercial power of 200 V and the power from the private power source unit 307.

310 denotes an electric vehicle including an in-vehicle storage battery 498 connected to the bidirectional charger 304 when necessary. 312 denotes a charging cable detachably connecting between the in-vehicle storage battery 498 and the bidirectional charger 304. With the bidirectional charger 304, electric vehicle 310 can be charged from the storage battery 303, and also the storage battery 303 can be charged from the electric vehicle 310. The electric vehicle may instead be a hybrid vehicle including an engine that uses gasoline as fuel and an electric driving source (motor).

Though not shown, a power detector 313 that calculates the power consumption on the basis of the current from the power clamp 302 referred to in Embodiment 1 is also provided, and the output from the power detector 313 is inputted to the comparator 92 of the power instruction apparatus 9. In addition, though not shown either, the power request adder 91 that sums the requested power from the power usage control devices 8A to 8D of the kitchen electric appliances KP and the requested power from the power usage control device 8E of the air-conditioning apparatus 7 is provided.

The power instruction apparatus 9 includes the power usage reduction decision device 94 configured to return the usable power same as the requested power to the power usage control devices 8A to 8D of the kitchen electric appliances KP and the power usage control device 8E of the air-conditioning apparatus 7 while no output is received from the power request excess decision device 93 (not shown) (i.e., excess amount is zero), and to determine, when an excess amount is outputted, the reduction amount of the power usage of the kitchen electric appliances KP and the air-conditioning apparatus 7 according to the excess amount of the total power and the predetermined priority order and return the determined reduction amount to the power usage control devices 8A to 8E of the kitchen electric appliances KP and the air-conditioning apparatus 7, and the priority order setting device 95 (not shown) that reads out "priority order" registered in advance in the built-in semiconductor memory 95A (not shown) and transmits the "priority order" information for the power reduction to the power usage reduction decision device 94.

Referring to Fig. 90, in the power instruction apparatus 9 according to Embodiment 5, by pressing one of the four press-button keys (operation unit) 158, 493, 494, and 495 for respectively selecting four screen selection switches (not shown), located closely under the display panel 100 of the power instruction apparatus 9, the power usage information or healthcare information can be checked. For example, pressing the press-button key 493 corresponds to pressing the icon 418 (for electric energy management) of Embodiment 1, and the power consumption of the home electric appliances EE in the household and the current total electric power can be confirmed. Fig. 90 illustrates the screen for display and input of the power usage-related information, obtained by pressing the press-button key 493.

Here, providing thus the four press-button keys (operation unit) 158, 493, 494, and 495 on the outer side of the display panel 100 provides a larger effective display area in the display panel 100, which facilitates new input items to be additionally introduced.

More specifically, in Embodiment 5 a suggestion column 496 for showing check points for power saving is newly provided in the screen 100A of the display panel 100. For example, when the environment detection unit 202 detects that the lighting equipment in a living space (e.g., bedroom) is turned on while no occupant is there and outputs the detection result to the control unit 125, the control unit 125 looks up check items according to a predetermined power saving check program, and in the case where the suitable item is found in the program, the control unit 125 displays the corresponding sentence based on the detection result (power may be uselessly consumed) in the suggestion column 496 as shown in Fig. 90, to urge the user to confirm the actual situation.

Thus, the suggestion column 496 constantly utilizes the measurement result of the environment detection unit 202, for promoting effective power utilization and suppressing waste of energy. As another example, the suggestion column 496 is utilized when a room in which no occupant is detected is continuously (e.g., more than 30 minutes) cooled by the air-conditioning apparatus 7. In addition, the suggestion column 496 is not given a fixed are all the time, and when it is not necessary to display the suggestion the corresponding region is used to display information for other purposes, so as to effectively utilize the limited area of the screen 100A.

When the press-button key (operation unit) 158 is pressed on the screen shown as Fig. 90, the screen is switched to the screen for display and input of the presence management shown in Fig. 91. In Fig. 91, 159 denotes the absence setting key which is one of the distinctive features of Embodiment 5, and when position where the key 159 is displayed is touched, the instruction to set a predetermined absence mode is given to the control unit 125. 178 denotes a current time of day display section, in which the current time of day is constantly displayed by means of the clock circuit (not shown) incorporated in the power instruction apparatus 9.

The absence setting key 159 shown in Fig. 91 will be described. The key 159 is useful when all the occupants go out, for example when the whole family goes on a trip. When the absence setting key 159 is pressed, the control unit 125 performs the operation shown in Fig. 93.

In Fig. 93, SS40 to SS46 represent the steps of the control program. The control unit 125 confirms the latest operation information signal (see operation information signals L1 to L7 of Embodiment 1) received from the home electric appliances EE, or acquires the operation information signal from the home electric appliances in response to the inquiry transmitted from the power instruction apparatus 9 to the home electric appliances, and analyzes the operation information signal to thereby recognize the latest operation status and operating condition of the home electric appliances EE. The control unit 125 also instructs the home electric appliances to store the latest operation information in the built-in storage unit. In the case where the home electric appliance is not configured to record the operating condition, the control unit 125 instructs the home electric appliance to temporarily store the information in the storage unit 149 of the power instruction apparatus 9 (SS40).

Then the control unit 125 disconnects the power supply to all the home electric appliances (some appliances may be set to a stand-by mode to supply very low power, instead of completely disconnecting the power) except the special home electric appliances designated in advance by the occupant, in other words the home electric appliances to which the power supply has to be maintained while the whole family is away (e.g., refrigerator, electric heater for sea water in a tropical fish tank and the light therefor) (SS41).

The control unit 125 inspects whether any of the occupants is left in the living space with the human body detection unit 203 having the human body sensor (SS42), and in the case where a reaction indicating presence of a human body is detected, a warning is outputted through the speaker (not shown) mounted inside the main body 9A of the power instruction apparatus 9 (SS43). For example, when the family goes out leaving a big-sized pet (animal) in the room, the human body detection unit 203 may misdetect the pet as human occupant. Therefore, in such a case it is preferable to make some inputs, for example adjusting the sensitivity of a specific human body sensor so as not to misdetect the pet. It is preferable to output the warning within one minute after the absence setting key 159 is pressed. This is because if the warning is outputted after a longer interval, all the family may have gone outside the house and hence may not notice the warning.

When the control unit 125 confirms that the presence of the occupant human body is not detected by the human body detection unit 203 and that the electronic lock of the entrance has been locked according to the signal from the presence detection unit 10 (SS44), the control unit 125 instructs the storage unit 149 containing the presence management database to modify a part of the data, by rewriting "absent" in place of "present" with respect to all the occupants (SS45). At this point, the control unit 125 enters "absence mode".

In "absence mode" the control unit 125 maintains a forcible stand-by state, in which the power supply to the home electric appliances is kept disconnected and, though only a minimum necessary power supply is permitted (stand-by state), an input for starting the operation for performing the regular function of the home electric appliance is not accepted

The control unit 125 then sets the environment detection unit 202 to a monitor mode, for monitoring whether abnormality arises in the living space during the period of the absence mode (SS47). The environment detection unit 202 records the measurement data at predetermined intervals, while monitoring the temperature, humidity, and so forth of the living space. Here, a certain amount of environment measurement data may be temporarily stored in the internal memory of the environment detection unit 202, and automatically transferred to the storage unit 149 at a later time.

Here, it is inconvenient that, in particular when the occupant goes out at night, the indoor lighting equipment of the entrance or corridor is turned off while the occupant is still preparing for going out. Therefore, as proposed at SS46 of Fig. 93, among all the home electric appliances to which the power supply is to be disconnected, for example the lights outside and inside the entrance may be set to be turned off with a certain delay. For example, the operation program of the control unit 125 may be designed so as to disconnect the power supply to the lights with a delay of one minute after the presence detection unit 10 detects that the entrance electronic lock 19 has been locked.

Referring now to Fig. 94, the operation of the control unit 125 performed when at least one of the occupant comes home will be described.

When one of the occupants comes home and unlocks the entrance electronic lock 19, the personal authentication unit 29 decides whether the person who has unlocked is the occupant, on the basis of the input made to unlock. When the presence detection device 10 detects that the occupant has come home (SS50), the control unit 125 instructs predetermined home electric appliances to start the operation, for example turning on the light at the entrance according to a predetermined lighting sequence (SS51).

Then the control unit 125 activates the screen 100A of the power instruction apparatus 9, so as to display the main screen for the presence management shown in Fig. 91 (SS52).

The control unit 125 then confirms that the occupant is in the living space and that the entrance electronic lock 19 has been locked (SS53). After that, the control unit 125 instructs the storage unit 149 containing the presence management database to modify a part of the data, by rewriting "present" in place of "absent" with respect to the specific occupant who has come home (SS54).

At this point, the monitoring mode of the environment detection unit 202 for the living space is cancelled, and the control unit 125 cancels "absence mode" and resumes the control in the normal "presence mode". The "monitoring mode" is cancelled at the same time that "absence mode" is cancelled.

Then the control unit 125 detects whether the occupant is located in the vicinity of the screen 100A with the human body detection unit 203, and when the presence of the occupant near the screen 100A is detected the environment monitoring result of the environment detection unit 202 is outputted in the voice message. In addition, a message directed to the specific occupant is received while the specific occupant is away, and the message is recorded in the power instruction apparatus 9, the voice message to this effect is also outputted (see mark 59G in Fig. 69 of Embodiment 2) (SS55).

When the press-button key (operation unit) 495 is pressed when the screen shown as Fig. 90 is displayed, the screen is switched to the screen for display and input of environment management information shown in Fig. 92. As shown in Fig. 92, the operating condition of the environment improvement apparatus such as the air-conditioning apparatus 7 can be set with respect to each of the occupants (e.g., setting a target room temperature in the air-conditioning apparatus 7). In Fig. 92, 280A denotes a display section of the name or nickname for identifying the occupant, 280B denotes an appliance name display section for identifying the air-conditioning apparatus 7 in the bedroom, which is the exclusive electric appliance of the occupant of 280A (in the example of Fig. 92, the occupant A), 280C and 280D each denote a display section of the room temperature target room temperature for defining the operation range of the air-conditioning apparatus 7. Fig. 92 shows the case where the operation is started when the temperature reaches 28 degrees Celsius or more and stopped when the temperature falls below 25 degrees Celsius. The operating condition of the environment improvement apparatus such as the air-conditioning apparatus 7 can be differently set for each of the normal "presence mode" and "absence mode". For example, when the occupant A specifies the operating condition for "presence mode" as "start cooling when room temperature is 28 degrees Celsius or higher, and stop cooling when below 25 degrees Celsius" and the occupant A keeps a pet animal to be left in a predetermined living space when the occupant A goes out, the occupant A may specify the operating condition for "absence mode" as "start cooling when room temperature is 30 degrees Celsius or higher, and stop cooling when below 25 degrees Celsius" depending on the characteristic of the pet animal. Once such setting is done, with a press of the absence setting key 159 the power instruction apparatus 9 controls the air-conditioning apparatus 7 to work under the operating condition different from the presence mode when the occupant A goes out, without the need to change the operating condition of the air-conditioning apparatus 7 each time. In addition, when the air-conditioning apparatus 7 in the bedroom which is one of the exclusive electric appliances of the occupant A is registered as special home electric appliance to which the power supply is maintained during "absence mode", such registration remains valid unless the occupant A subsequently cancels the registration. Even when the operating condition is again set to the presence mode, the registration as special electric appliance is not cancelled. Accordingly, even though the occupant A frequently goes out and comes home in the daily life, the occupant A can be exempted from the trouble of repeatedly inputting the operating condition each time, by once registering the air-conditioning apparatus 7 of the bedroom as special home electric appliance and respectively setting the operating conditions for "presence mode" and "absence mode". Such arrangement of setting a different operating condition for each of "presence mode" and "absence mode" is also applicable to the environment improvement apparatuses other than the air-conditioning apparatus 7.

281 denotes an input key display section for setting the target temperature range for operating the air-conditioning apparatus, in which a plus key 282 for raising the temperature by 1 degree Celsius with each press and a minus key 283 for lowering the temperature by 1 degree Celsius with each press are displayed as a pair.

284 denotes a selection key for switching to a display screen for confirmation and input of the exclusive electric appliance of another occupant and the operating condition thereof, and 285 denotes a selection key for switching to a display screen showing a list of the environment improvement apparatuses including the air-conditioning apparatus. These selection keys 284, 285 are also touch-type input keys. In the display screen showing the list of the environment improvement apparatuses including the air-conditioning apparatus, the name of the exclusive user is displayed with each of the environment improvement apparatuses when the exclusive user is registered for the apparatus, and therefore it can be easily recognized who is registered as exclusive user, with respect to the plurality of environment improvement apparatuses.

Referring to Fig. 95, description will be given regarding the process of starting the operation of the home electric appliance EE by remote operation, which is one of the distinctive features of Embodiment 5.

Fig. 95 is a flowchart showing a basic environment monitoring program of the control unit 125 of the power instruction apparatus 9.

First, the mobile phone terminal 87 is registered as "notice destination" from the side of the power instruction apparatus 9, before the occupant takes out the mobile phone terminal 87. For such registration, first the press button (operation unit) 493 shown in Fig. 91 is pressed. Then the screen 100A is switched to the power usage monitor screen shown in Fig. 90, and when the mobile phone terminal 87 is brought close to the display screen and an infrared ray signal or near-field communication signal is transmitted to the power instruction apparatus 9, the mobile phone terminal 87 is registered as notice destination from the power instruction apparatus 9 (SS60). In this case, the name of the electric appliances compatible with the remote operation and the corresponding code may be automatically read out from the power instruction apparatus 9 into the mobile phone terminal 87, or alternatively a cross-reference table of the electric appliances and the respective appliance identification codes may be separately prepared, so that the user looks up the table outside and inputs the appliance identification code in figures or alphabets in the mobile phone terminal 87.

When the occupant takes out the mobile phone terminal 87 to a distant place and presses a predetermined button on the mobile phone terminal 87 to output an instruction of "start remote operation" (SS61), the instruction reaches the power instruction apparatus 9 through the wide area communication network (communication network) 98 (SS41). The information to be inputted in this case includes the appliance identification code, and the operating condition for example distinction between heating and cooling, start time and finish time, and target room temperature for cooling, in the case of the air-conditioning apparatus 7. In the case of the heating cooker, the start time and finish time of the heating operation and the heating power (heating amount) are necessary. With the rice cooker 3, however, when a desired rice cooking finish time is inputted the rice cooker automatically determines the heating start time, and therefore it is unnecessary to set the heating finish time.

Thus, when the appliance identification code and the operating condition are received by the control unit 125 of the power instruction apparatus 9 through the input/output terminal 124B, the control unit performs the following operation.

First, the control unit 125 decides whether the home electric appliance designated by the mobile phone terminal 87 is an object of the remote operation (SS62). Here, in the case where the name of the electric appliances compatible with the remote operation and the corresponding code are automatically read out from the power instruction apparatus 9 into the mobile phone terminal 87 as stated above, the intended home electric appliance is designated unless the appliance identification code is erroneously inputted, and naturally the decision at SS62 is YES.

At SS62, the criteria for admitting the home electric appliance EE as object of the remote operation is that the rated maximum output or power consumption of the home electric appliance is not higher than a predetermined threshold. Such criteria as "rated maximum output power consumption not higher than predetermined threshold" is stored in the storage unit 149 serving as database for the control unit 125 to look up the permission criteria, and therefore the control unit 125 also confirms whether the permission criteria is satisfied.

Then the control unit 125 confirms whether the environment detection unit 202 is normally working at SS63, and decides whether the start time or finish time contained in the remote operation signal transmitted by the user overlaps "non-restriction time zone". Although the operation restriction time zone may not be specified depending on the type pf the home electric appliance, the operation restriction time zone is set, for example, in the self-running vacuum cleaner 320 described in details in Embodiment 1.

The control unit 125 checks whether any of the occupants is at home from the detection data of the human body detection unit 203 at SS64. In this case, when the electric appliance designated by the user is for example the heating cooker in the kitchen, naturally the information from the human body sensor 207 provided in the kitchen in the living space HA1 is utilized, and in addition the information from the human body sensor 208 in the living space other than the kitchen, for example the living room, is also utilized, so as to estimate that no occupant is at home (actually, the human body sensor may fail to detect an occupant asleep in the bedroom).

In the case where it is decided that the occupant is at home the operation proceeds to SS65, where the control unit 125 notifies the mobile phone terminal 87 to the effect that the instruction of the remote operation is unacceptable. The reason of disapproval in this case is that "someone is in the room". Performing the remote operation of the home electric appliance despite another occupant being at home may be against the intention of the occupant at home. In addition, when the operation of the home electric appliance is started from outside irrespective of the feeling of the occupant, the occupant may feel insecure or the living space may turn uncomfortable. For such reason, the step SS65 is included.

Then the control unit 125 checks whether reservation of operation has been made with respect to the home electric appliance designated by the user, for example whether the reserved rice cooking or cooking start time has been set, at SS66.

In the case where the results of all the four steps SS62 to SS66 are YES, the control unit 125 permits the input of information for the remote operation of the designated home electric appliance, and instructs the user to start the operation of the home electric appliance or to set the time of day to start or finish the operation in the home electric appliance. When the inputted information of the remote operation is specified as immediate start of the operation, the operation of the designated home electric appliance is immediately started (SS67).

At SS68, the control unit 125 notifies the mobile phone terminal 87 to the effect that the input of the remote operation has been accepted. Such notice information is transmitted from the power instruction apparatus 9 to the mobile phone terminal 87 through the communication network (communication network) 98. In the case where the result of SS62 or SS63 is NO, the operation proceeds to SS65 where the notice to the effect that the remote operation is unacceptable is outputted to the mobile phone terminal 87. The reason of disapproval in this case may be "not object of remote operation", or "environment monitoring sensor of the room is not normally working".

Referring to Fig. 96, the monitoring of environment changes in the household, which is one of the distinctive features of Embodiment 5, will be described.

Fig. 96 is a flowchart showing a basic environment monitoring program of the control unit 125 of the power instruction apparatus 9.

First, the mobile phone terminal 87 is registered as "notice destination" from the side of the power instruction apparatus 9, before the occupant takes out the mobile phone terminal 87. For such registration, first the press button (operation unit) 495 shown in Fig. 91 is pressed. Then the screen 100A is switched to the environment management screen shown in Fig. 92, and when the mobile phone terminal 87 is brought close to the display screen and an infrared ray signal or near-field communication signal is transmitted to the power instruction apparatus 9, the mobile phone terminal 87 is registered as notice destination from the power instruction apparatus 9 (SS70). In the case where the mobile phone terminal 87 has already gone through the registration by pressing the press button (operation unit) 493 shown in Fig. 91, the operation of SS70 is not necessary.

When the occupant takes out the mobile phone terminal 87 to a distant place and presses a predetermined button on the mobile phone terminal 87 to output an instruction of "start remote operation", the instruction reaches the power instruction apparatus 9 through the wide area communication network (communication network) 98 (SS71).

Thereafter, the start of the operation of the home electric appliance EE or changes of environment inside the house can be recognized through the mobile phone terminal 87. A range indicated by a broken-line frame in Fig. 96 corresponds to the process operated by the control unit 125 of the power instruction apparatus 9.

Then the monitoring operation is performed, in which whether operation of a certain home electric appliance EE has been started is monitored (SS72). To detect the start of operation, the signals such as the operation information signals L1 to L7 outputted from the induction heating cooker 2 described in Embodiment 1 may be detected.

In the case where the start of operation is not detected, the environment data of the environment detection unit 202 is checked (SS73). Unless the user (owner of the mobile phone terminal 87) instructs to stop the environment monitoring (SS74), the steps SS72 and SS73 are repeatedly performed.

When it is detected that the home electric appliance has started the operation at SS72, it is decided whether the home electric appliance is one in which the reserved start time is set in advance (e.g., the rice cooker reserved so as to finish the rice cooking after a predetermined time) (SS75). In the case where the reservation has been made in advance for the home electric appliance, the operation proceeds to SS73.

In the case where the reservation has not been made for the home electric appliance, power may be supplied to the home electric appliance while the occupant is away (no one is at home), and therefore the environment detection unit 202 collects the detection information of the human body sensors provided in the living spaces in the house. When the presence of a person is detected, the power instruction apparatus 9 displays a notice on the display panel (display screen) 100 and also outputs a voice guidance such as "Operation start of home electric appliance has been detected. Please confirm" with the voice synthesizer, to call the attention of the occupant in the living space.

In the case where the predetermined (confirmation) key in the display panel (display screen) 100 of the power instruction apparatus 9 is pressed within a predetermined time, for example 20 seconds, after the notice is outputted, the control unit 125 decides that the occupant has recognized the start of operation of the home electric appliance, and returns to the step of SS72.

In contrast, in the case where the presence of a person has not been detected at SS76 and the predetermined (confirmation) key in the display panel (display screen) 100 of the power instruction apparatus 9 has not been pressed, it is assumed that the home electric appliance has not started the operation according to the intention of the occupant in the house, but has been accidentally activated for some reason (e.g., a pet animal moving around in the house has pressed the operation unit of the). In such a case, the power instruction apparatus 9 outputs an instruction signal for disconnecting the power supply to the home electric appliance EE in question, so as to cut off the power supply to the home electric appliance (SS79). Then the control unit 125 notifies such series of actions to the mobile phone terminal 87, registered as notice destination from the power instruction apparatus 9 (SS80), and returns to the monitoring operation of SS72.

As described above, in Embodiment 5 the home electric appliances EE including the kitchen electric appliances KP are not driven solely by the commercial power source of the power company, but receive power from the power storage unit composed of the storage battery 303 and the controller 306, or the private power source unit 307 composed of the photovoltaic panel 305 and the controller 306, through the circuit breakers 309 and BK. In the case where the power from the private power source unit 307 is utilized in combination also, the present invention is equally applicable, and the same advantageous effects can be obtained as in Embodiment 1.

With the household power control system and the power instruction apparatus 9 according to Embodiment 5, the situation inside the house can be monitored from a place distant from home through the mobile phone terminal 87 registered as notice destination from the power instruction apparatus 9. Specifically, it can be recognized whether any of the home electric appliances is activated and has started the operation, and whether any of the occupants is at home at the time that the home electric appliance has started the operation. Further, when the presence of a person inside the house has been detected, the step of confirming whether the home electric appliance EE has started the operation according to the intention of the occupant is performed, and in the case where the predetermined confirmation result is unable to be acquired, the operation of the home electric appliance in question can be stopped by remote operation. Thus, the situation inside the house where there is nobody can be easily monitored from a distant place, and even in case that improper power supply (not intended by the occupant) is performed, such power supply can be stopped by remote operation, so that the safety level of the household home electric appliances can be upgraded. In addition, the monitoring is performed by checking not only the power supply but also physical changes of environment, such as room temperature utilizing the environment detection unit 202, so as to predict abnormality, and resultantly the reliability of the system can be upgraded.

The household power control system according to Embodiment 5 includes the circuit breaker BK configured to cut off the electric circuit when the predetermined capacity limit is exceeded, the plurality of home electric appliances EE each receiving power through the circuit breaker BK, the power instruction apparatus 9 that controls the total power usage of the household by individually controlling the power usage of the plurality of home electric appliances, the environment detection unit 202 that receives the environment data measured by the environment sensor that detects the physical environment of the living space where the first and second home electric appliances are provided, and the display device (display panel 100, LCD screen 75D) for displaying the power information of the home electric appliances and the environment information, and the information communication terminal device (mobile phone terminal) 87 that inputs the operation information in the power instruction apparatus 9 from outside the house through the communication network.

The power instruction apparatus 9 includes the input/output terminal 124B for receiving the input signal of the operation information from the mobile phone terminal 87 through the communication network, and the control unit 125 that permits the remote operation of the home electric appliance EE.

The control unit 125 is programmed so as to permit, upon receipt of the input signal of the operation information from the mobile phone terminal 87, the operation of the home electric appliance based on the operation signal from the mobile phone terminal 87, provided that the environment detection unit 202 is actually in operation and the rated maximum output or power consumption of the home electric appliance EE is not higher than the predetermined threshold.

Therefore, with the household power control system according to Embodiment 5, the environment-related information can be displayed in addition to the power information, and therefore the user is motivated to become more conscious of energy saving and health management.

Further, the operation information for the home electric appliance can be inputted to the power instruction apparatus 9 from the mobile phone terminal 87 even when the user is away from home, and the control unit 125 of the, power instruction apparatus permits, upon receipt of the input, the remote operation of the home electric appliance EE provided that the environment detection unit 202 is actually in operation and the rated maximum output or power consumption of the home electric appliance EE is not higher than the predetermined threshold. Accordingly, the remote operation is performed only with the home electric appliances having a relatively low heating power in consideration of the environment inside the house, and therefore the remote operation from outside the house can be performed with a higher level of safety.

In Embodiment 5, further, the suggestion column 496 displaying the check points for power saving is provided in the screen 100A, and when power may be uselessly consumed, for example when the environment detection unit 202 detects that the lighting equipment in a living space (e.g., bedroom) is turned on while no occupant is there and outputs the detection result to the control unit 125, the power instruction apparatus 9 displays the message in the suggestion column 496 as shown in Fig. 90 to urge the user to confirm the situation. Such a configuration contributes to promoting effective power utilization and suppressing waste of energy.

As described above, the power instruction apparatus 9 has the function of transmitting, when one of the home electric appliances starts the operation, the information about the home electric appliance and the detection information from the human body sensor indicating the presence of a person inside the house, to the specific communication device located outside the house, namely the mobile phone terminal 78, however the transmission method is not limited to the form in which the power instruction apparatus 9 transmits the specific information in a stand-alone manner to the mobile phone terminal 78. For example, a specific server (e.g., exclusive server installed by a private security center) connected to the wide area communication network (communication network) 98 may be prepared, and the latest information, for example the operation information signal (L1 and so forth) from the home electric appliance, the power environment information, and the detection information from the human body detection unit 203, may be accumulated in the server by the power instruction apparatus 9.

In the mentioned case, upon receipt of the information from the power instruction apparatus 9 the server immediately notifies the receipt to the mobile phone terminal 78 by mail, so that the mobile phone terminal 87 makes access to the server. By such a method also, the mobile phone terminal 87 can acquire the latest information from the power instruction apparatus 9, by retrieving the predetermined information from the specific server.

As is apparent from the foregoing description, the household power instruction apparatus according to the eighth aspect described as Embodiment 5 includes the control unit 125 that controls the total electric power in the household by individually controlling the plurality of home electric appliances, the presence detection device 10 that detects the presence of one or more occupants, the storage unit 149 containing the exclusive user information in which the specific home electric appliance for exclusive use by one of the occupants in the plurality of home electric appliances and information for identifying the occupant are associated with each other, and the absence input device (absence setting key 159) for inputting a state that the occupant is not in the living space to the control unit 125.

The control unit 125 decides, upon receipt of the signal requesting permission of use from the exclusive electric appliance, whether the exclusive user and the occupant at home are the same, on the basis of the exclusive user information in the storage unit 149 and the occupant information detected by the presence detection device 10, and outputs the signal permitting the exclusive electric appliance to start the operation, in the case where the exclusive user and the occupant at home are the same.

The control unit 125 maintains the absence mode in which all the home electric appliances designated in advance by the occupant are restricted from starting the operation (except the special home electric appliances), when the absence of all the occupants is inputted through the absence setting key 159, and cancels the absence mode when the presence detection device 10 detects that one or more occupants have come home.

With the configuration according to the eighth aspect, after the absence mode is set by the absence input device (absence setting key) 159 with respect to all the occupants, the absence mode is automatically cancelled when any of the occupants comes home. While the occupants are away the forcible stand-by state is maintained, in which the power supply to the predetermined home electric appliances is kept disconnected and, though a minimum necessary power is supplied, an input for starting the regular operation is not accepted, except for the special home electric appliance (e.g., air pump for aquarium fish tank and fluorescent light therefor). Accordingly, the occupants can be exempted from the trouble of manipulating the circuit breaker BK so as to disconnect the power of the main circuit each time the family goes out. In addition, when at least one of the occupants has come home, the absence mode is automatically cancelled. Therefore, the occupant who has come home can immediately use a desired home electric appliance (except the home electric appliance for exclusive use of another occupant).

Here, in Embodiment 1, when the vibration sensor 241 for detecting the initial vibration of earthquake detects a seismic intensity (acceleration) exceeding a predetermined level, the vibration sensor 241 transmits the vibration detection signal to the controller 32, so that the controller 32 instantaneously cuts off the power supply to all the heating devices actually in use, however, the power instruction apparatus 9 may utilize the Earthquake Early Warning received from outside the house so as to enhance the earthquake remedy. The Earthquake Early Warning is a forecast warning released by Japan Meteorological Agency and classified into the news oriented to "general user" and the news oriented to "high-end user", the latter being based on a lower threshold and containing more detailed information, and in relation with such news various systems have already been practically realized, in which the internet line and a reception unit of the Earthquake Early Warning are provided in the public space of a condominium, and connected to notification devices such as interphones so as to simultaneously distribute the news all over the building utilizing the existing notification devices and the wirings therefor. Accordingly, it is highly desirable that the power instruction apparatus 9 is constantly set to receive the Earthquake Early Warning. For such purpose, it is preferable that the TV receiver 75 is set to receive the Earthquake Early Warning from the external organization 78B such as a broadcast station, and that the power instruction apparatus 9 is also set to receive the Earthquake Early Warning from the external organization 78A in parallel. Once the Earthquake Early Warning is received, the power instruction apparatus 9 may output instruction signals as specified below, to the home electric appliances currently in operation, for example the heating operation.
(1) On the heating cooker having a heat source, for example the induction heating cooker 2, the notice of the receipt of the Earthquake Early Warning may be displayed on the display screen 129 of the display section 16 (central display section 16 of Embodiment 1) of the heating cooker, so as to call the attention of the user engaged in the heat cooking about the occurrence of the earthquake. It is more preferable to also activate the voice guidance device such as the voice synthesizer to audibly call the attention of the user. In this case, naturally the voice message is automatically outputted in the largest volume, despite that the voice volume was manually set to a lower level by the user. Here, the "display device" 16 may be referred to as "heat cooker display device", to avoid confusion with the screen 100A of the display panel 100.
(2) Electric appliances or gas appliances having an electric or gas/oil fuel heating source and water to be heated thereby, for example a storage type or heat pump type electric water heater or a gas combustion type water heater, include a water level sensor that monitors the level of the water in the tank, and normally the water heating operation is automatically controlled according to the fluctuation of the water level. Accordingly, when the water level is caused to irregularly fluctuate by the earthquake, the water level sensor may misdetect the water level to thereby provoke a malfunction. Therefore, the detecting operation of the water level sensor is stopped for a predetermined short time, for example 30 seconds, and in the case where the earthquake has not actually occurred in 30 seconds, the water level sensor is allowed to resume the normal detecting operation.
(3) Among the indoor lighting equipments, those located along the passage supposed to serve as the evacuation path in the event of earthquake are designated as emergency lights, and such emergency lights are automatically turned on for a predetermined time (e.g., one minute). In the case where the earthquake has not actually occurred in one minute, the lights are automatically turned off.
(4) Electric washing machines with spin-drying function (including those incorporated with hot air drying function based electric heating or gas combustion) are less stable when the spin dryer is rotating at a high speed than when performing the washing with water in the washing tank. Accordingly, when the spin drying is being performed the driving motor of the spin dryer is temporarily stopped and the rotation of the spin-drying tank is detained by the braking mechanism for a short time such as approximately 10 seconds. In the case of drum-type clothes dryers also, it is preferable to forcibly stop the rotation of the drum and the heating operation of the heating source, for example an electric heater.

Alternatively, the power instruction apparatus 9 may automatically output an instruction to reduce the heating power so as to restrict the heating operation with a high heating power for a predetermined time (e.g., 30 seconds) after the receipt of the Earthquake Early Warning, and when the user confirms after the predetermined time has elapsed that the earthquake has not actually occurred, the user may instruct the heating cooker to resume the operation (e.g., by pressing a specific input key or button), so as to continue the heating operation with the originally set heating power. Such an arrangement allows the user who has noticed the possibility of earthquake to calmly confirm the heating power level or even turn off the heating power in preparation for the earthquake, and in case that the vibration sensor 241 detects a seismic intensity exceeding a predetermined level, the operation of the heating source is instantaneously stopped regardless of whether the commercial power from the power company is subjected to emergency cut-off. Therefore, a higher safety level with respect to earthquake can be achieved. To notify the receipt of the Earthquake Early Warning through the display screen 129, the notice may be displayed in any of the first information sign 210A, the second information sign 210B, the third information sign 210C, and the fourth information sign 210D, or in a different position. Since the notice of the Earthquake Early Warning is naturally displayed with priority over the predetermined displays in the first to the fourth information signs 210A, 210B, 210C, and 210D, for example the content of the first information sign 210A may be instantaneously erased and the letters of "emergency earthquake news received" may be displayed instead.

In Embodiment 1, the power instruction apparatus 9 includes the main body 9A including the input key 106 for inputting the upper power limit to the use limit setting device 96 and the screen 100A for displaying the input result, and the restriction information indicating the upper power limit is inputted with the input key 106 of the main body 9A with respect to each of two or more occupants, and store the information in the storage unit 149. In addition, the control unit 125 of the power instruction apparatus 9 aggregates at least the power usage per day and power usage per month as power usage of each of the occupants, and therefore the power instruction apparatus 9 can daily recognize the power usage status of each of the occupant. Accordingly, such power usage status can be displayed on the screen 100A and the LCD screen 75D of the TV receiver whenever desired, so that the whole family recognizes the situation, and thus motivated to become more conscious of energy saving.

With the configuration shown in Fig. 69 and Fig. 91, the respective exclusive electric appliances of the occupant at home and the occupant away from home, and the environmental condition such as temperature of the living spaces are displayed on the screen 100A of the power instruction apparatus 9, which allows more effective utilization of the power instruction apparatus engaged in the power usage control of the household. Even though an old-aged person or small child is often alone in the room, the family members away from home can feel more secured because of the monitoring operation of the environment detection unit and the notification function thereof.

In Embodiment 5, further, the functions of the power instruction apparatus 9 is enhanced and broadened so that when the occupant goes out with the mobile phone terminal 87 the occupant can instruct the home electric appliances EE in the household to start the operation by remote operation with the mobile phone terminal 87, and also instruct perform the environment monitoring operation including monitoring the start of operation of the home electric appliances and the room temperature of the living space. Such functions can be performed even when the occupant forgets to set "absence mode" before going out. In other words, the operation of the home electric appliance and the monitoring of indoor environment changes can be performed by remote operation regardless of whether "absence mode" is set, and therefore the living environment that is user-friendly, safe, and secure to the occupant can be achieved.

### (Variations)

In foregoing Embodiments, "presence detection device" 10 is configured to detect that the occupant has come home with the electronic lock provided on the outer side of the entrance, according to the PIN code or biological information (e.g., fingerprint information) inputted in the electronic lock. In addition to or instead of the above, the user operating the home electric appliance may directly input the information for identifying the occupant to the home electric appliance. For example, the home electric appliance may directly read a mobile information terminal device or a card, containing a medium such as an IC card on which the information for identifying the occupant is recorded, via near-field communication or the like. Alternatively, different PIN codes may be allocated to the respective occupants and registered in advance in the power instruction apparatus 9 so that the occupant inputs the PIN code when using the home electric appliance. For example, when the occupant A watches the TV receiver with the remote controller, the occupant A touches the number input keys on the remote controller to input the PIN code first, so that the TV receiver recognizes that the occupant A is watching. The mentioned arrangement prevents such a situation that when the occupant A opens the entrance electronic lock 19 other occupants (occupant B, occupant C) who came home together pass the entrance at a time, and that therefore the return of the occupant B and the occupant C is not recognized by the presence detection device 10. Thus, the occupant actually using (or operating so as to start using) the home electric appliance in the living space can be more accurately identified.

In foregoing Embodiments, in order for the power instruction apparatus 9 to recognize the heating process or operation status of the first home electric appliances, for example the rice cooker 3 and the induction heating cooker 2, and the second home electric appliances such as the air-conditioning apparatus 7, the power instruction apparatus 9 receives the information from the mentioned home electric appliances at each occasion. For example in Embodiment 1, the induction heating cooker 2 transmits the operation information signals L1 to L7 to the power instruction apparatus 9 each time, however the power instruction apparatus 9 may transmit an inquiry signal to the home electric appliance immediately before deciding the power excess amount with the power request excess decision device 93, so that the home electric appliance transmits the operation information in response. In this case, a specific code indicating, for example, whether the process is in "priority cooking menu time zone", may be transmitted, so as to simplify the information.

In addition, the power instruction apparatus 9 may be configured to transmit the power reduction information to the wide area communication network 98 such as the internet through the communication device 97, to transmit, upon reducing the total power usage of the first and second home electric appliances according to the power reduction information received, the information of the power reduction result to a specific addressee through the wide area communication network 98. In this case, when the power instruction apparatus 9 transmits the power reduction information to outside, a predetermined code indicating the location of the household may be added to the information transmitted to the addressee (e.g., power company and public agencies). This facilitates the power company and related public agencies to recognize the power saving status of the district, and to utilize the information for stabilizing the power supply.

Further, when the condition of "temperature feedback control" is determined, the heating power of the heating cooker may be taken into account. For example, when performing the automatic control of the high-frequency heating power so as to reach the target temperature according to the temperature detection information of the heating object N such as a pot, the case where the heating power is 100 W at maximum may be designated as "priority heating process" in the present invention. The heating operation that use a small power lower than 100 W is performed, for example, to keep the heat of a small amount of tea or cooked liquid at a low temperature, or to keep the heat of cooked rice after the cooking phase. In such cases, the cooked object is barely likely to be damaged even though the power supply is reduced by 50%, and from the viewpoint of the power instruction apparatus 9 also, designating such small-powered cooking devices as object of power reduction barely makes sense.

In the home electric appliance such as the induction heating cooker 2, the electricity charge corresponding to the power consumed after turning on the main power and immediately before turning off the main power may be displayed on the display device, for example the display screen 129. In this case, the controller 32 may calculate the charge on the basis of the power usage information obtained by aggregating the power and the time zone-classified electricity rate information, or the power instruction apparatus 9 may calculate on the basis of the power usage information from the home electric appliance and transmit the electricity charge to the corresponding home electric appliance. Since the power supply to the electric heating source such as the electric heater or induction heating coil, and to the driving source such as the motor is disconnected before the main power is turned off, automatically displaying the calculation result at this point enables the user to recognize the electricity charge before the user turns off the main power. Here, the electricity charge referred to above may be a rough estimation, and does not have to exactly agree with the amount charged by the power company. The charge may be displayed in units of yen, for example "30 yen". Further, the display device may be activated so as to automatically display the electricity charge of the previous use as reference, when the main power is again turned on to use the home electric appliance.

For the power instruction apparatus 9 to acquire "time zone-classified electricity rate information", it is preferable to make access to an information providing device (server) of the power company through the external wide area communication network (communication network) 98 through the router A99, and the information may be acquired in the night time so that the home electric appliance such as the induction heating cooker 2 utilizes the updated electricity rate information from the next morning. Further, the time zone-classified electricity rate information may be read (downloaded) by the information terminal devices used in the household, such as the mobile phone terminal 87 and the digital TV, and the downloaded information may be provided to the home electric appliances such as the induction heating cooker 2 and the rice cooker 3.

In Embodiment 1, the power instruction apparatus 9 includes the main body 9A and the flat plate-shaped display panel 100 detachably fitted to the front face of the main body as shown in Fig. 5, however the main body 9A and the display panel 100 may be formed in an inseparable, unified structure. In this case, however, it is more convenient to connect the power instruction apparatus 9 to the power supply line 27 and the TV receiver 75 via wireless communication rather than via cables or cords, when the whole body of the power instruction apparatus 9 is carried inside the living space as desired.

Further, in the case where the power instruction apparatus 9 constituted of the unified structure of the main body 9A and the display panel 100 is placed in the kitchen, it is preferable to connect an antenna or a cord directly to the power instruction apparatus 9 so as to receive the broadcast wave from TV stations to thereby utilize the power instruction apparatus 9 as a TV receiver that can be viewed in the kitchen.

Further, a display screen may be provided on the main body and the remote controller of the air-conditioning apparatus 7, the dish washer-dryer 6, the washing-drying machine, and the clothes dryer, which are "second home electric appliances", so as to display "time zone-classified electricity rate information". In particular, the air-conditioning apparatus and the washing-drying machine are operated for a longer time compared with the induction heating cooker 2 and the rice cooker 3, and therefore in the case where the mentioned display is utilized to shift the operating time zone of such home electric appliances to the time zone to which a lower electricity rate is applied, the electricity expense of the user can be reduced.

Although a single circuit breaker BK is provided in one household in Embodiments 1 and 2, a main circuit breaker that controls the total power of the whole house and a plurality of secondary circuit breakers may be provided, such that, for example, a first secondary circuit breaker controls the power to the air-conditioning apparatus, a second secondary circuit breaker controls the power to the washing-drying machine, and a third secondary circuit breaker controls the power to the cooking instruments in the kitchen (rice cooker and so on). In this case, the main circuit breaker BK collectively cuts off the power supply to the plurality of secondary circuit breakers. Even when the power supply system is branched into a plurality of lines, the present invention is equally applicable. In this case, further, the power instruction apparatus 9 may detect the current supplied to each of the branched lines, and watch so that the rated capacity of each secondary circuit breaker is not exceeded.

In Embodiment 1, the vibration sensor 241 that detects the vibration upon occurrence of earthquake is mounted inside the built-in type induction heating cooker 2. This is because the built-in type induction heating cooker 2 is horizontally fixed in the kitchen furniture such as a kitchen sink, and barely influenced by floor vibration generated when the occupant runs nearby, which is advantageous for accurately detecting the vibration of earthquake. Alternatively, the vibration sensor 241 may be mounted inside the main body 9A of the power instruction apparatus 9 fixed to the wall face of the kitchen, instead of inside the built-in type induction heating cooker 2. In the case where the house has two stories, the vibration sensor 241 may be provided at two positions, for example in a furniture in a room of the second floor and in the induction heating cooker 2 in the kitchen.

In foregoing Embodiments, various input methods are employed, for example the switches (input devices) such as the on/off button 81 c to be pressed for inputting, touch-type input keys that utilize static capacitance such as the first selection unit 128A, and the marks, frames, and arrows that appear on the display screen to be selected (designated) by operation on the remote controller 75R, such as the special icons 412 and 417. These input methods may be combined as desired, and also other methods such as a speech recognition input method may be adopted, so that the home electric appliance analyzes the voice outputted by the user and automatically recognize the content of the instruction, thus making the input valid.

In foregoing Embodiments, the power instruction apparatus 9 includes the use limit setting device 96, constituted as an independent unit mounted in the main body 9A of the power instruction apparatus 9, however a different configuration may be adopted. For example, the software to execute the basic operation of the use limit setting device 96 may be incorporated in the semiconductor storage unit mounted on the same circuit board on which the software for other component is provided. In addition, a part of the storage unit 149 may be constituted of an information server located in a distant place outside the living space, so that the information server and the power instruction apparatus 9 exchange information through the communication network. Such an external information server may be utilized, for example, for storing the message described in Embodiment 3.

Further, the basic screen configuration for electric energy management on the LCD screen 75D of the TV receiver 75 and the basic screen configuration for electric energy management information and healthcare information on the display panel 100 of the power instruction apparatus 9 may be arranged in the same design. In this case, although the input method is different (icon, touch key, switch), the user is prevented from being embarrassed when viewing the information, operating the screen, or inputting data, which is just like using a single familiar screen.

Further, the control unit 125 compares the scheduled home arrival time information with the permission criteria stored in the storage unit 149 upon receipt of the information, and permits the home electric appliance EE to "match" the operation start time or operation finish time to the home arrival time in the case where the permission criteria is satisfied. Here, the term "match" does not require that the time agrees at the level of one minute. The term "match" is not intended to be strictly construed such that, for example, in the case where the home arrival time is delayed by two hours from the original schedule, the start of the rice cooking operation of the rice cooker or operation of the air-conditioning apparatus reserved in advance is also delayed exactly by two hours, and deviation of 10 minutes or so is within the concept of "match" herein referred to. This is because it can hardly be imagined that when the user comes home with a delay of two hours, the regular function of the home electric appliance is considerably impaired, or the user suffers significant inconvenience because the home electric appliance has started working 10 minutes earlier or 10 minutes later.

Still further, the screen 100A of the display panel 100 of the power instruction apparatus 9 may be two or more different living spaces. In this case, preferably, the two or more screens 100A may each include the operation input region 117 described in Embodiment 1. For example, the control unit 125 of the power instruction apparatus 9 may be programmed such that an input made on the operation input region 117 of one of the screens 100A provided in the kitchen is accepted with priority over the input made on the operation input region 117 of the screen 100A located in other living spaces (e.g., bedroom on the second floor). With such an arrangement, inputs for operating the power instruction apparatus 9 can be made in different living spaces, and also the power information and operating status of the home electric appliance, as well as the environment condition of the living space can be confirmed in each of the living spaces. In addition, even though contradictory inputs are made at the same time through two or more screens 100A, one of the inputs designated in advance (for example, the input through the screen 100A of the display panel 100 in the kitchen as stated above) is accepted with priority and the inputs from other display screens are ignored. Therefore, the occupants can be prevented from misunderstanding the input result, and confusion due to different input results can be suppressed.

It is to be understood that Embodiments disclosed above are merely examples in all aspects and in no way intended to limit the present invention. The substantial scope of the present invention is defined by the appended claims and not by Embodiments, and modifications made within the scope and spirit equivalent to those of the claims are duly included in the present invention.

### Industrial Applicability

The power control system according to the present invention is not only applicable to private households, but broadly applicable to stores and small-scale plants where commercial-use electric appliances are installed.

### Reference Signs List

AS1: object appliance registration signal, AS2: power reduction request signal, AS3: power reduction instruction signal, BK: circuit breaker, EE: home electric appliance, EP: AC 200V power source (commercial power source), FL: floor surface, H1: preheating phase, H2: rice cooking phase, H2A: high heat phase (time zone for priority cooking menu), H2B: low heat phase, H3: steaming phase, H4: keep-warm phase, HA: living space, KC: refrigerant circuit, KP: kitchen electric appliance, T1: target temperature, T2: second temperature, T3: third temperature, SL: ceiling, SW: wall, SP1: first specific appliance (air-conditioning apparatus etc.), SP2: second specific appliance (rice cooker, oven range etc.), 1: system kitchen (kitchen furniture), 1 A: casing, 2: induction heating cooker, 2A: main body, 2C: main body casing, 2L: first heater, 2R: second heater, 2LC: induction heating coil, 2RC: induction heating coil, 3: rice cooker, 4: grill cooker, 5: oven range, 6: dish washer-dryer, 7: air-conditioning apparatus, 8A to 8E: power usage control device, 9: power instruction apparatus, 9A: main body, 9C: recess, 10: presence detection device (presence detection unit), 11: main power switch, 11 A: main power switch operation button, 12L: power control dial, 12R: power control dial, 13: operation panel, 14: top plate, 15: metal frame, 16: display unit (central display unit), 17L: left display panel, 17R: right display panel, 18L: left display unit, 18R: right display unit, 19: entrance electronic lock, 20: intake port, 21: exhaust port, 22: grill chamber, 23: receiving tray, 24: gridiron, 25: cooking object, 26: upper face operation unit, 27: power supply line (main line), 28: grill lid, 28A: handle, 30: controller, 30: power supply line, 31: power supply circuit, 32: controller, 33L: inverter circuit, 33R: inverter circuit, 34: driver circuit, 34H: electric heater (sheath heater), 35: display unit driver circuit, 35A: display memory, 35B: display controller, 35C: interface, 35D: power source, 35E: common driver, 35F: segment driver, 36: catalyst heater driver circuit, 36A: menu selection display section, 36B: display section, 37: catalyst heater, 38: voice synthesizer, 39: speaker, 40: inner pot, 41: main body casing, 42: lid, 43: operation unit, 44: rice cooking start button, 45: heating device, 46: inner lid, 47: steam port, 48: steam duct, 49: LCD unit, 50: steam processor, 51: tank lid, 52: steam inlet, 53: steam outlet, 54A: sixth information sign, 54C: seventh information sign, 56: power saving switch, 57: presence management menu selection key, 58A: display screen selection key, 58B: display screen selection key, 58C: message setting selection key, 59A: family name column, 59B: presence status display column, 59C: scheduled home arrival time display column, 59D: reserved appliance display column, 59E: exclusive electric appliance display column, 59F: power usage display column, 60: control device, 61: power source unit, 62: control unit, 63: temperature sensor, 64: operation device, 65: clock device, 66: water level sensor, 67: bottom plate, 68: water temperature sensor, 69A: message registration instruction key, 69B: message replay instruction key, 69C: personal display section/occupant selection key, 69D: display section, 69E: sound pickup, 69F: number input key (ten key), 69G: cancel key, 69H: enter key, 69L: date selection key, 69M: date selection key, 69N: date selection key, 69K: input command key, 69T: time display section, 70: door, 70A: door knob, 71: operation unit, 72: power source switch, 73: start button, 74: heating time setting dial, 75: TV receiver, 75A: ROM, 75B: RAM, 75C: image processing unit, 75D: LCD screen, 75E: system control unit, 75G: power supply unit, 75J: input/output functional device, 75K: input/output functional device, 75L: input/output functional device, 75M: input/output functional device, 75N: external network communication device, 75R: remote controller, 75S: power FET, 76: lighting equipment, 77: outdoor antenna, 78A: external organization, 78B: external organization, 78C: communication service provider, 79: facility, 80: base station, 81: left heater operation unit, 81 a: fry button, 81b: 3kW button, 81 c: on/off button, 82: right heater operation unit, 82a: fry button, 82b: 3kW button, 82c: on/off button, 83a: grill menu button, 83b: start/stop button, 83c: left arrow button, 83d: right arrow button, 83e: time-down button, 83f: time-up button, 84: start/stop button LED, 85: arrow button LED, 86: time button LED, 87: mobile phone terminal, 88: relay server, 89A: ASP server, 90: boil over detection device, 91: power request adder, 92: comparator, 93: power request excess decision device, 94: power usage reduction decision device, 95: priority order setting device, 95A: semiconductor memory, 96: use limit setting device, 96A: semiconductor memory, 97: communication device, 98: wide area communication network (communication network), 99A: router A, 99B: router B, 100: display panel, 100A: screen, 101: maximum allowable power display section, 102: current power consumption display section, 103: power allowance display section, 104: power reduction request notification section, 105: current time display section, 106: display and input section for power use limit setting device 96, 106A to 106D: selection key, 107: use status display section, 107A, 107B: name display section, 108: use display section, 109: storage unit (high-capacity memory), 110: information key, 111: help mode key, 112: information key, 113E: estimated finish time information sign, 113S: use start time information sign, 114: mark, 115: mark, 116: healthcare processing unit, 117: operation input unit, 118: confirmation button, 119: emergency cut-off button, 120: key, 122: third heater, 123: electric heating device, 124A: input/output terminal, 124B: input/output terminal, 125: control unit, 126: operation unit, 127: data processing unit, 128A: first selection unit, 128B: second selection unit, 128C: third selection unit, 128N1 L: selection key of left induction heating unit, 128N1 R: selection key of right induction heating unit, 129: display screen, 130: top plate, 131: casing, 132L: left operation unit, 132M: central operation unit, 132R: right operation unit, 135: current detection unit, 136: input/output terminal, 137: information reception unit, 138: memory (ROM), 139: memory (RAM), 140B: rear flange, 140L: left flange, 140R: right flange, 140F: front flange, 141: parts storage chamber, 141 F: front wall, 141 R: right sidewall, 141 L: left sidewall, 141B: rear face, 142: electric heating device, 144L: inverter circuit, 144R: inverter circuit, 145: exercise equipment, 145A: treadmill, 145B: running calorie meter, 146: vacuum cleaner, 147: clock circuit, 148A: projection, 148B: recess, 149: storage unit, 150: temperature detection circuit, 152: space, 153: space, 158: press-button key (operation unit), 159: absence setting key, 160: main body, 161: washing unit, 162: main body-side supply pipe, 163: main body-side drain pipe, 164: first rail, 165: stopper, 166: washing tank, 167: front door, 167C: handle, 168: cover, 169: washing nozzle, 170: heater, 171: dish basket, 172: control unit, 173: water level sensor, 174: washing pump, 175: discharge pump, 176: electric fan, 176M: motor, 177: washing unit-side supply pipe, 179: operation unit, 180: washing unit-side drain pipe, 181: movable engagement unit, 183: shaft, 184: engaging portion, 185: elastic member, 186: cover, 186A: joint member, 186B: opening, 187: second rail, 190: operation mode selection key, 191: display unit, 192: switch, 193: electric compressor, 195: outdoor heat exchanger, 196: electric expansion valve, 198: outdoor fan, 198M: motor, 199: outdoor air temperature detection device, 200: outdoor unit, 201: outdoor control unit, 202: environment detection unit, 203: human body detection unit, 204: environment sensor (indoor temperature sensor), 205: environment sensor (indoor temperature sensor), 206: environment sensor (outdoor temperature sensor), 207: human body sensor, 208: human body sensor, 210: display unit, 210A: first information sign, 210B: second information sign, 210C: third information sign, 210D: fourth information sign, 211 N: input key, 211 R: input key, 212: start key, 213: display unit, 214: measurement unit, 215: operation unit, 216: memory, 217: control unit, 218H: electricity rate classification information, 218L: electricity rate classification information, 218M: electricity rate classification information, 219: mark, 220: indoor unit, 222: indoor fan, 222M: motor, 224: indoor temperature detection device, 225: indoor control unit, 226: power source unit, 227: operation unit, 228: display unit, 230: time shift key, 231: time shift key, 240: clock circuit, 241: vibration sensor, 250: time-setting key, 251: time-setting key, 253: rice-cooking finish time indicator, 254: time indicator, 262: time shift instruction key, 266: color-coded display unit (setting time zone display unit), 270: GPS satellite, 271: external organization (works agency), 272: server for arrival time search, 273: traffic information database, 274: base station, 280A: display section, 280B: appliance name display section, 280C: display section, 280D: display section, 281: input key display section, 282: plus key, 283: minus key, 284: selection key, 285: selection key, 300: wattmeter, 301: power line, 302: power clamp, 303: storage battery, 304: bidirectional charger, 305: photovoltaic panel, 306: controller (power conditioner), 307: private power source unit, 308: power source switching device, 309: circuit breaker, 310: electric vehicle, 311 A: exercise and measurement equipment, 311B: exercise and measurement equipment, 312: vacuum cleaner, 312A: vacuum cleaner main body, 312B: hose structure, 312C: floor surface cleaner, 312D: electric fan, 312E: dust chamber, 312F: soft tube, 312G: operating section, 312H: extension pipe, 312J: handle, 312K: running wheel, 312L: auxiliary wheel, 312M: trip meter, 314A: reception unit, 314B: transmission unit, 315: unregistered appliance, 320: self-running vacuum cleaner, 321: main body, 321 A: main body casing, 322L: driving wheel, 322R: driving wheel, 323L: driving motor, 323R: driving motor, 324: caster, 325: suction port, 326: dust chamber, 327: circuit board, 328: wireless communication unit, 329: display unit, 330: manual operation unit, 331: range finder, 332: imaging device, 330: storage battery, 410: healthcare instrument, 410A: blood pressure monitor, 410B: electrocardiograph, 410C: heart rate monitor, 410D: clinical thermometer, 410E: weight scale, 410F: body fat monitor, 410G: urine analyzer, 411: icon, 412: special icon, 413: special icon, 414: special icon, 415: special icon, 417: icon (for selecting healthcare information), 418: icon (for electric energy management), 419: icon (for living environment information), 420: information key, 421: help mode key, 425: existing data display command key, 430: caution information light/display instruction switch, 440: healthcare information selection key, 441: healthcare information display region, 450: favorite information selection key, 451: favorite information display region, 460: favorite recipe selection key, 460A: recipe selection key, 460B: recipe selection key, 460C: recipe selection key, 460D: recipe selection key, 460E: recipe selection key, 470: display region, 471: display region, 472: display region, 473: display region, 474: temperature/humidity display section, 475: comfort mark, 476: caution mark, 477: cold/hot display section, 478: absence mark, 479: operation display section for first specific home appliance, 480: exercise caution mark, 481: icon, 482: operation display section for second specific appliance, 483: change display section, 484: unsuitable environment display section, 485: pollen scattering display section, 486: ventilation fan operation display section, 487: operation intensity display section, 488: blank section, 489: suggestion section, 490: icon, 491: icon, 492: icon, 493: press-button key (operation unit), 494: press-button key (operation unit), 495: press-button key (operation unit), 496: suggestion column, 498: in-vehicle storage battery, 500: bath tub, 501: remote controller for hot water supply, 502: electric hot water system, 503: composite measurement device (indoor temperature/humidity monitor), 601: special icon of recommended cooking, 602: information sign (vegetable recipe), 603: information sign (meat and vegetable recipe), 604: information sign (fish recipe), 605: information sign (soup and stew), 606: icon, 607: icon, 608: icon, 609: icon, 610: icon (transmitting recipe), 611: icon (adding evaluation), 750: TV receiver, 751: signal cable, 760: bathroom lighting equipment, 770A: arrow, 770B: arrow, 770C: arrow

## Claims

1. A household power instruction apparatus that controls total electric power in a household by individually controlling a plurality of home electric appliances, the apparatus comprising:
a presence detection device that detects presence of one or more occupants;
an exclusive user information storage unit containing exclusive user information in which a specific home electric appliance for exclusive use by one of the occupants (exclusive home electric appliance) in the plurality of home electric appliances and information for identifying the occupant are associated with each other; and
a control unit that permits or restricts operation of the home electric appliances,
wherein the control unit decides, upon receipt of a signal requesting permission of use from the exclusive home electric appliance, whether the exclusive user and the occupant at home are the same, on a basis of the exclusive user information in the exclusive user information storage unit and the occupant information detected by the presence detection device, and outputs, in the case where the exclusive user and the occupant at home are the same, a signal permitting the exclusive home electric appliance to start operation.

2. A household power instruction apparatus that controls total electric power in a household by individually controlling a plurality of home electric appliances, the apparatus comprising:
a presence detection device that detects presence of one or more occupants;
an exclusive user information storage unit containing exclusive user information in which a specific home electric appliance for exclusive use by one of the occupants (exclusive home electric appliance) in the plurality of home electric appliances and information for identifying the occupant are associated with each other;
a control unit that permits or restricts operation of the home electric appliances;
an environment detection unit that receives environment information from an environment sensor that measures physical environment of one or more living spaces in which the plurality of home electric appliances are installed; and
a human body detection unit that detects presence of a person on a basis of detection information from a human body sensor indicating presence of a person in the living space,
wherein at least one of the home electric appliances is an environment improvement apparatus that improves at least one of temperature, humidity, and quality of air in the living space, and
the control unit decides, upon receipt of a signal requesting permission of use from the exclusive home electric appliance, whether the exclusive user and the occupant at home are the same, on a basis of the exclusive user information in the exclusive user information storage unit and the occupant information detected by the presence detection device, and outputs, in the case where the exclusive user and the occupant at home are the same, a signal permitting the exclusive home electric appliance to start operation, and
forcibly controls operation of the environment improvement apparatus, upon deciding, by the control unit, on a basis of the environment information from the environment detection unit, that a predetermined environmental condition is not satisfied in a specific living space in which the environment improvement apparatus is installed, when presence of a person in the specific living space is detected by the human body detection unit.

3. A household power instruction apparatus that controls total electric power in a household by individually controlling a plurality of home electric appliances, the apparatus comprising:
a presence detection device that detects presence of one or more occupants;
an exclusive user information storage unit containing exclusive user information in which a specific home electric appliance for exclusive use by one of the occupants (exclusive home electric appliance) in the plurality of home electric appliances and information for identifying the occupant are associated with each other; and
a control unit that permits or restricts operation of the home electric appliances,
wherein the control unit decides, upon receipt of a signal requesting permission of use from the exclusive home electric appliance, whether the exclusive user and the occupant at home are the same, on a basis of the exclusive user information in the exclusive user information storage unit and the occupant information detected by the presence detection device, and outputs, in the case where the exclusive user and the occupant at home are the same, a signal permitting the exclusive home electric appliance to start operation, and
instructs the exclusive home electric appliance to notify, through own notification device thereof, information indicating that operation of the exclusive home electric appliance is not permitted, when the control unit decides that the exclusive user and the occupant at home are not the same through comparison between the exclusive user information of the exclusive home electric appliance from which the signal requesting permission of use has been received and the occupant identification information detected by the presence detection device.

4. The household power instruction apparatus of any one of claims 1 to 3, further comprising:
a healthcare processing unit that receives human body measurement data from a healthcare instrument; and
a display device that displays power information of the home electric appliance,
wherein the display device displays information of the measurement data.

5. The household power instruction apparatus of claim 4,
wherein the measurement data displayed by the display device includes at least information for identifying a subject, date and time information for identifying a time of measurement, and caution data indicating deviation from a predetermined range in specific measurement data.

6. The household power instruction apparatus of any one of claims 1 to 3, further comprising a display device that displays power information of the home electric appliance,
wherein the display device displays environment information including at least a room temperature, and operation information indicating operating status of a specific home appliance used in the living space and likely to affect air in the living space, with respect to each of the living spaces.

7. The household power instruction apparatus of any one of claims 1 to 3, further comprising a display device that displays power information of the home electric appliance,
wherein the display device displays improvement suggestion information including whether to permit operation of a specific home electric appliance and operating condition of the specific home electric appliance, to thereby improve environment of a specific living space.

8. The household power instruction apparatus of claim 2, further comprising a display device that displays power information of the home electric appliance,
wherein the environment detection unit outputs a "level 1 warning" signal when temperature and humidity in a specific living space exceed a first predetermined threshold, and outputs a "level 2 warning" signal when the temperature and the humidity in the specific living space exceed a second predetermined threshold, and
the control unit forcibly controls the operation of the environment improvement apparatus in the case where the temperature and the humidity do not fall below the first predetermined threshold within a predetermined time after receipt of the "level 2 warning" signal.

9. The household power instruction apparatus of claim 2, further comprising: a transmission unit that transmits information to an outdoor communication network; and a display device that displays power information of the home electric appliance,
wherein the control unit instructs the environment detection unit to output a "level 1 warning" signal upon detecting that temperature and humidity in a specific living space have exceeded a first predetermined threshold, and output a "level 2 warning" signal upon detecting that the temperature and the humidity in the specific living space have exceeded a second predetermined threshold, and
the control unit outputs a warning to the occupant located outside the living space through the communication network, in the case where the temperature and the humidity do not fall below the first predetermined threshold within a predetermined time after receipt of the "level 2 warning" signal.

10. The household power instruction apparatus of any one of claims 1 to 3, further comprising a display device that displays power information of the home electric appliance,
wherein the display device includes a reserved appliance display column for displaying an exclusive home electric appliance to identify a home electric appliance in which a reservation time is set, with respect to each of the occupants.

11. The household power instruction apparatus of any one of claims 1 to 3, further comprising a display device that displays power information of the home electric appliance,
wherein the display device includes a power value display column for displaying a power consumption value and an upper power limit of the exclusive home electric appliance currently in use, with respect to each of the occupants.

12. A household power control system comprising:
a circuit breaker that cuts off an electric circuit when a predetermined capacity limit is exceeded;
a first home electric appliance and a second home electric appliance each receiving power through the circuit breaker; and
a power instruction apparatus that controls total power usage of the first home electric appliance and the second home electric appliance,
wherein the power instruction apparatus includes an environment detection unit that receives environment information from an environment sensor that measures physical environment of a living space in which the first and second home electric appliances are installed, a display device that displays information of power and the environment information, a presence detection device that detects presence of one or more occupants, an exclusive user information storage unit containing exclusive user information in which a specific home electric appliance for exclusive use by one of the occupants (exclusive home electric appliance) in the plurality of home electric appliances and information for identifying the occupant are associated with each other, and a control unit that sets an upper limit of power usage in the home electric appliances and permits or restricts operation of the home electric appliances, and
the control unit decides, upon receipt of a signal requesting permission of use from the exclusive home electric appliance, whether the exclusive user and the occupant at home are the same, by making access to the exclusive user information storage unit and comparing between the exclusive user information in the exclusive user information storage unit and the occupant information detected by the presence detection device, and outputs, in the case where the exclusive user and the occupant at home are the same, a signal permitting the exclusive home electric appliance to start operation.

13. A household power control system comprising:
a circuit breaker that cuts off an electric circuit when a first capacity limit is exceeded;
a first home electric appliance and a second home electric appliance each receiving power through the circuit breaker; and
a power instruction apparatus that controls total power usage of the first home electric appliance and the second home electric appliance,
wherein the power instruction apparatus includes a display device that displays information of power; a presence detection device that detects presence of one or more occupants; an exclusive user information storage unit containing exclusive user information in which a specific home electric appliance for exclusive use by one of the occupants (exclusive home electric appliance) in the plurality of home electric appliances and information for identifying the occupant are associated with each other;
a transmission unit that transmits information for confirming whether to update the exclusive user information in the exclusive user information storage unit to the occupant located outside the living space through a communication network, and a reception unit that receives a response from the occupant; and
the control unit (i) decides, upon receipt of a signal requesting permission of use from the exclusive home electric appliance, whether the exclusive user and the occupant at home are the same, by making access to the exclusive user information storage unit and comparing between the exclusive user information in the exclusive user information storage unit and the occupant information detected by the presence detection device, and outputs, in the case where the exclusive user and the occupant at home are the same, a signal permitting the exclusive home electric appliance to start operation, and (ii) transmits, in the case where the exclusive user and the occupant at home are not the same, an inquiry asking whether the use of home electric appliance may be permitted, to the exclusive user in the exclusive user information storage unit from the transmission unit, and outputs the signal permitting the exclusive home electric appliance to start operation, in the case where the information permitting the use of the exclusive home electric appliance is received after the transmission.

14. The household power control system of claim 12 or 13,
wherein the power instruction apparatus further includes a healthcare processing unit that receives human body measurement data from a healthcare instrument, and
the display device displays information of the measurement data.

15. The household power control system of claim 12 or 13,
wherein the power instruction apparatus accepts setting of a designated capacity lower than a first capacity limit of the circuit breaker, the setting being made by a user, and
the power instruction apparatus outputs, upon receipt of a request for reducing the total power usage to the designated capacity or lower from outside the household, a signal notifying the connected home electric appliance that the reduction request information has been received, and restricts power supply to the home electric appliance according to a predetermined priority order of reduction.

16. The household power control system of claim 12 or 13,
wherein the display device displays use status of each of the home electric appliances.

17. The household power control system of claim 12 or 13,
wherein the display device includes two display screens one of which is fixed or detachably connected to the power instruction apparatus, and an other of which is a display screen of a TV receiver that receives broadcast wave from outside the household.

18. The household power control system of claim 12,
wherein the display device includes two display screens one of which is fixed or detachably connected to the power instruction apparatus, and an other of which is a display screen of a TV receiver that receives broadcast wave from outside the household, and
the TV receiver is configured to display a portal site in which an icon to select from a screen for displaying power usage information of the home electric appliance and a screen for displaying environment information acquired by the environment detection unit is displayed.

19. A household power instruction apparatus that controls total electric power in a household by individually controlling a plurality of home electric appliances, the apparatus comprising:
a presence detection device that detects presence of one or more occupants;
an exclusive user information storage unit containing exclusive user information in which a specific home electric appliance for exclusive use by one of the occupants (exclusive home electric appliance) in the plurality of home electric appliances and information for identifying the occupant are associated with each other;
a control unit that permits or restricts operation of the home electric appliances; and
a personal information storage unit for storing useful information for each of the occupants,
wherein the control unit decides, upon receipt of a signal requesting permission of use from the exclusive home electric appliance, whether the exclusive user and the occupant at home are the same, on a basis of the exclusive user information in the exclusive user information storage unit and the occupant information detected by the presence detection device, and outputs, in the case where the exclusive user and the occupant at home are the same, a signal permitting the exclusive home electric appliance to start operation,
at least one of the home electric appliances is a TV receiver with a display screen, and
the control unit outputs, when the presence detection device detects that the occupant who is the exclusive user of the TV receiver has come home and when the TV receiver is turned on, an instruction to cause the TV receiver to display or notify the useful information for the exclusive user out of the information accumulated in the personal information unit.

20. A household power control system comprising:
a power instruction apparatus including a control unit that controls total electric power in a household by individually controlling a plurality of home electric appliances;
a presence detection device that detects presence of one or more occupants;
an exclusive user information storage unit containing exclusive user information in which a specific home electric appliance for exclusive use by the occupant in the home electric appliances and information for identifying the occupant are associated with each other; and
an external information storage unit for storing useful data including a cooking recipe transmitted from outside through a communication line,
wherein the control unit of the power instruction apparatus decides, upon receipt of a signal requesting permission of use from the exclusive home electric appliance, whether the exclusive user and the occupant at home are the same, on a basis of the exclusive user information in the exclusive user information storage unit and the occupant information detected by the presence detection device, and outputs a signal permitting the exclusive home electric appliance to start operation, in the case where the exclusive user and the occupant at home are the same,
at least one of the home electric appliances is a TV receiver with a display screen, and
the control unit of the power instruction apparatus outputs, when the presence detection device detects that the occupant who transmitted the useful data has come home and when the useful data for the occupant has been received or is stored in the external storage medium, an instruction to cause the TV receiver to display or notify the receipt of the useful data, when the occupant turns on the TV receiver after coming home.

21. A household power instruction apparatus comprising:
a power instruction apparatus including a control unit that controls total electric power in a household by individually controlling a plurality of home electric appliances;
a presence detection device that detects presence of one or more occupants;
an exclusive user information storage unit containing exclusive user information in which a specific home electric appliance for exclusive use by one of the occupants (exclusive home electric appliance) in the plurality of home electric appliances and information for identifying the occupant are associated with each other;
a control unit that permits or restricts operation of the home electric appliances; and
an absence input device for inputting a state that the occupant is not in the living space to the control unit,
wherein the control unit of the power instruction apparatus decides, upon receipt of a signal requesting permission of use from the exclusive home electric appliance, whether the exclusive user and the occupant at home are the same, on a basis of the exclusive user information in the exclusive user information storage unit and the occupant information detected by the presence detection device, and outputs a signal permitting the exclusive home electric appliance to start operation, in the case where the exclusive user and the occupant at home are the same, and
enters an absence mode in which power supply to one or more predetermined home electric appliances is limited so as to reduce the total electric power in the household, when absence of all the occupants is inputted through the absence input device, and cancels the absence mode when the presence detection device detects that one or more occupants have come home.

22. The household power control system of claim 21,
wherein at least one of the home electric appliances further includes a vibration sensor that transmits a vibration detection signal to the power instruction apparatus upon detecting seismic intensity exceeding a predetermined level, and
the power instruction apparatus instructs, in the case where any of the plurality of home electric appliances is using a heating device when the vibration detection signal is received, the home electric appliance to cut off power supply to the heating device.

23. The household power control system of claim 21,
wherein the power instruction apparatus further includes a healthcare processing unit that receives human body measurement data from a healthcare instrument, and a display device that displays power information of the home electric appliance,
wherein the display device displays information of the measurement data.

24. The household power control system of claim 23,
wherein the display device displays environment information including at least a room temperature, and operation information indicating operating status of a specific home appliance used in the living space and likely to affect air in the living space, with respect to each of the living spaces.

25. The household power control system of claim 23,
wherein the display device displays improvement suggestion information including whether to permit operation of a specific home electric appliance and operating condition of the specific home electric appliance, to thereby improve environment of a specific living space.

26. The household power control system of claim 23,
wherein the environment detection unit outputs a "level 1 warning" signal when temperature and humidity in a specific living space exceed a first predetermined threshold, and outputs a "level 2 warning" signal when the temperature and the humidity in the specific living space exceed a second predetermined threshold, and
the control unit forcibly controls the operation of the environment improvement apparatus in the case where the temperature and the humidity do not fall below the first predetermined threshold within a predetermined time after receipt of the "level 2 warning" signal.

27. The household power control system of claim 19,
wherein the power instruction apparatus further includes a transmission unit that transmits information to an outdoor communication network, and a display device that displays power information of the home electric appliance,
wherein the control unit instructs the environment detection unit to output a "level 1 warning" signal upon detecting that temperature and humidity in a specific living space have exceeded a first predetermined threshold, and output a "level 2 warning" signal upon detecting that the temperature and the humidity in the specific living space have exceeded a second predetermined threshold, and
the control unit outputs a warning to the occupant located outside the living space through the communication network, in the case where the temperature and the humidity do not fall below the first predetermined threshold within a predetermined time after receipt of the "level 2 warning" signal.
